(19) Europäisches Patentamt
European Patent Office
Office européen des brevets

(11) EP 3 442 352 B1

(12) # EUROPEAN PATENT SPECIFICATION

(45) Date of publication and mention of the grant of the patent:
**03.06.2026 Bulletin 2026/23**

(21) Application number: **17783274.8**

(22) Date of filing: **14.04.2017**

(51) International Patent Classification (IPC):
***A23L 2/39*** *(2006.01)* ***A23L 27/00*** *(2016.01)*
***A23L 2/56*** *(2006.01)* ***A23L 2/54*** *(2006.01)*
***A23L 2/68*** *(2006.01)* ***A23K 20/111*** *(2016.01)*
***A23K 20/116*** *(2016.01)* ***A23K 20/142*** *(2016.01)*
***A23L 27/20*** *(2016.01)*

(52) Cooperative Patent Classification (CPC):
**A23K 20/147; A23L 2/39; A23K 20/111; A23K 20/116; A23K 20/142; A23K 20/20; A23K 50/40; A23L 2/54; A23L 2/56; A23L 2/68; A23L 27/00; A23L 27/204; A23L 27/205;**
A23V 2200/16

(86) International application number:
**PCT/US2017/027698**

(87) International publication number:
**WO 2017/181062 (19.10.2017 Gazette 2017/42)**

(54) **COMPOUNDS THAT MODULATE CALCIUM-SENSING RECEPTOR ACTIVITY FOR MODULATING KOKUMI TASTE AND PET FOOD PRODUCTS CONTAINING THE SAME**

VERBINDUNGEN ZUR MODULIERUNG DER AKTIVITÄT CALCIUM-SENSITIVER REZEPTOREN ZUR MODULIERUNG DES KOKUMI-GESCHMACKS UND TIERFUTTERPRODUKTE DAMIT

COMPOSÉS QUI MODULENT L'ACTIVITÉ DU RÉCEPTEUR SENSIBLE AU CALCIUM POUR MODULER LE GOÛT KOKUMI ET PRODUITS ALIMENTAIRES POUR ANIMAUX DE COMPAGNIE LES CONTENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.04.2016 US 201662322641 P**

(43) Date of publication of application:
**20.02.2019 Bulletin 2019/08**

(73) Proprietor: **Mars, Incorporated**
**McLean, VA 22101 (US)**

(72) Inventors:
- **MCGRANE, Scott, Joseph**
  **Melton Mowbray**
  **Leicestershire LE14 4RT (GB)**
- **GIBBS, Matthew, Ronald**
  **Melton Mowbray**
  **Leicestershire LE14 4RT (GB)**
- **FINE, Richard, Masten**
  **Ridgewood**
  **NJ 07450 (US)**
- **KLEBANSKY, Boris**
  **Demarest**
  **NJ 07627 (US)**
- **SKILES, Jerry, Wallace**
  **Berlin**
  **MA 01503 (US)**

(74) Representative: **Haseltine Lake Kempner LLP**
**One Portwall Square**
**Portwall Lane**
**Bristol BS1 6BH (GB)**

(56) References cited:
**WO-A1-2009/107579** **WO-A1-2010/032096**
**WO-A1-2013/000673** **WO-A1-2016/057996**
**WO-A1-2016/057996** **WO-A1-2016/094690**
**US-A1- 2006 228 454** **US-A1- 2011 097 805**
**US-A1- 2015 342 231** **US-B2- 8 088 426**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **T. OHSU ET AL: "Involvement of the Calcium-sensing Receptor in Human Taste Perception", JOURNAL OF BIOLOGICAL CHEMISTRY, vol. 285, no. 2, 5 November 2009 (2009-11-05), pages 1016 - 1022, XP055056508, ISSN: 0021-9258, DOI: 10.1074/jbc.M109.029165**

Remarks:

The complete document including Reference Table(s) and the Sequence Listing(s) can be downloaded from the EPO website

**Description**

## CROSS-REFERENCE TO RELATED APPLICATION

This application claims priority to U.S. Provisional Application Serial No. 62/322,641 filed on April 14, 2016.

## FIELD

The presently disclosed subject matter relates to compounds and flavor compositions that include at least one compound that interacts with a calcium-sensing receptor (CaSR) for modulating kokumi taste. The flavor compositions can be used to enhance or modify the palatability, taste and/or flavor of pet food products. The flavor compositions can include combinations of compounds, and can be added to pet food products in various delivery system formats.

## SEQUENCE LISTING

The specification further incorporates by reference the Sequence Listing submitted herewith via EFS on April 14, 2017. Pursuant to 37 C.F.R. § 1.52(e)(5), the Sequence Listing text file, identified as CaSRseqlisting.txt, is 13,989 bytes and was created on April 14, 2017. The Sequence Listing, electronically filed herewith, does not extend beyond the scope of the specification and thus does not contain new matter.

## BACKGROUND

Taste profiles for edible compositions include basic tastes such as sweet, salt, bitter, sour, umami and kokumi. Chemical compounds that elicit these tastes are often referred to as tastants. Without being bound by theory, it is hypothesized that tastants are sensed by taste receptors in the mouth and throat which transmit signals to the brain where the tastants and resulting taste profiles are registered. Taste receptors include the calcium-sensing receptor (CaSR), which is a G-protein coupled receptor (GPCR) that detects changes in extracellular calcium levels and a close relative to the T1R1, T1R2 and T1R3 receptors, *i.e.,* the sweet and umami receptors. The calcium-sensing receptor has been shown to enhance sweet, salty and umami tastes, and function as a receptor for kokumi taste.

Pet food manufacturers have a long-standing desire to provide pet food products that have high nutritional value. In addition, and with particular regard to cat and dog foods, pet food manufacturers desire a high degree of palatability so that pets can receive the full nutritional benefit from their food. Domestic animals, especially cats, are notoriously fickle in their food preferences, and often refuse to eat a pet food product that it has accepted over time or refuse to eat any more than a minimal amount of a pet food product. This phenomenon may be, in part, due to the subtle differences in the sensory profiles of the raw material, which can be perceived by the domestic animals because of their gustatory and olfactory systems. As a result, pet owners frequently change types and brands of pet food in order to maintain their pets in a healthy and contented condition.

While there have been recent advances in taste and flavor technologies, there remains a need for compounds that can enhance or modify the palatability of pet food products by enhancing or modifying the taste, texture and/or flavor profiles of the pet food product. The enhancement or modification can be to increase the intensity of a desirable attribute, to replace a desirable attribute not present or somehow lost in the pet food product, or to decrease the intensity of an undesirable attribute. In particular, it is desirable to increase the intensity of a desirable tastant in a pet food product. Therefore, there remains a need in the art for compositions to enhance the palatability and/or modulate the kokumi taste of pet food products.

WO 2013/000673 discloses taste-modifying amide derivatives.

## SUMMARY OF THE DISCLOSED SUBJECT MATTER

The present invention is defined by the appended claims, and provides for a flavor composition comprising a compound selected from the group consisting of the following Formulas:

| | |
|---|---|
| Tm-1 | 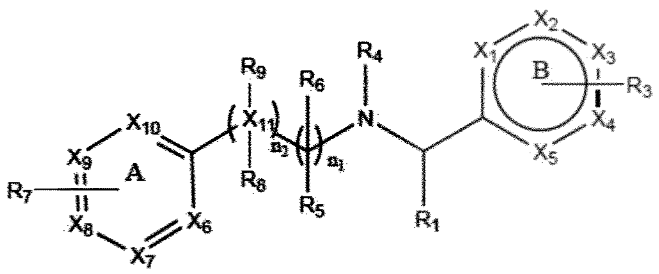 |
| Tm-2 | 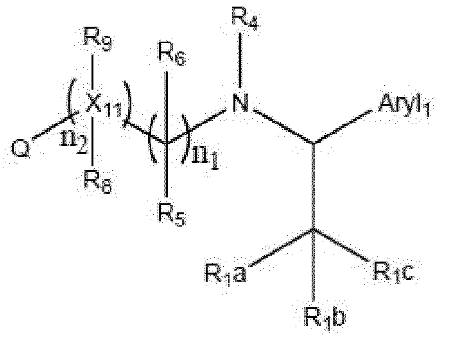 |
| Tm-3 | 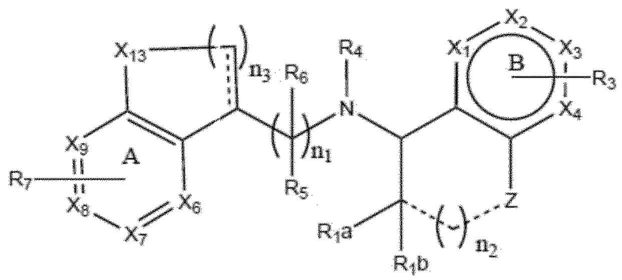 |
| Tm-4 | 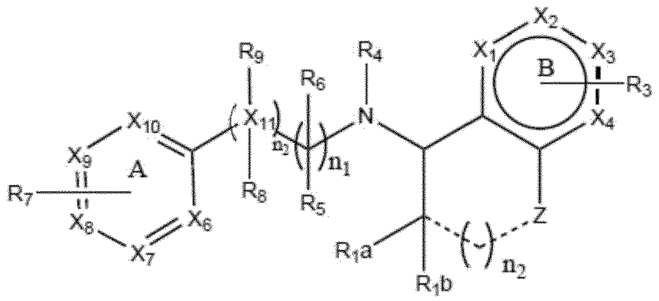 |
| Tm-5 | 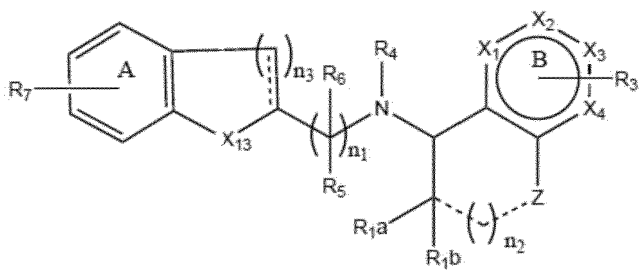 |

wherein

$X_1$ through $X_{10}$ are independently C or N;
$X_{11}$ is C, O, N, or S;
$X_{12}$ is O, NH, or S;
$X_{13}$ is $CR_4aR_4b$, O, $N(R_{12})$, or S;

Z is H, O, N, S, or C;
$n_1$, $n_2$, and $n_3$ independently range from 0 to 4 such that when $n_1$ or $n_2$ is 0, it indicates a chemical bond;
$n_4$ ranges from 0 to 2;
$R_1$, $R_{1a}$, $R_{1b}$, and $R_{1c}$ are independently selected from the group consisting of H, $CH_3$, $CF_3$, $CBr_3$, branched or unbranched lower alkyl ($C_1$-$C_6$), cycloalkyl ($C_3$-$C_6$), $COOR_{13}$, $C(O)NR_{16}R_{17}$, and $SO_2NR_4aR_4b$; and
wherein Rings A and B, are any aryl, can optionally be independently substituted by the functional groups $R_3$ and/or $R_7$., wherein $R_3$ and $R_7$ can be independently selected from the group consisting of H, OH, branched or unbranched lower alkyl ($C_1$-$C_6$), $O(CH_2)n_3$aryl, $O(CH_2)n_3$heteroaryl, $NR_{10}R_{11}$, $N(R_{12})OH$, aryl, heteroaryl, methyl, OH, SH, $OCH_3$, $SCH_3$, COOH, $COOR_{13}$, $S(O)n_4R_{14}$, $C(O)R_{15}$, $C(O)NR_{16}R_{17}$, CN, $NR_{18}R_{19}$, $NR_{20}C(O)R_{21}$, aryl, methylenedioxy, alkyl ($C_1$ - $C_5$), $CH_2SSCH_2CH(COOH)(NH_2)$, halogen (including F, Cl, Br, or I), $NO_2$, $NHC(=NH)NH_2$, CHO, $CF_3$, $P(=X_1)(OR_1)_2$, $OP(=X_1)(OR_1)_2$, tetrazole, $C(O)N(R_{12})OH$, $CF_3$, $OR_4$, $SR_4$, N=C=S, N=C=O, $C(R_4)=C(R_4a)R_4b$, $(CH_2)n_1CH=CH_2$, $NHC(=X_{12})NH_2$, $NHC(=X_{12})NHR_4$, $SO_2NR_4aR_4b$, and C $CR_4$.

$R_4$, $R_{4a}$, and $R_{4b}$ are independently selected from the group consisting of H, $CH_3$, lower alkyl ($C_1$-$C_6$), cycloalkyl ($C_3$-$C_6$), phenyl, aryl, and heteroaryl.

$R_5$, $R_6$, $R_8$ and $R_9$ are independently selected from the group consisting of H, $CH_3$, branched or unbranched lower alkyl ($C_1$-$C_{10}$), aryl, heteroaryl, phenyl, pyridyl, furan, pyran, thiophene, $(CH_2)$naryl, $(CH_2)$nheteroaryl, tetrahydropyran, wherein n is 0-4. When n is 0, this implies a chemical bond.

$R_{10}$ and $R_{11}$ are independently selected from the group consisting of H, $CH_3$, lower alkyl ($C_1$-$C_6$), phenyl.

$R_{12}$ is H or $CH_3$.

$R_{13}$ is selected from the group consisting of H, $CH_3$, lower alkyl ($C_1$-$C_6$), and $CH_2$aryl.

$R_{14}$ is selected from the group consisting of H, $CH_3$, lower alkyl ($C_1$-$C_6$), and OH.

$R_{15}$ is selected from the group consisting of H, $CH_3$, $CF_3$, lower alkyl ($C_1$-$C_6$), and phenyl.

$R_{16}$, $R_{17}$, $R_{18}$, $R_{19}$, $R_{20}$, and $R_{21}$ are each independently selected from the group consisting of H, $CH_3$, lower alkyl, phenyl, $CH_2$phenyl, and cycloalkyl ($C_1$-$C_6$).

$Aryl_1$ can be selected from the group consisting of phenyl, furan, thiophene, pyrole, benzofuran, benzothiophene, indole, quinoline, isoquinoline, heteroaryl, and aryl.

Q can be selected from the group consisting of aryl, heteroaryl, cycloalkyl ($C_1$-$C_7$) and indanyl.

The presently disclosed subject matter is directed to flavor compositions and methods for making and modifying such compositions across a variety of pet food products. Specifically, the present disclosure is directed to compositions comprising one or more compounds that enhance, increase, decrease and/or modulate the activity of a calcium-sensing receptor (CaSR), and thereby modulate kokumi taste.

In certain embodiments, the flavor composition comprises a calcimimetic having the structure of Formula Tm-1 below:

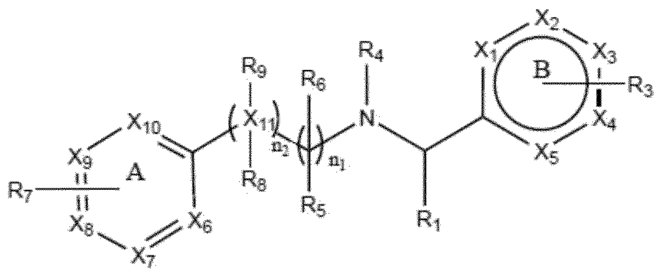

wherein $n_1$, $n_2$, $R_1$ through $R_9$, $X_1$ through $X_{11}$, Ring A and Ring B are described herein below. In certain embodiments of the present disclosure, the flavor composition comprises one or more calcimimetics Formulas Tm-2 to Tm-5, as described herein.

The present disclosure also provides for salts and stereoisomers of the compounds described herein.

In certain embodiments of the present disclosure, the flavor composition further comprises at least one amino acid as described herein.

In certain embodiments of the present disclosure, the flavor composition further comprises at least one umami receptor activating transmembrane compound as described herein.

In certain embodiments of the present disclosure, the flavor composition further comprises at least one fatty acid receptor (GPR120) activating compound as described herein.

In certain embodiments of the present disclosure, the flavor composition further comprises at least one nucleotide and/or nucleotide derivative as described herein.

Also disclosed herein, related to the present disclosure but not claimed, are methods for identifying calcium-sensing receptor modulating compounds, *e.g., in silico* and *in vitro* methods.

In certain embodiments, the present disclosure provides pet food products including a flavor composition, comprising a compound, wherein the flavor composition is present in an amount effective to increase a kokumi taste of the food products, as determined by a panel of taste testers. The flavor compositions can be incorporated into a delivery system for use in pet food products.

In certain embodiments, the present disclosure provides pet food products including a flavor composition, comprising a compound, wherein the flavor composition is present at a concentration of about 0.0001 weight % to about 10 weight % (% w/w), or about 0.001% to about 1% w/w of the pet food product. In certain embodiments, the pet food product is a feline pet food product.

In certain embodiments, the present disclosure provides pet food products including a flavor composition, comprising a compound. In certain embodiments, the flavor composition is present at a concentration of about 0.001 ppm to about 1,000 ppm of the pet food product. Alternatively or additionally, the compound can be present at a concentration of about 1 pM to about 1 M in the pet food product.

The present disclosure further provides methods for increasing the palatability of a pet food product. In certain embodiments, the method comprises admixing the pet food product with a flavor composition. In certain embodiments, the flavor composition is present at a concentration of about 0.001 weight % to about 10 weight %, or about 0.01% to about 1% w/w of the admixture.

In certain embodiments of the present disclosure, a method for increasing the palatability of a pet food product comprises admixing the pet food product with a flavor composition. In certain embodiments, the flavor composition is present at a concentration of about 0.001 ppm to about 1,000 ppm of the admixture. Alternatively or additionally, the at least one compound is present at a concentration of about 1 pM to about 1 M in the admixture.

In certain embodiments of the present disclosure, a flavor composition is admixed with a pet food product in an amount effective to increase the palatability of the pet food product.

The presently disclosed subject matter also provides for methods of modulating the activity of a calcium-sensing receptor, comprising contacting a composition with a calcium-sensing receptor, for example, a feline calcium-sensing receptor comprising an amino acid sequence of SEQ ID NO: 1, wherein the composition interacts with one or more amino acids in an interacting site of the calcium-sensing receptor selected from the group consisting of Asn64, Phe65, Asn102, Thr145, Ser147, Ala168, Ser169, Ser170, Asp190, Gln193, Asp216, Tyr218, Ser272, Glu297, Ala298, Trp299, Ala300, Ser302, Leu304, Tyr411, Thr412, and His413 and combinations thereof in the VFT domain and/or Phe684, Gly685, and/or Phe688 on helix 3, Gln735 on helix 4, Met771, Ala772, Phe775, Leu776, and/or Thr780 on helix 5, Phe814, Val817, Trp818, and/or Phe821 on helix 6, and/or Glu837, Ala840, and/or Ile841 on helix 7 in the 7TM transmembrane domain; and combinations thereof. In the instant disclosure the 7TM domain helices are numbered in sequential order as per normal GPCR parlance.

Also disclosed herein, related to the present disclosure but not claimed, are methods for identifying a composition that modulates the activity of a calcium-sensing receptor comprising contacting a test agent with a calcium-sensing receptor and detecting an interaction between the test agent and one or more amino acids in an interacting site of the calcium-sensing receptor as described herein.

The foregoing has outlined rather broadly the features and technical advantages of the present application in order that the detailed description that follows may be better understood. Additional features and advantages of the application will be described hereinafter which form the subject of the claims of the application. It should be appreciated by those skilled in the art that the conception and specific embodiment disclosed may be readily utilized as a basis for modifying or designing other structures for carrying out the same purposes of the present application. It should also be realized by those skilled in the art that such equivalent constructions do not depart from the scope of the application as set forth in the appended claims. The novel features which are believed to be characteristic of the application, both as to its organization and method of operation, together with further objects and advantages will be better understood from the following description.

## BRIEF DESCRIPTION OF THE DRAWINGS

**Figure 1** illustrates a CaSR dimer.

**Figure 2** illustrates a CaSR dimer, and depicts the various binding domains on CaSR.

**Figures 3A-3C** show the *in silico* modeling of the binding of compound L-Aspartic acid to the Venus Flytrap domain of feline CaSR. (A) Shows the structure of the binding compound, (B) shows a model of the compound binding to feline CaSR, and (C) shows the putative CaSR amino acid residues that interact with the binding compound.

**Figures 4A-4C** show the *in silico* modeling of the binding of compound L-lysine to the Venus Flytrap domain of feline CaSR. (A) Shows the structure of the binding compound, (B) shows a model of the compound binding to CaSR, and

(C) shows the putative CaSR amino acid residues that interact with the binding compound.

**Figures 5A-5C** show the *in silico* modeling of the binding of compound L-(+)-2-Amino-3-phosphonopropionic acid to the Venus Flytrap domain of feline CaSR. (A) Shows the structure of the binding compound, (B) shows a model of the compound binding to CaSR, and (C) shows the putative CaSR amino acid residues that interact with the binding compound.

**Figures 6A-6C** show the *in silico* modeling of the binding of compound glutathione to the Venus Flytrap domain of feline CaSR. (A) Shows the structure of the binding compound, (B) shows a model of the compound binding to CaSR, and (C) shows the putative CaSR amino acid residues that interact with the binding compound.

**Figures 7A-7C** show the *in silico* modeling of the binding of compound H-γ-Glu-Val-Gly-OH to the Venus Flytrap domain of feline CaSR. (A) Shows the structure of the binding compound, (B) shows a model of the compound binding to CaSR, and (C) shows the putative CaSR amino acid residues that interact with the binding compound.

**Figures 8A-8C** show the *in silico* modeling of the binding of compound H-γ-Glu-Tyr-OH to the Venus Flytrap domain of feline CaSR. (A) Shows the structure of the binding compound, (B) shows a model of the compound binding to CaSR, and (C) shows the putative CaSR amino acid residues that interact with the binding compound.

**Figures 9A-9C** show the *in silico* modeling of the binding of compound H-β-Asp-Leu-OH to the Venus Flytrap domain of feline CaSR. (A) Shows the structure of the binding compound, (B) shows a model of the compound binding to CaSR, and (C) shows the putative CaSR amino acid residues that interact with the binding compound.

**Figures 10A-10C** show the *in silico* modeling of the binding of compound N-(1-(4-chlorophenyl)ethyl)-3-(4-isopropoxyphenyl)-3-phenylpropan-1-amine to the 7 Transmembrane domain of feline CaSR. (A) Shows the structure of the binding compound, (B) shows a model of the compound binding to CaSR, and (C) shows the putative CaSR amino acid residues that interact with the binding compound.

**Figures 11A-11C** show the *in silico* modeling of the binding of compound N-(1-(4-chlorophenyl)ethyl)-3-(4-methoxyphenyl)-4-methylpentan-1-amine to the 7 Transmembrane domain of feline CaSR. (A) Shows the structure of the binding compound, (B) shows a model of the compound binding to CaSR, and (C) shows the putative CaSR amino acid residues that interact with the binding compound.

**Figures 12A-12C** show the *in silico* modeling of the binding of compound 3-(furan-2-yl)-4-phenyl-N-(1-phenylethyl) butan-1-amine to the 7 Transmembrane domain of feline CaSR. (A) Shows the structure of the binding compound, (B) shows a model of the compound binding to CaSR, and (C) shows the putative CaSR amino acid residues that interact with the binding compound.

**Figures 13A-13C** show the *in silico* modeling of the binding of compound 3-(2,2-dimethyltetrahydro-2H-pyran-4-yl)-3-phenyl-N-(1-phenylethyl)propan-1-amine to the 7 Transmembrane domain of feline CaSR. (A) Shows the structure of the binding compound, (B) shows a model of the compound binding to CaSR, and (C) shows the putative CaSR amino acid residues that interact with the binding compound.

**Figures 14A-14C** show the *in silico* modeling of the binding of compound N-((2,3-dihydrobenzofuran-2-yl) methyl)-1-(quinolin-2-yl)ethanamine to the 7 Transmembrane domain of feline CaSR. (A) Shows the structure of the binding compound, (B) shows a model of the compound binding to CaSR, and (C) shows the putative CaSR amino acid residues that interact with the binding compound.

**Figures 15A-15C** show the *in silico* modeling of the binding of compound 2,6-dichloro-4-(1-(((1-methyl-2-(thiophen-2-yl)piperidin-3-yl)methyl)amino)ethyl)aniline to the 7 Transmembrane domain of feline CaSR. (A) Shows the structure of the binding compound, (B) shows a model of the compound binding to CaSR, and (C) shows the putative CaSR amino acid residues that interact with the binding compound.

**Figures 16A-16C** show the *in silico* modeling of the binding of compound 1-(4-chlorophenyl)-N-(2-(2,2-dimethyl-4-(p-tolyl)tetrahydro-2H-pyran-4-yl)ethyl)ethanamine to the 7 Transmembrane domain of feline CaSR. (A) Shows the structure of the binding compound, (B) shows a model of the compound binding to CaSR, and (C) shows the putative CaSR amino acid residues that interact with the binding compound.

**Figures 17A-17C** show the *in silico* modeling of the binding of compound methyl 2-(3-cyanophenyl)-2-((4-fluoro-2,3-dihydro-1H-inden-1-yl)amino)acetate to the 7 Transmembrane domain of feline CaSR. (A) Shows the structure of the binding compound, (B) shows a model of the compound binding to CaSR, and (C) shows the putative CaSR amino acid residues that interact with the binding compound.

**Figures 18A-18C** show the *in silico* modeling of the binding of compound 2-(2-acetyl-1,2-dihydroisoquinolin-1-yl)-N-(1-(3-bromophenyl)ethyl)acetamide to the 7 Transmembrane domain of feline CaSR. (A) Shows the structure of the binding compound, (B) shows a model of the compound binding to CaSR, and (C) shows the putative CaSR amino acid residues that interact with the binding compound.

**Figures 19A-19C** show the *in silico* modeling of the binding of compound 1-(benzo[d]thiazol-2-yl)-1-(2,4-dimethylphenyl)ethanol to the 7 Transmembrane domain of feline CaSR. (A) Shows the structure of the binding compound, (B) shows a model of the compound binding to CaSR, and (C) shows the putative CaSR amino acid residues that interact with the binding compound.

**Figures 20A-20C** show the *in silico* modeling of the binding of compound 3-(4-((4-fluoro-4'-methylbiphenyl-2-yl)methoxy)phenyl)propanoic acid (also known as TUG891) to the 7 Transmembrane domain of feline CaSR. (A) Shows the structure of the binding compound, (B) shows a model of the compound binding to CaSR, and (C) shows the putative CaSR amino acid residues that interact with the binding compound.

**Figure 21** shows dose response curves for the *in vitro* activation of feline CaSR for various compounds, as described by Example 2.

**Figures 22A-22B** show dose response curves for the *in vitro* activation of CaSR for four amino acids, as described in Table 4.

**Figure 23** shows the amino acid sequence and the nucleotide sequence of the feline CaSR, identified as SEQ ID NOs: 1 and 2, respectively.

In case Figures 1-23 disclose subject matter that does not fall within the scope of the claims, the (parts of) such Figure(s) should be regarded as comparative to the claimed invention.

## DETAILED DESCRIPTION

The present invention is defined by the appended claims. The present invention provides for a flavor composition comprising a compound selected from the group consisting of the Formulas Tm-1 to Tm-5 which are described elsewhere herein.

To date, there remains a need for a flavor modifier that can increase and/or enhance the palatability of various cat pet food products. The present application relates to flavor compositions that include at least one compound that modulates the activity of a calcium-sensing receptor (CaSR). The flavor compositions can be used to increase the palatability and/or enhance or modify the taste of various pet food products such as a nutritionally-complete pet food, and can be added to pet food products in various delivery system formats. The flavor compositions can further include combinations of compounds, including amino acids, nucleotides, and furanones (as described in International Application Nos. PCT/EP2013/072788 filed October 31, 2013, PCT/EP2013/072789 filed October 31, 2013, PCT/EP2013/072790 filed October 31, 2013, and PCT/EP2013/072794 filed October 31, 2013), and/or umami receptor activating transmembrane compounds (as described in International Application No. PCT/US15/65036 filed December 10, 2015), and/or nucleotide derivatives (as described in International Application No. PCT/US15/65046 filed December 10, 2015,), and/or fatty acid receptor (GPR120) active compounds (as described in International Application No. PCT/US15/65106 filed December 10, 2015).

### 1. Definitions

The terms used in this specification generally have their ordinary meanings in the art, within the context of this invention and in the specific context where each term is used. Certain terms are discussed below, or elsewhere in the specification, to provide additional guidance to the practitioner in describing the compositions and methods of the invention and how to make and use them.

As used herein, the use of the word "a" or "an" when used in conjunction with the term "comprising" in the claims and/or the specification may mean "one," but it is also consistent with the meaning of "one or more," "at least one," and "one or more than one." Still further, the terms "having," "including," "containing" and "comprising" are interchangeable and one of skill in the art is cognizant that these terms are open ended terms.

The term "about" or "approximately" means within an acceptable error range for the particular value as determined by one of ordinary skill in the art, which will depend in part on how the value is measured or determined, *i.e.,* the limitations of the measurement system. For example, "about" can mean within 3 or more than 3 standard deviations, per the practice in the art. Alternatively, "about" can mean a range of up to 20%, preferably up to 10%, more preferably up to 5%, and more preferably still up to 1% of a given value. Alternatively, particularly with respect to biological systems or processes, the term can mean within an order of magnitude, preferably within 5-fold, and more preferably within 2-fold, of a value.

As used herein, "taste" refers to a sensation caused by activation or inhibition of receptor cells in a subject's taste buds. In certain embodiments, taste can be selected from the group consisting of sweet, sour, salt, bitter, kokumi and umami. In certain embodiments, a taste is elicited in a subject by a "tastant." In certain embodiments, a tastant is a synthetic tastant. In certain embodiments, the tastant is prepared from a natural source.

In certain embodiments, "taste" can include kokumi taste. *See, e.g.,* Ohsu et al., J. Biol. Chem., 285(2): 1016-1022 (2010. In certain embodiments, kokumi taste is a sensation caused by activation or inhibition of receptor cells in a subject's taste buds, for example the receptor CaSR, and is separate than other tastes, for example, sweet, salty, and umami tastes, although it can act as a taste enhancer for these tastes.

As used herein, "taste profile" refers to a combination of tastes, such as, for example, one or more of a sweet, sour, salt, bitter, umami, kokumi and free fatty acid taste. In certain embodiments, a taste profile is produced by one or more

tastant that is present in a composition at the same or different concentrations. In certain embodiments, a taste profile refers to the intensity of a taste or combination of tastes, for example, a sweet, sour, salt, bitter, umami, kokumi and free fatty acid taste, as detected by a subject or any assay known in the art. In certain embodiments, modifying, changing or varying the combination of tastants in a taste profile can change the sensory experience of a subject.

As used herein, "flavor" refers to one or more sensory stimuli, such as, for example, one or more of taste (gustatory), smell (olfactory), touch (tactile) and temperature (thermal) stimuli. In certain non-limiting embodiments, the sensory experience of a subject exposed to a flavor can be classified as a characteristic experience for the particular flavor. For example, a flavor can be identified by the subject as being, but not limited to, a floral, citrus, berry, nutty, caramel, chocolate, peppery, smoky, cheesy, meaty, etc., flavor. As used herein, a flavor composition can be selected from a liquid, solution, dry powder, spray, paste, suspension and any combination thereof. The flavor can be a natural composition, an artificial composition, a nature identical, or any combination thereof.

As used interchangeably herein, "aroma" and "smell" refer to an olfactory response to a stimulus. For example, and not by way of limitation, an aroma can be produced by aromatic substances that are perceived by the odor receptors of the olfactory system.

As used herein, "flavor profile" refers to a combination of sensory stimuli, for example, tastes, such as sweet, sour, bitter, salty, umami, kokumi and free fatty acid tastes, and/or olfactory, tactile and/or thermal stimuli. In certain embodiments, the flavor profile comprises one or more flavors which contribute to the sensory experience of a subject. In certain embodiments, modifying, changing or varying the combination of stimuli in a flavor profile can change the sensory experience of a subject.

As used herein "admixing," for example, "admixing the flavor composition or combinations thereof of the present application with a food product," refers to the process where the flavor composition, or individual components of the flavor composition, is mixed with or added to the completed product or mixed with some or all of the components of the product during product formation or some combination of these steps. When used in the context of admixing, the term "product" refers to the product or any of its components. This admixing step can include a process selected from the step of adding the flavor composition to the product, spraying the flavor composition on the product, coating the flavor composition on the product, suspending the product in the flavor composition, painting the flavor composition on the product, pasting the flavor composition on the product, encapsulating the product with the flavor composition, mixing the flavor composition with the product and any combination thereof. The flavor composition can be a liquid, emulsion, dry powder, spray, paste, suspension and any combination thereof.

In certain embodiments, the compounds of a flavor composition can be generated during the processing of a pet food product, e.g., sterilization, retorting and/or extrusion, from precursor compounds present in the pet food product. In certain embodiments, a compound of a flavor composition can be generated during the processing of a pet food product and additional components of the flavor composition can be added to the pet food product by admixing.

As used herein, "ppm" means parts-per-million and is a weight relative parameter. A part-per-million is a microgram per gram, such that a component that is present at 10 ppm is present at 10 micrograms of the specific component per 1 gram of the aggregate mixture.

As used herein, "palatability" can refer to the overall willingness of an animal to eat a certain food product. Increasing the "palatability" of a pet food product can lead to an increase in the enjoyment and acceptance of the pet food by the companion animal to ensure the animal eats a "healthy amount" of the pet food. The term "healthy amount" of a pet food as used herein refers to an amount that enables the companion animal to maintain or achieve an intake contributing to its overall general health in terms of micronutrients, macronutrients and calories, such as set out in the "Mars Petcare Essential Nutrient Standards." In certain embodiments, "palatability" can mean a relative preference of an animal for one food product over another. For example, when an animal shows a preference for one of two or more food products, the preferred food product is more "palatable," and has "enhanced palatability." In certain embodiments, the relative palatability of one food product compared to one or more other food products can be determined, for example, in side-by-side, free-choice comparisons, e.g., by relative consumption of the food products, or other appropriate measures of preference indicative of palatability. Palatability can be determined by a standard testing protocol in which the animal has equal access to both food products such as a test called "two-bowl test" or "versus test." Such preference can arise from any of the animal's senses, but can be related to, inter alia, taste, aftertaste, smell, mouth feel and/or texture.

The term "pet food" or "pet food product" means a product or composition that is intended for consumption by a companion animal, such as cats, dogs, guinea pigs, rabbits, birds and horses. For example, but not by way of limitation, the companion animal can be a "domestic" cat such as *Felis domesticus.* In certain embodiments, the companion animal can be a "domestic" dog, *e.g., Canis lupus familiaris.* A "pet food" or "pet food product" includes any food, feed, snack, food supplement, liquid, beverage, treat, toy (chewable and/or consumable toys), and meal substitute or meal replacement.

As used herein "nutritionally-complete" refers to pet food product that contains all known required nutrients for the intended recipient of the pet food product, in appropriate amounts and proportions based, for example, on recommendations of recognized or competent authorities in the field of companion animal nutrition. Such foods are therefore capable of serving as a sole source of dietary intake to maintain life, without the addition of supplemental nutritional sources.

As used herein "flavor composition" refers to at least one compound or biologically acceptable salt thereof that modulates, including enhancing, multiplying, potentiating, decreasing, suppressing, or inducing, the tastes, smells, flavors and/or textures of a natural or synthetic tastant, flavoring agent, taste profile, flavor profile and/or texture profile in an animal or a human. In certain embodiments, the flavor composition comprises a combination of compounds or biologically acceptable salts thereof. In certain embodiments, the flavor composition includes one or more excipients.

As used herein, the terms "modulates" or "modifies" refers an increase or decrease in the amount, quality or effect of a particular activity of a receptor and/or an increase or decrease in the expression, activity or function of a receptor. "Modulators," as used herein, refer to any inhibitory or activating compounds identified using *in silico, in vitro* and/or *in vivo* assays for, *e.g.,* agonists, antagonists and their homologs, including fragments, variants and mimetics.

"Inhibitors" or "antagonists," as used herein, refer to modulating compounds that reduce, decrease, block, prevent, delay activation, inactivate, desensitize or downregulate biological activity and/or expression of receptors or pathway of interest.

"Inducers," "activators" or "agonists," as used herein, refer to modulating compounds that increase, induce, stimulate, open, activate, facilitate, enhance activation, sensitize or upregulate a receptor or pathway of interest.

In certain embodiments, an "active compound" is a compound that modulates, *i.e.,* is active against, a calcium-sensitive receptor. For example, an active compound can be active against the calcium-sensitive receptor as an agonist, antagonist, positive allosteric modulator (PAM), negative allosteric modulator, or by showing a mix of activities, for example, as agonist activity as well as positive allosteric modulation activity, or agonist activity as well as negative allosteric modulation activity.

As used herein, the terms "vector" and "expression vector" refer to DNA molecules that are either linear or circular, into which another DNA sequence fragment of appropriate size can be integrated. Such DNA fragment(s) can include additional segments that provide for transcription of a gene encoded by the DNA sequence fragment. The additional segments can include and are not limited to: promoters, transcription terminators, enhancers, internal ribosome entry sites, untranslated regions, polyadenylation signals, selectable markers, origins of replication and such like. Expression vectors are often derived from plasmids, cosmids, viral vectors and yeast artificial chromosomes. Vectors are often recombinant molecules containing DNA sequences from several sources.

The term "operably linked," when applied to DNA sequences, e.g., in an expression vector, indicates that the sequences are arranged so that they function cooperatively in order to achieve their intended purposes, *i.e.,* a promoter sequence allows for initiation of transcription that proceeds through a linked coding sequence as far as the termination signal.

The term "nucleic acid molecule" and "nucleotide sequence," as used herein, refers to a single or double stranded covalently-linked sequence of nucleotides in which the 3' and 5' ends on each nucleotide are joined by phosphodiester bonds. The nucleic acid molecule can include deoxyribonucleotide bases or ribonucleotide bases, and can be manufactured synthetically *in vitro* or isolated from natural sources.

The terms "polypeptide," "peptide," "amino acid sequence" and "protein," used interchangeably herein, refer to a molecule formed from the linking of at least two amino acids. The link between one amino acid residue and the next is an amide bond and is sometimes referred to as a peptide bond. A polypeptide can be obtained by a suitable method known in the art, including isolation from natural sources, expression in a recombinant expression system, chemical synthesis or enzymatic synthesis. The terms can apply to amino acid polymers in which one or more amino acid residue is an artificial chemical mimetic of a corresponding naturally occurring amino acid, as well as to naturally occurring amino acid polymers and non-naturally occurring amino acid polymers.

The term "amino acid," as used herein, refers to naturally occurring and synthetic amino acids, as well as amino acid analogs and amino acid mimetics that function in a manner similar to the naturally occurring amino acids. Naturally occurring amino acids are those encoded by the genetic code, as well as those amino acids that are later modified, *e.g.*, hydroxyproline, gamma-carboxyglutamate and O-phosphoserine. Amino acid analogs and derivatives can refer to compounds that have the same basic chemical structure as a naturally occurring amino acid, *i.e.,* a carbon that is bound to a hydrogen, a carboxyl group, an amino group and an R group, *e.g.*, homoserine, norleucine, methionine sulfoxide and methionine methyl sulfonium. Such analogs can have modified R groups (*e.g.*, norleucine) or modified peptide backbones, but retain the same basic chemical structure as a naturally occurring amino acid. Amino acid mimetics means chemical compounds that have a structure that is different from the general chemical structure of an amino acid, but that functions in a manner similar to a naturally occurring amino acid.

The terms "isolated" or "purified," used interchangeably herein, refers to a nucleic acid, a polypeptide, or other biological moiety that is removed from components with which it is naturally associated. The term "isolated" can refer to a polypeptide that is separate and discrete from the whole organism with which the molecule is found in nature or is present in the substantial absence of other biological macromolecules of the same type. The term "isolated" with respect to a polynucleotide can refer to a nucleic acid molecule devoid, in whole or part, of sequences normally associated with it in nature; or a sequence, as it exists in nature, but having heterologous sequences in association therewith; or a molecule disassociated from the chromosome.

As used herein, the term "recombinant" can be used to describe a nucleic acid molecule and refers to a polynucleotide of genomic, RNA, DNA, cDNA, viral, semisynthetic or synthetic origin which, by virtue of its origin or manipulation is not associated with all or a portion of polynucleotide with which it is associated in nature.

The term "fusion," as used herein, refers to joining of different peptide or protein segments by genetic or chemical methods wherein the joined ends of peptide or protein segments may be directly adjacent to each other or may be separated by linker or spacer moieties such as amino acid residues or other linking groups.

The term "alkyl" refers to a straight or branched $C_1$-$C_{20}$ hydrocarbon group consisting solely of carbon and hydrogen atoms, containing no unsaturation, and which is attached to the rest of the molecule by a single bond, *e.g.*, methyl, ethyl, *n*-propyl, 1-methylethyl (isopropyl), *n*-butyl, *n*-pentyl, 1,1-dimethylethyl (*t*-butyl).

The term "cycloalkyl" denotes an unsaturated, non-aromatic mono- or multicyclic hydrocarbon ring system (containing, for example, $C_3$-$C_6$) such as cyclopropyl, cyclobutyl, cyclopentyl, cyclohexyl. Examples of multicyclic cycloalkyl groups (containing, for example, $C_6$-$C_{15}$) include perhydronapththyl, adamantyl and norbornyl groups bridged cyclic group or sprirobicyclic groups, e.g., spiro (4,4) non-2-yl.

## 2. Calcium-Sensing Receptor (CaSR)

Also disclosed herein, related to the present invention but not claimed, are calcium-sensing receptors for use in the disclosed methods. The calcium-sensing receptors of the present disclosure can include mammalian calcium-sensing receptors such as, but not limited to, feline, canine and human calcium-sensing receptors for the identification of kokumi-taste active compounds.

In certain non-limiting examples, the calcium-sensing receptor of the present disclosure is encoded by a nucleic acid as described by International Application No. PCT/US15/55149, filed October 12, 2015. In certain non-limiting examples, the calcium-sensing receptor of the present disclosure comprises an amino acid sequence as described by International Application No. PCT/US15/55149, filed October 12, 2015.

In certain non-limiting examples, the calcium-sensing receptor comprises a feline, canine or human calcium-sensing receptor nucleotide sequence as described by International Application No. PCT/US15/55149, filed October 12, 2015.

In certain non-limiting examples, the calcium-sensing receptor comprises a feline, canine or human calcium-sensing receptor amino acid sequence as described by International Application No. PCT/US15/55149, filed October 12, 2015.

In certain examples, the calcium-sensing receptor for use in the presently disclosed subject matter can include a receptor comprising a nucleotide sequence having at least 85%, at least 90%, at least 91%, at least 92%, at least 93%, at least 94%, at least 95%, at least 96%, at least 97%, at least 98% or at least 99% identity to a feline, canine or human calcium-sensing receptor nucleotide sequence.

In certain examples, the calcium-sensing receptor for use in the presently disclosed subject matter can include a receptor comprising an amino acid sequence having at least 85%, at least 90%, at least 91%, at least 92%, at least 93%, at least 94%, at least 95%, at least 96%, at least 97%, at least 98% or at least 99% identity to a feline, canine or human calcium-sensing receptor amino acid sequence.

In certain examples, the disclosed subject matter provides for the use of an isolated or purified calcium-sensing receptor and/or variants and fragments thereof. The disclosed subject matter also encompasses the use of sequence variants. In certain examples, variation can occur in either or both the coding and non-coding regions of a nucleotide sequence of a calcium-sensing receptor. Variants can include a substantially homologous protein encoded by the same genetic locus in an organism, *i.e.,* an allelic variant. Variants also encompass proteins derived from other genetic loci in an organism, *e.g.,* feline, but having substantial homology to the calcium-sensing receptor, *i.e.,* a homolog. Variants can also include proteins substantially homologous to the calcium-sensing receptor but derived from another organism, *i.e.,* an ortholog. Variants also include proteins that are substantially homologous to the calcium-sensing receptor that are produced by chemical synthesis. Variants also include proteins that are substantially homologous to the calcium-sensing receptor that are produced by recombinant methods.

The disclosed subject matter, related to the present invention but not claimed, also provides for fusion proteins that comprise a calcium-sensing receptor, or fragment thereof. In certain examples, a fusion protein of the present disclosure can include a detectable marker, a functional group such as a carrier, a label, a stabilizing sequence or a mechanism by which calcium-sensing receptor agonist binding can be detected. Non-limiting examples of a label include a FLAG tag, a His tag, a MYC tag, a maltose binding protein and others known in the art. The presently disclosed subject matter also provides nucleic acids encoding such fusion proteins, vectors containing fusion protein-encoding nucleic acids and host cells comprising such nucleic acids or vectors. In certain examples, fusions can be made at the amino terminus (N-terminus) of a calcium-sensing receptor or at the carboxy terminus (C-terminus) of a calcium-sensing receptor.

In certain examples, the calcium-sensing receptors disclosed herein can contain additional amino acids at the N-terminus and/or at the C-terminus end of the sequences, e.g., when used in the methods of the disclosed subject matter. In

certain examples, the additional amino acids can assist with immobilizing the polypeptide for screening purposes, or allow the polypeptide to be part of a fusion protein, as disclosed above, for ease of detection of biological activity.

### 3. Calcium-Sensing Receptor Modulating Compounds

The present disclosure relates to flavor compositions comprising at least one compound that can modulate the activity of a calcium-sensing receptor (CaSR).

The present invention is defined by the appended claims. The present invention provides for a flavor composition comprising a compound selected from the group consisting of the Formulas Tm-1 to Tm-5 which are described elsewhere herein.

The compounds disclosed herein were identified through an *in vitro* assay wherein the ability of the compounds to activate a feline CaSR expressed by cells in culture was determined, and/or an *in silico* assay, wherein the compounds' ability to bind to CaSR was determined *in silico.* The flavor compositions can be used to enhance or modify the palatability, taste or flavor of pet food products. In certain embodiments, the flavor compositions described herein can be added to pet food product compositions in various delivery system formats. The flavor compositions can include combinations of compounds, for example, combinations of one or more compounds and/or one or more amino acids and/or one or more nucleotides and/or one or more furanones as described herein and in International Application Nos. PCT/EP2013/072788 filed October 31, 2013, PCT/EP2013/072789 filed October 31, 2013, PCT/EP2013/072790 filed October 31, 2013, PCT/EP2013/072794 filed October 31, 2013; and/or one or more umami receptor activating transmembrane compounds, as described herein and in International Application No. PCT/US15/65036 filed December 10, 2015; and/or one or more nucleotide derivatives, as described herein and in International Application No. PCT/US15/65046 filed December 10, 2015; and/or one or more fatty acid receptor (GPR120) active compounds, as described herein and in International Application No. PCT/US15/65106 filed December 10, 2015.

In certain embodiments, the calcium-sensing receptor modulating compounds, which can be referred to as calcium-sensing receptor modulators, of the present application are identified through *in silico* modeling of a calcium-sensing receptor *e.g.,* a feline calcium-sensing receptor, wherein the calcium-sensing receptor modulators of the present application comprise a structure that fits within a binding site of the calcium-sensing receptor. In certain embodiments, the *in silico* method comprises the *in silico* methods described herein and in the Examples section of the present application.

In certain embodiments, the calcium-sensing receptor modulators of the present application are identified through an *in vitro* method, *e.g.,* wherein the calcium-sensing receptor agonist compounds activate and/or modulate a calcium-sensing receptor, disclosed herein, expressed by cells *in vitro.* In certain embodiments, the *in vitro* method comprises the *in vitro* methods described herein and in the Examples section of the present application.

In certain embodiments, the compounds are comprised in a flavor composition without other palatability enhancing agents. In certain embodiments, the compounds are comprised in one or more flavor compositions with one or more additional palatability enhancing agents, for example, nucleotides, nucleotide derivatives, amino acids, furanones, fatty acid receptor activating compounds, and umami receptor activating transmembrane compounds described herein, which activate different active sites on different receptors (*e.g.*, an umami receptor).

Figure 1 provides an illustration of a calcium-sensing receptor dimer. Figure 2 provides an illustration of a calcium-sensing receptor monomer, and highlights two binding domains: the Venus Flytrap (VFT) domain and the 7 Transmembrane (7TM) domain. Figure 2 further illustrates active sites in each domain. The calcium-sensing receptor modulating compounds, which can be referred to as calcium-sensing receptor modulators, will be described with reference to the domain to which they interact.

### 3.1 CaSR Venus Flytrap Domain Binding Compounds

Disclosed herein are flavor compositions that include at least one calcium-sensing receptor modulating compound that can that interact with (*e.g.*, bind to) the Venus Flytrap (VFT) domain of the receptor. The present invention is defined by the appended claims. In certain examples, such interactions with the VFT domain of the calcium-sensing receptor agonizes the calcium-sensing receptor. In other examples, the compound acts synergistically with other calcium-sensing receptor agonists or modulators to modulate the activity of the calcium-sensing receptor. In still other examples, interactions with the VFT domain of the calcium-sensing receptor antagonizes the calcium-sensing receptor. In certain examples, the compound enhances the ability of a calcium-sensing receptor agonist to activate the receptor (*i.e.,* the compound functions as a positive allosteric modulator).

In certain examples, the compound interacts with one or more amino acids in the VFT domain, for example, one or more of Asn64, Phe65, Asn102, Thr145, Ser147, Ala168, Ser169, Ser170, Asp190, Gln193, Asp216, Tyr218, Ser272, Glu297, Ala298, Trp299, Ala300, Ser302, Leu304, Tyr411, Thr412, and His413. Therefore, in certain examples, a calcium-sensing receptor modulating compound can be identified and/or defined based on its interaction with one or more of these residues.

### 3.2 CaSR 7 Transmembrane Domain Binding Compounds

The present disclosure further relates to flavor compositions that include at least one calcium-sensing receptor modulating compound that can that interact with (*e.g.*, bind to) the 7 Transmembrane (7TM) domain of the receptor. In certain embodiments, such interactions with the 7TM domain of the calcium-sensing receptor agonizes the calcium-sensing receptor. In other embodiments, the compound acts synergistically with other calcium-sensing receptor agonists or modulators to modulate the activity of the calcium-sensing receptor. In still other embodiments, interactions with the 7TM domain of the calcium-sensing receptor antagonizes the calcium-sensing receptor. In certain embodiments, the compound enhances the ability of a calcium-sensing receptor agonist to activate the receptor (*i.e.,* the compound functions as a positive allosteric modulator).

In certain embodiments, the compound interacts with one or more amino acids in the 7TM domain, for example, one or more amino acids in helices 3, 4, 5, 6, and/or 7 of the receptor. On helix 3, residues at the active site include Phe684, Gly685, and Phe688. On helix 4, residues at the active site include Gln735. On helix 5, residues at the active site include Met771, Ala772, Phe775, Leu776, and Thr780. On helix 6, residues at the active site include Phe814, Val817, Trp818, and Phe821. On helix 7, residues at the active site include Glu837, Ala840, and Ile841. Therefore, in certain embodiments, a calcium-sensing receptor modulating compound can be identified and/or defined based on its interaction with one or more of these residues.

#### 3.2.1 Calcimimetics

In the present invention, the flavor composition comprises one or more calcimimetic.

In the present invention, the calcimimetic can have the structure of any of Formulas Tm-1 through Tm-5 in Table 1. Formulas Tm-6 through Tm-12 are not claimed and included for illustration only.

**Table 1.** Structures of calcimimetic compounds

| | |
|---|---|
| Tm-1 | 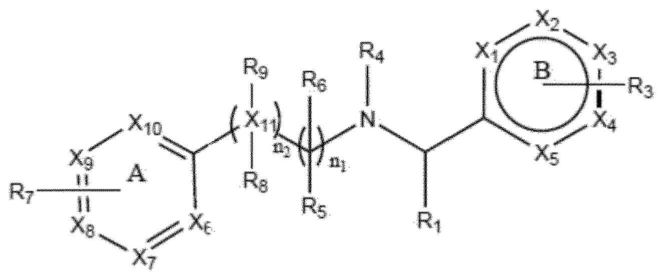 |
| Tm-2 | 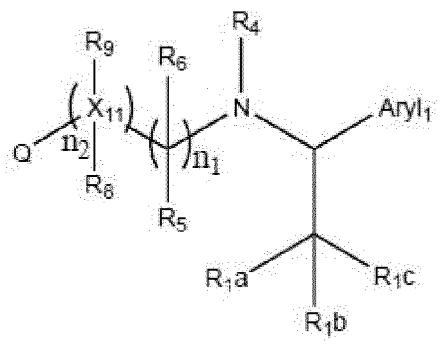 |
| Tm-3 | 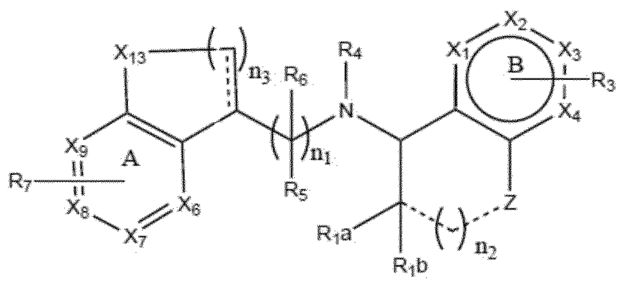 |

(continued)

| | |
|---|---|
| Tm-4 | 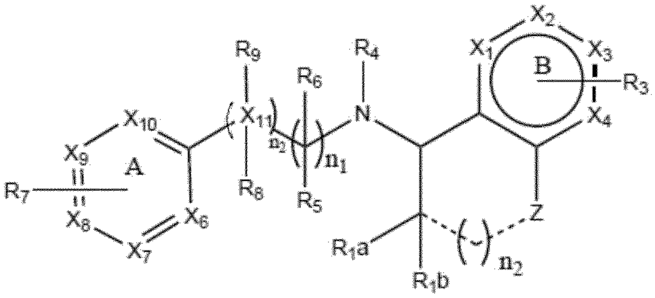 |
| Tm-5 | 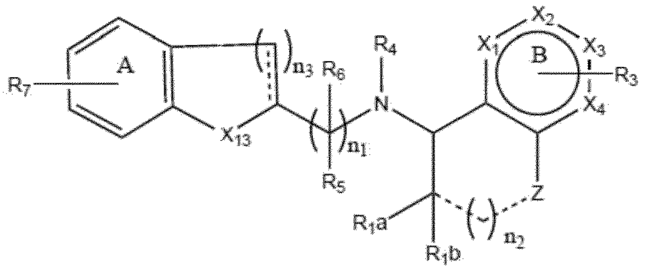 |
| Tm-6 | 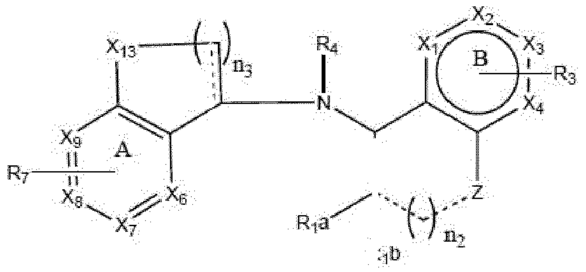 |
| Tm-7 | 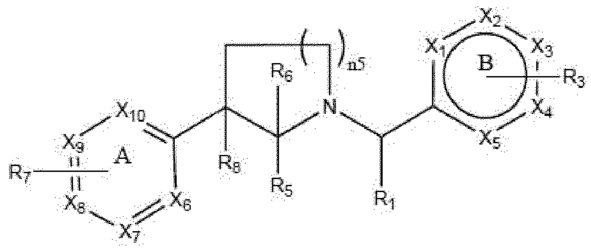 |
| Tm-8 | 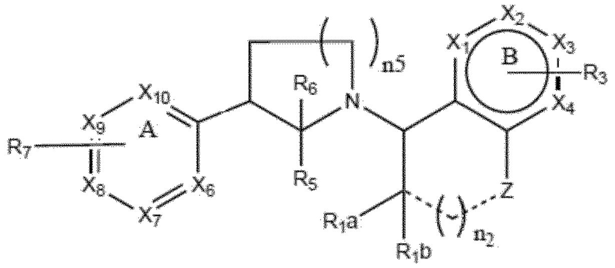 |
| Tm-9 | 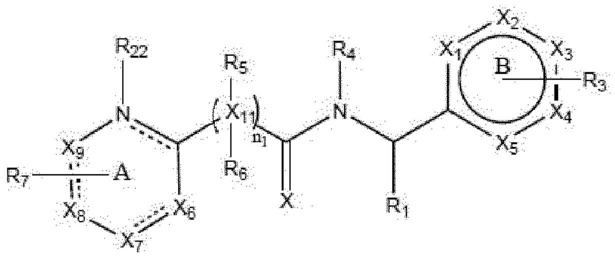 |

(continued)

| | |
|---|---|
| Tm-10 | 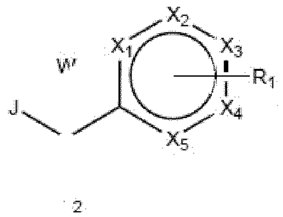 |
| Tm-11 | 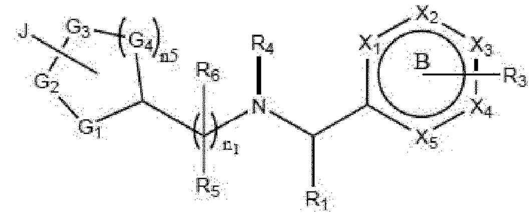 |
| Tm-12 | 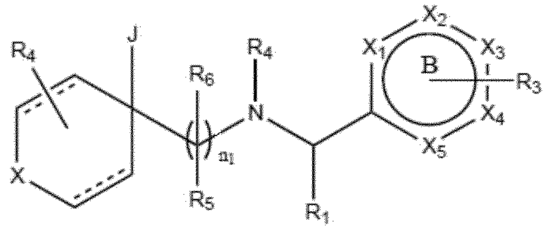 |

In Tm-1 through Tm-12, $G_1$ through $G_4$ are independently $C(R_4aR_4b)$, $N(R_4)$, S, or O;

W is $OR_4$ or $SR_4$;
X is $NR_1R_2$, $CR_1R_2$, O or S;
$X_1$ through $X_{10}$ are independently C or N;
$X_{11}$ is C, O, N, or S;
$X_{12}$ is O, NH, or S;
$X_{13}$ is $CR_4aR_4b$, O, $N(R_{12})$, or S;
Z is H, O, N, S, or C;
$n_1$, $n_2$, and $n_3$ independently range from 0 to 4 such that when $n_1$ or $n_2$ is 0, it indicates a chemical bond;
$n_4$ ranges from 0 to 2;
$n_5$ ranges from 1 to 3;
$R_1$, $R_{1a}$, $R_{1b}$, and $R_{1c}$ are independently selected from the group consisting of H, $CH_3$, $CF_3$, $CBr_3$, branched or unbranched lower alkyl ($C_1$-$C_6$), cycloalkyl ($C_3$-$C_6$), $COOR_{13}$, $C(O)NR_{16}R_{17}$, and $SO_2NR_4aR_4b$; and
$R_2$ is selected from the group consisting of $CH_3$, $CF_3$, $CBR_3$, $NO_2$, lower alkyl ($C_1$-$C_6$), cycloalkyl ($C_3$-$C_6$), aryl, and heteroaryl.

In Tm-1 through Tm-12, Rings A and B, are any aryl or heteroaryl rings, which can be independently substituted by the functional groups $R_3$ and/or $R_7$. $R_3$ and $R_7$ can be independently selected from the group consisting of H, OH, branched or unbranched lower alkyl ($C_1$-$C_6$), $O(CH_2)n_3$aryl, $O(CH_2)n_3$heteroaryl, $NR_{10}R_{11}$, $N(R_{12})OH$, aryl, heteroaryl, methyl, OH, SH, $OCH_3$, $SCH_3$, COOH, $COOR_{13}$, $S(O)n_4R_{14}$, $C(O)R_{15}$, $C(O)NR_{16}R_{17}$, CN, $NR_{18}R_{19}$, $NR_{20}C(O)R_{21}$, aryl, methylenedioxy, alkyl ($C_1$ - $C_5$), $CH_2SSCH_2CH(COOH)(NH_2)$, halogen (including F, Cl, Br, or I), $NO_2$, $NHC(=NH)NH_2$, CHO, $CF_3$, $P(=X_1)(OR_1)_2$, $OP(=X_1)(OR_1)_2$, tetrazole, $C(O)N(R_{12})OH$, $CF_3$, $OR_4$, $SR_4$, N=C=S, N=C=O, $C(R_4)=C(R_4a)R_4b$, $(CH_2)n_1CH=CH_2$, $NHC(=X_{12})NH_2$, $NHC(=X_{12})NHR_4$, $SO_2NR_4aR_4b$, and C $CR_4$.

$R_4$, $R_{4a}$, and $R_{4b}$ are independently selected from the group consisting of H, $CH_3$, lower alkyl ($C_1$-$C_6$), cycloalkyl ($C_3$-$C_6$), phenyl, aryl, and heteroaryl.

$R_5$, $R_6$, $R_8$ and $R_9$ are independently selected from the group consisting of H, $CH_3$, branched or unbranched lower alkyl ($C_1$-$C_{10}$), aryl, heteroaryl, phenyl, pyridyl, furan, pyran, thiophene, $(CH_2)$naryl, $(CH_2)$nheteroaryl, tetrahydropyran, wherein n is 0-4. When n is 0, this implies a chemical bond.

$R_{10}$ and $R_{11}$ are independently selected from the group consisting of H, $CH_3$, lower alkyl ($C_1$-$C_6$), phenyl.

$R_{12}$ is H or $CH_3$.

$R_{13}$ is selected from the group consisting of H, $CH_3$, lower alkyl ($C_1$-$C_6$), and $CH_2$aryl.

$R_{14}$ is selected from the group consisting of H, $CH_3$, lower alkyl ($C_1$-$C_6$), and OH.

$R_{15}$ is selected from the group consisting of H, $CH_3$, $CF_3$, lower alkyl ($C_1$-$C_6$), and phenyl.

$R_{16}$, $R_{17}$, $R_{18}$, $R_{19}$, $R_{20}$, and $R_{21}$ are each independently selected from the group consisting of H, $CH_3$, lower alkyl, phenyl, $CH_2$phenyl, and cycloalkyl ($C_1$-$C_6$).

$R_{22}$ is selected from the group consisting of H, C(X)$R_4$. When $R_{22}$ is absent, Ring A is aromatic.

Independently Ring A and Ring B can be saturated or unsaturated. In addition, Ring A and Ring B can independently contain fused five-membered or six-membered saturated or unsaturated rings. For example, Ring B can contain an unsaturated six-membered ring between $X_1$ and $X_2$, between $X_2$ and $X_3$, between $X_3$ and $X_4$, or between $X_4$ and $X_5$, yielding for example a naphthalene ring system or other fused ring systems such as benzothiophene, benzofuran, 2,3-Dihydrobenzofuran, indole, cyclohexyl, quinoline, isoquinoline, quinazoline, quinoxaline, and cinnoline. In a likewise manner, Ring A can contain a saturated or unsaturated six-membered ring between $X_6$ and $X_7$, between $X_7$ and $X_8$, between $X_8$ and $X_9$, or between $X_9$ and $X_{10}$ to afford one or more fused ring systems.

J can be selected from the group consisting of aryl, phenyl, pyridyl, furan, thiophene, pyrolle, benzothiophene, benzothiazole, benzimidizole, benzo[d]oxazole, benzofuran, indole, quinoline, isoquinoline, quinazoline, quinoxaline, cinnoline, thiazolo[4,5-c]pyridine, thiazolo[5,4-d]pyrimidine, oxazolo[5,4-d]pyrimidine, and oxazolo[5,4-b]pyridine.

$Aryl_1$ can be selected from the group consisting of phenyl, furan, thiophene, pyrole, benzofuran, benzothiophene, indole, quinoline, isoquinoline, heteroaryl, and aryl.

Q can be selected from the group consisting of aryl, heteroaryl, cycloalkyl ($C_1$-$C_7$), and indanyl.

The alkyl and cycloalkyl groups can optionally have the following functional groups attached: H, OH, $NR_{10}R_{11}$, N($R_{12}$)OH, aryl, heteroaryl, methyl, OH, SH, $OCH_3$, $SCH_3$, COOH, $COOR_{13}$, S(O)$n_4R_{14}$, C(O)$R_{15}$, C(O)$NR_{16}R_{17}$, CN, $NR_{18}R_{19}$, $NR_{20}$C(O)$R_{21}$, aryl, halogen (including F, Cl, Br, I), $NO_2$, NHC(=NH)$NH_2$, CHO, $CF_3$, P(=$X_1$)($OR_1$)$_2$, OP(=$X_1$)($OR_1$)$_2$, $CF_3$, $OR_4$, $SR_4$, C($R_4$)=C($R_4$a)$R_4$b , ($CH_2$)$n_1$CH=$CH_2$, NHC(=$X_{12}$)$NH_2$, NHC(=$X_{12}$)$NHR_4$, and $SO_2NR_4aR_4b$.

In certain embodiments, a calcimimetic having the structure of Formula Tm-1 or Formula Tm-2 is selected from N-(1-(4-chlorophenyl)ethyl)-3-(4-methoxyphenyl)-6-methylheptan-1-amine, N-(1-(4-chlorophenyl)ethyl)-3-(furan-2-yl)-3-(p-tolyl)propan-1-amine, N-(1-(4-chlorophenyl)ethyl)-3-(4-isopropoxyphenyl)-3-phenylpropan-1-amine, N-(1-(4-chlorophenyl)ethyl)-3-(4-methoxyphenyl)-4-methylpentan-1-amine, N-(1-(4-chlorophenyl)ethyl)-3-(4-isopropoxyphenyl)-3-(2-methoxyphenyl)propan-1-amine, 3-(furan-2-yl)-3-phenyl-N-(1-phenylethyl)propan-1-amine, N-(1-(4-chlorophenyl)ethyl)-3-(furan-2-yl)-3-(2-methoxyphenyl)propan-1-amine, N-(1-(4-chlorophenyl)ethyl)-3-(4-isopropoxyphenyl)-6-methylheptan-1-amine, N-(1-(4-chlorophenyl)ethyl)-3-(4-isopropoxyphenyl)-4-methylpentan-1-amine, 3-(furan-2-yl)-N-(1-phenylethyl)-3-(p-tolyl)propan-1-amine, 3-(2,2-dimethyltetrahydro-2H-pyran-4-yl)-3-phenyl-N-(1-phenylethyl)propan-1-amine, 3-(furan-2-yl)-N-(1-(thiophen-2-yl)ethyl)-3-(p-tolyl)propan-1-amine, and N-(1-(4-chlorophenyl)ethyl)-3-(furan-2-yl)-4-phenylbutan-1-amine.

In certain embodiments, a calcimimetic having the structure of Formula Tm-2 is 3-(furan-2-yl)-4-phenyl-N-(1-phenylethyl)butan-1-amine or N-(1-(1H-indol-2-yl)ethyl)-1-(3,4-dimethylphenyl)ethanamine.

In certain embodiments, a calcimimetic having the structure of Formula Tm-1, Tm-2, Tm-3 or Tm-4 is Cinacalcet.

In certain embodiments, a calcimimetic having the structure of Formula Tm-1, Tm-2, Tm-3, or Tm-4 is not Cinacalcet.

In certain embodiments, a caclimimetic having the structure of Formula Tm-2 or Tm-5 is Calindol.

In certain embodiments, a caclimimetic having the structure of Formula Tm-2 or Tm-5 is not Calindol.

In certain embodiments, a calcimimetic having the structure of Formula Tm-3 is 6-bromo-4-fluoro-N-(1-(pyridin-4-yl)ethyl)-2,3-dihydro-1H-inden-1-amine or methyl 2-(3-cyanophenyl)-2-((4-fluoro-2,3-dihydro-1H-inden-1-yl)amino)acetate

In certain embodiments, a calcimimetic having the structure of Formula Tm-4 is 3-((8-chloro-2,3,4,5-tetrahydrobenzo[b]oxepin-5-yl)amino)-2-(pyridin-2-ylmethyl)propan-1-ol.

In certain embodiments, a calcimimetic having the structure of Formula Tm-5 is N-((2,3-dihydrobenzofuran-2-yl)methyl)-1-(quinolin-2-yl)ethanamine.

In certain embodiments, a calcimimetic having the structure of any one of Formulas Tm-1 through Tm-5 does not include one or more of the foregoing species of calcimimetic compounds.

### 3.2.2 Interactions with CaSR 7TM Domain

The present invention is defined by the appended claims. The present invention provides for a flavor composition comprising a compound selected from the group consisting of the Formulas Tm-1 to Tm-5 which are described elsewhere herein. In certain embodiments, the flavor composition comprises a compound that interacts with the active site of the 7TM domain of a CaSR. For example, active compounds, e.g., agonists or positive allosteric modulators that bind to the 7TM domain can form a salt bridge or a hydrogen bond from the compound to Glu837.

Alternatively, or additionally, active compounds can undergo a ring stacking interaction. For example, and not limitation, a ring stacking interaction can be to one or more of Phe821, Phe775, Trp818, Phe684, and Phe688.

In certain embodiments, one or more active compounds can interact to fill the active site, for example, by forming hydrophobic interactions with one or more residues in the active site. For example, active compounds can fill the active site by interacting with the residues on helices 3, 4, 5, 6, and/or 7 described above. In certain embodiments, the one or more residues include Phe684, Gly685, and/or Phe688 on helix 3, Gln735 on helix 4, Met771, Ala772, Phe775, Leu776, and/or Thr780 on helix 5, Phe814, Val817, Trp818, and/or Phe821 on helix 6, and/or Glu837, Ala840, and/or Ile841 on helix 7. The compound can form interactions with any number of residues on any combination of helices. For example, in certain embodiments, the compound forms hydrophobic interactions with one, two, three, four, five or more residues on helices 3, 4, 5, 6, or 7. In certain embodiments, the compound forms hydrophobic interactions with one, two, three, four, five or more residues on helices 5, 6, and 7, and with one, two, three, four, five or more residues on helices 3, 4, and 5.

### 4. Methods for Identifying Calcium-Sensing Receptor Modulating Compounds

Also disclosed herein, relating to the present invention but not claimed, are methods for identifying compounds that modulate the activity and/or expression of a calcium-sensing receptor. For example, and not by way of limitation, the modulator can be an agonist or an antagonist. The presently disclosed subject matter provides *in silico* and *in vitro* methods for identifying those compounds that modulate the activity and/or expression of a calcium-sensing receptor, disclosed above.

#### *4.1 In silico* Methods

Also disclosed herein, relating to the present invention but not claimed, are *in silico* methods for identifying compounds that can potentially interact with a calcium-sensing receptor and/or modulate the activity and/or expression of a calcium-sensing receptor, for example, a feline, canine or human calcium-sensing receptor.

In certain examples, the method can include predicting the three-dimensional structure (3D) of a calcium-sensing receptor and screening the predicted 3D structure with putative calcium-sensing receptor modulating compounds (*i.e.,* test compounds). The method can further include predicting whether the putative compound would interact with the binding site of the receptor by analyzing the potential interactions with the putative compound and the amino acids of the receptor. The method can further include identifying a test compound that can bind to and/or modulate the biological activity of the calcium-sensing receptor by determining whether the 3D structure of the compound fits within the binding site of the 3D structure of the receptor.

In certain examples, the calcium-sensing receptor for use in the disclosed method can have an amino acid or nucleotide sequence as described by International Application No. PCT/US15/55149, filed October 12, 2015, or a fragment or variant thereof.

Non-limiting examples of compounds (*e.g.*, potential calcium-sensing receptor modulators) that can be tested using the disclosed methods include any small chemical compound, or any biological entity, such as peptides, salts, and amino acids known in the art. In certain examples, the test compound can be a small chemical molecule.

In certain examples, structural models of a calcium-sensing receptor can be built using crystal structures of closely related GPCRs as templates for homology modeling. For the flytrap domain of CaSR, X-ray cyrstalogaphic structures of the human calcium receptor Venus Flytrap Domain (VFT) have been solved recently. Structures available in the Protein Databank (PDB, www.rcsb.org ) are:

PDB ID: 5FBH - crystal structure of the extracellular domain of human calcium sensing receptor with bound $Gd^{+3}$;
PDB ID: 5FBK - crystal structure of the extracellular domain of human calcium sensing receptor;
PDB ID: 5K5T - crystal structure of the inactive form of human calcium-sensing receptor extracellular domain;
PDB ID: 5K5S - crystal structure of the active form of human calcium-sensing receptor extracellular domain (See Geng, et al., Structural mechanism of ligand activation in human calcium-sensing receptor, Elife. 2016 Jul 19;5. pii: e13662; Zhang, et al., Structural basis for regulation of human calcium-sensing receptor by magnesium ions and an unexpected tryptophan derivative co-agonist, Sci Adv. 2016 May; 2(5): e1600241).

In certain examples, model VFT structures can be generated for other species of interest such as cat and dog based on sequence homology to the human VFT. In certain examples, transmembrane domains model structures can be generated based on sequence homology to seven-transmembrane domains (7TMs) of GPCRs whose structures have been crystallographically determined.

For example, and not by way of limitation, structural models of the transmembrane domains can be generated using the crystal structures of Group C GPCRs. In certain examples, a structural model of either the flytrap domain or transmembrane domain of a calcium-sensing receptor can be based on a combination of known crystal structures of GPCRs. (*See* Binet et al., J. Biol. Chem, 282(16): 12154-63 (2007); Wu et. al., Science, 344(6179):58-64 (2014); and Dore et al., Nature 511:557-562 (2014)). For example, and not by way of limitation, a structural model of the 7 Transmembrane

domain for cat or dog can be generated based on the crystal structures having the protein data base (PDB) ID Nos. 4OR2 and/or 4OO9. Figures 3-20 depict structural models of calcium-sensing receptors that can be used in the disclosed *in silico* methods. Any suitable modeling software known in the art can be used. In certain examples, the Modeller software package (Accelrys, BIOVIA, Dassault Systèmes) can be used to generate the three-dimensional protein structure.

In certain examples, the *in silico* methods of identifying a compound that binds to a calcium-sensing receptor comprises determining whether a test compound interacts with one or more amino acids of a calcium-sensing receptor interacting domain, as described herein.

Compounds that are identified by the disclosed *in silico* methods can be further tested using the *in vitro* methods disclosed herein.

**4.2 Calcium-Sensing Receptor Binding Site**

Also disclosed herein, relating to the present invention but not claimed, are methods of screening for compounds that modulate the activity of a calcium-sensing receptor, for example, a feline, canine or human calcium-sensing receptor, wherein the compounds interact with one or more amino acids of the calcium-sensing receptor. In certain examples the binding site of a calcium-sensing receptor comprises amino acids within the transmembrane domain, for example, 7 Transmembrane (7TM) domain, or the Venus Flytrap (VFT) domain of the receptor, and can be identified by generating an interaction map of the receptor using *in silico* modeling, as described herein. In one non-limiting example, the presence of an amino acid in the interaction map means that the residue is in the vicinity of the ligand binding environment, and interacts with the ligand.

In certain examples, the interaction between a compound and one or more amino acids of the calcium-sensing receptors described herein can comprise one or more hydrogen bond, covalent bond, non-covalent bond, salt bridge, physical interaction, and combinations thereof. The interactions can also be any interaction characteristic of a ligand receptor interaction known in the art. Such interactions can be determined by, for example, site directed mutagenesis, x-ray crystallography, x-ray or other spectroscopic methods, Nuclear Magnetic Resonance (NMR), cross-linking assessment, mass spectroscopy or electrophoresis, cryo-microscopy, displacement assays based on known agonists, structural determination and combinations thereof. In certain examples, the interactions are determined *in silico,* for example, by theoretical means such as docking a compound into a feline or canine calcium-sensing receptor binding pocket as described herein, for example, using molecular docking, molecular modeling, molecular simulation, or other means known to persons of ordinary skill in the art.

In certain examples, the interaction is a salt bridge interaction.

In certain examples, the interaction is a hydrogen bond interaction.

In certain examples, the interaction is a hydrophobic interaction.

In certain examples, the interaction is a ring stacking interaction.

In certain examples, the compounds identified according to the methods described herein that modulate the activity of a calcium-sensing receptor interact with one or more amino acids in the Venus Flytrap (VFT) domain of the calcium-sensing receptor. In certain examples, the amino acids that the compounds interact with comprise 1, 2, 3, 4, 5, 6, 7, 8, 9, 10, 11, 12, 13, 14, 15, 16, 17, 18, 19, 20, 21 22 or more of Asn64, Phe65, Asn102, Thr145, Ser147, Ala168, Ser169, Ser170, Asp190, Gln193, Asp216, Tyr218, Ser272, Glu297, Ala298, Trp299, Ala300, Ser302, Leu304, Tyr411, Thr412, and His413 in a calcium-sensing receptor, for example, a calcium-sensing receptor comprising a feline calcium-sensing receptor, or the functionally equivalent amino acids of a canine calcium-sensing receptor or a human calcium-sensing receptor.

In certain examples, the compounds identified according to the methods described herein that modulate the activity of a calcium-sensing receptor interact with one or more amino acids in a transmembrane domain of the calcium-sensing receptor, for example, a 7 Transmembrane (7TM) domain. In certain examples, the amino acids that the compounds interact with comprise 1, 2, 3, 4, 5, 6, 7, 8, 9, 10, 11, 12, 13, 14, 15, 16 or more of Phe684, Gly685, and/or Phe688 on helix 3, Gln735 on helix 4, Met771, Ala772, Phe775, Leu776, and/or Thr780 on helix 5, Phe814, Val817, Trp818, and/or Phe821 on helix 6, and/or Glu837, Ala840, and/or Ile841 on helix 7 of a calcium-sensing receptor, for example, a calcium-sensing receptor comprising a feline calcium-sensing receptor, or the functionally equivalent amino acids of a canine calcium-sensing receptor or a human calcium-sensing receptor.

In certain examples, the methods for identifying a composition that modulates the activity of a feline calcium-sensing receptor comprises (a) contacting a test agent with a calcium-sensing receptor, for example, a feline calcium-sensing receptor comprising an amino acid sequence of SEQ ID NO: 1, (b) detecting an interaction between the test agent and one or more amino acids in an interacting site of the calcium-sensing receptor selected from the group consisting of Asn64, Phe65, Asn102, Thr145, Ser147, Ala168, Ser169, Ser170, Asp190, Gln193, Asp216, Tyr218, Ser272, Glu297, Ala298, Trp299, Ala300, Ser302, Leu304, Tyr411, Thr412, and His413 and combinations thereof in the VFT domain and/or Phe684, Gly685, and/or Phe688 on helix 3, Gln735 on helix 4, Met771, Ala772, Phe775, Leu776, and/or Thr780 on helix 5, Phe814, Val817, Trp818, and/or Phe821 on helix 6, and/or Glu837, Ala840, and/or Ile841 on helix 7, and (c) selecting as

the composition, a test agent that interacts with one or more of the amino acids.

In certain examples, the method further comprises determining the activity of the calcium-sensing receptor after step (a), and selecting as the composition, a test agent that increases the activity of the calcium-sensing receptor.

In certain examples, the method further comprises contacting the calcium-sensing receptor with a ligand, for example an agonist, and selecting as the composition, a test agent that increases or enhances the agonist's ability to activate the calcium-sensing receptor.

### *4.3 In vitro* Methods

Also disclosed herein, relating to the present invention but not claimed, are *in vitro* methods for identifying compounds that can modulate the activity and/or expression of a calcium-sensing receptor.

The calcium-sensing receptors for use in the presently disclosed methods can include isolated or recombinant calcium-sensing receptors or cells expressing a calcium-sensing receptor, disclosed herein. In certain examples, the calcium-sensing receptor for use in the disclosed methods can have an amino acid or nucleotide sequence as described by International Application No. PCT/US15/55149, filed October 12, 2015, or a fragment or variant thereof.

In certain examples, the method for identifying compounds that modulate the activity and/or expression of a calcium-sensing receptor comprises measuring the biological activity of a calcium-sensing receptor in the absence and/or presence of a test compound. In certain examples, the method can include measuring the biological activity of a calcium-sensing receptor in the presence of varying concentrations of the test compound. The method can further include identifying the test compounds that result in a modulation of the activity and/or expression of the calcium-sensing receptor compared to the activity and/or expression of the calcium-sensing receptor in the absence of the test compound.

In certain examples, the compounds identified according to the methods described herein increase the biological activity of a calcium-sensing receptor by at least about 5%, 10%, 15%, 20%, 25%, 30%, 35%, 40%, 45%, 50%, 55%, 60%, 65%, 70%, 75%, 80%, 85%, 90%, 95%, 100%, or more, compared to the biological activity of the calcium-sensing receptor when the compound is not present. In certain examples, the compounds identified according to the methods described herein increase the biological activity of a calcium-sensing receptor by at least about 30% compared to the biological activity of the calcium-sensing receptor when the compound is not present.

In certain examples, the method can further include analyzing two or more, three or more or four or more test compounds in combination. In certain examples, the two or more, three or more or four or more test compounds can be from different classes of compounds, e.g., amino acids and small chemical compounds. For example, and not by way of limitation, the method can include analyzing the effect of one or more small chemical test compounds on the biological activity and/or expression of a calcium-sensing receptor in the presence of one or more amino acid test compounds. In certain examples, the method for identifying a compound's effect on the activity and/or expression of a calcium-sensing receptor comprises analyzing the effect of a test compound on the biological activity and/or expression of a calcium-sensing receptor in the presence of one or more nucleotide or nucleotide derivative test compounds.

In certain examples, the method for identifying compounds that modulate the activity and/or expression of a calcium-sensing receptor comprises determining whether a compound modulates the receptor directly, for example, as an agonist or antagonist. In certain examples, the method comprises determining whether a compound indirectly modulates the activity of the receptor (*e.g.,* as an allosteric modulator), for example, by enhancing or decreasing the effect of other compounds on activating or inhibiting receptor activity.

In certain examples, the method for identifying compounds that modulate the activity and/or expression of a calcium-sensing receptor comprises expressing a calcium-sensing receptor in a cell line and measuring the biological activity of the receptor in the presence and/or absence of a test compound. The method can further comprise identifying test compounds that modulate the activity of the receptor by determining if there is a difference in receptor activation in the presence of a test compound compared to the activity of the receptor in the absence of the test compound. In certain examples, the selectivity of the putative calcium-sensing receptor modulator can be evaluated by comparing its effects on other GPCRs or taste receptors, *e.g.*, umami, GPR120, T1R, etc. receptors.

Activation of the receptor in the disclosed methods can be detected through the use of a labeling compound and/or agent. In certain examples, the activity of the calcium-sensing receptor can be determined by the detection of secondary messengers such as, but not limited to, cAMP, cGMP, IP3, DAG or calcium. In certain examples, the activity of the calcium-sensing receptor can be determined by the detection of the intracellular calcium levels. Monitoring can be by way of luminescence or fluorescence detection, such as by a calcium sensitive fluorescent dye. In certain examples, the intracellular calcium levels can be determined using a cellular dye, *e.g.,* a fluorescent calcium indicator such as Calcium 4. In certain examples, the intracellular calcium levels can be determined by measuring the level of calcium binding to a calcium-binding protein, for example, calmodulin. Alternatively and/or additionally, activity of the calcium-sensing receptor can be determined by detection of the phosphorylation, transcript levels and/or protein levels of one or more downstream protein targets of the calcium-sensing receptor.

The cell line used in the disclosed methods can include any cell type that is capable of expressing a calcium-sensing receptor. Non-limiting examples of cells that can be used in the disclosed methods include HeLa cells, Chinese hamster ovary cells (CHO cells), African green monkey kidney cells (COS cells), Xenopus oocytes, HEK-293 cells and murine 3T3 fibroblasts. In certain examples, the method can include expressing a calcium-sensing receptor in CHO-K1 cells. In certain examples, the method can include expressing a calcium-sensing receptor in HEK-293 cells. In certain examples, the method can include expressing a calcium-sensing receptor in COS cells. In certain examples, the cells constitutively express the calcium-sensing receptor. In another example, expression of the calcium-sensing receptor by the cells is inducible.

In certain examples, the cell expresses a calcium-binding photoprotein, wherein the photoprotein luminesces upon binding calcium. In certain examples, the calcium binding photoprotein comprises the protein clytin. In certain examples the clytin is a recombinant clytin. In certain examples, the clytin comprises an isolated clytin, for example, a clytin isolated from Clytia gregarium. In certain examples, the calcium-binding photoprotein comprises the protein aequorin, for example, a recombinant aequorin or an isolated aequorin, such as an aequorin isolated from Aequorea victoria. In certain examples, the calcium-binding photoprotein comprises the protein obelin, for example, a recombinant obelin or an isolated obelin, such as an obelin isolated from Obelia longissima.

In certain examples, expression of a calcium-sensing receptor in a cell can be performed by introducing a nucleic acid encoding a calcium-sensing receptor into the cell. For example, and not by way of limitation, a nucleic acid having the nucleotide sequence set forth in International Application No. PCT/US15/55149, filed October 12, 2015, or a fragment thereof, can be introduced into a cell. In certain examples, the introduction of a nucleic acid into a cell can be carried out by any method known in the art, including but not limited to transfection, electroporation, microinjection, infection with a viral or bacteriophage vector containing the nucleic acid sequences, cell fusion, chromosome-mediated gene transfer, microcell-mediated gene transfer, spheroplast fusion, etc. Numerous techniques are known in the art for the introduction of foreign genes into cells (see, *e.g.,* Loeffler and Behr, Meth. Enzymol. 217:599-618 (1993); Cohen et al., Meth. Enzymol. 217:618-644 (1993); Cline, Pharmac. Ther. 29:69-92 (1985)and can be used in accordance with the disclosed subject matter. In certain examples, the technique can provide for stable transfer of nucleic acid to the cell, so that the nucleic acid is expressible by the cell and inheritable and expressible by its progeny. In certain examples, the technique can provide for a transient transfer of the nucleic acid to the cell, so that the nucleic acid is expressible by the cell, wherein heritability and expressibility decrease in subsequent generations of the cell's progeny.

In certain examples, the method can include identifying compounds that bind to a calcium-sensing receptor. The method can comprise contacting a calcium-sensing receptor with a test compound and measuring binding between the compound and the calcium-sensing receptor. For example, and not by way of limitation, the methods can include providing an isolated or purified calcium-sensing receptor in a cell-free system, and contacting the receptor with a test compound in the cell-free system to determine if the test compound binds to the calcium-sensing receptor. In certain examples, the method can comprise contacting a calcium-sensing receptor expressed on the surface of a cell with a test compound and detecting binding of the test compound to the calcium-sensing receptor. The binding can be measured directly, *e.g.,* by using a labeled test compound, or can be measured indirectly. In certain examples, the detection comprises detecting a physiological event in the cell caused by the binding of the compound to the calcium-sensing receptor, *e.g.,* an increase in the intracellular calcium levels. For example, and not by way of limitation, detection can be performed by way of fluorescence detection, such as a calcium sensitive fluorescent dye, by detection of luminescence, or any other method of detection known in the art.

In certain non-limiting examples, the *in vitro* assay comprises cells expressing a calcium-sensing receptor that is native to the cells. Examples of such cells expressing a native calcium-sensing receptor include, for example but not limited to, dog (canine) and/or cat (feline) taste cells (*e.g.*, primary taste receptor cells). In certain examples, the dog and/or cat taste cells expressing a calcium-sensing receptor are isolated from a dog and/or cat and cultured in vitro. In certain examples, the taste receptor cells can be immortalized, for example, such that the cells isolated from a dog and/or cat can be propagated in culture.

In certain examples, expression of a calcium-sensing receptor in a cell can be induced through gene editing, for example, through use of the CRISPR gene editing system to incorporate a calcium-sensing receptor gene into the genome of a cell, or to edit or modify a calcium-sensing receptor gene native to the cell.

In certain examples, the *in vitro* methods of identifying a compound that binds to a calcium-sensing receptor comprises determining whether a test compound interacts with one or more amino acids of a calcium-sensing receptor interacting domain, as described herein.

In certain examples, compounds identified as modulators of a calcium-sensing receptor can be further tested in other analytical methods including, but not limited to, *in vivo* assays, to confirm or quantitate their modulating activity.

In certain examples, methods described herein can comprise determining whether the calcium-sensing receptor modulator is a calcium-sensing taste enhancing compound, *e.g.,* a calcium-sensing receptor agonist.

In certain examples, the methods of identifying a calcium-sensing receptor modulator can comprise comparing the effect of a test compound to a calcium-sensing receptor agonist. For example, a test compound that increases the activity of the receptor compared to the activity of the receptor when contacted with a calcium-sensing receptor agonist can

be selected as a calcium-sensing receptor modulating compound (*e.g.*, as an agonist).

In certain examples, the methods of identifying a calcium-sensing receptor modulator can comprise determining whether a test compound modulates the activity of the receptor when the receptor is contacted with an agonist, or whether the test compound can modulate the activity of a positive allosteric modulator (PAM). Test compounds that increase or decrease the effect of said agonist or PAM on the receptor can be selected as a calcium-sensing receptor modulating compound (e.g., as an allosteric modulator).

**5. Flavor Compositions**

In certain embodiments, the flavor compositions of the present disclosure can be used to increase the palatability of pet food products, such as cat food products. The flavor compositions can include combinations of compounds, and can be added to the pet food product in various delivery systems.

In certain embodiments, the present disclosure relates to methods for modulating the kokumi taste (for example, the activity of a calcium-sensing receptor) and/or the palatability of a pet food product comprising: a) providing at least one pet food product, or a precursor thereof, and b) combining the pet food product, or precursor thereof, with at least a kokumi taste modulating amount of at least one flavor composition, for example, comprising one or more compounds, or a comestibly acceptable salt thereof, so as to form an enhanced pet food product.

In certain embodiments, the flavor compositions of the present disclosure can enhance the activity of a calcium-sensing receptor and/or palatability of a pet food product, such as, for example, a pet food product including wet pet food products, dry pet food products, moist pet food products, pet beverage products and/or snack pet food products.

In certain embodiments, one or more of the flavor compositions of the present disclosure can be added to a pet food product, in an amount effective to modify, enhance or otherwise alter a taste or taste profile of the pet food product. The modification can include, for example, an increase or enhancement in the palatability of the pet food product, as determined by animals, *e.g.*, cats and/or dogs, or in the case of formulation testing, as determined by a panel of animal taste testers, *e.g.*, cats and/or dogs, via procedures known in the art.

In certain embodiments of the present disclosure, a pet food product can be produced that contains a sufficient amount of at least one flavor composition described herein, for example, comprising a compound, to produce a pet food product having the desired taste, *e.g.*, kokumi taste.

In certain embodiments of the present disclosure, a pet food product can be produced that contains a sufficient amount of a flavor composition comprising at least one, two, three, four, five, six or more compounds.

In certain embodiments, a calcium-sensing receptor modulating amount of one or more of the flavor compositions of the present disclosure can be added to the pet food product, so that the pet food product has an increased palatability as compared to a pet food product prepared without the flavor composition, as determined by animals, *e.g.*, cats and/or dogs, or in the case of formulation testing, as determined by a panel of animal taste testers, via procedures known in the art.

In certain embodiments of the present disclosure, the flavor composition is added to a pet food product in an amount effective to increase, enhance and/or modify the palatability of the pet food product.

The concentration of flavor composition admixed with a pet food product to modulate and/or improve the palatability of the pet food product can vary depending on variables, such as, for example, the specific type of pet food product, what taste modulating compounds are already present in the pet food product and the concentrations thereof, and the enhancer effect of the particular flavor composition on such taste modulating compounds.

A broad range of concentrations of the flavor compositions can be employed to provide such palatability modification. In certain embodiments of the present application, the flavor composition is admixed with a pet food product wherein the flavor composition is present in an amount of from about 0.001 ppm to about 1,000 ppm. For example, but not by way of limitation, the flavor composition can be present in the amount from about 0.001 ppm to about 750 ppm, from about 0.001 ppm to about 500 ppm, from about 0.001 ppm to about 250 ppm, from about 0.001 ppm to about 150 ppm, from about 0.001 ppm to about 100 ppm, from about 0.001 ppm to about 75 ppm, from about 0.001 ppm to about 50 ppm, from about 0.001 ppm to about 25 ppm, from about 0.001 ppm to about 15 ppm, from about 0.001 ppm to about 10 ppm, from about 0.001 ppm to about 5 ppm, from about 0.001 ppm to about 4 ppm, from about 0.001 ppm to about 3 ppm, from about 0.001 ppm to about 2 ppm, from about 0.001 ppm to about 1 ppm, from about 0.01 ppm to about 1,000 ppm, from about 0.1 ppm to 1,000 ppm, from about 1 ppm to 1,000 ppm, from about 2 ppm to about 1,000 ppm, from about 3 ppm to about 1,000 ppm, from about 4 ppm to about 1,000 ppm, from about 5 ppm to about 1,000 ppm, from about 10 ppm to about 1,000 ppm, from about 15 ppm to about 1,000 ppm, from about 25 ppm to about 1,000 ppm, from about 50 ppm to about 1,000 ppm, from about 75 ppm to about 1,000 ppm, from about 100 ppm to about 1,000 ppm, from about 150 ppm to about 1,000 ppm, from about 250 ppm to about 1,000 ppm, from about 250 ppm to about 1,000 ppm, from about 500 ppm to about 1,000 ppm or from about 750 ppm to about 1,000 ppm, and values in between.

In certain embodiments of the present application, the flavor composition is admixed with a pet food product wherein the flavor composition is present in an amount of from about 0.001 ppm to about 500 ppm, or from about 0.01 ppm

to about 500 ppm, from about 0.1 ppm to about 500 ppm, or from about 1 ppm to about 500 ppm, and values in between.

In certain embodiments of the present application, the flavor composition is admixed with a pet food product wherein the flavor composition is present in an amount of from about 0.01 ppm to about 100 ppm, or from about 0.1 ppm to about 100 ppm, or from about 1 ppm to about 100 ppm, and values in between.

In certain embodiments, the flavor composition is present in the pet food product at an amount greater than about 0.001 ppm, greater than about 0.01 ppm, greater than about 0.1 ppm, greater than about 1 ppm, greater than about 2 ppm, greater than about 3 ppm, greater than about 4 ppm, greater than about 5 ppm, greater than about 10 ppm, greater than about 25 ppm, greater than about 50 ppm, greater than about 75 ppm, greater than about 100 ppm, greater than about 250 ppm, greater than about 500 ppm, greater than about 750 ppm or greater than about 1000 ppm, and values in between.

In certain embodiments, a compound of the present disclosure is present in a food product in an amount that is sufficient to modulate, activate and/or enhance a calcium-sensing receptor. For example, but not by way of limitation, a compound can be present in a food product in an amount from about 1 pM to about 1 M, from about 1 nM to about 1 M, from about 1 μM to about 1 M, from about 1 mM to about 1 M, from about 10 mM to about 1 M, from about 100 mM to about 1 M, from about 250 mM to about 1 M, from about 500 mM to about 1 M, from about 750 mM to about 1 M, from about 0.001 μM to about 1 M, from about 0.001 μM to about 750 mM, from about 0.001 μM to about 500 mM, from about 0.001 μM to about 250 mM, from about 0.001 μM to about 100 mM, from about 0.001 μM to about 50 mM, from about 0.001 μM to about 25 mM, from about 0.001 μM to about 10 mM, from about 0.001 μM to about 1 mM, from about 0.001 μM to about 100 μM or from about 0.001 μM to about 10 μM, and values in between.

In certain embodiments, a compound of the present disclosure is present in a food product in an amount that is sufficient to modulate, activate and/or enhance a calcium-sensing receptor. For example, but not by way of limitation, a compound can be present in a food product in an amount from about 1 pM to about 10 M, from about 1 pM to about 1 M, from about 1 nM to about 1 M, from about 1 μM to about 1 M, from about 1 mM to about 1 M, from about 10 mM to about 1 M, from about 100 mM to about 1 M, from about 250 mM to about 1 M, from about 500 mM to about 1 M, from about 750 mM to about 1 M, from about 1 μM to about 1 M, from about 1 μM to about 750 mM, from about 1 μM to about 500 mM, from about 1 μM to about 250 mM, from about 1 μM to about 100 mM, from about 1 μM to about 50 mM, from about 1 μM to about 25 mM, from about 1 μM to about 10 mM, from about 1 μM to about 1 mM, from about 1 μM to about 100 μM or from about 1 μM to about 10 μM, and values in between.

In certain embodiments of the present application, the flavor composition is admixed with a pet food product wherein the flavor composition is present in an amount of from about 10 pM to about 0.5 M, or from about 1 pM to about 0.5 M, or from about 0.1 pM to about 0.5 M, and values in between.

In certain embodiments of the present application, the flavor composition is admixed with a pet food product wherein the flavor composition is present in an amount of from about 10 pM to about 0.1 M, or from about 1 pM to about 0.1 M, or from about 0.1 pM to about 0.1 M, and values in between.

In certain embodiments of the present application, the flavor composition is admixed with a food product wherein the flavor composition is present in an amount of from about 0.0001 to about 10% weight/weight (w/w) of the food product. For example, but not by way of limitation, the flavor composition can be present in the amount from about 0.0001% to about 10%, from about 0.0001% to about 1%, from about 0.0001% to about 0.1% , from about 0.0001 to about 0.01%, from about 0.0001% to about 0.001%, from about 0.001% to about 10%, from about 0.001% to about 1%, from about 0.01% to about 1% or from about 0.1% to about 1%, and values in between.

In certain embodiments of the present application, the flavor composition is admixed with a food product wherein the flavor composition is present in an amount of from about 0.0001% to about 5%, or from about 0.001% to about 5%, from about 0.01% to about 5% w/w, or from about 0.1% to about 5% w/w, and values in between.

In certain embodiments of the present application, the flavor composition is admixed with a food product wherein the flavor composition is present in an amount of from about 0.0001% to about 1%, or from about 0.001% to about 1%, from about 0.01% to about 1% w/w, or from about 0.1% to about 1% w/w, and values in between.

In certain embodiments of the present application, the flavor composition is admixed with a food product wherein the flavor composition is present in an amount of from about 0.001% to about 10% w/w.

In certain embodiments, the compounds of the present application are blended together in various ratios or are blended together with other compounds, e.g., nucleotides, and/or furanones, and/or amino acids, and/or umami receptor activating transmembrane compounds, and/or nucleotide derivatives, and/or fatty acid receptor (GPR120) activating compounds, to form various flavor compositions. Non-limiting examples of nucleotides, nucleotide derivatives, furanones, amino acids, fatty acid receptor (GPR120) activating compounds, and umami receptor activating transmembrane compounds are disclosed in International Application Nos. PCT/EP2013/072788 filed October 31, 2013, PCT/EP2013/072789 filed October 31, 2013, PCT/EP2013/072790 filed October 31, 2013, PCT/EP2013/072794 filed October 31, 2013, PCT/US15/65046 filed December 10, 2015, PCT/US15/65036 filed December 10, 2015, and PCT/US15/65106 filed December 10, 2015.

### 5.1 Amino acids

In certain embodiments of the present disclosure, the flavor composition comprises at least one compound described herein and further comprises at least one amino acid as described herein, and by International Application Nos. PCT/EP2013/072788 filed October 31, 2013, PCT/EP2013/072789 filed October 31, 2013, PCT/EP2013/072790 filed October 31, 2013, and PCT/EP2013/072794 filed October 31, 2013.

In certain embodiments of the present disclosure, the flavor composition comprises at least one amino acid selected from the group consisting of L-glutamic acid (or monosodium glutamate (MSG)), L-aspartic acid, L-arginine, L-lysine, L-phenylalanine, L-tryptophan and Se-(methyl)selenocysteine. In certain embodiments, the at least one amino acid activates the CaSR as a PAM. In certain embodiments, the at least one amino acid activates the CaSR as an agonist.

In certain embodiments of the present disclosure, the flavor composition comprises at least a first amino acid, a second amino acid, and a third amino acid. In certain embodiments, the first amino acid can increase the activity of a T1R1/T1R3 receptor (*i.e.,* umami receptor), and can be an amino acid selected from the First Group amino acids described by Table 2. In certain embodiments, the second amino acid can modulate the activity of a calcium-sensing receptor as described herein, and can be an amino acid selected from the Second Group amino acids described by Table 2. In certain embodiments, the third amino acid can interact with one or more other taste receptors, and does not bind to the same receptor as the first amino acid or second amino acid, or compete with the first amino acid or second amino acid for receptor binding. In certain embodiments, the third amino acid can be an amino acid selected from the Third Group amino acids described by Table 2. In certain embodiments, the flavor composition comprises at least one First Group amino acid, at least one Second Group amino acid, and at least one Third Group amino acid.

**Table 2.** Taste receptor active amino acids

| First Group amino acids: | Second Group amino acids: | Third Group amino acids: |
|---|---|---|
| L-Tryptophan | L-Glutamic acid (or Monosodium glutamate [MSG]) | L-Threonine |
| L-Phenylalanine | L-Aspartic acid | L-Isoleucine |
| L-Histidine | L-Arginine | L-Proline |
| Glycine | L-Lysine | Hydroxy-L-proline |
| L-Cysteine | L-phenylalanine | L-Cystine |
| L-Alanine | L-tryptophan | L-Glutamine |
| L-Tyrosine | Se-(methyl)selenocysteine | L-Valine |
| L-Serine | | L-Ornithine |
| L-Methionine | | Taurine |
| L-Leucine | | |
| L-Asparagine | | |

In certain embodiments, the at least one first, second and/or third amino acid can be present in an amount of from about 1 mM to about 1 M, or from about 250 mM to about 1 M, or from about 5 mM to about 500 mM, or from about 10 mM to about 100 mM, or from about 15 mM to about 50 mM, or from about 20 mM to about 40 mM of a pet food product. In certain embodiments, the amino acid(s) can be present at an amount less than about 1 M, less than about 200 mM, less than about 100 mM, less than about 50 mM, less than about 20 mM or less than about 10 mM of the pet food product. In certain embodiments, the first amino acid, and/or the second amino acid, and/or the third amino acid, alone or in combination, can be present in an amount of about 25 mM of the pet food product.

In certain embodiments of the present disclosure, the flavor composition further comprises at least one nucleotide and/or nucleotide derivative as described herein.

In certain embodiments of the present disclosure, the flavor composition further comprises at least one fatty acid receptor (GPR120) activating compound as described herein.

In certain embodiments of the present disclosure, the flavor composition further comprises at least one umami receptor activating transmembrane compound as described herein.

### 5.2 Umami receptor activating transmembrane compounds

In certain embodiments of the present disclosure, the flavor composition comprises at least one compound as

described by the present application, and at least one umami receptor activating transmembrane compound as described by International Application No. PCT/US15/65036 filed December 10, 2015.

In certain embodiments of the present disclosure, the flavor composition comprises at least one compound and at least two, three, four, five or more umami receptor activating transmembrane compounds.

In certain embodiments, an umami receptor activating transmembrane compound of the present disclosure can be present in a food product in an amount from about 1 pM to about 1 M, from about 1 nM to about 1 M, from about 1 μM to about 1 M, from about 1 mM to about 1 M, from about 10 mM to about 1 M, from about 100 mM to about 1 M, from about 250 mM to about 1 M, from about 500 mM to about 1 M, from about 750 mM to about 1 M, from about 1 μM to about 1 M, from about 1 μM to about 750 mM, from about 1 μM to about 500 mM, from about 1 μM to about 250 mM, from about 1 μM to about 100 mM, from about 1 μM to about 50 mM, from about 1 μM to about 25 mM, from about 1 μM to about 10 mM, from about 1 μM to about 1 mM, from about 1 μM to about 100 μM or from about 1 μM to about 10 μM, and values in between.

In certain embodiments, the umami receptor activating transmembrane compound can be a salt, stereoisomer or a comestible form of a transmembrane compound described herein.

In certain embodiments of the present disclosure, the flavor composition further comprises at least one amino acid as described herein.

In certain embodiments of the present disclosure, the flavor composition further comprises at least one nucleotide and/or nucleotide derivative as described herein.

In certain embodiments of the present disclosure, the flavor composition further comprises at least one fatty acid receptor (GPR120) activating compound as described herein.

### 5.3 Nucleotides and Nucleotide Derivatives

In certain embodiments of the present disclosure, the flavor composition comprises at least one compound described herein and at least one nucleotide and/or nucleotide derivative as described herein and by International Application Nos. PCT/US15/65046 filed December 10, 2015, PCT/EP2013/072788 filed October 31, 2013, PCT/EP2013/072789 filed October 31, 2013, PCT/EP2013/072790 filed October 31, 2013, and PCT/EP2013/072794 filed October 31, 2013.

In certain embodiments of the present disclosure, the flavor composition comprises at least one compound and at least two, three, four, five or more nucleotide and/or nucleotide derivatives as described herein. Non-limiting examples of nucleotides include guanosine monophosphate (GMP), inosine monophosphate (IMP), adenosine monophosphate (AMP), cytidine monophosphate (CMP), thymine monophosphate (TMP), xanthosine monophosphate (XMP), uridine monophosphate (UMP) and combinations thereof.

In certain embodiments, the flavor composition can include a nucleotide and/or nucleotide derivative present in a food product which can be present in an amount of from about 1 pM to about 1 M, from about 1 nM to about 1 M, from about 1 μM to about 1 M, from about 1 mM to about 1 M, from about 10 mM to about 1 M, from about 100 mM to about 1 M, from about 250 mM to about 1 M, from about 500 mM to about 1 M, from about 750 mM to about 1 M, from about 1 μM to about 1 M, from about 1 μM to about 750 mM, from about 1 μM to about 500 mM, from about 1 μM to about 250 mM, from about 1 μM to about 100 mM, from about 1 μM to about 50 mM, from about 1 μM to about 25 mM, from about 1 μM to about 10 mM, from about 1 μM to about 1 mM, from about 1 μM to about 100 μM or from about 1 μM to about 10 μM, and values in between.

In certain embodiments, the nucleotide and/or nucleotide derivative can be present in an amount of greater than about 1 mM or greater than about 2.5 mM of the pet food product. In certain non-limiting embodiments, the nucleotide and/or nucleotide derivative can be present in an amount of less than about 100 mM, less than about 50 mM, less than about 20 mM or less than about 10 mM of the pet food product. In a certain, non-limiting embodiments, the nucleotide and/or nucleotide derivative is present in an amount of about 5 mM of the pet food product.

In certain embodiments of the present disclosure, the flavor composition further comprises at least one amino acid as described herein.

In certain embodiments of the present disclosure, the flavor composition further comprises at least one umami receptor activating transmembrane compound as described herein.

In certain embodiments of the present disclosure, the flavor composition further comprises at least one fatty acid receptor (GPR120) activating compound as described herein.

### 5.4 Fatty acid receptor (GPR120) activating compounds

In certain embodiments of the present disclosure, the flavor composition comprises at least one compound as described by the present application, and at least one fatty acid receptor (GPR120) activating compound as described by International Application No. PCT/US15/65106 filed December 10, 2015.

In certain embodiments of the present disclosure, the flavor composition comprises at least one compound and at

least two, three, four, five or more fatty acid receptor (GPR120) activating compounds.

In certain embodiments, a fatty acid receptor (GPR120) activating compound of the present disclosure can be present in a food product in an amount from about 1 pM to about 1 M, from about 1 nM to about 1 M, from about 1 μM to about 1 M, from about 1 mM to about 1 M, from about 10 mM to about 1 M, from about 100 mM to about 1 M, from about 250 mM to about 1 M, from about 500 mM to about 1 M, from about 750 mM to about 1 M, from about 1 μM to about 1 M, from about 1 μM to about 750 mM, from about 1 μM to about 500 mM, from about 1 μM to about 250 mM, from about 1 μM to about 100 mM, from about 1 μM to about 50 mM, from about 1 μM to about 25 mM, from about 1 μM to about 10 mM, from about 1 μM to about 1 mM, from about 1 μM to about 100 μM or from about 1 μM to about 10 μM, and values in between.

In certain embodiments, the fatty acid receptor (GPR120) activating compound can be a salt, stereoisomer or a comestible form of a fatty acid receptor (GPR120) activating compound described herein.

In certain embodiments of the present disclosure, the flavor composition further comprises at least one amino acid as described herein.

In certain embodiments of the present disclosure, the flavor composition further comprises at least one nucleotide and/or nucleotide derivative as described herein.

In certain embodiments of the present disclosure, the flavor composition further comprises at least one umami receptor activating compound as described herein.

**6. Delivery Systems**

In certain embodiments, the flavor compositions of the present application can be incorporated into a delivery system for use in pet food products. Delivery systems can be a non-aqueous liquid, solid, or emulsion. Delivery systems are generally adapted to suit the needs of the flavor composition and/or the pet food product into which the flavor composition will be incorporated.

The flavoring compositions can be employed in non-aqueous liquid form, dried form, solid form and/or as an emulsion. When used in dried form, suitable drying means such as spray drying can be used. Alternatively, a flavoring composition can be encapsulated or absorbed onto water insoluble materials. The actual techniques for preparing such dried forms are well-known in the art, and can be applied to the presently disclosed subject matter.

The flavor compositions of the presently disclosed subject matter can be used in many distinct physical forms well known in the art to provide an initial burst of taste, flavor and/or texture; and/or a prolonged sensation of taste, flavor and/or texture. Without being limited thereto, such physical forms include free forms, such as spray dried, powdered, and beaded forms, and encapsulated forms, and mixtures thereof.

In certain embodiments, the compounds of a flavor composition can be generated during the processing of a pet food product, e.g., sterilization, retorting and/or extrusion, from precursor compounds present in the pet food product.

In certain embodiments, as noted above, encapsulation techniques can be used to modify the flavor systems. In certain embodiments, flavor compounds, flavor components or the entire flavor composition can be fully or partially encapsulated. Encapsulating materials and/or techniques can be selected to determine the type of modification of the flavor system.

In certain embodiments, the encapsulating materials and/or techniques are selected to improve the stability of the flavor compounds, flavor components or flavor compositions; while in other embodiments the encapsulating materials and/or techniques are selected to modify the release profile of the flavor compositions.

Suitable encapsulating materials can include, but are not limited to, hydrocolloids such as alginates, pectins, agars, guar gums, celluloses, and the like, proteins, polyvinyl acetate, polyethylene, crosslinked polyvinyl pyrrolidone, polymethylmethacrylate, polylactidacid, polyhydroxyalkanoates, ethylcellulose, polyvinyl acetatephthalate, polyethylene glycol esters, methacrylicacid-co-methylmethacrylate, ethylenevinylacetate (EVA) copolymer, and the like, and combinations thereof. Suitable encapsulating techniques can include, but are not limited to, spray coating, spray drying, spray chilling, absorption, adsorption, inclusion complexing (*e.g.*, creating a flavor/cyclodextrin complex), coacervation, fluidized bed coating or other process can be used to encapsulate an ingredient with an encapsulating material.

Encapsulated delivery systems for flavoring agents or sweetening agents can contain a hydrophobic matrix of fat or wax surrounding a sweetening agent or flavoring agent core. The fats can be selected from any number of conventional materials such as fatty acids, glycerides or poly glycerol esters, sorbitol esters, and mixtures thereof. Examples of fatty acids include but are not limited to hydrogenated and partially hydrogenated vegetable oils such as palm oil, palm kernel oil, peanut oil, rapeseed oil, rice bran oil, soybean oil, cottonseed oil, sunflower oil, safflower oil and combinations thereof. Examples of glycerides include, but are not limited to, monoglycerides, diglycerides and triglycerides.

Waxes can be chosen from the group consisting of natural and synthetic waxes and mixtures thereof. Non-limiting examples include paraffin wax, petrolatum, carbowax, microcrystalline wax, beeswax, carnauba wax, candellila wax, lanolin, bayberry wax, sugarcane wax, spermaceti wax, rice bran wax, and mixtures thereof.

The fats and waxes can be use individually or in combination in amounts varying from about 10 to about 70%, and alternatively in amounts from about 30 to about 60%, by weight of the encapsulated system. When used in combination,

the fat and wax can be present in a ratio from about 70:10 to 85:15, respectively.

Typical encapsulated flavor compositions, flavoring agent or sweetening agent delivery systems are disclosed in U.S. Patent Nos. 4,597,970 and 4,722,845.

Liquid delivery systems can include, but are not limited to, systems with a dispersion of the flavor compositions of the present application, such as in carbohydrate syrups and/or emulsions. Liquid delivery systems can also include extracts where the compound and/or the flavor compositions are solubilized in a solvent. Solid delivery systems can be created by spray drying, spray coating, spray chilling, fluidized bed drying, absorption, adsorption, coacervation, complexation, or any other standard technique. In some embodiments, the delivery system can be selected to be compatible with or to function in the edible composition. In certain embodiments, the delivery system will include an oleaginous material such as a fat or oil. In certain embodiments, the delivery system will include a confectionery fat such as cocoa butter, a cocoa butter replacer, a cocoa butter substitute, or a cocoa butter equivalent.

When used in dried form, suitable drying means such as spray drying can be used. Alternatively, a flavoring composition can be adsorbed or absorbed onto substrates, such as water insoluble materials, and can be encapsulated. The actual techniques for preparing such dried forms are well known in the art.

## 7. Pet Food Products

The flavor compositions of the present disclosed subject matter can be used in a wide variety of pet food products. Non-limiting examples of suitable pet food products include wet food products, dry food products, moist food products, pet food supplements (e.g., vitamins), pet beverage products, snack and treats as described herein.

The combination of the flavoring composition(s) of the presently disclosed subject matter together with a pet food product and optional ingredients, when desired, provides a flavoring agent that possesses unexpected taste and imparts, for example, a kokumi sensory experience, for example, through an increase in activity of a calcium-sensing receptor. The flavor compositions disclosed herein can be added prior to, during or after formulation processing or packaging of the pet food product, and the components of the flavor composition can be added sequentially or simultaneously. In certain embodiments, the compounds of a flavor composition can be generated during the processing of a pet food product, e.g., sterilization, retorting and/or extrusion, from precursor compounds present in the pet food product.

In certain embodiments, the pet food product is a nutritionally complete dry food product. A dry or low moisture-containing nutritionally-complete pet food product can comprise less than about 15% moisture, and include from about 10 to about 60% fat, from about 10% to about 70% protein and from about 30% to about 80% carbohydrates, e.g., dietary fiber and ash.

In certain embodiments, the pet food product is a nutritionally complete wet food product. A wet or high moisture-containing nutritionally-complete pet food product can comprise greater than about 50% moisture. In certain embodiments, the wet pet food product includes from about 40% fat, from about 50% protein and from about 10% carbohydrates, *e.g.*, dietary fiber and ash.

In certain embodiments, the pet food product is a nutritionally complete moist food product. A moist, *e.g.*, semi-moist or semi-dry or soft dry or soft moist or intermediate or medium moisture containing nutritionally-complete pet food product comprises from about 15 to about 50% moisture.

In certain embodiments, the pet food product is a pet food snack product. Non-limiting examples of pet food snack products include snack bars, pet chews, crunchy treats, cereal bars, snacks, biscuits and sweet products.

In certain embodiments, the protein source can be derived from a plant source, such as lupin protein, wheat protein, soy protein and combinations thereof. Alternatively or additionally, the protein source can be derived from a variety of animal sources. Non-limiting examples of animal protein include beef, pork, poultry, lamb, or fish including, for example, muscle meat, meat byproduct, meat meal or fish meal.

## 8. Methods of Measuring Taste Attributes

In certain embodiments of the present disclosure, the taste, flavor and/or palatability attributes of a pet food product can be modified by admixing a flavor composition with the food product, or generated under food preparation conditions, as described herein. In certain embodiments, the attribute(s) can be enhanced or reduced by increasing or decreasing the concentration of the flavor composition admixed or generated with the food product. In certain embodiments, the taste attributes of the modified food product can be evaluated as described herein, and the concentration of flavor composition admixed or generated with the food product can be increased or decreased based on the results of the evaluation.

In certain embodiments of the present disclosure, the taste and/or palatability attributes can be measured using an *in vitro* assay, wherein a compound's ability to activate a feline calcium-sensing receptor expressed by cells *in vitro* at different concentrations is measured. In certain embodiments, an increase in the activation of the receptor correlates with an increase in the taste and/or palatability attributes of the compound. In certain embodiments, the composition is

measured alone or in combination with other compounds. In certain embodiments the *in vitro* assay comprises the *in vitro* assays described in the Examples section of the present application.

In certain embodiments of the present disclosure, the taste and/or palatability attributes can be measured using an *in silico* model, wherein a compound's ability to interact with amino acid residues in a binding site of a calcium-sensing receptor is determined *in silico.* In certain embodiments, a compound's ability to modulate a feline calcium-sensing receptor correlates with the degree of binding of the compound to a model of the receptor *in silico.* In certain embodiments, the composition is measured alone or in combination with other compounds. In certain embodiments the *in silico* model comprises the *in silico* models described in the Examples section of the present application.

In certain embodiments of the present disclosure, the taste and/or palatability attributes can be measured using a panelist of taste testers. For example, but not by way of limitation, the panel can contain feline panelists. In certain embodiments, the panel can include canine panelists. In certain embodiments, the palatability of a pet food product can be determined by the consumption of a pet food product containing a flavor composition alone (*e.g.,* the one bowl test, monadic ranking). In certain embodiments, the palatability of a pet food product can be determined by the preferential consumption of a pet food product containing a flavor composition, disclosed herein, versus a pet food product that does not contain the flavor composition or another flavor composition (e.g., the two bowl test for testing preference, difference and/or choice).

In certain embodiments, the palatability and/or kokumi taste of a flavor composition can be determined by the preferential consumption of a water solution containing a flavor composition, disclosed herein, versus a water solution that does not contain the flavor composition or contains a different flavor composition (e.g., the two bottle test). For example, a solution panel can be used to compare the palatability of a range of concentrations of compounds in a monadic exposure. In certain embodiments, the solution can contain a palatability enhancer, for example, L-histidine, as an ingestive/positive tastant to increase baseline solution intake, therefore enabling the identification of a potential negative impact of the test compound.

The intake ratio for each pet food product or emulsion can be determined by measuring the amount of one ration consumed divided by the total consumption. The consumption ratio (CR) can then be calculated to compare the consumption of one ration in terms of the other ration to determine the preferential consumption of one food product or emulsion over the other. Alternatively or additionally, the difference in intake (g) can be used to assess the average difference in intake between the two emulsions in a two bottle test or between two pet food products in a two bowl test at a selected significance level, for example, at the 5% significance level to determine an average difference in intake with a 95% confidence interval. However, any significance level can be used, for example, a 1, 2, 3, 4, 5, 10, 15, 20, 25, or 50% significance level. In certain embodiments, percentage preference scores, *e.g.,* the percentage preference for one emulsion or food product by an animal is the percentage of the total emulsion or food product ingested during the test that that emulsion or food product accounts for, can also be calculated.

### 9. Methods of Generation

In certain embodiments, the compounds of the present disclosure can be generated using standard chemosynthesis processes. In certain embodiments, the chemosynthesis process provides a compound having a purity of at least 99.999%, or at least 99%, or at least 95%, or at least 90%, or at least 85 or at least 80%. In certain embodiments, the compounds can be prepared using standard hydrolysis processes such as those employing acids, enzymes or a combination of acids and enzymes.

In certain embodiments, the compounds of the present disclosure can be generated under food preparation conditions, e.g., during the production of a pet food product. For example, but not by way of limitation, the compounds of the present disclosure can be generated during a thermal food process, e.g., sterilization, retorting and/or extrusion, from precursor compounds present in the pet food. In certain embodiments, a liquid and/or a powder palatant can also be added to enhance the taste of a pet food, *e.g.,* to a dry pet food product, and to increase the palatability of the pet food. The palatant can be a digest of meat (*e.g.,* liver) and/or a digest of a vegetable, and can optionally include other palatants known in the art. In certain embodiments, the compound can be admixed with or generated in the liquid and/or powder palatant prior to its addition to the pet food product. Alternatively, or additionally, the compound can be admixed with or generated in the liquid and/or powder palatant after its addition to the pet food product.

### 10. Non-limiting Examples of Methods of the Present Disclosure

In certain non-limiting embodiments, the present disclosure provides for a method of increasing the palatability of a pet food product comprising admixing the pet food product with a flavor composition comprising a compound as described herein, wherein the compound is present at a concentration of from about 1 pM to about 10 M, or from about 1 pM to about 1 M in the admixture.

In certain non-limiting embodiments, the present disclosure provides for a method of increasing the palatability of

a pet food product comprising producing the pet food product with a flavor composition comprising a compound as described herein, wherein the compound is present at a concentration of from about 1 pM to about 10 M, or from about 1 pM to about 1 M in the product.

In certain non-limiting embodiments, the present disclosure provides for a method of increasing the kokumi taste of a pet food product, for example, by increasing the activity of a calcium-sensing receptor, comprising admixing the pet food product with a flavor composition comprising a compound as described herein, wherein the compound is present at a concentration of from 0.001 ppm to 1,000 ppm in the admixture.

In certain non-limiting embodiments, the present disclosure provides for a method of increasing the palatability of a pet food product comprising admixing the pet food product with a flavor composition comprising a compound as described herein, wherein the flavor composition is present at a concentration of from about 0.001 ppm to 1,000 ppm in the admixture.

In certain non-limiting embodiments, the present disclosure provides for a method of increasing the kokumi taste of a pet food product, for example, by increasing the activity of a calcium-sensing receptor, comprising admixing the pet food product with a flavor composition comprising a compound as described herein, wherein the flavor composition is present at a concentration of from about 0.0001% to about 10% w/w, or from about 0.001% to about 5% w/w, or from about 0.01% to about 1% w/w in the admixture.

In certain non-limiting embodiments, the present disclosure provides for a method of increasing the palatability of a pet food product comprising admixing the pet food product with a flavor composition comprising a compound as described herein, wherein the flavor composition is present at a concentration of from about 0.0001% to about 10% w/w, or from about 0.001% to about 5% w/w, or from about 0.01% to about 1% w/w in the admixture.

## EXAMPLES

The presently disclosed subject matter will be better understood by reference to the following Examples, which are provided as exemplary of the invention. However, where an example discloses subject matter that does not fall within the scope of the claimed invention, such subject matter should be regarded as comparative to the claimed invention.

### Example 1 - Identification of CaSR modulators using *in silico* screening.

This Example includes examples of the invention as well as reference examples which do not fall within the scope of the claims but are included for reference only. † denotes a reference example.

The present example describes the computational modeling of the feline and canine calcium-sensing receptor (CaSR) to identify putative compound modulators.

Computational approaches were used to analyze the three-dimensional structure of CaSR to identify polypeptide regions that can be exploited to selectively modulate the receptor. A structural homology model of the Venus flytrap and cysteine-rich domains of the CaSR were generated based on crystal structures of human CaSR (Geng, et al. 2016; Zhang, et al. 2016). Models of the transmembrane domain of the CaSR were generated based on the structures of class C GPCRs (*See* Binet et al., J. Biol. Chem, 282(16): 12154-63 (2007); Wu et. al., Science, 344(6179):58-64 (2014); and Dore et al., Nature 511:557-562 (2014). The homology models were built with the Discovery Studio (DS) suite of programs from Accelrys. Specifically, the Modeller program from DS was used (*see* Eswar et al., Current Protocols in Bioinformatics, Supplement 15:5.6.1-5.6.30 (2006)). *"In silico"* screening was used to identify compounds that interact with the structural domains of CaSR.

The GPCR group C family of proteins includes T1R1, T1R2, T1R3, CaSR, GabaB and mGlu proteins. Group C proteins have (1) a large external domain, called a Venus Flytrap (VFT) domain, (2) a 7 Transmembrane (7TM) domain and (3) a cysteine rich domain that connects the VFT and the 7TM domains. A homology model of the VFT and cysteine rich domain of the feline CaSR receptor was generated based on the recent crystal structures of hCaSR (Geng, et al. 2016; Zhang, et al. 2016) that are now available from the Protein Data Bank (PDB, www.rcsb.org). The docking program, BioDock, from BioPredict was used to dock the compounds L-Aspartic acid† (Figure 3), L-lysine† (Figure 4), and glutathione† (Figure 5) into the active site of the VFT domain of CaSR, *in silico.*

Figure 3 shows the binding of L-aspartic acid† to the hinge region of the VTF domain of feline CaSR when L-aspartic acid† is acting as an agonist. The zwitterionic nitrogen of L-aspartic acid† can form a salt bridge to Glu297, as well as a possible hydrogen bond to Ala168. The zwitterionic carboxylate of L-aspartic acid† forms hydrogen bonds to Ser 170, Ser147, and the backbone carbonyl of Ala168. The side chain carboxylate of L-aspartic acid† can form a salt bridge interaction with Arg66 Also shown in Figure 3C are binding sites for $Sr^{+2}$ and $PO^{-3}$, modeled after the observed bound ions in the crystal structures of hCSAR referenced herein.

Figures 4A-4C show the binding of L-lysine† to the hinge region of the VTF domain of feline CaSR when L-lysine† is acting as a positive allosteric modulator (PAM). The Zwitterionic backbone can form extended interactions to residues at the hinge, notably Ser147 and Glu297, while the side-chain nitrogen forms a salt-bridge interaction to Glu297.

Figures 5A-5C show the binding of L-(+)-2-Amino-3-phosphonopropionic acid† to the hinge region of the VTF domain of feline CaSR. The zwitterionic carboxyl group can form hydrogen bonds to Ser147, while the zwitterionic nitrogen forms a salt bridge to Glu297 and a hydrogen bond to the backbone carbonyl of Ala168. The side-chain phosphonoproprionic acid group can form a salt bridge interaction with Arg66 and an additional hydrogen bond to Ser272.

Figures 6A-6C shows the binding of glutathione (y-Glu-Cys-Gly) † as an agonist to the hinge region of the VTF domain of feline CaSR. In the hinge region the zwitterionic nitrogen of the gamma-glutamyl residue of glutathione forms a salt bridge to Glu297 while the zwitterionic carboxylate of the gamma-glutamyl residue forms additional hydrogen bonding interactions to Ser170. The SH of the cysteine residue of glutathione can form additional interactions to Glu297. The NH of the glycine residue can form hydrogen bonds to the backbone carbonyl of Glu297 or Trp299 or both. The carboxyl group of the glycine residue of glutathione can form a salt bridge interaction to His413, as well as additional hydrogen bonding interactions to Thr412. Because these interactions are to both the upper lobe and lower lobe, they can stabilize the closed form of the VTF domain.

Figures 7A-7C show the binding of the "kokumi peptide" ($\gamma$-Glu-Val-Gly)† as an agonist to the VTF domain of feline CaSR. In the hinge region the zwitterionic carboxylate of the glutamate can form hydrogen bonds to residues at the hinge, notably Ser147, Ser170, and Thr145. The zwitterionic nitrogen can form hydrogen bonding interactions with Ser170 and the backbone carbonyl of Ala168, with a salt bridge interaction possible to Glu197. The peptide nitrogens of the peptide valine and glycine can each form interactions to Glu297, while the zwitterionic carboxyl group of the peptide glycine can form a salt bridge interaction with Arg66 and Ser301.

Figures 8A-8C show the binding of the $\gamma$-glutamyl dipeptide H-$\gamma$-Glu-Tyr-OH† as an agonist to the VTF domain of feline CaSR. In the hinge region the zwitterionic carboxylate of the peptide glutamatyl group can form hydrogen bonds to residues at the hinge, notably Ser147 and Ser170. The zwitterionic nitrogen of the peptide glutamatyl group can form hydrogen bonds to Ser170 and to the backbone carbonyl of Ser169 as well as internal hydrogen bonds within the peptide.

The peptide tyrosine group can form hydrogen bonding interactions through the rest of the flytrap, notably to Glu297, Thr145, and to the backbone of Ser301 and Phe320.

Figures 9A-9C show the binding of the $\beta$-aspartyl dipeptide H-$\beta$-Asp-Leu-OH† as an agonist to the VTF domain of feline CaSR. In the hinge region the zwitterionic carboxylate of the peptide glutamyl group can form hydrogen bonds to residues at the hinge, notably Ser147 and Ser170. The zwitterionic nitrogen of the peptide glutamyl group can form hydrogen bonds to Ser170 and to the backbone carbonyl of Ser169, as well as a salt bridge interaction to Glu297. The carboxylate of the peptide leucine group can form a salt bridge to Arg66.

Similarly, a homology model of the feline CaSR 7M domain was generated based on the crystal structures of 4OR2 and 4OO9 from the PDB. 4OR2 is the crystal structure of the transmembrane domain of mGluR1 from Group C GPCR bound to a negative allosteric modulator (NAM) (see Wu et. al., Science, 344(6179):58-64 (2014)). 4OO9 is the crystal structure of the transmembrane domain of mGluR5 from Group C GPCR bound to NAM (see Dore et al., Nature 511:557-562 (2014)). The docking program, BioDock, from BioPredict was used to dock the compounds N-(1-(4-chlorophenyl)ethyl)-3-(4-isopropoxyphenyl)-3-phenylpropan-1-amine (Figure 10), N-(1-(4-chlorophenyl)ethyl)-3-(4-methoxyphenyl)-4-methylpentan-1-amine (Figure 11), 3-(furan-2-yl)-4-phenyl-N-(1-phenylethyl)butan-1-amine (Figure 12), 3-(2,2-dimethyltetrahydro-2H-pyran-4-yl)-3-phenyl-N-(1-phenylethyl)propan-1-amine (Figure 13), N-((2,3-dihydrobenzofuran-2-yl)methyl)-1-(quinolin-2-yl)ethanamine (Figure 14), 2,6-dichloro-4-(1-(((1-methyl-2-(thiophen-2-yl)piperidin-3-yl)methyl)amino)ethyl)aniline† (Figure 15), 1-(4-chlorophenyl)-N-(2-(2,2-dimethyl-4-(p-tolyl)tetrahydro-2H-pyran-4-yl)ethyl)ethanamine† (Figure 16), methyl 2-(3-cyanophenyl)-2-((4-fluoro-2,3-dihydro-1H-inden-1-yl)amino)acetate (Figure 17), 2-(2-acetyl-1,2-dihydroisoquinolin-1-yl)-N-(1-(3-bromophenyl)ethyl)acetamide† (Figure 18), 1-(benzo[d]thiazol-2-yl)-1-(2,4-dimethylphenyl)ethanol† (Figure 19), and 4-Chloro-N-[(1S,2S)-2-[[(1R)-1-(1-naphthalenyl)ethyl]amino]† (Figure 20) into the active site of the 7TM domain of CaSR, *in silico.*

Figure 10 shows the binding of N-(1-(4-chlorophenyl)ethyl)-3-(4-isopropoxyphenyl)-3-phenylpropan-1-amine in the 7TM domain of feline CaSR. Figure 10B shows the position of binding in the 7TM domain of feline CaSR. Figure 10C provides a close-up view of interactions between the ligand and the 7TM domain. Similarly, Figure 11 shows the binding of N-(1-(4-chlorophenyl)ethyl)-3-(4-methoxyphenyl)-4-methylpentan-1-amine and Figure 12 shows the binding of 3-(furan-2-yl)-4-phenyl-N-(1-phenylethyl)butan-1-amine in the 7TM domain of feline CaSR. These compounds, and other $\gamma$-Branched PAMS, fit the 7TM domain of feline CaSR well, picking up extensive hydrophobic interactions in the active site. A salt bridge to Glu837 is present for these compounds, and a salt bridge or hydrogen bond to Glu837 is observed for other highly active trans-membrane PAMs. A ring stacking interaction is shown to Phe821 (right), an interaction shared with most other active trans-membrane PAMs. Additional ring stacking is possible for these compounds Phe775 (left).

Figure 13 shows the binding of 3-(2,2-dimethyltetrahydro-2H-pyran-4-yl)-3-phenyl-N-(1-phenylethyl)propan-1-amine. Figure 13B shows the position of binding in the 7TM domain and Figure 13C provides a close-up view of interactions between the ligand and the 7TM domain. A salt bridge to Glu837 is seen as in Figures 10 through 12, as is a key ring stacking interaction to Phe821 and a possible additional ring stacking interaction to Phe775.

Figure 14 shows the binding of N-((2,3-dihydrobenzofuran-2-yl)methyl)-1-(quinolin-2-yl)ethanamine. Figure 14B shows the position of binding in the 7TM domain and Figure 14C provides a close-up view of interactions between the

ligand and the 7TM domain. While the class of compound is different from those highlighted in Figures 10 through 13, similar observations on the binding mode apply. The compound fills the active site well, exhibiting extensive hydrophobic interactions throughout the active site. A salt-bridge interaction to Glu837 is shown, as is a ring stacking interaction to Phe821 and a possible additional ring-stacking interaction to Phe775

Figure 15 shows the binding of 2,6-dichloro-4-(1-(((1-methyl-2-(thiophen-2-yl)piperidin-3-yl)methyl)amino) ethyl)aniline†. Figure 15B shows the position of binding in the 7TM domain and Figure 15C provides a close-up view of interactions between the ligand and the 7TM domain. A salt bridge to Glu837 is seen as in Figures 10 through 14 with a basic nitrogen. Ring stacking of the substituted phenyl can be to PHE821 or Phe688 depending on slight movements in active site.

Figure 16 shows the binding of 1-(4-chlorophenyl)-N-(2-(2,2-dimethyl-4-(p-tolyl)tetrahydro-2H-pyran-4-yl)ethyl) ethanamine†. Figure 16B shows the position of binding in the 7TM domain and Figure 16C provides a close-up view of interactions between the ligand and the 7TM domain. A salt bridge to Glu837 is seen as in Figures 10 through 15 with a basic nitrogen. Ring stacking of the substituted phenyl to Phe688 and/or Phe821 is possible. Ring stacking to Phe775 can be possible with slight movements in the active site. The tetrahydropyran adds additional hydrophobic contacts.

Figure 17 shows the binding of methyl 2-(3-cyanophenyl)-2-((4-fluoro-2,3-dihydro-1H-inden-1-yl)amino)acetate. Figure 17B shows the position of binding in the 7TM domain and Figure 17C provides a close-up view of interactions between the ligand and the 7TM domain. A salt bridge to Glu837 is seen as in Figures 10 through 16 with a basic nitrogen. Ring stacking of the substituted phenyl to Phe821 is present. Ring stacking to Phe775 can be possible with slight movements in the active site. The ester points to a hydrophobic pocket above Phe688.

Figure 18 shows the binding of 2-(2-acetyl-1,2-dihydroisoquinolin-1-yl)-N-(1-(3-bromophenyl)ethyl)acetamide†. Figure 18B shows the position of binding in the 7TM domain and Figure 18C provides a close-up view of interactions between the ligand and the 7TM domain. A hydrogen bond to Glu837 is shown in Figure 17 to the ligand amide nitrogen. Ring stacking of the substituted phenyl to Phe821 is present.

Figure 19 shows the binding of 1-(benzo[d]thiazol-2-yl)-1-(2,4-dimethylphenyl)ethanol†. Figure 19B shows the position of binding in the 7TM domain and Figure 15C provides a close-up view of interactions between the ligand and the 7TM domain. A hydrogen bond to Glu837 is shown in Figure 19C to the ligand hydroxyl group. Ring stacking of the substituted phenyl to Phe821 and/or Phe688 is possible. Additional ring stacking of the benzo[d]thiazole to Phe688 is possible.

Figure 20 shows the binding of 4-Chloro-N-[(1S,2S)-2-[[(1R)-1-(1-naphthalenyl)ethyl]amino]† (Calhex 231) as an antagonist. Figure 20B shows the position of binding in the 7TM domain and Figure 20C provides a close-up view of interactions between the ligand and the 7TM domain. A salt bridge to Glu837 is seen as in Figures 10 through 19 with a basic nitrogen. The naphthalene is positioned to afford possible ring stacking interactions to the aromatic residues as shown in Figure 20C. The remainder of the compound creates extensive hydrophobic interactions throughout the active site, with possible ring stacking interactions to Phe775.

References:


1. Binet et al., "Common Structural Requirements for Heptahelical Domain Function in Class A and Class C G Protein-coupled Receptors." (2007) J. Biol. Chem, 282(16): 12154-63.
2. Wu et. al., "Structure of a Class C GPCR Metabotropic Glutamate Receptor 1 Bound to an Allosteric Modulator." (2014) Science, 344(6179):58-64.
3. Dore et al., "Structure of class C GPCR metabotropic glutamate receptor 5 transmembrane domain." (2014) Nature 511:557-562.
4. Eswar et al., Current Protocols in Bioinformatics, Supplement 15:5.6.1-5.6.30 (2006).


**Example 2 - Compounds that activate the calcium-sensing receptor *in vitro.***

This Example includes examples of the invention as well as reference examples which do not fall within the scope of the claims but are included for reference only. † denotes a reference example.

. The present example describes the activation of the feline CaSR by compounds *in vitro.*

Compounds that can function as CaSR agonists (AGO), positive allosteric modulators (PAMs) and/or antagonists were identified by *in vitro* functional characterization using a double-injection protocol.

**Methods:** HEK293TRex/nat-Clytin cells that inducibly express a feline CaSR (f:CaSR) transgene construct was used to screen 119 test compounds to identify compounds that modulate f:CaSR activity. Cells that do not express CaSR (*i.e.,* un-induced transgenic cells or mock control cells transfected with empty plasmid vector) were used as a control. The HEK293 cells were seeded at 10,000 cells/well in 384 MTP. 24 hours after cell seeding, cells were loaded with 10$\mu$m coelenterazine in an assay buffer (20 $\mu$L/well) for 4 h at room temperature. Each compound was tested in a primary profiling for its ability to activate CaSR over a concentration range of 100 mM (1 M x $10^{-1}$) to 0.01 $\mu$M (1 M x $10^{-8}$). The ability of each compound to activate f:CaSR expressed by the HEK293 cells was determined by measuring luminescence using a

FLIPR® Tetra screening system after contacting the cells with the compound in agonist mode and PAM mode according to the following protocol:

AGO/PAM mode (double-injection): 10 μl/well of test compound (3x concentration) and controls were injected and luminescence was measured (*i.e.,* AGO activity). After 5 minutes, injection of $CaCl_2$ at a concentration corresponding to the agonist's EC20 (3x concentrated) (15 μl/well), wherein luminescence (*i.e.,* PAM activity) was measured.

Controls for agonist testing were 15mM $CaCl_2$ (EC100, positive control) and 0mM $CaCl_2$ (negative control).

Controls for PAM testing were 0.9 mM $CaCl_2$ (EC20) + Calindol enhancer (positive control), 0.9 mM $CaCl_2$ (EC20, negative control) and Calindol enhancer (negative control).

Control cell lines used for the primary profiling were un-induced transgenic HEK cells.

Compounds that modulated CaSR activity as an agonist, antagonist or PAM in the primary profiling test were further tested to determine EC50 or IC50. In these studies, control cell lines used were mock HEK cell lines that were not transfected with the CaSR transgene. Carbachol, an agonist of endogenously expressed muscarinic receptor was used to determine a reference activity level for the HEK cells.

Data Analysis was performed using the Analyzer Module of Genedata Screener software.

- Kinetic Response Value (KRV): [Max(2s : 90s)] - [Baseline]]. Max RLU of the kinetic trace after the injection minus the median of the points before injection.
- The KRV normalized by Stimulator Control (*i.e.,* positive controls) minus Neutral Control *(i.e.,* activity of un-induced or mock reference cells), applying the following formula, represents Activity[%] of tested compounds:

$$Activity[\%] = 100 * \left(\frac{x - <NeutralControls>}{<StimulatorControls> - <NeutralControls>}\right)$$

Where:

x is the calculated signal value of a well (KRV).

< > indicate median of the calculated signal values (KRV) for the Reference wells by plate.

The normalization places the compound activity values on an equivalent scale and makes them comparable across plates. Therefore, the compound activity values are scaled (based on the two references) to a common range (two-point normalization).

**Results:** Primary profiling results were obtained in both agonist and PAM mode (data not shown). Based on primary profiling, 54 compounds were selected for further study to determine EC50 or IC50. Dose response curves for the activation/inhibition of CaSR by the ligands in agonist mode and PAM mode for EC50/IC50 analysis are shown in Figure 21.

As described by Figure 21, 23 of the ligands tested activated CaSR as agonists, 27 activated CaSR as PAMs, and 2 activated CaSR as antagonists. For each ligand, the EC50 or IC50 value was determined. The term half maximal effective concentration (EC50) (or half maximal inhibitory concentration, IC50) refers to the concentration of a compound which induces a response halfway between the baseline and the maximum after a specified exposure time. Table 3 provides the chemical structure and results for each of the 52 compounds selected for further study (PAM analysis of L-arginine and L-lysine, the remaining 2 compounds of the 54 active compounds from the primary profiling, is shown in Example 3).

**Table 3.** CaSR Active Compounds

| Compound Name (Compound ID) | Compo und Class | Chemical Structure | Activity Type EC50/IC50 (standard units, where |
|---|---|---|---|
| Calcium† | Metal Salts | $Ca^{+2}$ | Agonist<br>EC50 1.62 mM |
| Magnesium† | Metal Salts | $Mg^{+2}$ | Agonist |
| Gadolinium† | Metal Salts | $Gd^{-3}$ | Agonist<br>EC50 0.295 mM |
| Barium† | Metal Salts | $Ba^{+2}$ | Agonist<br>EC50 1.17mM |

(continued)

| Compound Name (Compound ID) | Compo und Class | Chemical Structure | Activity Type EC50/IC50 (standard units, where |
|---|---|---|---|
| Strontium† | Metal Salts | $Sr^{+2}$ | Agonist |
| Terbium† | Metal Salts | $Tb^{+2}$ | Agonist EC50 0.175mM |
| Praseodymium† | Metal Salts | $Pr^{+3}$ | Agonist EC50 0.398mM |
| Methylphosphonic acid† | Phospor us containi ng compou nds | 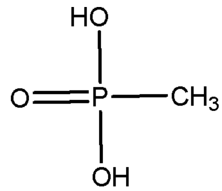 | Agonist |
| Methylenediphosphonic acid† | Phospor us containi ng compou nds | 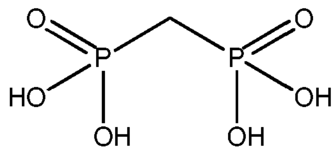 | Agonist EC50 1.29mM |
| L-Aspartic acid† | Amino Acids | 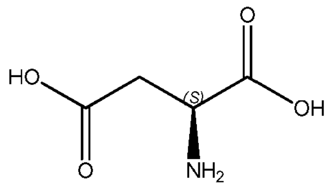 | Agonist EC50 4.11 mM |
| L-Glutamic acid† | Amino Acids | 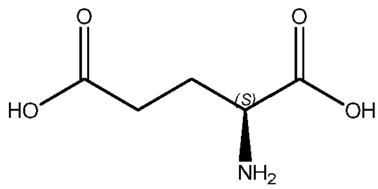 | Agonist |
| Se-(Methyl) selenocysteine† | Amino Acids | 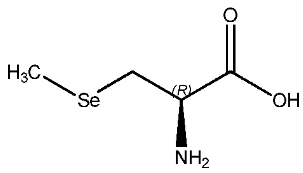 | Agonist EC50 4.47 mM |
| 2S,4S-γ-Hydroxy-L-glutamic acid† | Amino Acids | 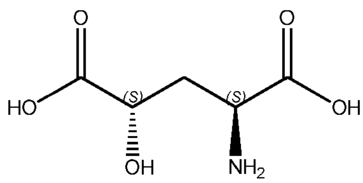 | Agonist |
| L-Isoglutamine† | Amino Acids | 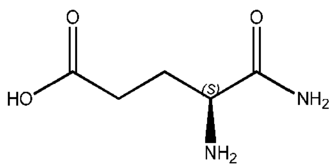 | Agonist |

(continued)

| Compound Name (Compound ID) | Compo und Class | Chemical Structure | Activity Type EC50/IC50 (standard units, where |
|---|---|---|---|
| L-Cysteic acid† | Amino Acids | 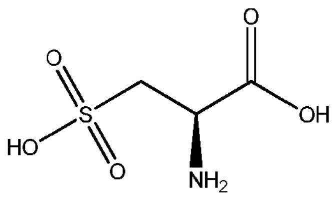 | Agonist EC50 2.34mM |
| L-Homocysteic acid† | Amino Acids | 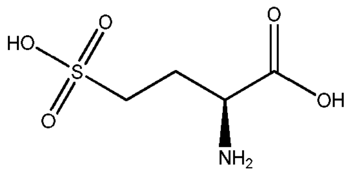 | Agonist |
| 2-Amino-3-phosphonopropionic acid† | Amino Acids | 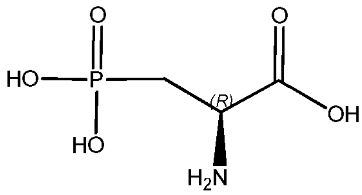 | Agonist |
| 2-Amino-4-phosphonobutyric acid† | Amino Acids | 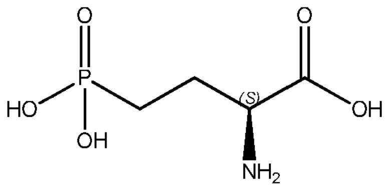 | Agonist |
| L-2-Aminoadipic acid† | Amino Acids | 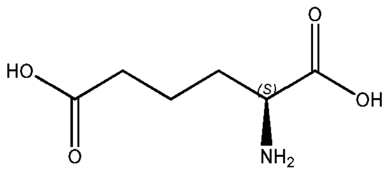 | Agonist |
| (±)-2-Aminopimelic acid† | Amino Acids | 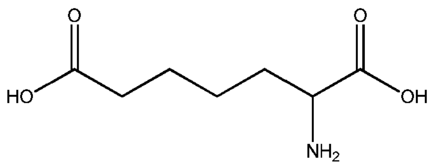 | Agonist |
| γ-Carboxy-DL-glutamic acid† | Amino Acids | 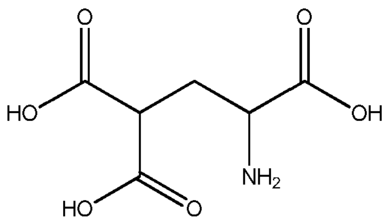 | Agonist |

(continued)

| Compound Name (Compound ID) | Compo und Class | Chemical Structure | Activity Type EC50/IC50 (standard units, where |
|---|---|---|---|
| 4-Fluoro-DL-glutamic acid† | Amino Acids | 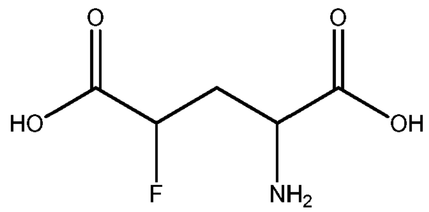 | Agonist |
| O-phospho-L-tyrosine† | Amino Acids | 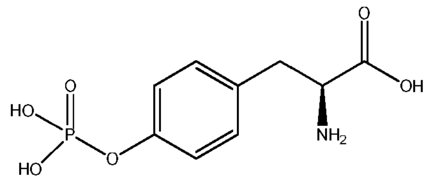 | Agonist |
| DL-Aspartic acid alpha-methyl ester† | Amino Acids | 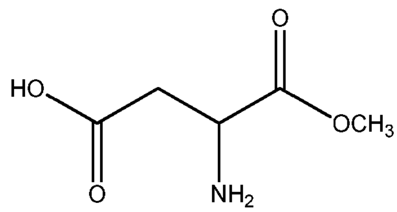 | Agonist |
| L-Aspartic acid beta-methyl ester† | Amino Acids | 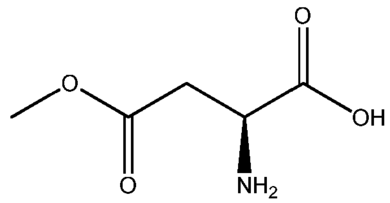 | Agonist |
| (1s,3s)-1-aminocyclobutane-1,3-dicarboxylic acid† | Amino Acids | 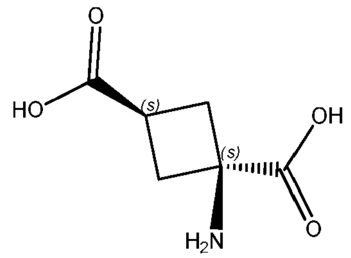 | Agonist |
| Glutathione (γ-Glu-Cys-Gly) † | γ-Glutamy l and β-Aspartyl Peptides | 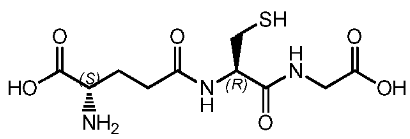 | Agonist EC 50 6.39 mM |
| Ophthalmic Acid (y-Glu-Abu-Gly) † | γ-Glutamy 1 and β-Aspartyl Peptides | 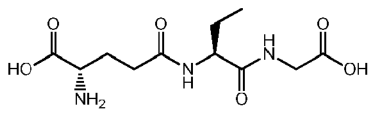 | Agonist EC50 2.66 mM |
| γ-Glu-Val-Gly (gamma-Glu-Val-Gly) † | γ-Glutamy l and β-Aspartyl Peptides | 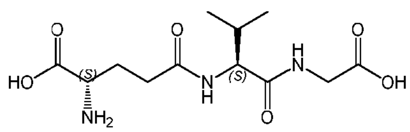 | Agonist EC50 4.22 mM |

(continued)

| Compound Name (Compound ID) | Compo und Class | Chemical Structure | Activity Type EC50/IC50 (standard units, where |
|---|---|---|---|
| S-Methylglutathione† | γ-Glutamy 1 and β-As- partyl Pep- tides | 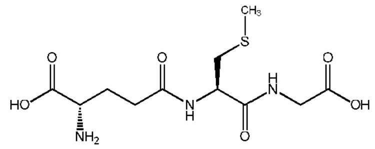 | Agonist EC50 4.42 mM |
| S-(2-Hydroxyethyl)glutathio ne† | γ-Glutamy l and β-As- partyl Pep- tides | 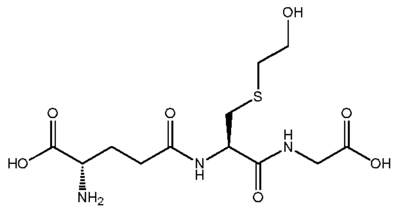 | Agonist EC50 2.10 mM |
| 3-Glutathionyl-S-methylindole† | γ-Glutamy 1 and β-As- partyl Pep- tides | 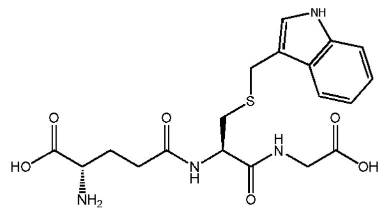 | Agonist EC50 3.70 mM |
| S-Lactoylglutathione† | γ-Glutamy l and β-As- partyl Pep- tides | 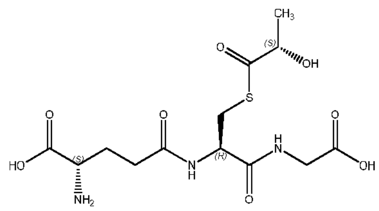 | Agonist |
| γ-Glu-Val (gamma-Glu-Val)† | γ-Glutamy 1 and β-As- partyl Pep- tides | 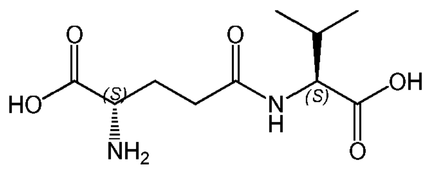 | Agonist EC50 4.51 mM |
| γ-Glu-Tyr (gamma-Glu-Tyr)† | γ-Glutamy 1 and β-As- partyl Pep- tides | 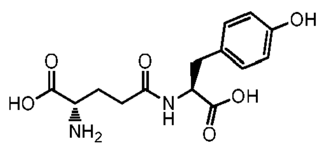 | Agonist EC50 3.88 mM |
| γ-Glu-Ala (L-gamma-Glutamyl-L-alanine)† | γ-Glutamy l and β-As- partyl Pep- tides | 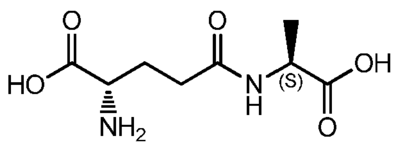 | Agonist |
| γ-Glu-Phe (gamma-Glu-Phe)† | γ-Glutamy 1 and β-As- partyl Pep- tides | 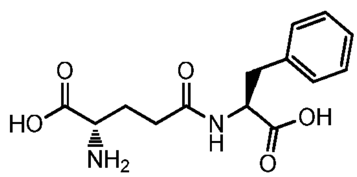 | Agonist EC50 2.32 mM |

(continued)

| Compound Name (Compound ID) | Compo und Class | Chemical Structure | Activity Type EC50/IC50 (standard units, where |
|---|---|---|---|
| γ-D-Glu-Trp (H-gamma-D-Glu-Trp-OH)† | γ-Glutamy l and β-As-partyl Pep-tides | 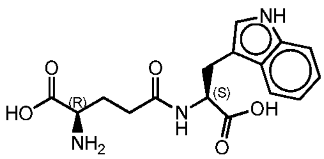 | Agonist EC50 4.20 mM |
| H-Glu(Met-OH)-OH† | γ-Glutamy l and β-As-partyl Pep-tides | 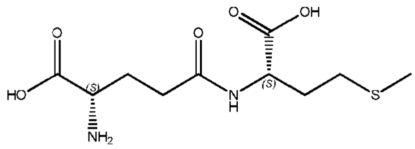 | Agonist |
| H-Glu(Cys-OH)-OH† | γ-Glutamy l and β-As-partyl Pep-tides | 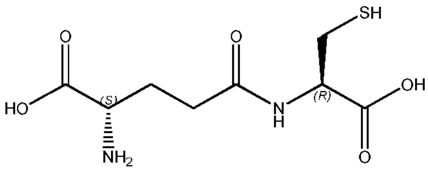 | Agonist |
| H-Glu(Gly-OH)-OH† | γ-Glutamy l and β-As-partyl Pep-tides | 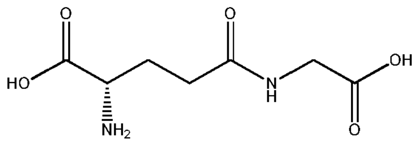 | Agonist |
| H-Glu(Gln-OH)-OH† | γ-Glutamy l and β-As-partyl Pep-tides | 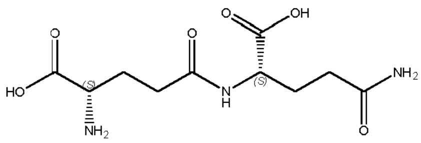 | Agonist |
| H-Glu(Glu-OH)-OH† | γ-Glutamy l and β-As-partyl Pep-tides | 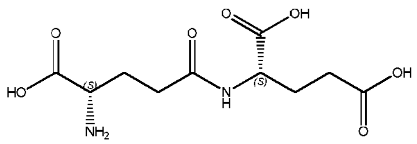 | Agonist EC50 2.06mM |
| H-Glu(Trp-OH)-OH† | γ-Glutamy l and β-As-partyl Pep-tides | 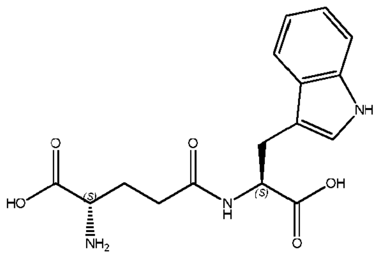 | Agonist |
| H-Glu(Leu-OH)-OH† | γ-Glutamy l and β-As-partyl Pep-tides | 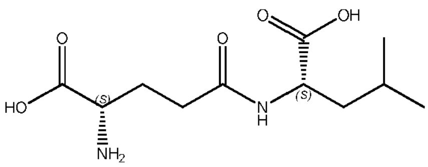 | Agonist |

(continued)

| Compound Name (Compound ID) | Compo und Class | Chemical Structure | Activity Type EC50/IC50 (standard units, where |
|---|---|---|---|
| H-Glu(Abu-OH)-OH† | γ-Glutamy l and β-As-partyl Pep-tides | 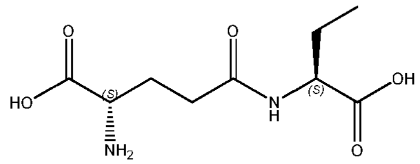 | Agonist |
| H-Asp(Ala-OH)-OH† | γ-Glutamy l and β-As-partyl Pep-tides | 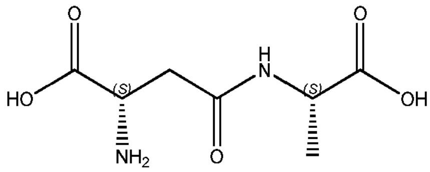 | Agonist |
| H-Asp(Gly-OH)-OH† | γ-Glutamy l and β-As-partyl Pep-tides | 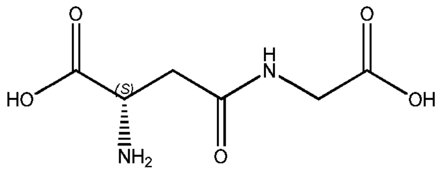 | Agonist |
| H-Asp(Leu-OH)-OH† | γ-Glutamy l and β-As-partyl Pep-tides | 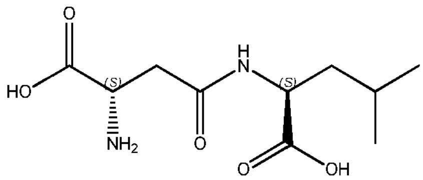 | Agonist |
| H-Asp(Phe-OH)-OH† | γ-Glutamy l and β-As-partyl Pep-tides | 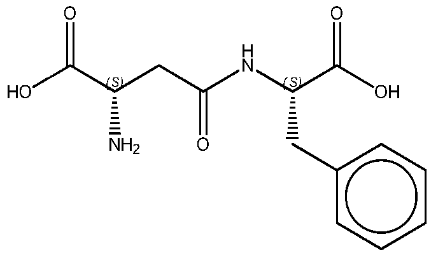 | Agonist |
| H-Glu(Glu(Glu-OH)-OH)-OH† | γ-Glutamy l and β-As-partyl Pep-tides | 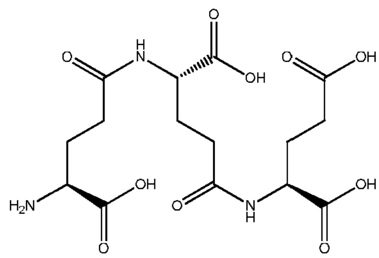 | Agonist EC50 2.35mM |
| H-Glu(Glu(Gln-OH)-OH)-OH† | γ-Glutamy l and β-As-partyl Pep-tides | 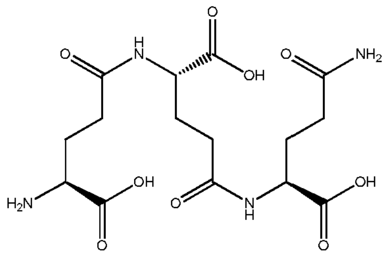 | Agonist |

(continued)

| Compound Name (Compound ID) | Compo und Class | Chemical Structure | Activity Type EC50/IC50 (standard units, where |
|---|---|---|---|
| Poly-L-arginine (Polyarginine) † | Polybasi c Peptides | 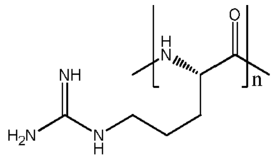 | Agonist EC50 1.01 uM |
| Poly-L-lysine† | Polybasi c Peptides | 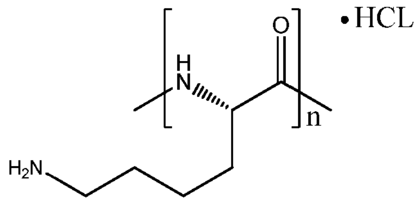 | Agonist |
| Poly-L-ornithine† | Polybasi c Peptides | 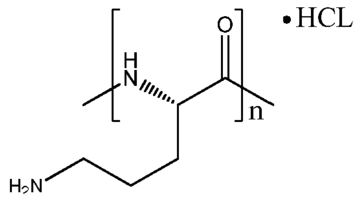 | Agonist EC50 0.240mM |
| Spermidine† | Polyami nes | 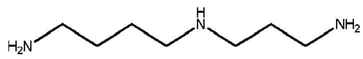 | Agonist EC50 2.50 mM |
| Spermine† | Polyami nes | 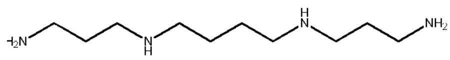 | Agonist |
| 1,4,8,11-tetraazacyclotetradecan e† | Polyami nes | 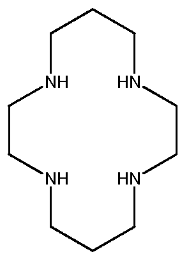 | Agonist EC50 0.773mM |
| Gentamicin† | Aminog ly-coside s | 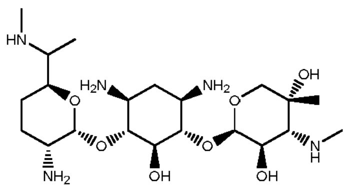 | Agonist EC50 0.990 mM |
| Neomycin† | Aminog ly-coside s | 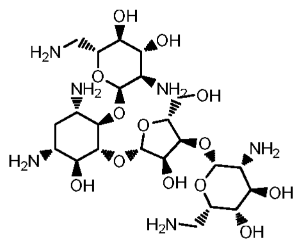 | Agonist EC50 1.87 mM |

(continued)

| Compound Name (Compound ID) | Compo und Class | Chemical Structure | Activity Type EC50/IC50 (standard units, where |
|---|---|---|---|
| Tobramycin† | Aminog ly- coside s | 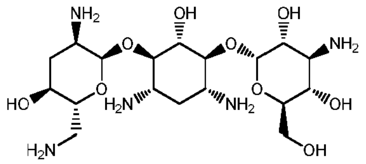 | PAM |
| Paromomycin† | Aminog ly- coside s | 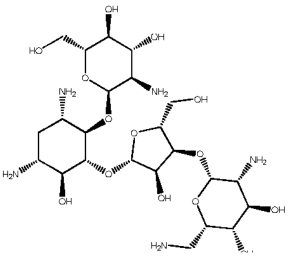 | Agonist EC50 1.08mM |
| Ribostamycin† | Aminog ly- coside s | 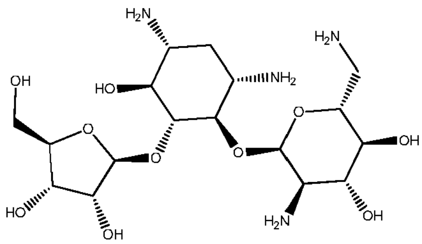 | Agonist |
| Sisomicin† | Aminog ly- coside s | 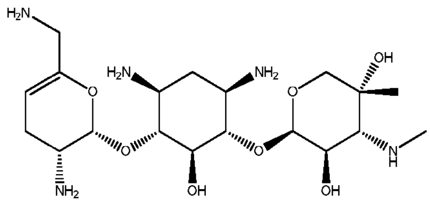 | Agonist EC50 0.300mM |
| Geneticin† | Aminog ly- coside s | 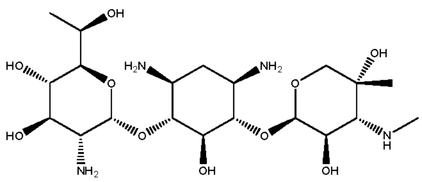 | Agonist |
| Cinacalcet | Calcimi me- tics | 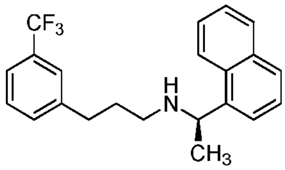 | PAM EC50 0.746 uM |
| Calindol | Calcimi me- tics | 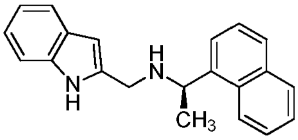 | PAM EC50 0.296 uM |

(continued)

| Compound Name (Compound ID) | Compo und Class | Chemical Structure | Activity Type EC50/IC50 (standard units, where |
|---|---|---|---|
| N-(1-(4-chlorophenyl)ethyl)-3-(4-methoxyphenyl) -6-methylheptan-1-amine | Calcimi metics | 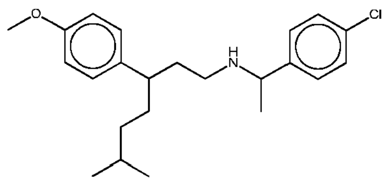 | PAM<br>EC50 115 uM |
| N-(1-(4-chlorophenyl) ethyl)-3-(furan-2-yl)-3-(p-tolyl) propan-1-amine | Calcimi metics | 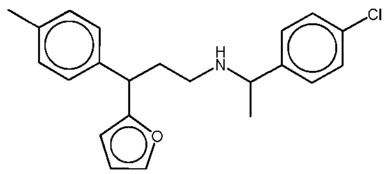 | PAM<br>EC50 3.68 uM |
| N-(1-(4-chlorophenyl)ethyl)-3-(4-isopropoxyphenyl)-3-phenylpropan-1-amine | Calcimi metics | 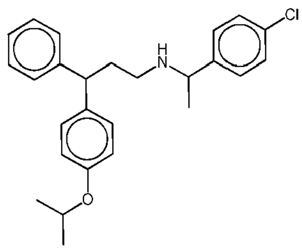 | PAM<br>EC50 4.49 uM |
| N-(1-(4-chlorophenyl)ethyl)-3-(4-methoxyphenyl)-4-methylpentan-1-amine | Calcimi metics | 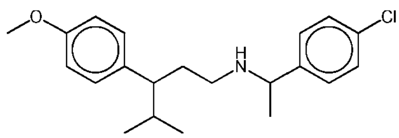 | PAM<br>EC50 1.44 uM |
| N-(1-(4-chlorophenyl)ethyl)-3-(4-isopropoxyphenyl)-3-(2-methoxyphenyl)propan-1-amine | Calcimi metics | 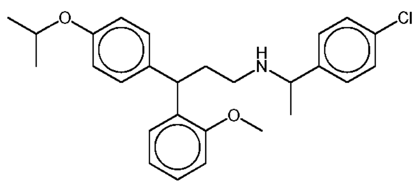 | PAM<br>EC50 0.714 uM |
| 3-(furan-2-yl)-3-phenyl-N-(1-phenylethyl) propan-1-amine | Calcimi metics | 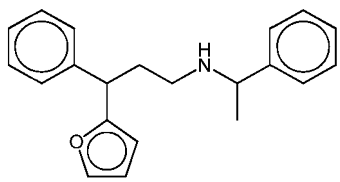 | PAM<br>EC50 0.458 uM |
| N-(1-(4-chlorophenyl) ethyl)-3-(furan-2-yl)-3-(2-methoxyphenyl)propan-1-amine | Calcimi metics | 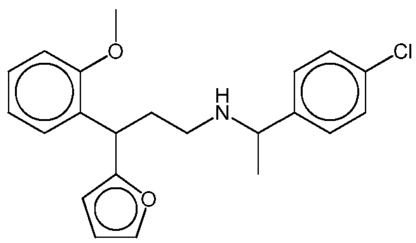 | PAM<br>EC50 1.41 uM |

(continued)

| Compound Name (Compound ID) | Compound Class | Chemical Structure | Activity Type EC50/IC50 (standard units, where |
|---|---|---|---|
| N-(1-(4-chlorophenyl)ethyl)-3-(4-isopropoxyphenyl)-6-methylheptan-1-amine | Calcimimetics | 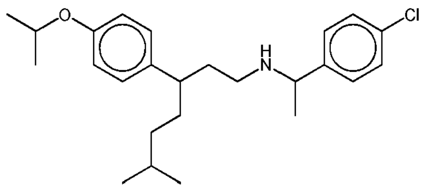 | PAM EC50 172 uM |
| N-(1-(4-chlorophenyl)ethyl)-3-(4-isopropoxyphenyl)-4-methylpentan-1-amine | Calcimimetics | 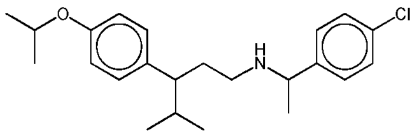 | PAM EC50 135.29 uM |
| 3-(furan-2-yl)-N-(1-phenylethyl)-3-(p-tolyl)propan-1-amine | Calcimimetics | 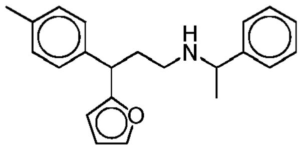 | PAM EC50 0.752 uM |
| 3-(2,2-dimethyltetrahydro-2H-pyran-4-yl)-3-phenyl-N-(1-phenylethyl)propan-1-amine | Calcimimetics | 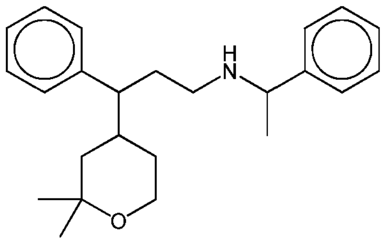 | PAM EC50 0.988 uM |
| 3-(furan-2-yl)-N-(1-(thiophen-2-yl)ethyl)-3-(p-tolyl)propan-1-amine | Calcimimetics | 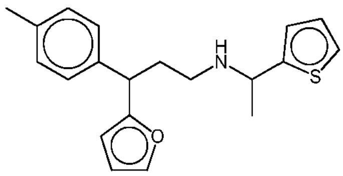 | PAM EC50 = 2.25 uM |
| N-(1-(4-chlorophenyl) ethyl)-3-(furan-2-yl)-4-phenylbutan-1-amine | Calcimimetics | 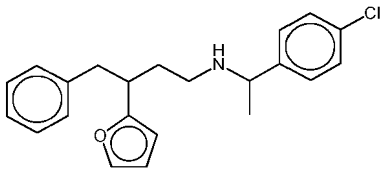 | PAM EC50 = 4.00 uM |
| 3-(furan-2-yl)-4-phenyl-N-(1-phenylethyl) butan-1-amine | Calcimimetics | 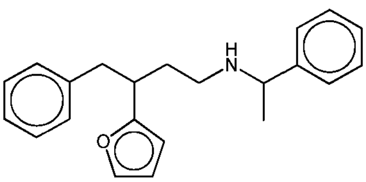 | PAM EC50 = 0.673 uM |
| 3-((8-chloro-2,3,4,5-tetrahydrobenzo[b]oxep in-5-yl) amino)-2-(pyridin-2-ylmethyl)propan-1-ol | Calcimimetics | 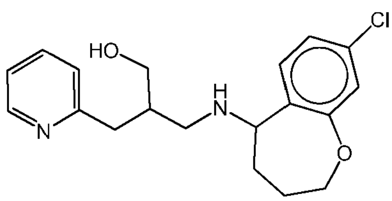 | PAM |

(continued)

| Compound Name (Compound ID) | Compo und Class | Chemical Structure | Activity Type EC50/IC50 (standard units, where |
|---|---|---|---|
| N-((2,3-dihydrobenzofuran-2-yl) methyl)-1-(quinolin-2-yl)ethanamine | Calcimi metics | 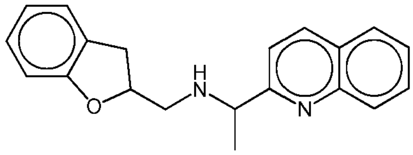 | PAM<br>EC50 9.01 uM |
| 6-bromo-4-fluoro-N-(1-(pyridin-4-yl)ethyl)-2,3-dihydro-1H-inden-1-amine | Calcimi metics | 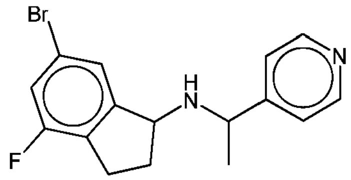 | PAM |
| 2,6-dichloro-4-(1-(((1-methyl-2-(thiophen-2-yl) piperidin-3-yl)methyl)amino)ethyl) aniline | Calcimi metics | 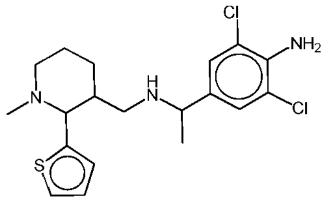 | PAM<br>EC50 8.68 uM |
| N-(1-(1H-indol-2-yl)ethyl)-1-(3,4-dimethylphenyl) ethanamine† | Calcimi metics | 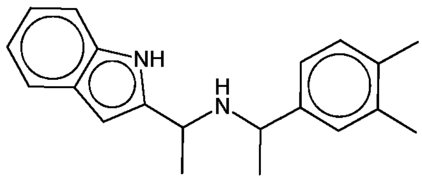 | PAM |
| 1-(4-chlorophenyl)-N-(2-(2,2-dimethyl-4-(p-tolyl)tetrahydro-2H-pyran-4-yl)ethyl)ethanamine† | Calcimi metics | 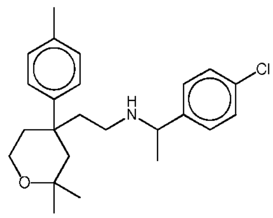 | PAM |
| methyl 2-(3-cyanophenyl)-2-((4-fluoro-2,3-dihydro-1H-inden-1-yl) amino)acetate | Calcimi metics | 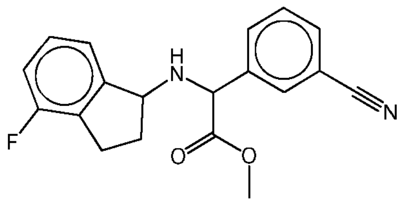 | PAM<br>EC50 58.9 uM |
| 3-phenyl-1-(1,2,3,4-tetrahydronaphthalen-1-yl) pyrrolidine† | Calcimi metics | 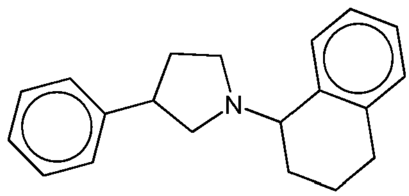 | PAM |

(continued)

| Compound Name (Compound ID) | Compo und Class | Chemical Structure | Activity Type EC50/IC50 (standard units, where |
|---|---|---|---|
| 2-(2-acetyl-1,2-dihydroisoquinolin-1-yl)-N-(1-(3-bromophenyl) ethyl)acet amide† | Calcimi metics | 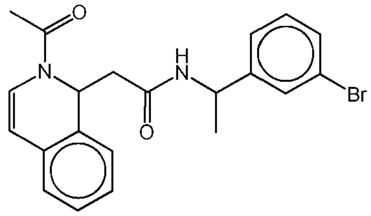 | PAM<br>EC50 12.1 uM |
| 1-(benzo[d]thiazol-2-yl)-1-(2,4-dimethylphenyl) ethanol† | Calcimi metics | 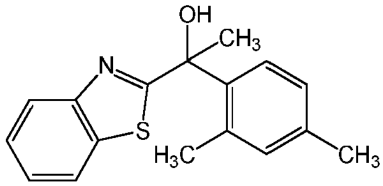 | PAM<br>EC50 51.1 nM |
| 1-(4-amino-2,5-dimethoxyphenyl)-1-(benzo[d]thiazol-2-yl)-2,2,2-trifluoroethanol† | Calcimi metics | 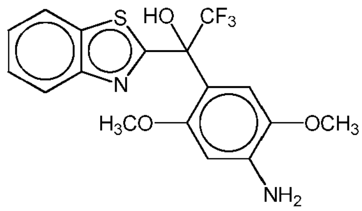 | PAM<br>EC50 2.42 uM |

**Reference Example 3 - Amino Acids that activate the calcium-sensing receptor *in vitro.***

The present reference example describes the activation of feline CaSR by amino acids *in vitro*. These do not fall within the scope of the claims but are included for reference only.

Amino acids that can function as CaSR PAMs were identified by *in vitro* functional characterization using a single-injection protocol. The effectiveness of a compound in activating CaSR was evaluated.

**Methods:** HEK293TRex/nat-Clytin cells that inducibly express a feline CaSR (f:CaSR) transgene construct was used to screen 30 amino acids to identify compounds that modulate f:CaSR activity. Cells that do not express CaSR *(i.e.,* mock control cells transfected with empty plasmid vector) were used as a control. The HEK293 cells were seeded at 10,000 cells/well in 384 MTP. 24 hours after cell seeding, cells were loaded with 10μm coelenterazine in an assay buffer (20 μL/well) for 4 h at room temperature. Dose response curves were determined for calcium in the presence of each of the 30 amino acids at either 5 mM or 10 mM concentration in PAM mode to determine the change in the EC50 for calcium. $CaCl_2$ alone was used as a control.

PAM mode (single-injection): Test compound (6x concentrated) and $CaCl_2$ (6x concentrated) were directly mixed 1:1 on the compound plate to get a 3x concentrated working solution of each test compound and control. 10 μl/well of the test compound or control working mixture was injected, and luminescence (*i.e.,* PAM activity) was measured.

**Results:** The results of the PAM testing for the 30 amino acids were obtained (data not shown). 4 amino acids were identified as PAMs: L-arginine, L-Phenylalanine, L-Tryptophan and L-lysine, due to a significant reduction in the EC50 value obtained for calcium. Figures 19A-19B show dose response curves for the *in vitro* activation of CaSR for the four amino acids. Table 4 provides the chemical structures and results for the 4 amino acids that had PAM activity using the single-injection protocol.

**Table 4.** CaSR PAM Active Amino Acids

| Compound Name (Compound ID) | Compound Class | Chemical Structure | Activity Type EC50/IC50 (standard units) |
|---|---|---|---|
| L-Arginine | Amino Acid | 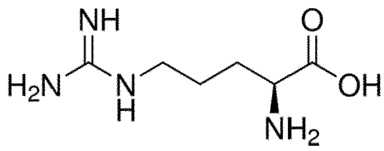 | PAM EC50 of $Ca^{2+}$ moved from 1.5mM to 0.72mM in presence of 10mM L-Arginine |
| L-Lysine | Amino Acid | 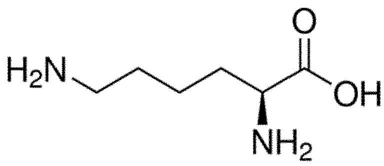 | PAM EC50 of $Ca^{2+}$ moved from 1.5mM to 0.72mM in presence of 10mM L-Lysine |
| L-Phenylalanine | Amino Acid | 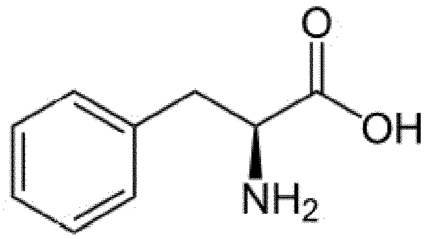 | PAM EC50 of $Ca^{2+}$ moved from 1.3mM to 0.99mM in presence of 15mM L-Phenylalanine |
| L-Tryptophan | Amino Acid | 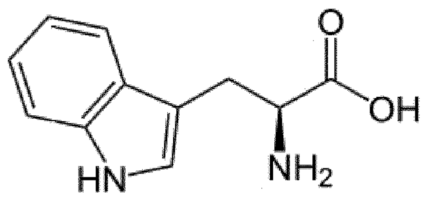 | PAM EC50 of $Ca^{2+}$ moved from 1.3mM to 0.76mM in presence of 15mM L-tryptophan |

**Reference Example 4** - **Example flavor compositions with at least three amino acids.**

The present reference example describes flavor compositions comprising a first amino acid that activates a feline umami (T1R1/T1R3) receptor, a second amino acid that activates a feline calcium-sensing receptor, and third amino acid that activates a feline taste receptor other than the umami and calcium-sensing receptors. These do not fall within the scope of the claims but are included for reference only.

The flavor composition contains a first amino acid that activates a feline umami receptor and that is selected from the First Group amino acids in Table 4. The flavor composition further contains a second amino acid that activates a feline calcium-sensing receptor and that is selected from the Second Group amino acids in Table 4. The flavor composition further contains a third amino acid that is selected from the Third Group amino acids in Table 5. The Third Group amino acids are taste-active for cats, but do not activate a feline umami receptor or calcium-sensing receptor.

**Table 5.** Amino Acids

| First Group amino acids: | Second Group amino acids: | Third Group amino acids: |
|---|---|---|
| L-Tryptophan | L-Glutamic acid (or Monosodium glutamate [MSG]) | L-Threonine |
| L-Phenylalanine | L-Aspartic acid | L-Isoleucine |
| L-Histidine | L-Arginine | L-Proline |
| Glycine | L-Lysine | Hydroxy-L-proline |
| L-Cysteine | L-Phenylalanine | L-Cystine |
| L-Alanine | L-Tryptophan | L-Glutamine |
| L-Tyrosine | Se-(Methyl)selenocysteine | L-Valine |

(continued)

| First Group amino acids: | Second Group amino acids: | Third Group amino acids: |
|---|---|---|
| L-Serine | | L-Omithine |
| L-Methionine | | Taurine |
| L-Leucine | | |
| L-Asparagine | | |

It is believed that combining amino acids from each of these groups can have an additive or synergistic relationship. Such combinations can be used to develop a taste profile for cats.

Further, similar techniques can be applied to develop taste profiles for canines and/or humans. It was discovered that compounds that activate the human calcium-sensing receptor do not necessarily activate the feline calcium-sensing receptor. Table 6 provides a list of such compounds.

Table 6. Examples of differences in taste receptor active compounds in felines and humans.

| Compound: | Human CaSR agonist | Feline CaSR agonist | Comments |
|---|---|---|---|
| L-histidine | Yes | No | Umami-active for cats |
| L-alanine | Yes | No | Umami-active for cats |
| Putrescine | Yes | No | |

As noted in Table 6, certain compounds that are not active for the feline calcium-sensing receptor are active for another taste receptor. For example, L-tryptophan, L-phenylalanine, L-histidine, and L-alanine do not activate the feline calcium-sensing receptor but are umami-active for cats. Using such information, different taste profiles can be developed depending on the taste receptors to be activated, e.g., human calcium-sensing receptors compared to feline calcium-sensing receptors.

It is worth noting that comparing crystal structures for human CaSR and feline CaSR show very little difference in the active site (none of the residues differ in identity between human and cat within 4 A of amino acids we have modeled). It is therefore remarkable that feline CaSR has certain differences in its preference for amino acids as agonists and/or PAMS, emphasizing the fact that results presented herein are not trivial extensions of prior art on human CaSR.

Although the presently disclosed subject matter and its advantages have been described in detail, it should be understood that various changes, substitutions and alterations can be made herein without departing from the scope of the invention as defined by the appended claims.

## Claims

1. A flavor composition comprising a compound selected from the group consisting of the following Formulas:

| | |
|---|---|
| Tm-1 | 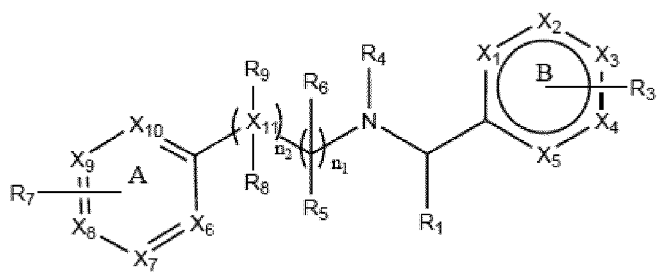 |

(continued)

| | |
|---|---|
| Tm-2 | 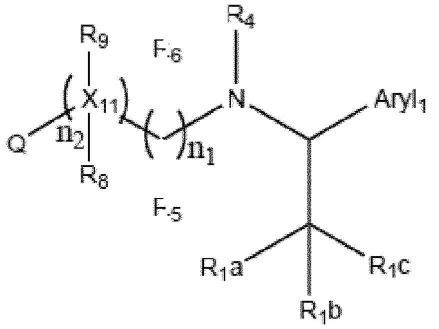 |
| Tm-3 | 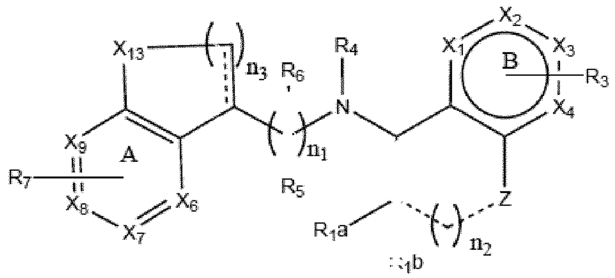 |
| Tm-4 | 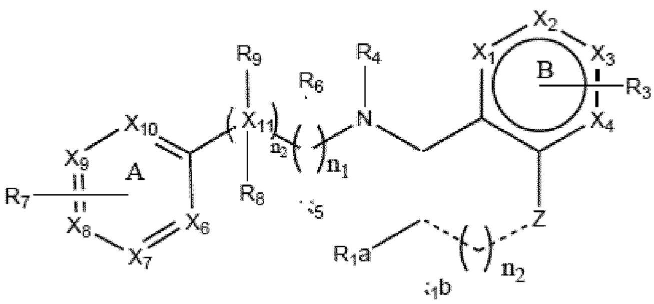 |
| Tm-5 | 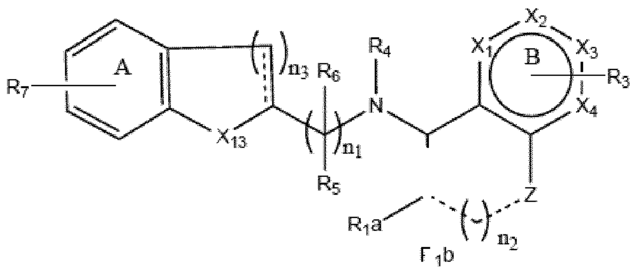 |

wherein

$X_1$ through $X_{10}$ are independently C or N;
$X_{11}$ is C, O, N, or S;
$X_{12}$ is O, NH, or S;
$X_{13}$ is $CR_4aR_4b$, O, $N(R_{12})$, or S;
Z is H, O, N, S, or C;
$n_1$, $n_2$, and $n_3$ independently range from 0 to 4 such that when $n_1$ or $n_2$ is 0, it indicates a chemical bond;
$n_4$ ranges from 0 to 2;
$R_1$, $R_{1a}$, $R_{1b}$, and $R_{1c}$ are independently selected from the group consisting of H, $CH_3$, $CF_3$, $CBr_3$, branched or unbranched lower alkyl ($C_1$-$C_6$), cycloalkyl ($C_3$-$C_6$), $COOR_{13}$, $C(O)NR_{16}R_{17}$, and $SO_2NR_4aR_4b$; and
wherein Rings A and B, and any aryl rings, can optionally be independently substituted by the functional groups $R_3$ and/or $R_7$, wherein $R_3$ and $R_7$ are independently selected from the group consisting of H, OH, branched or unbranched lower alkyl ($C_1$-$C_6$), $O(CH_2)n_3$aryl, $O(CH_2)n_3$heteroaryl, $NR_{10}R_{11}$, $N(R_{12})OH$, aryl, heteroaryl, methyl, OH, SH, $OCH_3$, $SCH_3$, COOH, $COOR_{13}$, $S(O)n_4R_{14}$, $C(O)R_{15}$, $C(O)NR_{16}R_{17}$, CN, $NR_{18}R_{19}$,

$NR_{20}C(O)R_{21}$, aryl, methylenedioxy, alkyl ($C_1$ - $C_5$), $CH_2SSCH_2CH(COOH)(NH_2)$, halogen (including F, Cl, Br, or I), $NO_2$, $NHC(=NH)NH_2$, CHO, $CF_3$, $P(=X_1)(OR_1)_2$, $OP(=X_1)(OR_1)_2$, tetrazole, $C(O)N(R_{12})OH$, $CF_3$, $OR_4$, $SR_4$, N=C=S, N=C=O, $C(R_4)=C(R_4a)R_4b$, $(CH_2)n_1CH=CH_2$, $NHC(=X_{12})NH_2$, $NHC(=X_{12})NHR_4$, $SO_2NR_4aR_4b$, and C $CR_4$;

$R_4$, $R_{4a}$, and $R_{4b}$ are independently selected from the group consisting of H, $CH_3$, lower alkyl ($C_1$-$C_6$), cycloalkyl ($C_3$-$C_6$), phenyl, aryl, and heteroaryl;

$R_5$, $R_6$, $R_8$ and $R_9$ are independently selected from the group consisting of H, $CH_3$, branched or unbranched lower alkyl ($C_1$-$C_{10}$), aryl, heteroaryl, phenyl, pyridyl, furan, pyran, thiophene, $(CH_2)$naryl, $(CH_2)$nheteroaryl, tetrahydropyran, wherein n is 0-4, and when n is 0, this implies a chemical bond;

$R_{10}$ and $R_{11}$ are independently selected from the group consisting of H, $CH_3$, lower alkyl ($C_1$-$C_6$), phenyl;

$R_{12}$ is H or $CH_3$;

$R_{13}$ is selected from the group consisting of H, $CH_3$, lower alkyl ($C_1$-$C_6$), and $CH_2$aryl;

$R_{14}$ is selected from the group consisting of H, $CH_3$, lower alkyl ($C_1$-$C_6$), and OH;

$R_{15}$ is selected from the group consisting of H, $CH_3$, $CF_3$, lower alkyl ($C_1$-$C_6$), and phenyl;

$R_{16}$, $R_{17}$, $R_{18}$, $R_{19}$, $R_{20}$, and $R_{21}$ are each independently selected from the group consisting of H, $CH_3$, lower alkyl, phenyl, $CH_2$phenyl, and cycloalkyl ($C_1$-$C_6$);

$Aryl_1$ is selected from the group consisting of phenyl, furan, thiophene, pyrole, benzofuran, benzothiophene, indole, quinoline, isoquinoline, heteroaryl, and aryl; and

Q is selected from the group consisting of aryl, heteroaryl, cycloalkyl ($C_1$-$C_7$), and indanyl.

**2.** A food product comprising the flavor composition of claim 1, wherein the flavor composition is present in an amount effective to increase a kokumi taste of the food product, as determined by a panel of taste testers.

**3.** A food product comprising the flavor composition of claim 1, wherein the flavor composition is present in an amount effective to increase the palatability of the food product, as determined by a panel of taste testers.

**4.** The food product of claim 2 or 3, wherein the flavor composition is present at a concentration of from about 1 pM to about 10 M, from about 1 pM to about 1 M, from about 0.0001% to about 10% w/w, from about 0.001% to about 5% w/w, or from about 0.01% to about 1% w/w in the food product.

**5.** The food product of claim 2 or 3, wherein the food product comprises a pet food product.

**6.** The food product of any one of claims 2-4, wherein the pet food product is a feline pet food product or a canine pet food product.

**7.** The food product of any one of claims 2-4, wherein the pet food product is a wet pet food product.

**8.** The food product of any one of claims 2-4, wherein the pet food product is a dry pet food product.

**9.** A method of increasing a kokumi taste intensity in a food product comprising admixing a food product with the flavor composition of claim 1, wherein the flavor composition is present in an amount effective to increase a kokumi taste of the food product, as determined by a panel of taste testers.

**10.** The method of claim 8, wherein the flavor composition is present at a concentration of from about 1 pM to about 10 M, from about 1 pM to about 1 M, from about 0.0001% to about 10% w/w, from about 0.001% to about 5% w/w, or from about 0.01% to about 1% w/w in the admixture.

**11.** A method of modulating the activity of a calcium-sensing receptor (CaSR) comprising contacting a CaSR with the flavor composition of claim 1.

**Patentansprüche**

**1.** Geschmackszusammensetzung, umfassend eine Verbindung, ausgewählt aus der Gruppe, bestehend aus den folgenden Formeln:

| | |
|---|---|
| Tm-1 | 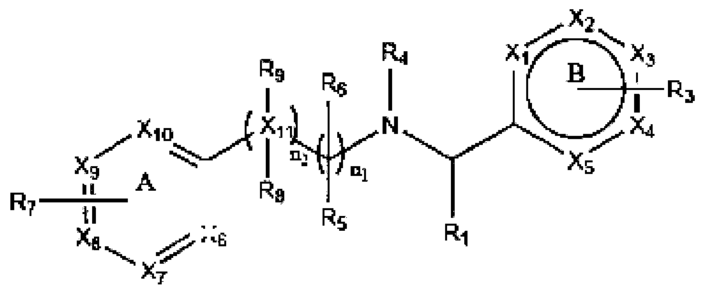 |
| Tm-2 | 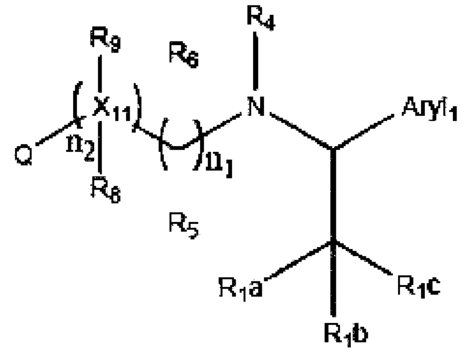 |
| Tm-3 | 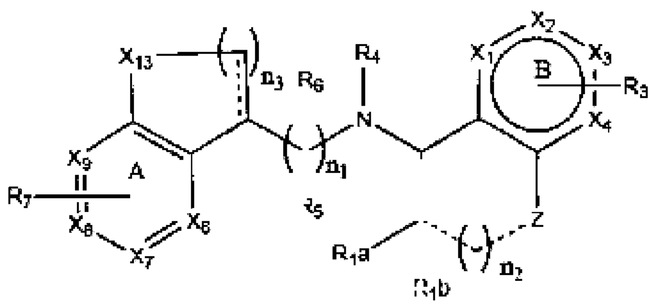 |
| Tm-4 | 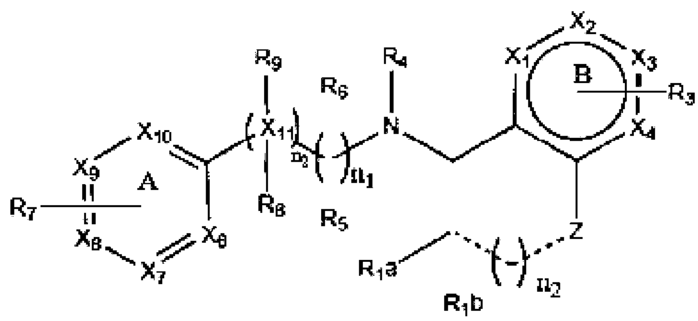 |
| Tm-5 | 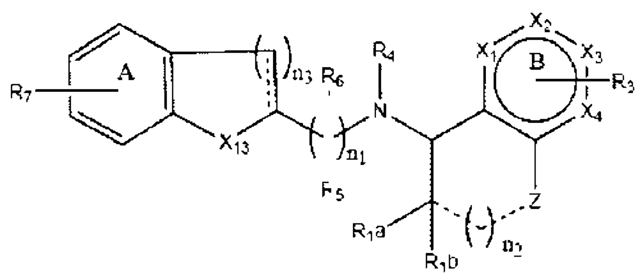 |

wobei

$X_1$ bis $X_{10}$ unabhängig voneinander C oder N sind;
$X_{11}$ C, O, N oder S ist;

$X_{12}$ o, NH oder S ist;
$X_{13}$ $CR_4aR_4b$, O, $N(R_{12})$ oder S ist;
Z H, O, N, S oder C ist;
$n_1$, $n_2$ und $n_3$ sich unabhängig von 0 bis 4 bewegen, sodass, wenn $n_1$ oder $n_2$ 0 ist, dies eine chemische Bindung anzeigt;
$n_4$ von 0 bis 2 reicht;
$R_1$, $R_{1a}$, $R_{1b}$ und $R_{1c}$ unabhängig ausgewählt sind aus der Gruppe, bestehend aus H, $CH_3$, $CF_3$, $CBr_3$, verzweigtem oder unverzweigtem Niederalkyl ($C_1$-$C_6$), Cycloalkyl ($C_3$-$C_6$), $COOR_{13}$, $C(O)NR_{16}R_{17}$ und $SO_2N$-$R_4aR_4b$; und
wobei die Ringe A und B, und jegliche Arylringe, gegebenenfalls unabhängig durch die funktionellen Gruppen $R_3$ und/oder $R_7$ substituiert sein können, wobei $R_3$ und $R_7$ unabhängig voneinander ausgewählt sind aus der Gruppe, bestehend aus H, OH, verzweigtem oder unverzweigtem Niederalkyl ($C_1$-$C_6$) , $O(CH_2)n_3$aryl, $O(CH_2)$ $n_3$heteroaryl, $NR_{10}R_{ll}$, $N(R_{12})OH$, Aryl, Heteroaryl, Methyl, OH, SH, $OCH_3$, $SCH_3$, COOH, $COOR_{13}$, $S(O)n_4R_{14}$, $C(O)R_{15}$, C (O) $NR_{16}R_{17}$, CN, $NR_{18}R_{19}$, $NR_{20}C(O)R_{21}$, Aryl, Methylenedioxy, Alkyl ($C_1$-$C_5$), $CH_2SSCH_2CH$ (COOH) ($NH_2$), Halogen (einschließlich F, Cl, Br, oder I), $NO_2$, NHC (=NH)$NH_2$, CHO, $CF_3$, $P(=X_1)(OR_1)_2$, $OP(=X_1)(OR_1)_2$, Tetrazol, $C(O)N(R_{12})OH$, $CF_3$, $OR_4$, $SR_4$, N=C=S, N=C=O, $C(R_4)=C(R_4a)R_4b$, $(CH_2)$ $n_1CH=CH_2$, $NHC(=X_{12})NH_2$, $NHC(=X_{12})NHR_4$, $SO_2NR_4aR_4b$, und C $CR_4$ ;
$R_4$, $R_4a$ und $R_4b$ unabhängig voneinander ausgewählt sind aus der Gruppe, bestehend aus H, $CH_3$, Niederalkyl ($C_1$-$C_6$), Cycloalkyl ($C_3$-$C_6$), Phenyl, Aryl und Heteroaryl;
$R_5$, $R_6$, $R_8$ und $R_9$ unabhängig voneinander ausgewählt sind aus der Gruppe, bestehend aus H, $CH_3$, verzweigtem oder unverzweigtem Niederalkyl ($C_1$-$C_{10}$), Aryl, Heteroaryl, Phenyl, Pyridyl, Fura, Pyran, Thiophen, $(CH_2)$nAryl, $(CH_2)$nHeteroaryl, Tetrahydropyran, wobei n 0-4 ist, und wenn n 0 ist, dies eine chemische Bindung bedeutet;
$R_{10}$ und $R_{11}$ unabhängig voneinander ausgewählt sind aus der Gruppe, bestehend aus H, $CH_3$, Niederalkyl ($C_1$-$C_6$), Phenyl;
$R_{12}$ H oder $CH_3$ ist;
$R_{13}$ ausgewählt ist aus der Gruppe, bestehend aus H, $CH_3$, Niederalkyl ($C_1$-$C_6$), und $CH_2$Aryl;
$R_{14}$ ausgewählt ist aus der Gruppe, bestehend aus H, $CH_3$, Niederalkyl ($C_1$-$C_6$), und OH;
$R_{15}$ ausgewählt ist aus der Gruppe, bestehend aus H, $CH_3$, $CF_3$, Niederalkyl ($C_1$-$C_6$), und Phenyl;
$R_{16}$, $R_{17}$, $R_{18}$, $R_{19}$, $R_{20}$ und $R_{21}$ jeweils unabhängig voneinander ausgewählt sind aus der Gruppe, bestehend aus H, $CH_3$, Niederalkyl, Phenyl, $CH_2$Phenyl und Cycloalkyl ($C_1$-$C_6$);
$Aryl_1$ ausgewählt ist aus der Gruppe, bestehend aus Phenyl, Furan, Thiophen, Pyrol, Benzofuran, Benzothiophen, Indol, Chinolin, Isochinolin, Heteroaryl und Aryl; und
Q ausgewählt ist aus der Gruppe, bestehend aus Aryl, Heteroaryl, Cycloalkyl ($C_1$-$C_7$) und Indanyl.

**2.** Ein Nahrungsmittelprodukt, umfassend die Geschmackszusammensetzung nach Anspruch 1, wobei die Geschmackszusammensetzung in einer Menge vorhanden ist, die wirksam ist, um einen Kokumi-Geschmack des Nahrungsmittelprodukts zu erhöhen, wie durch eine Tafel von Geschmacksprüfern bestimmt.

**3.** Nahrungsmittelprodukt, umfassend die Geschmackszusammensetzung nach Anspruch 1, wobei die Geschmackszusammensetzung in einer Menge vorhanden ist, die wirksam ist, um die Schmackhaftigkeit des Nahrungsmittelprodukts zu erhöhen, wie durch eine Tafel von Geschmackstestern bestimmt.

**4.** Lebensmittelprodukt nach Anspruch 2 oder 3, wobei die Geschmackszusammensetzung in einer Konzentration von etwa 1 pM bis etwa 10 M, von etwa 1 pM bis etwa 1 M, von etwa 0,0001 % bis etwa 10 Gew.-%, von etwa 0,001 % bis etwa 5 Gew.-% oder von etwa 0,01 % bis etwa 1 Gew.-% in dem Lebensmittelprodukt vorhanden ist.

**5.** Nahrungsmittelprodukt nach Anspruch 2 oder 3, wobei das Nahrungsmittelprodukt ein Haustiernahrungsprodukt umfasst.

**6.** Nahrungsmittelprodukt nach einem der Ansprüche 2 bis 4, wobei das Haustiernahrungsprodukt ein Katzen-Haustiernahrungsprodukt oder ein Hunde-Haustiernahrungsprodukt ist.

**7.** Nahrungsmittelprodukt nach einem der Ansprüche 2 bis 4, wobei das Haustiernahrungsprodukt ein Feuchthaustiernahrungsprodukt ist.

**8.** Nahrungsmittelprodukt nach einem der Ansprüche 2 bis 4, wobei das Haustiernahrungsprodukt ein Trockenhaustiernahrungsprodukt ist.

**9.** Verfahren zum Erhöhen einer Kokumi-Geschmacksintensität in einem Nahrungsmittelprodukt, umfassend das Vermischen eines Nahrungsmittelprodukts mit der Geschmackszusammensetzung nach Anspruch 1, wobei die Geschmackszusammensetzung in einer Menge vorliegt, die wirksam ist, um einen Kokumi-Geschmack des Nahrungsmittelprodukts zu erhöhen, bestimmt durch eine Tafel von Geschmackstestern,

**10.** Verfahren nach Anspruch 8, wobei die Geschmackszusammensetzung in einer Konzentration von etwa 1 pM bis etwa 10 M, von etwa 1 pM bis etwa 1 M, von etwa 0,0001 % bis etwa 10 Gew.-%, von etwa 0,001 % bis etwa 5 Gew.-% oder von etwa 0,01 % bis etwa 1 Gew.-% in der Mischung vorliegt.

**11.** Ein Verfahren zum Modulieren der Aktivität eines Calcium-sensitiven Rezeptors (CaSR), umfassend das Inkontaktbringen eines CaSR mit der Geschmackszusammensetzung nach Anspruch 1.

**Revendications**

**1.** Composition aromatique comprenant un composé choisi dans le groupe constitué des formules suivantes :

| | |
|---|---|
| Tm-1 | 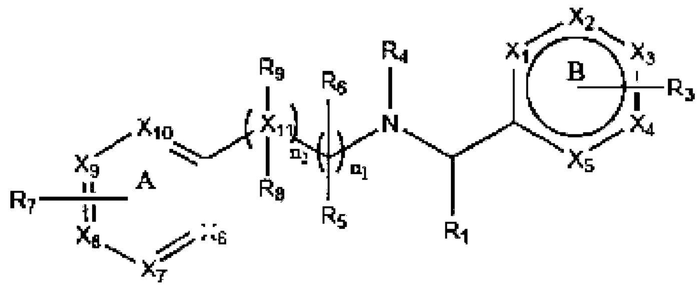 |
| Tm-2 | 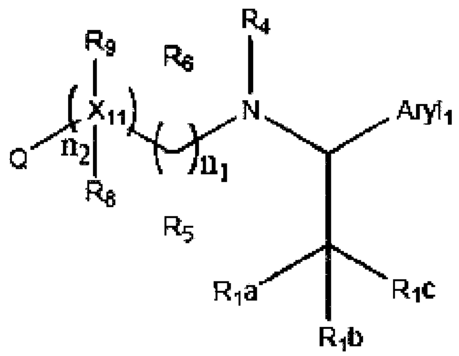 |
| Tm-3 | 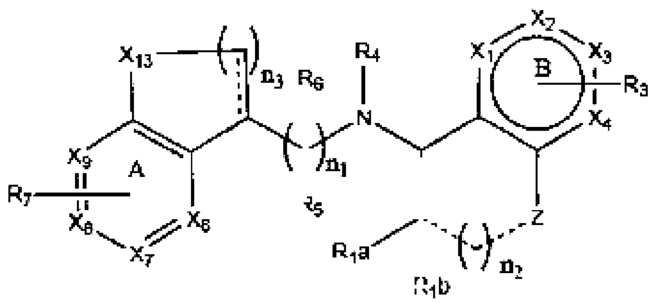 |

(continued)

| | |
|---|---|
| Tm-4 | 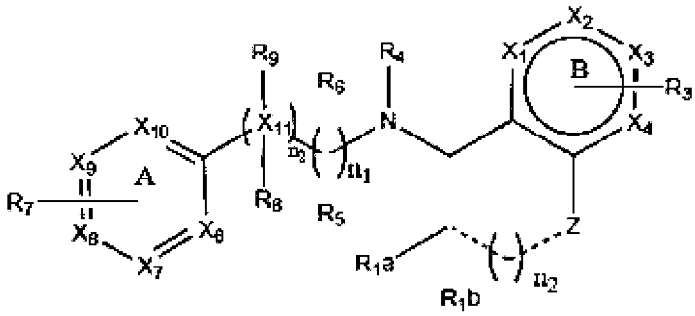 |
| Tm-5 | 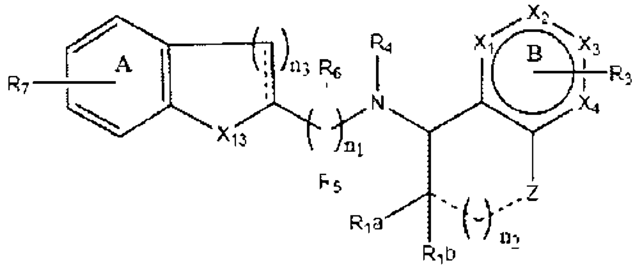 |

dans laquelle

$X_1$ à $X_{10}$ sont indépendamment C ou N ;
$X_{11}$ est C, O, N ou S ;
$X_{12}$ est O, NH ou S ;
$X_{13}$ est $CR_4aR_4b$, O, $N(R_{12})$ ou S ;
Z est H, O, N, S ou C ;
$n_1$, $n_2$ et $n_3$ sont indépendamment dans la plage de 0 à 4 de telle sorte que lorsque $n_1$ ou $n_2$ est 0, cela indique une liaison chimique ;
$n_4$ est dans la plage de 0 à 2 ;
$R_1$, $R_{1a}$, $R_{1b}$ et $R_{1c}$ sont choisis indépendamment dans le groupe constitué de H, $CH_3$, $CF_3$, $CBr_3$, alkyle inférieur en ($C_1$-$C_6$) ramifié ou non ramifié, cycloalkyl en ($C_3$-$C_6$), $COOR_{13}$, $C(O)NR_{16}R_{17}$ et $SO_2NR_4aR_4b$ ; et
dans laquelle les cycles A et B, et tout cycle aryle, peuvent facultativement être substitués indépendamment par les groupes fonctionnels $R_3$ et/ou $R_7$, dans laquelle $R_3$ et $R_7$ sont indépendamment choisis dans le groupe constitué de H, OH, alkyle inférieur en ($C_1$-$C_6$) ramifié ou non ramifié, $O(CH_2)n_3$aryle, $O(CH_2)n_3$hétéroaryle, $NR_{10}R_{11}$, $N(R_{12})OH$, aryle, hétéroaryle, méthyle, OH, SH, $OCH_3$, $SCH_3$, COOH, $COOR_{13}$, $S(O)n_4R_{14}$, $C(O)R_{15}$, $C(O)NR_{16}R_{17}$, CN, $NR_{18}R_{19}$, $NR_{20}C(O)R_{21}$, aryle, méthylènedioxy, alkyle en ($C_1$-$C_5$), $CH_2SSCH_2CH(COOH)(NH_2)$, halogène (y compris F, Cl, Br, ou I), $NO_2$, $NHC(=NH)NH_2$, CHO, $CF_3$, $P(=X_1)(OR_1)_2$, $OP(=X_1)(OR_1)_2$, tétrazole, $C(O)N(R_{12})OH$, $CF_3$, $OR_4$, $SR_4$, N=C=S, N=C=O, $C(R_4)=C(R_4a)R_4b$, $(CH_2)n_1CH=CH_2$, $NHC(=X_{12})NH_2$, $NHC(=X_{12})NHR_4$, $SO_2NR_4aR_4b$, et C $CR_4$ ;
$R_4$, $R_4a$ et $R_4b$ sont choisis indépendamment dans le groupe constitué de H, $CH_3$, alkyle inférieur en ($C_1$-$C_6$), cycloalkyle en ($C_3$-$C_6$), phényle, aryle et hétéroaryle ;
$R_5$, $R_6$, $R_8$ et $R_9$ sont choisis indépendamment dans le groupe constitué de H, $CH_3$, alkyle inférieur en ($C_1$-$C_{10}$) ramifié ou non ramifié, aryle, hétéroaryle, phényle, pyridyle, fura, pyran, thiophène, $(CH_2)n$aryle, $(CH_2)n$hétéroaryle, tétrahydropyrane, dans laquelle n est 0 à 4, et lorsque n est 0, cela implique une liaison chimique ;
$R_{10}$ et $R_{11}$ sont choisis indépendamment dans le groupe constitué de H, $CH_3$, alkyle inférieur en ($C_1$-$C_6$), phényle ;
$R_{12}$ est H ou $CH_3$ ;
$R_{13}$ est choisi dans le groupe constitué de H, $CH_{3,}$, alkyle inférieur en ($C_1$-$C_6$), et $CH_2$aryle ;
$R_{14}$ est choisi dans le groupe constitué de H, $CH_{3,}$, alkyle inférieur en ($C_1$-$C_6$), et OH ;
$R_{15}$ est choisi dans le groupe constitué de H, $CH_{3,}$, $CF_{3,}$, alkyle inférieur en ($C_1$-$C_6$), et phényle ;
$R_{16}$, $R_{17}$, $R_{18}$, $R_{19}$, $R_{20}$ et $R_{21}$ sont chacun indépendamment choisis dans le groupe constitué de H, $CH_3$, alkyle inférieur, phényle, $CH_2$phényle, et cycloalkyle en ($C_1$-$C_6$) ;
$Aryl_1$ est choisi dans le groupe constitué de phényle, furane, thiophène, pyrole, benzofurane, benzothiophène, indole, quinoléine, isoquinoléine, hétéroaryle et aryle ; et
Q est choisi dans le groupe constitué de aryle, hétéroaryle, cycloalkyle en ($C_1$-$C_7$) et indanyle.

2. Produit alimentaire comprenant la composition aromatique selon la revendication 1, dans lequel la composition aromatique est présente en une quantité efficace pour augmenter un goût de kokumi du produit alimentaire, tel que déterminé par un panel de testeurs de goût.

3. Produit alimentaire comprenant la composition aromatique selon la revendication 1, dans lequel la composition aromatique est présente en une quantité efficace pour augmenter la sapidité du produit alimentaire, tel que déterminé par un panel de testeurs de goût.

4. Produit alimentaire selon la revendication 2 ou 3, dans lequel la composition aromatique est présente à une concentration d'environ 1 pM à environ 10 M, d'environ 1 pM à environ 1 M, d'environ 0,0001 % à environ 10 % p/p, d'environ 0,001 % à environ 5 % p/p, ou d'environ 0,01 % à environ 1 % p/p dans le produit alimentaire.

5. Produit alimentaire selon la revendication 2 ou 3, dans lequel le produit alimentaire comprend un produit alimentaire pour animaux domestiques.

6. Produit alimentaire selon l'une quelconque des revendications 2 à 4, dans lequel le produit alimentaire pour animaux domestiques est un produit alimentaire pour animaux domestiques félins ou un produit alimentaire pour animaux domestiques canins.

7. Produit alimentaire selon l'une quelconque des revendications 2 à 4, dans lequel le produit alimentaire pour animaux domestiques est un produit alimentaire humide pour animaux domestiques.

8. Produit alimentaire selon l'une quelconque des revendications 2 à 4, dans lequel le produit alimentaire pour animaux domestiques est un produit alimentaire sec pour animaux domestiques.

9. Procédé d'augmentation de l'intensité du goût de kokumi dans un produit alimentaire comprenant le mélange d'un produit alimentaire avec la composition aromatique selon la revendication 1, dans lequel la composition aromatique est présente en une quantité efficace pour augmenter le goût de kokumi du produit alimentaire, telle que déterminée par un panel de testeurs de goût.

10. Procédé selon la revendication 8, dans lequel la composition aromatique est présente à une concentration d'environ 1 pM à environ 10 M, d'environ 1 pM à environ 1 M, d'environ 0,0001 % à environ 10 % p/p, d'environ 0,001 % à environ 5 % p/p, ou d'environ 0,01 % à environ 1 % p/p dans le mélange.

11. Procédé de modulation de l'activité d'un récepteur sensible au calcium (CaSR) comprenant la mise en contact d'un CaSR avec la composition aromatique de la revendication 1.

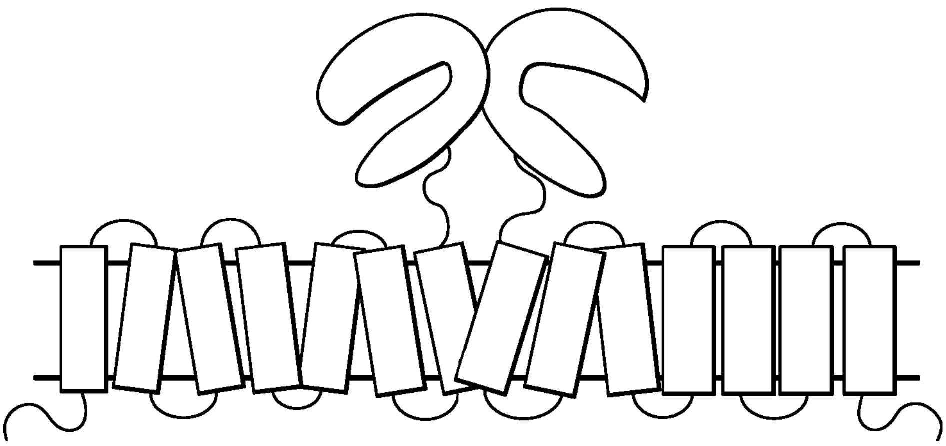


FIG. 1

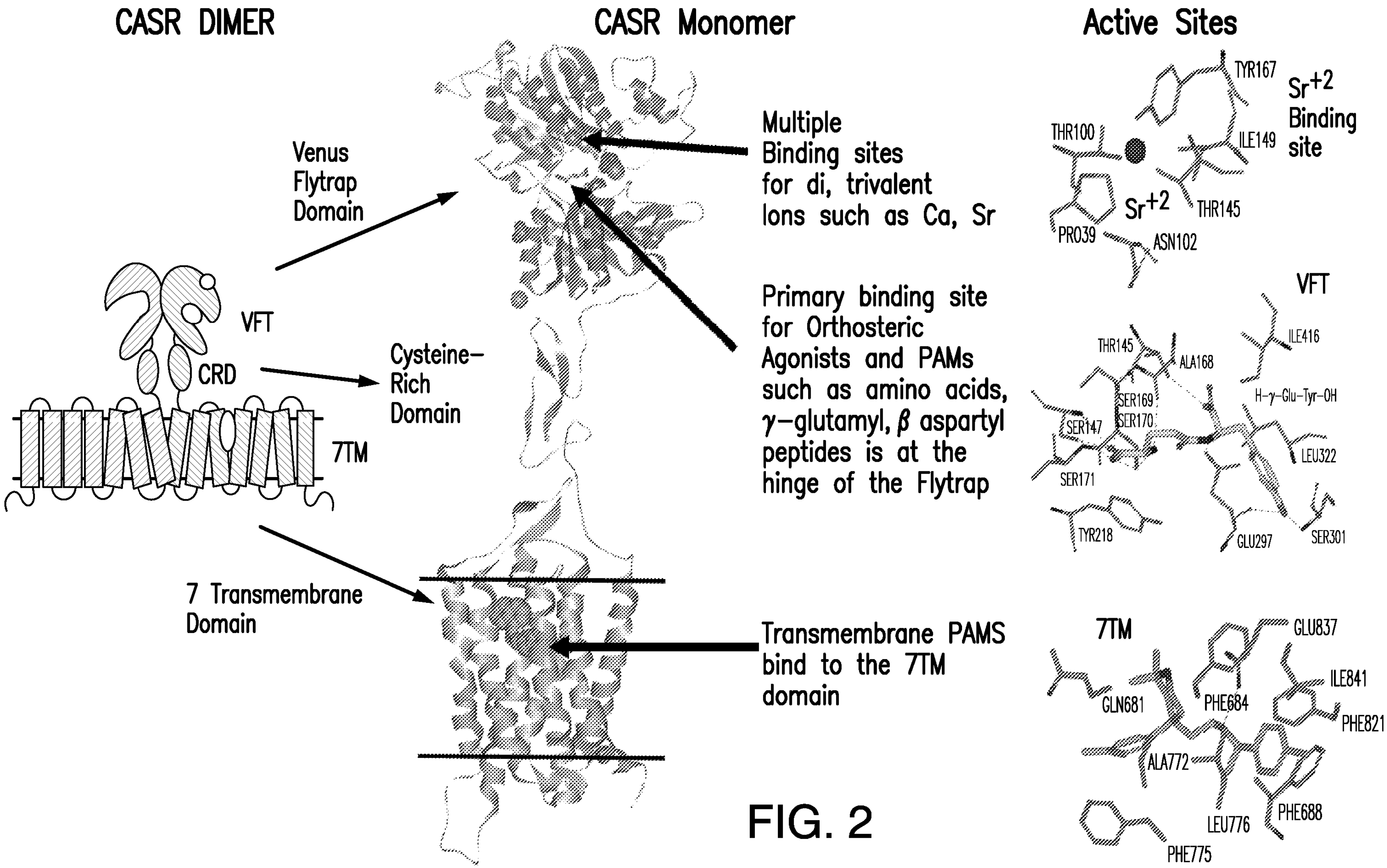
CASR DIMER
CASR Monomer
Active Sites
Venus
Flytrap
Domain
VFT
CRD
Cysteine-
Rich
Domain
7TM
7 Transmembrane
Domain
Multiple
Binding sites
for di, trivalent
Ions such as Ca, Sr
Primary binding site
for Orthosteric
Agonists and PAMs
such as amino acids,
γ-glutamyl, β aspartyl
peptides is at the
hinge of the Flytrap
Transmembrane PAMS
bind to the 7TM
domain
TYR167
Sr+2
Binding
site
THR100
ILE149
Sr+2
THR145
PRO39
ASN102
VFT
ILE416
THR145
ALA168
H-γ-Glu-Tyr-OH
SER169
SER170
SER147
LEU322
SER171
TYR218
GLU297
SER301
7TM
GLU837
ILE841
GLN681
PHE684
PHE821
ALA772
PHE688
LEU776
PHE775

FIG. 2

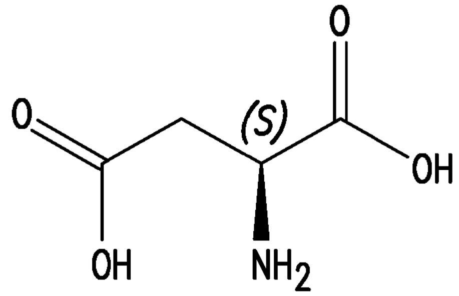

FIG. 3A

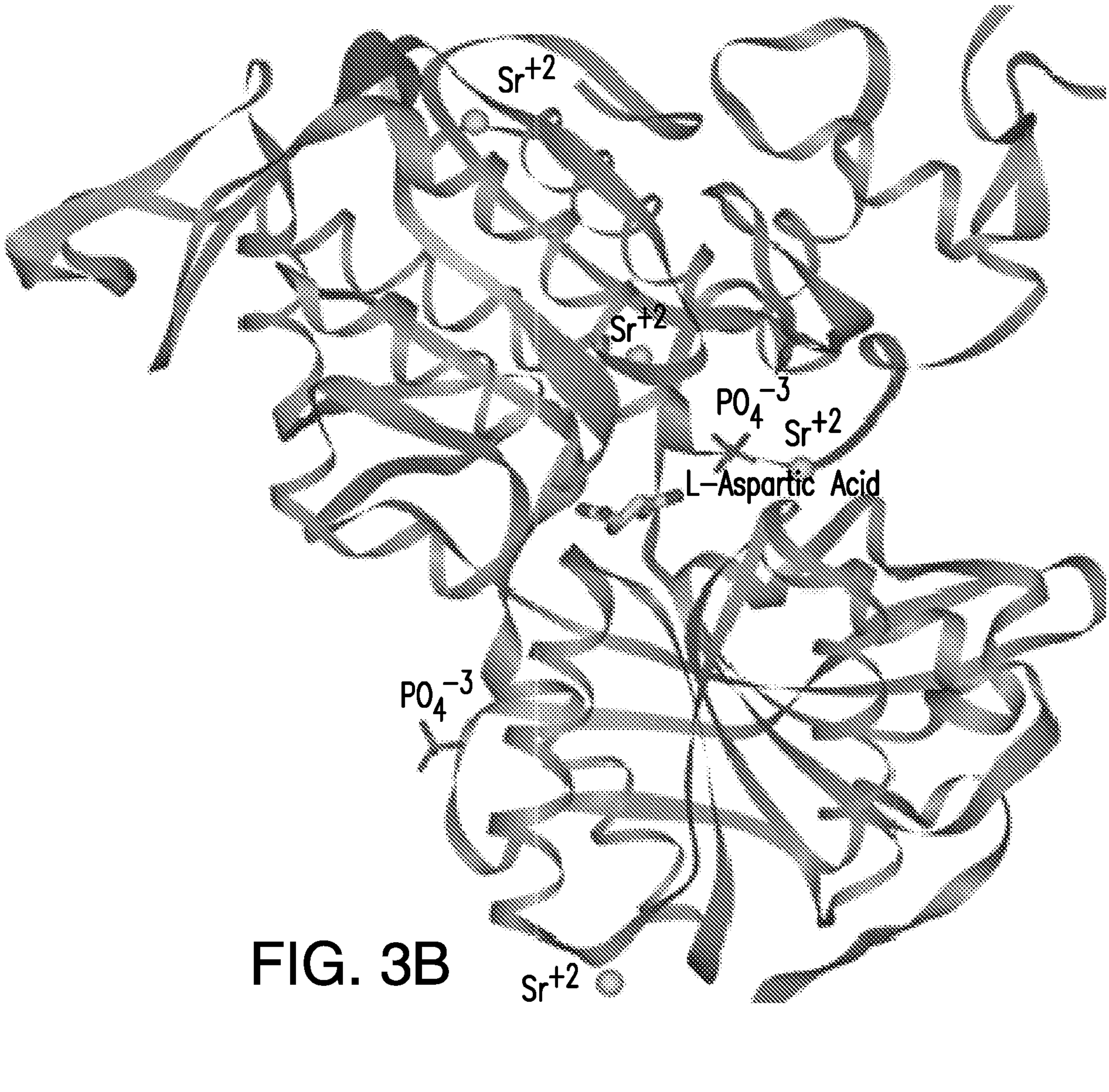


FIG. 3B

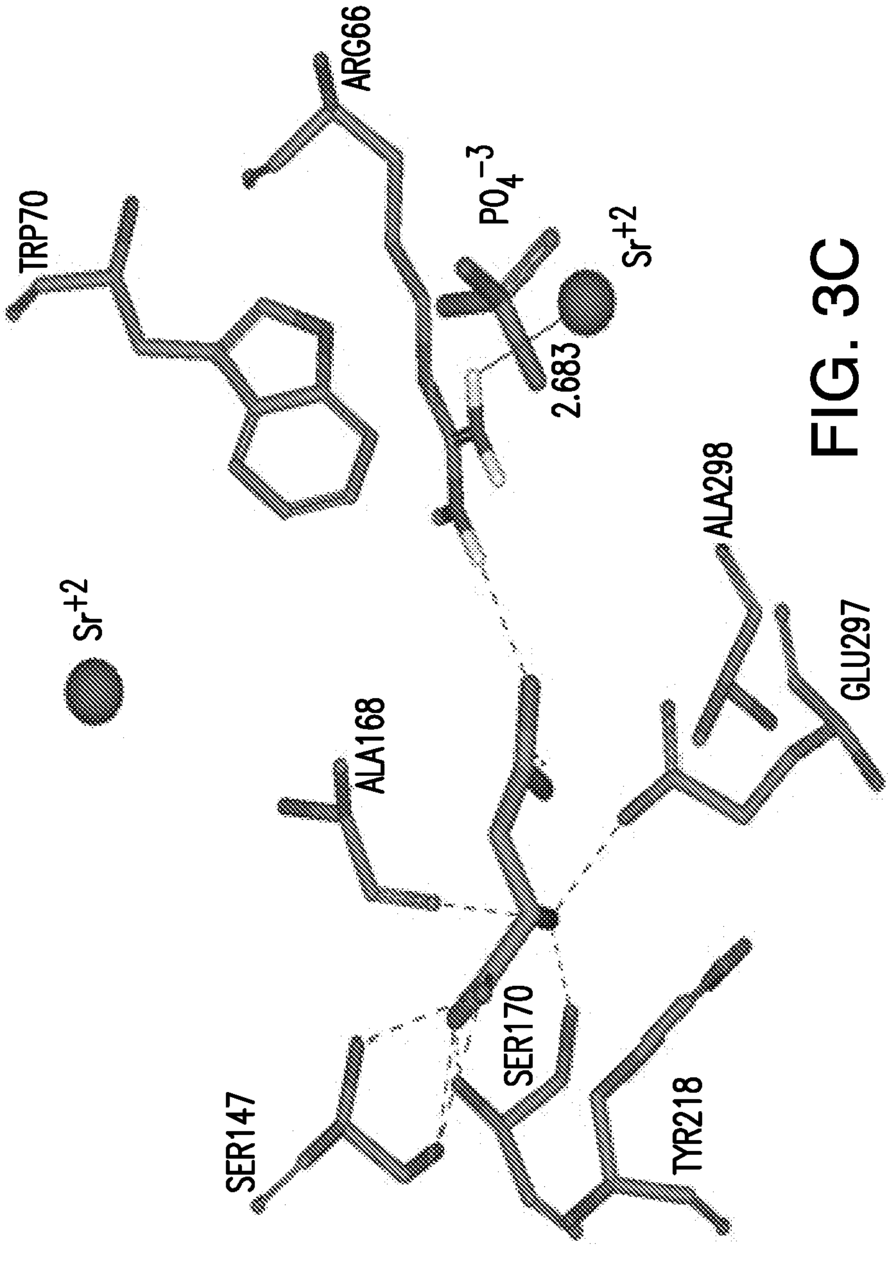
ARG66
TRP70
$PO_4^{-3}$
$Sr^{+2}$
2.683
$Sr^{+2}$
ALA298
GLU297
ALA168
SER170
SER147
TYR218

FIG. 3C

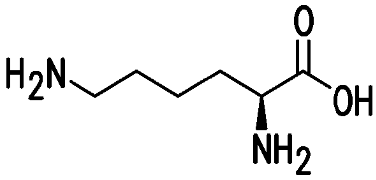

FIG. 4A

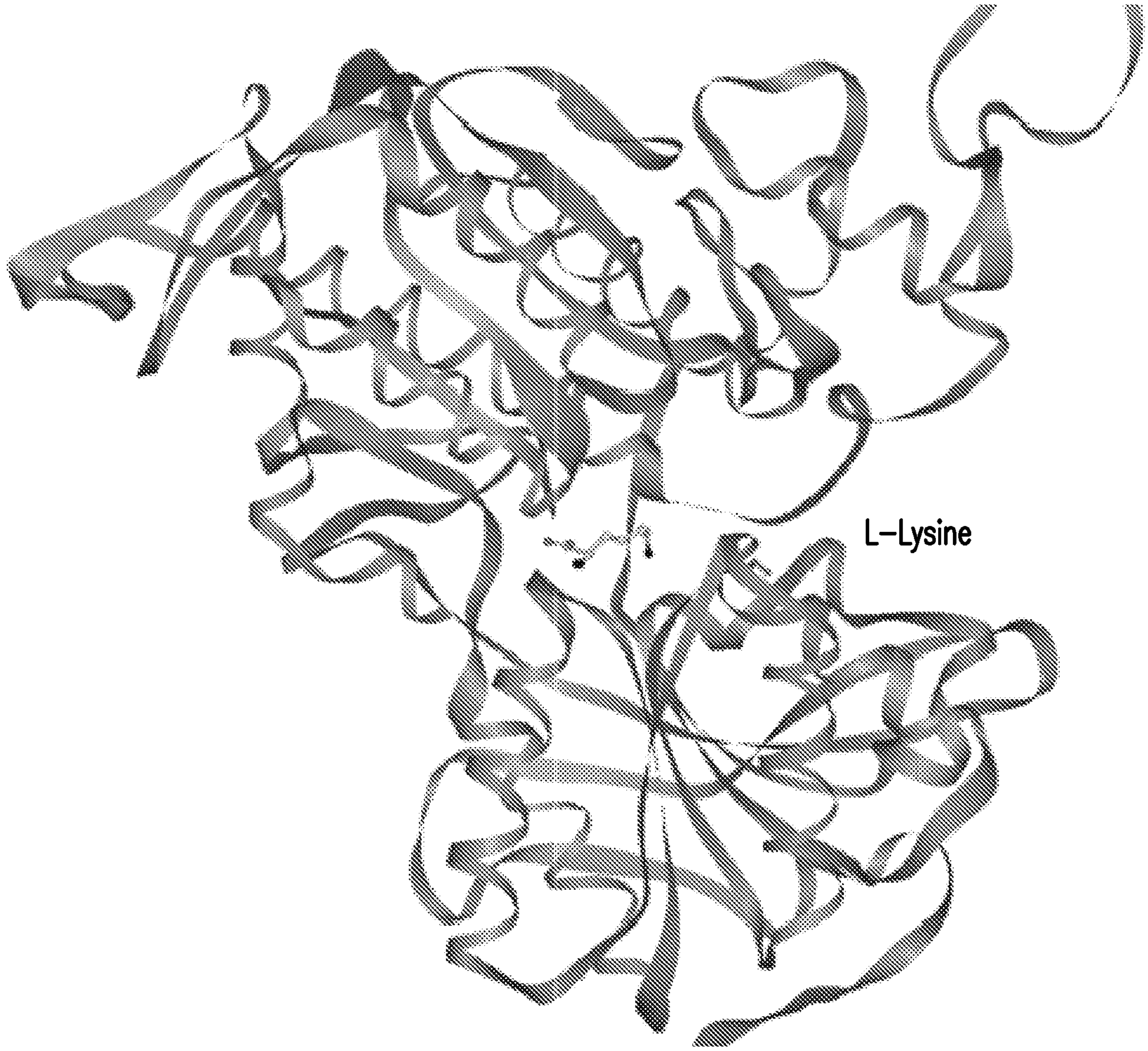


FIG. 4B

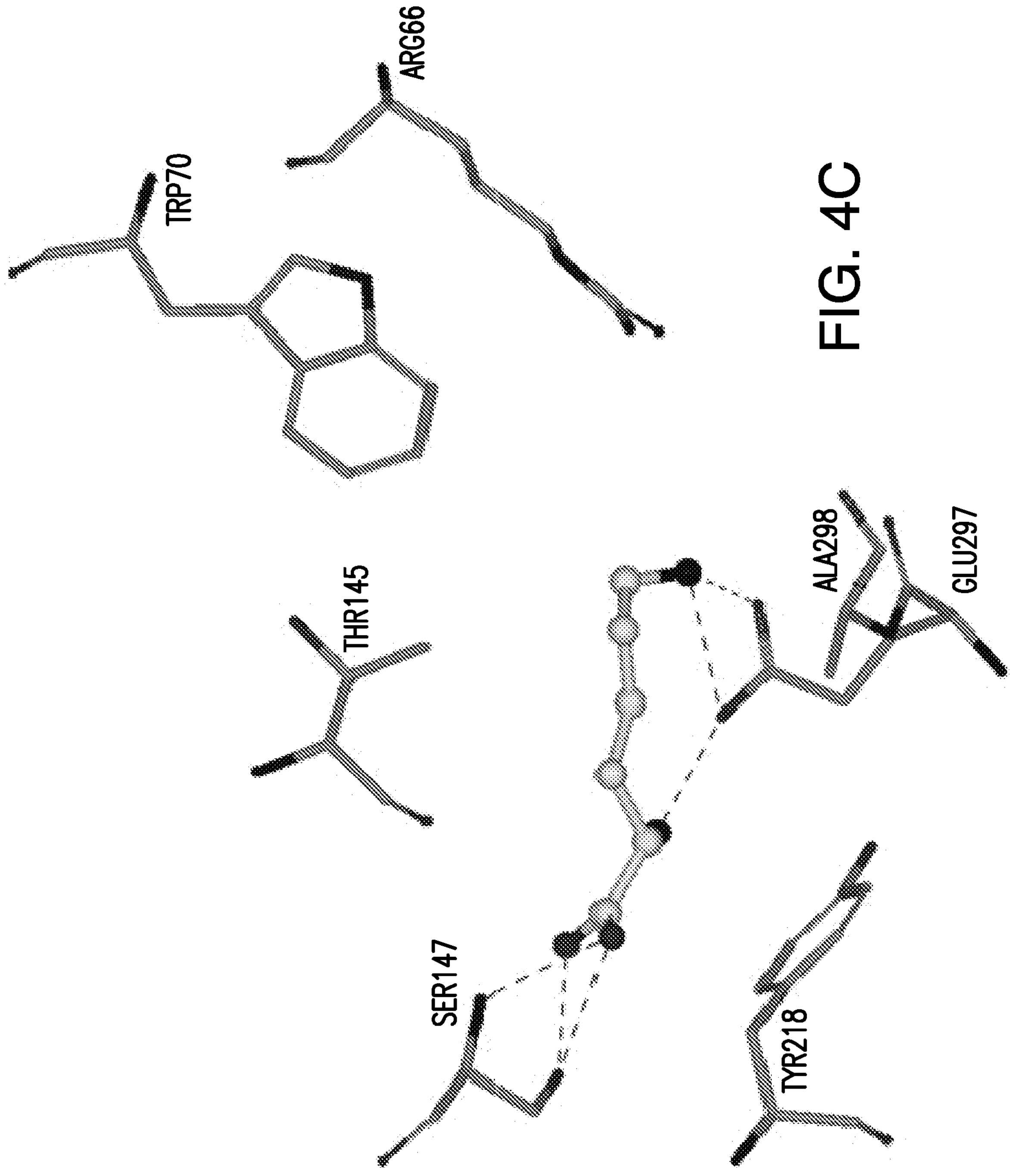


FIG. 4C

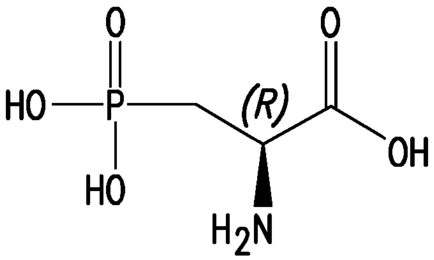

FIG. 5A

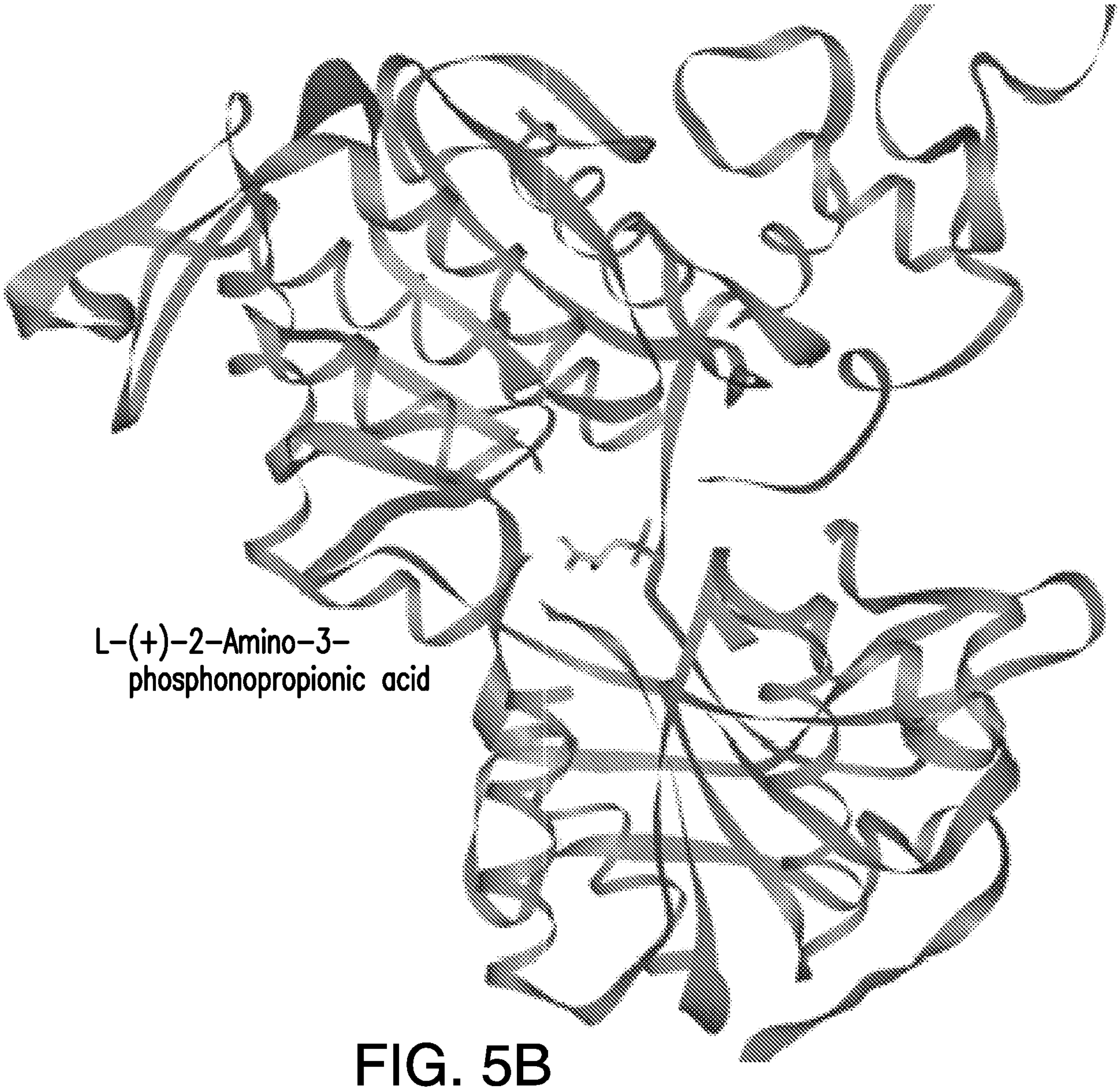


FIG. 5B

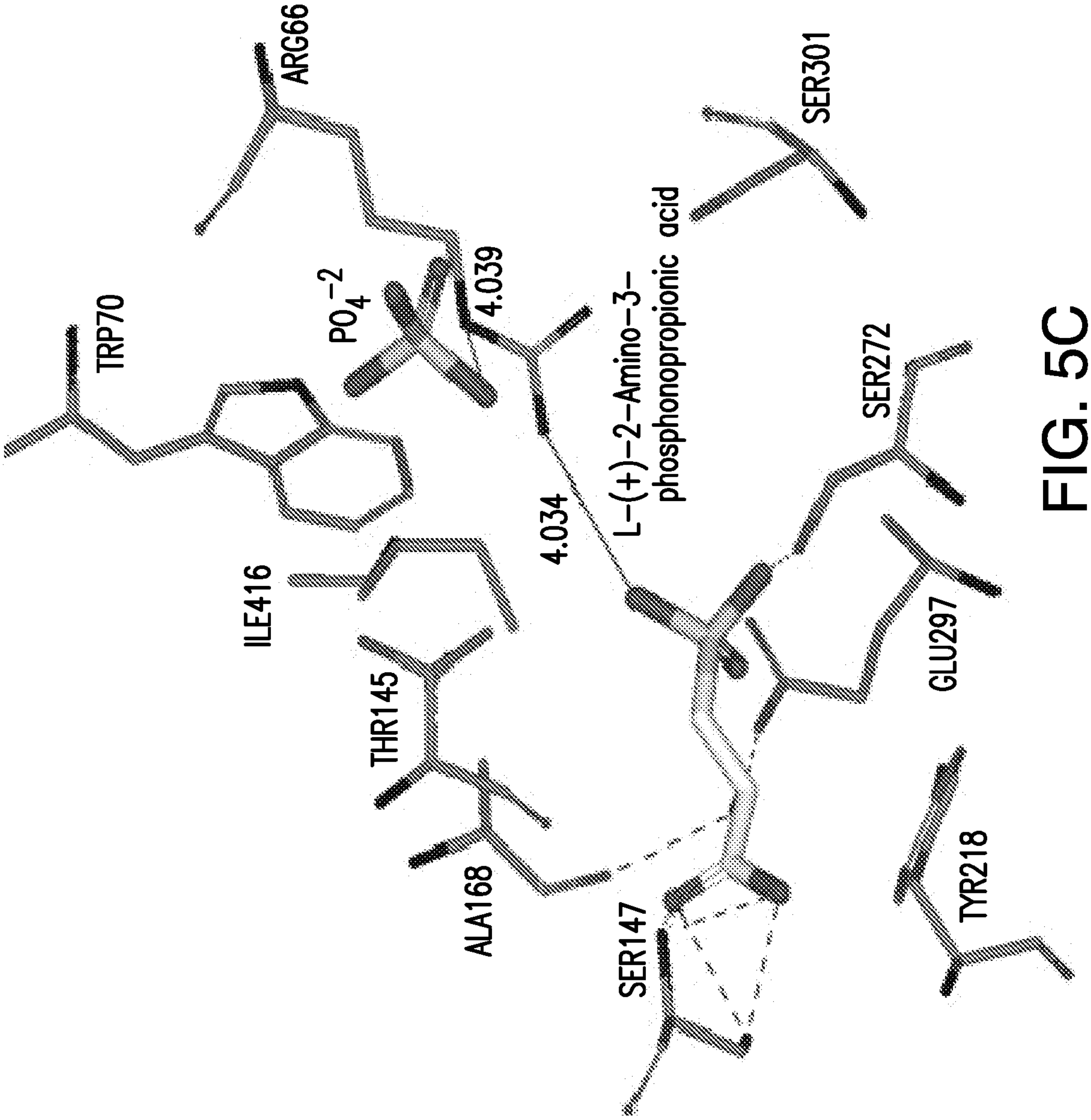
ARG66
TRP70
$PO_4^{-2}$
4.039
SER301
4.034
L-(+)-2-Amino-3-phosphonopropionic acid
SER272
ILE416
THR145
GLU297
ALA168
SER147
TYR218

FIG. 5C

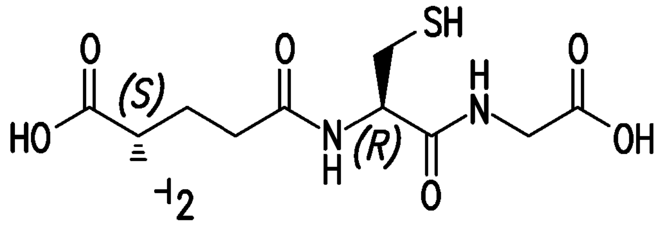

FIG. 6A

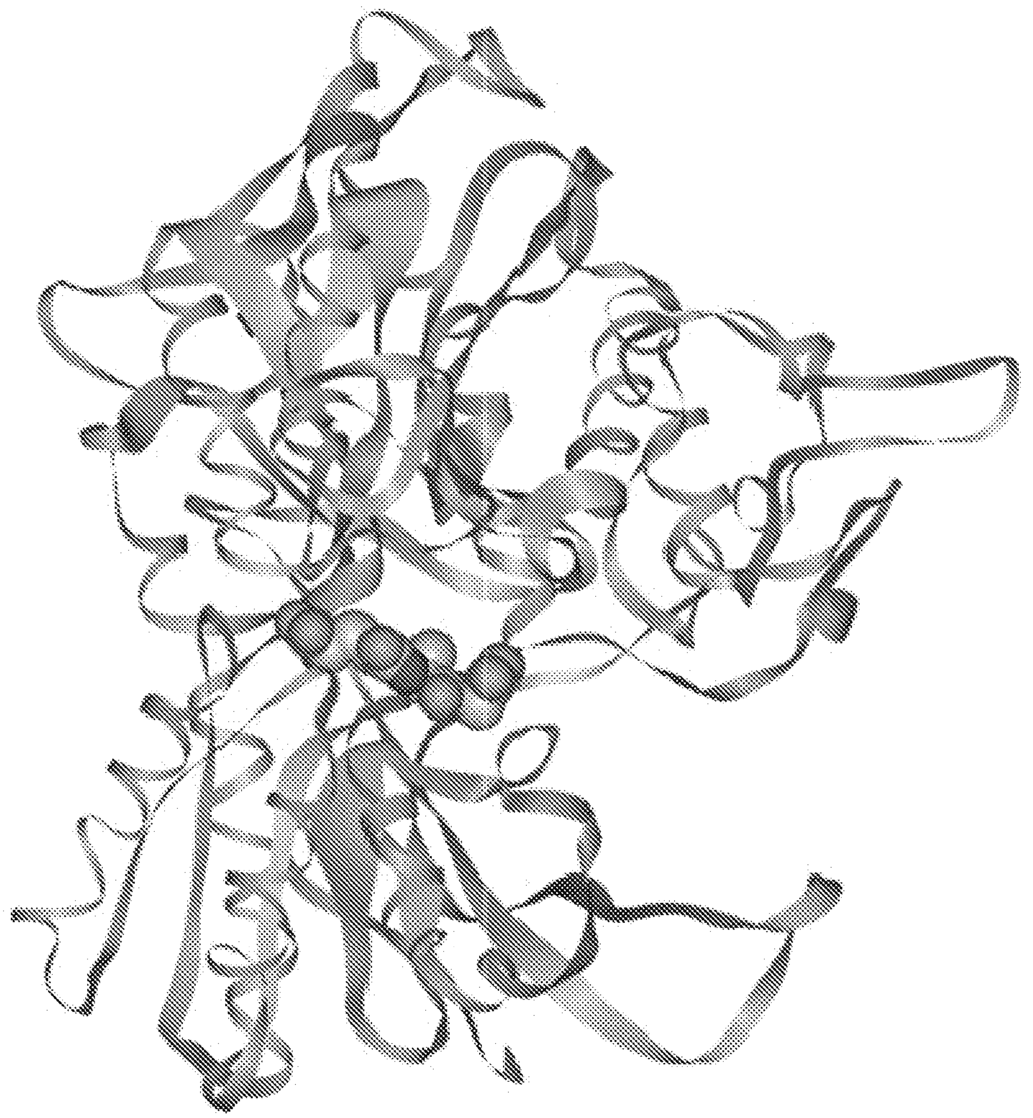

FIG. 6B

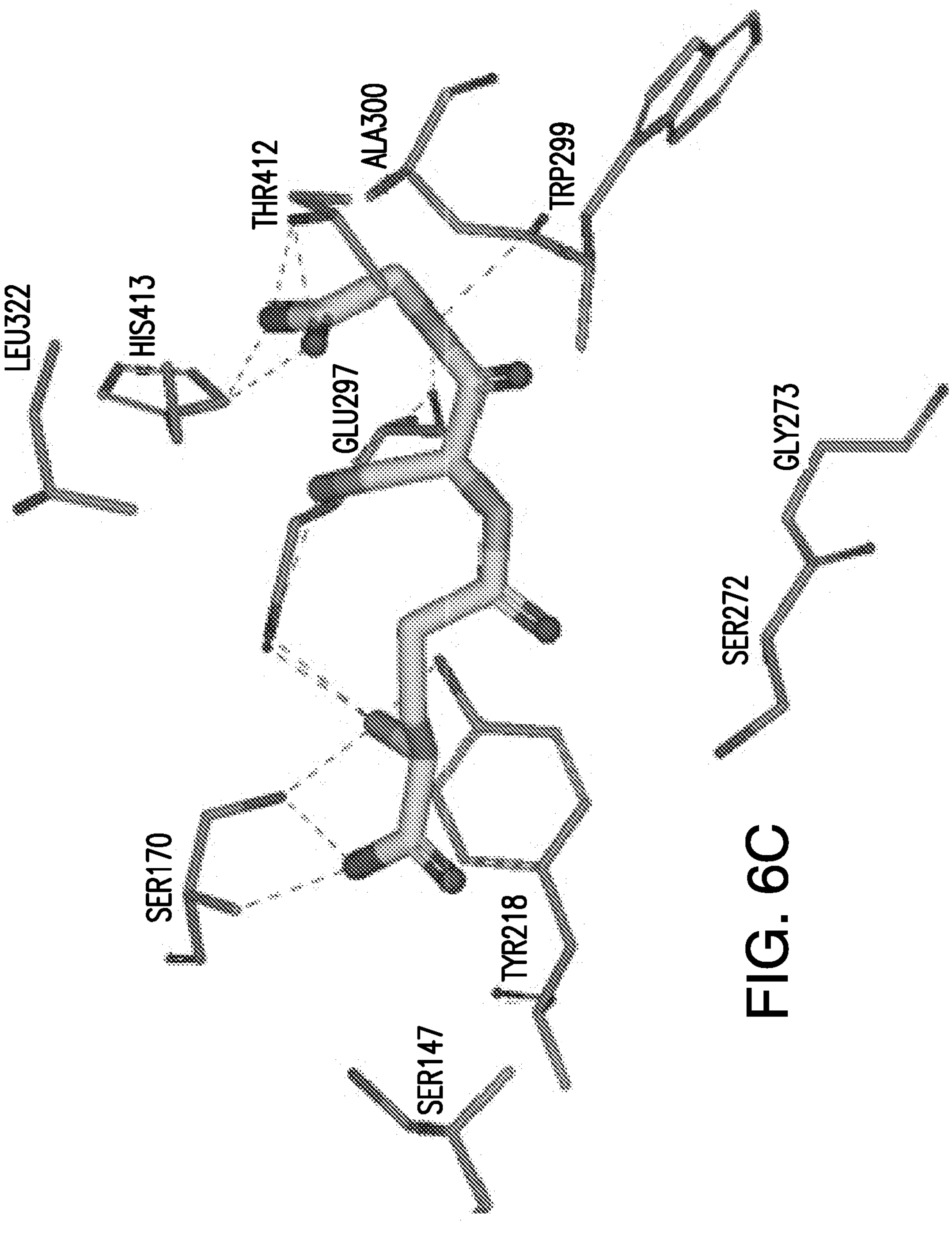
LEU322
HIS413
THR412
ALA300
TRP299
GLU297
GLY273
SER272
SER170
TYR218
SER147

FIG. 6C

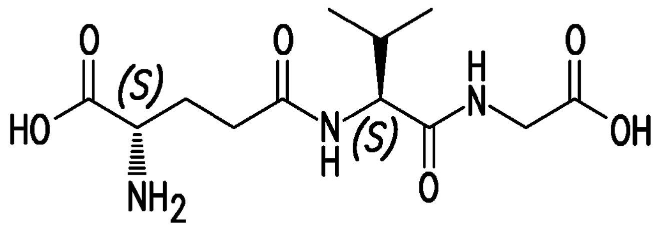

FIG. 7A

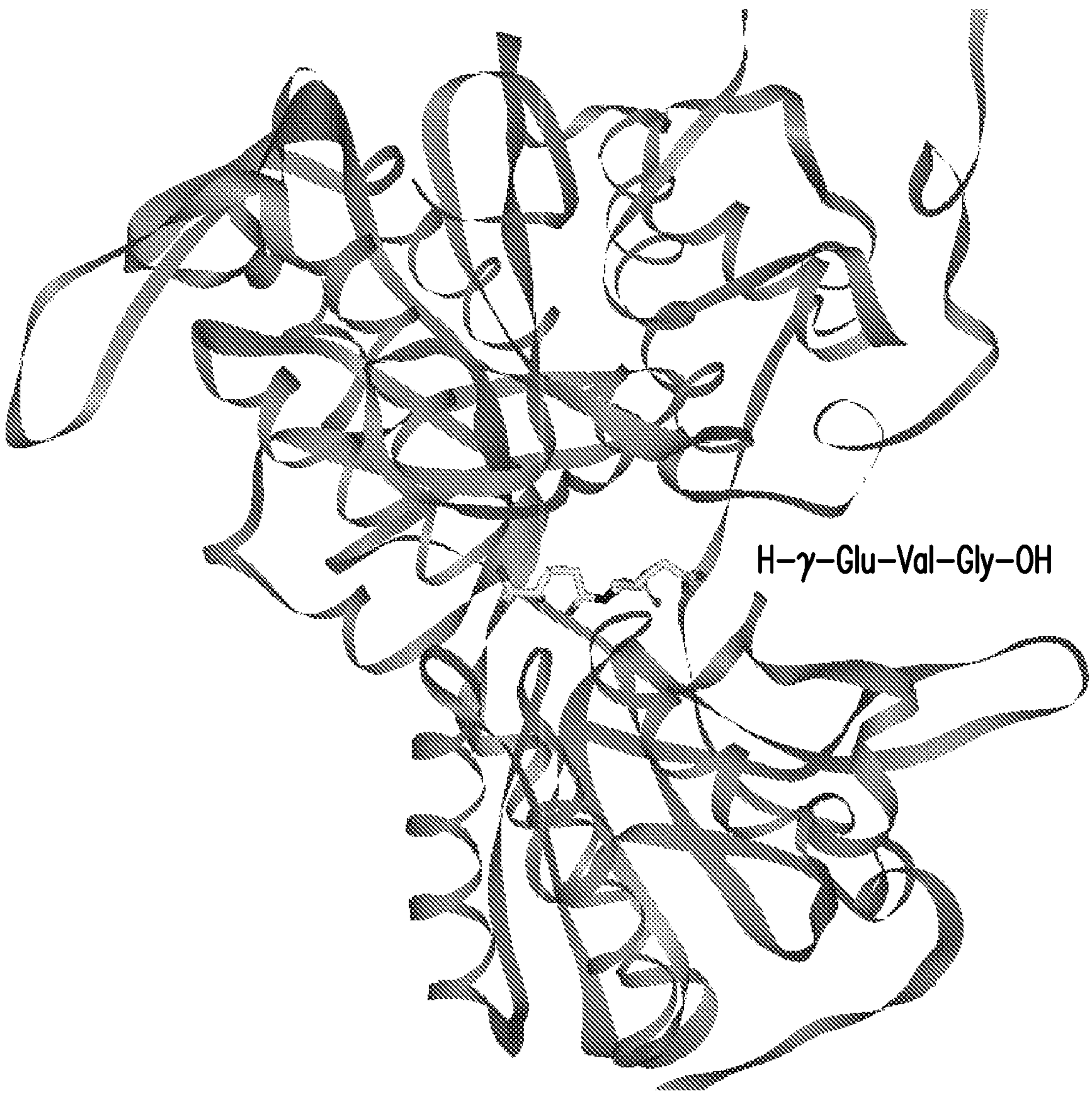


FIG. 7B

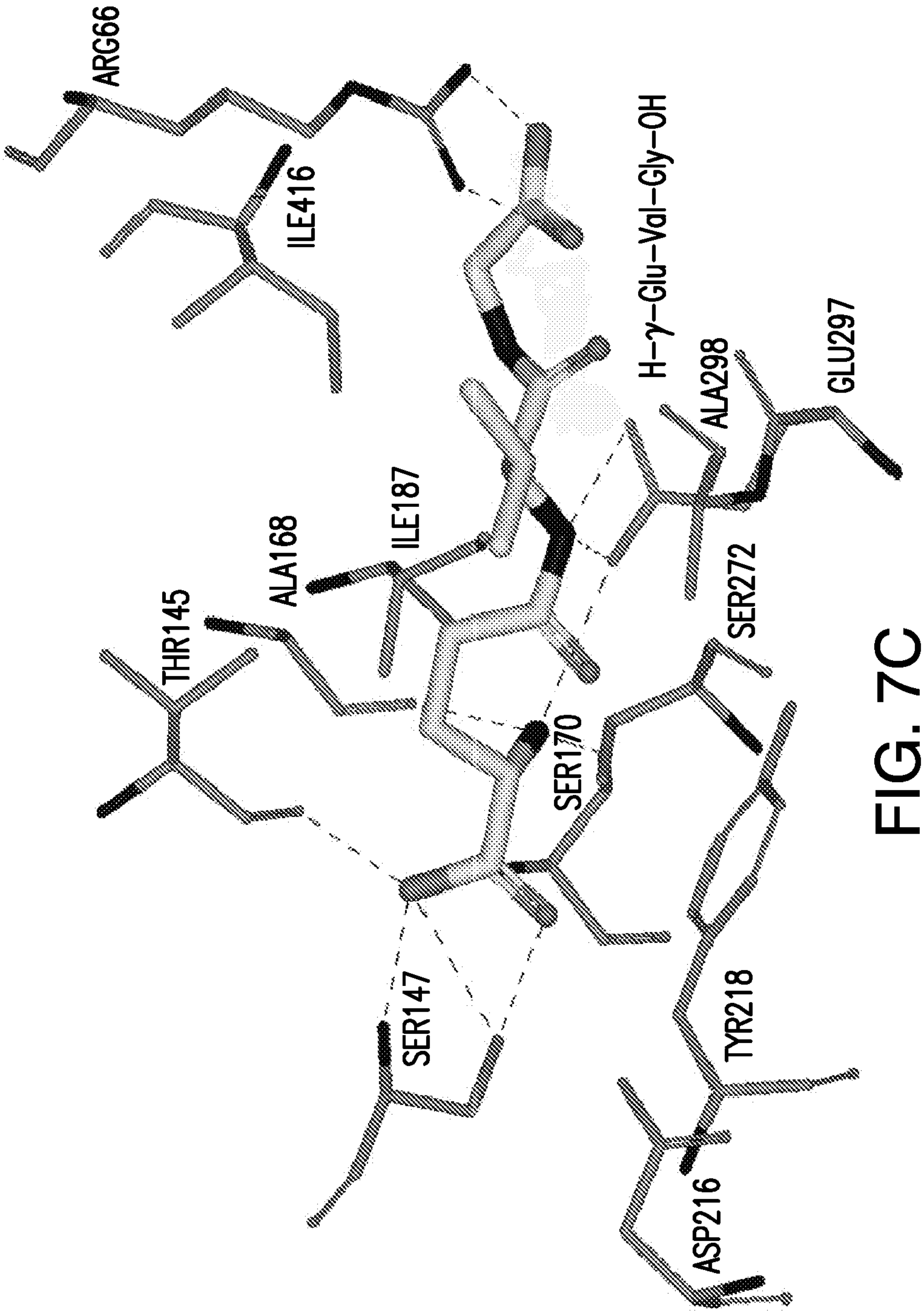
ARG66
ILE416
H-γ-Glu-Val-Gly-OH
ALA298
GLU297
ILE187
ALA168
THR145
SER272
SER170
SER147
TYR218
ASP216

FIG. 7C

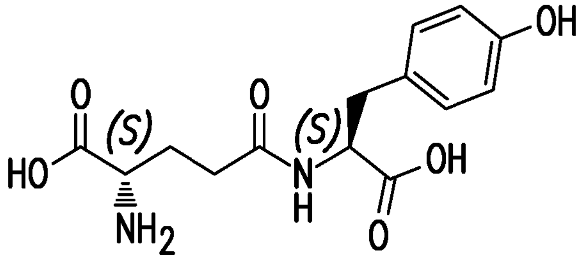

FIG. 8A

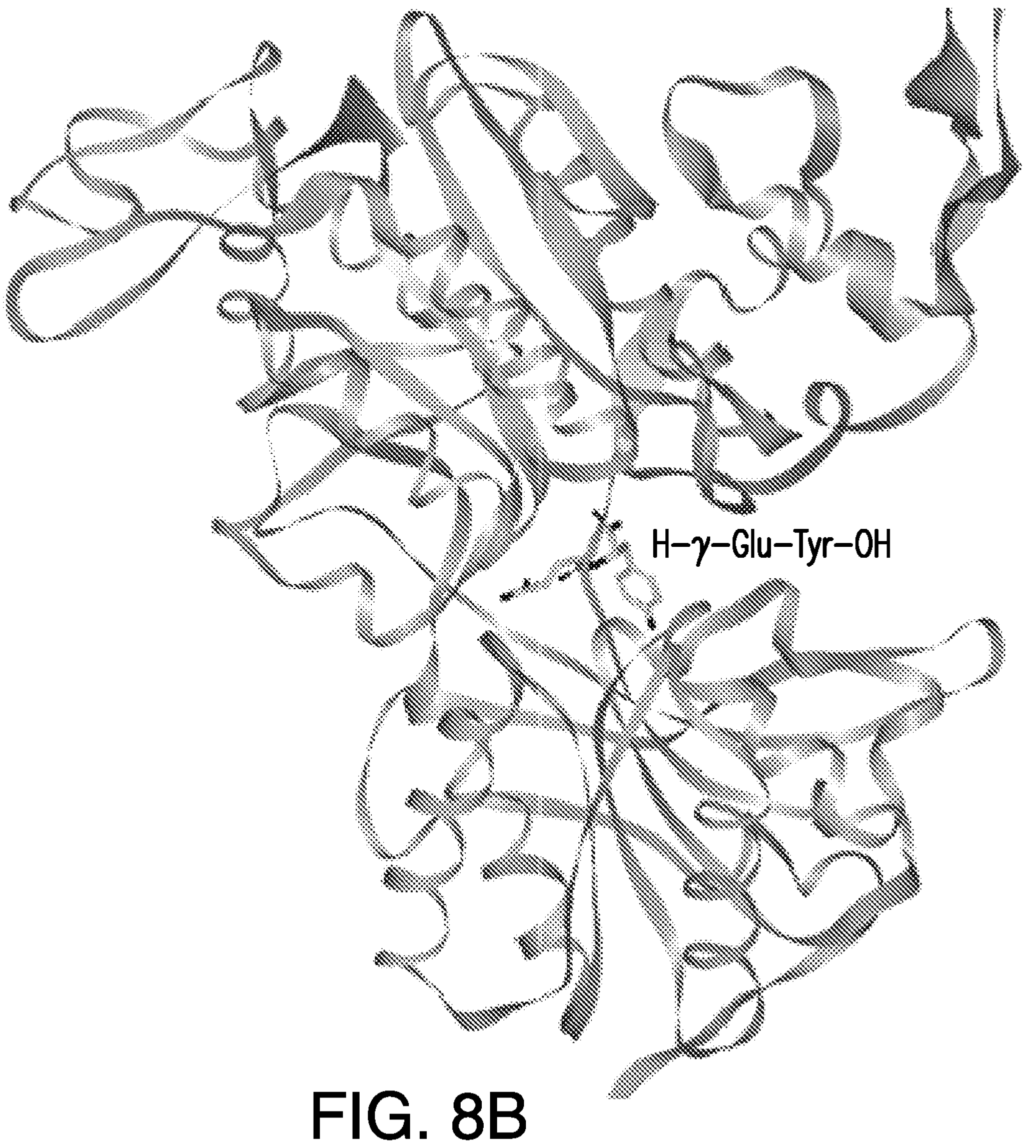


FIG. 8B

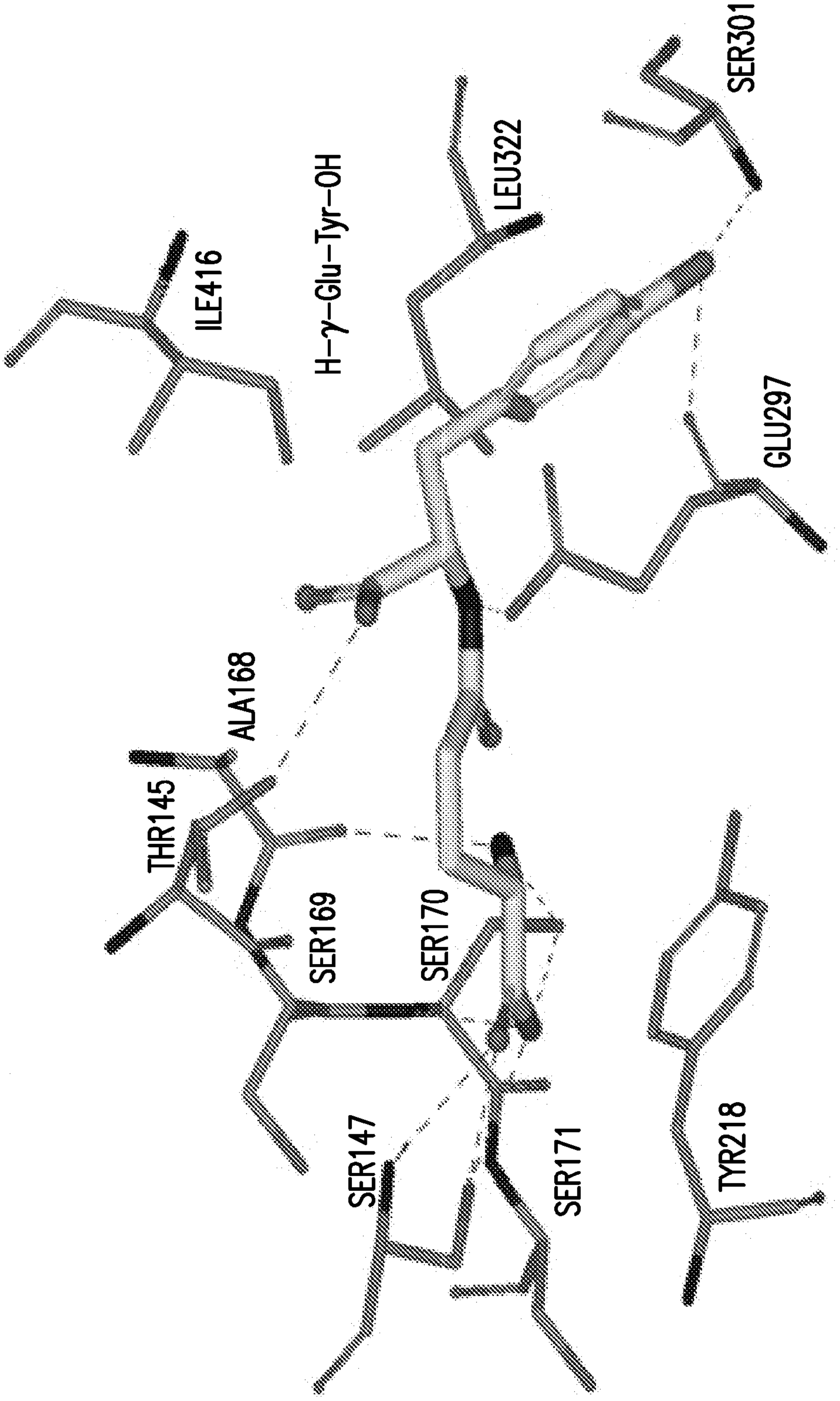
SER301
LEU322
H-γ-Glu-Tyr-OH
ILE416
GLU297
ALA168
THR145
SER169
SER170
SER147
SER171
TYR218

FIG. 8C

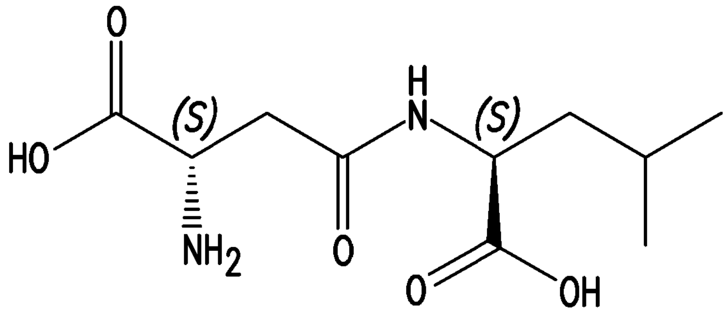

FIG. 9A

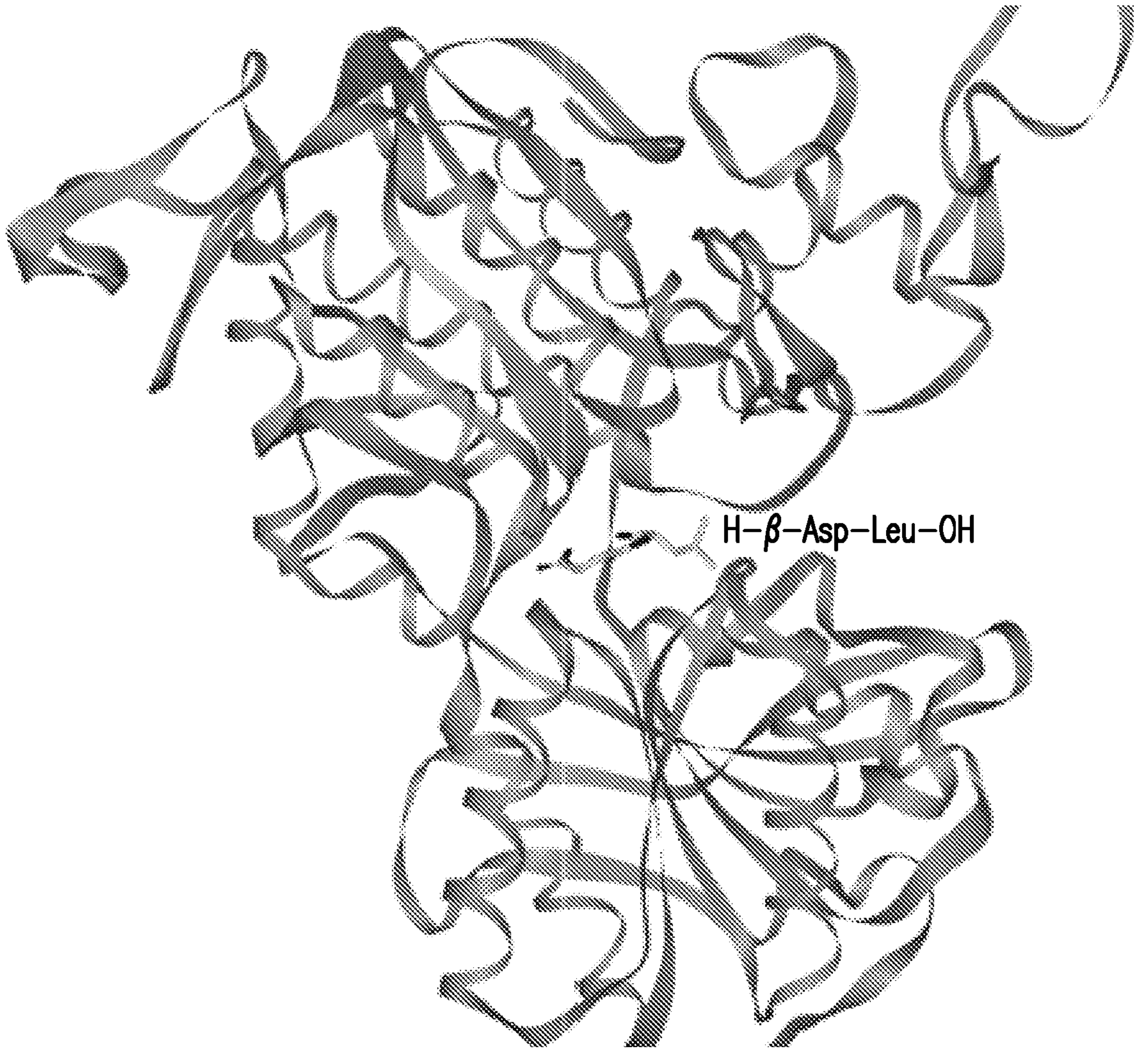


FIG. 9B

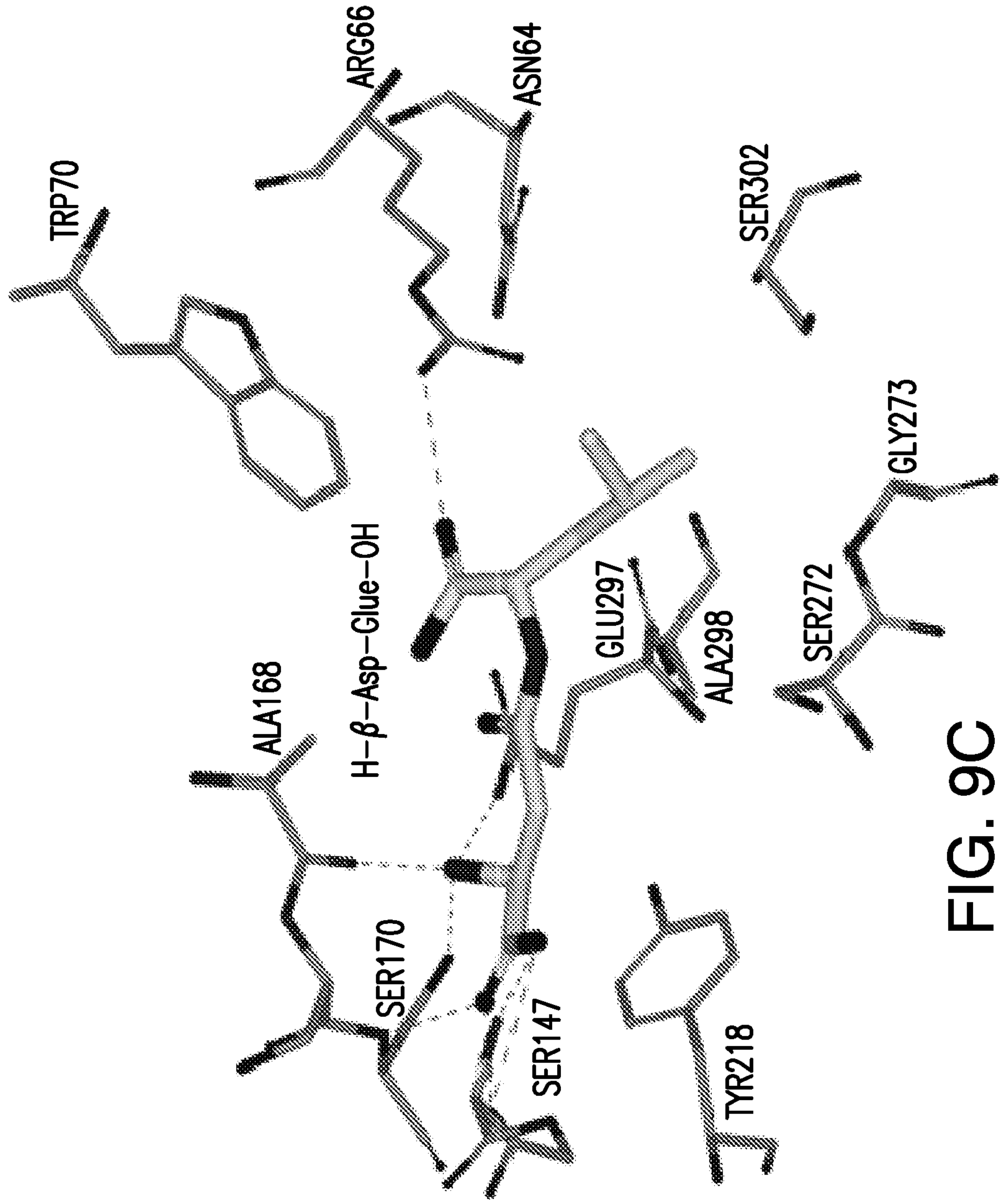
TRP70
ARG66
ASN64
SER302
GLY273
H-β-Asp-Glue-OH
ALA168
GLU297
ALA298
SER272
SER170
SER147
TYR218

FIG. 9C

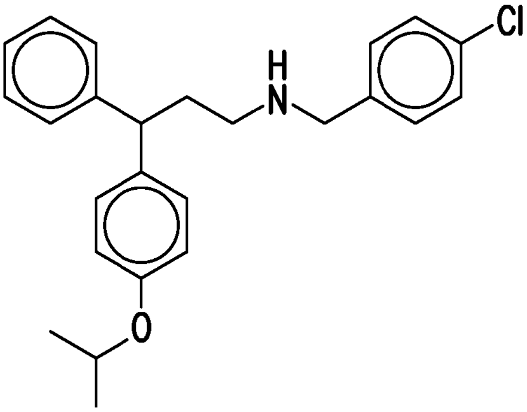

FIG. 10A

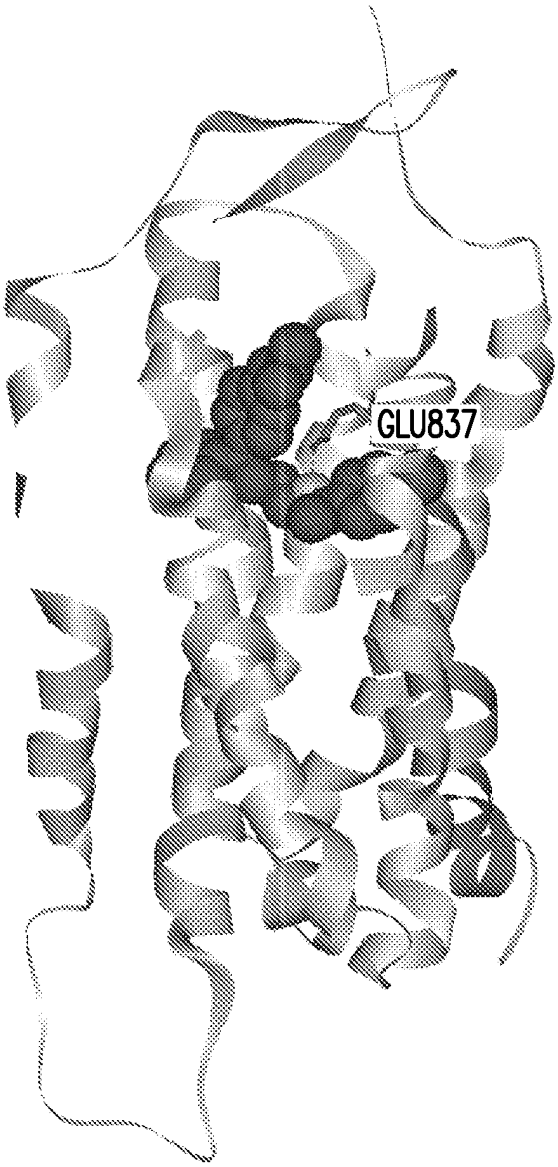


FIG. 10B

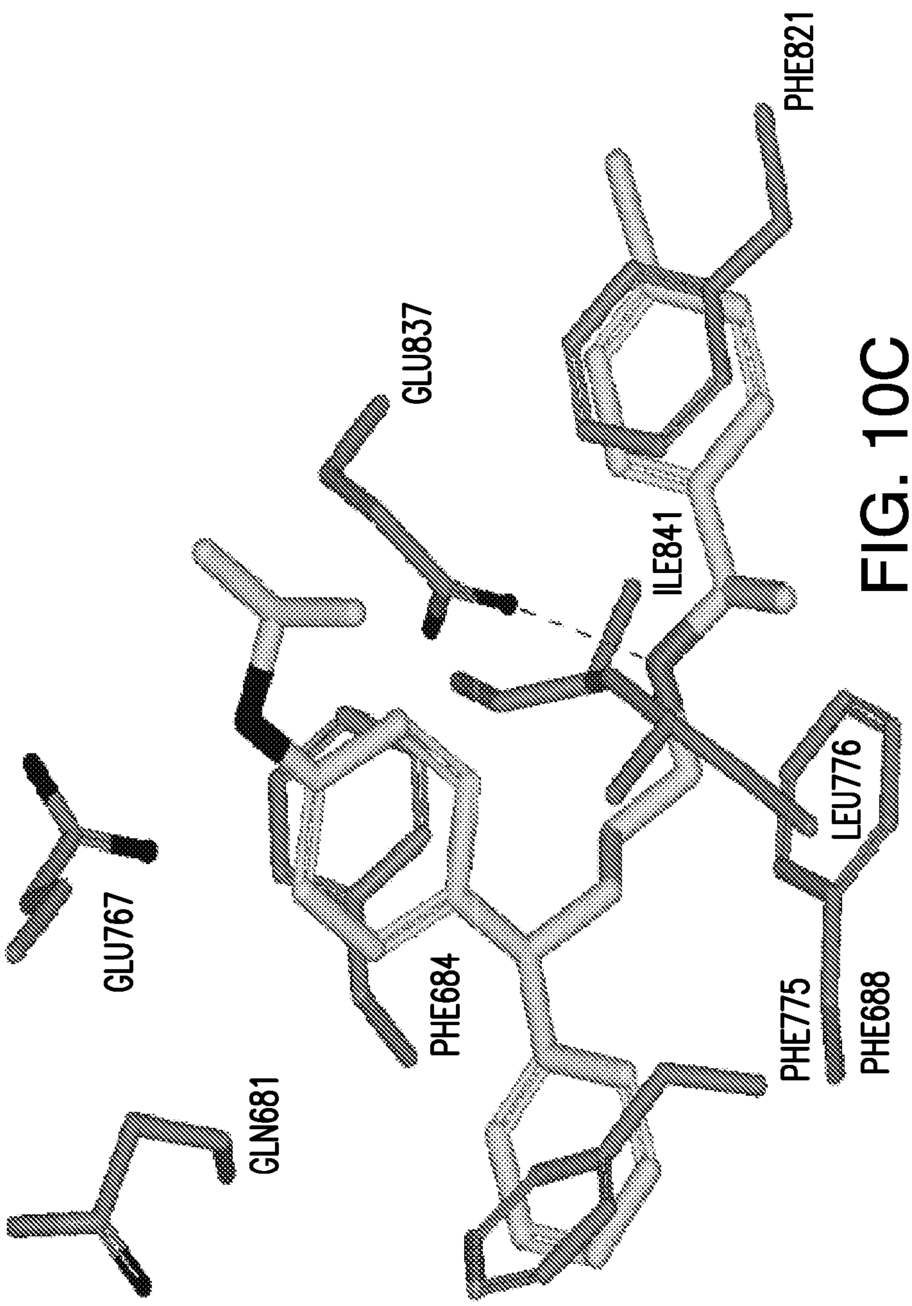
PHE821
GLU837
ILE841
LEU776
GLU767
PHE684
PHE775
PHE688
GLN681

FIG. 10C

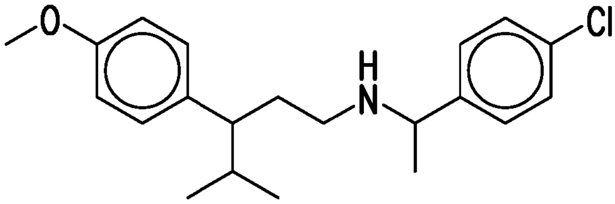

FIG. 11A

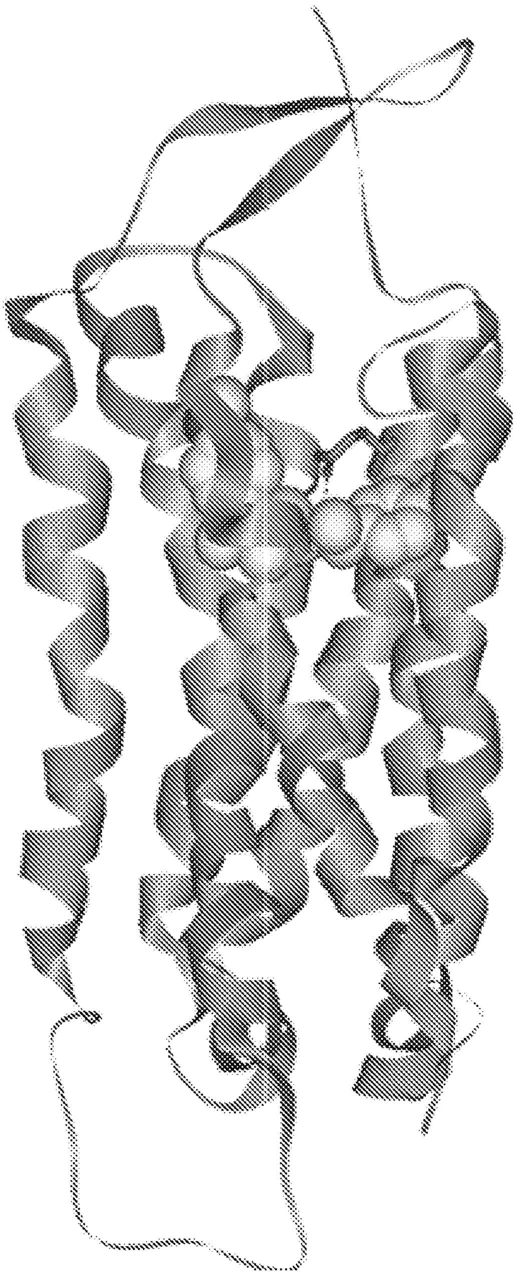

FIG. 11B

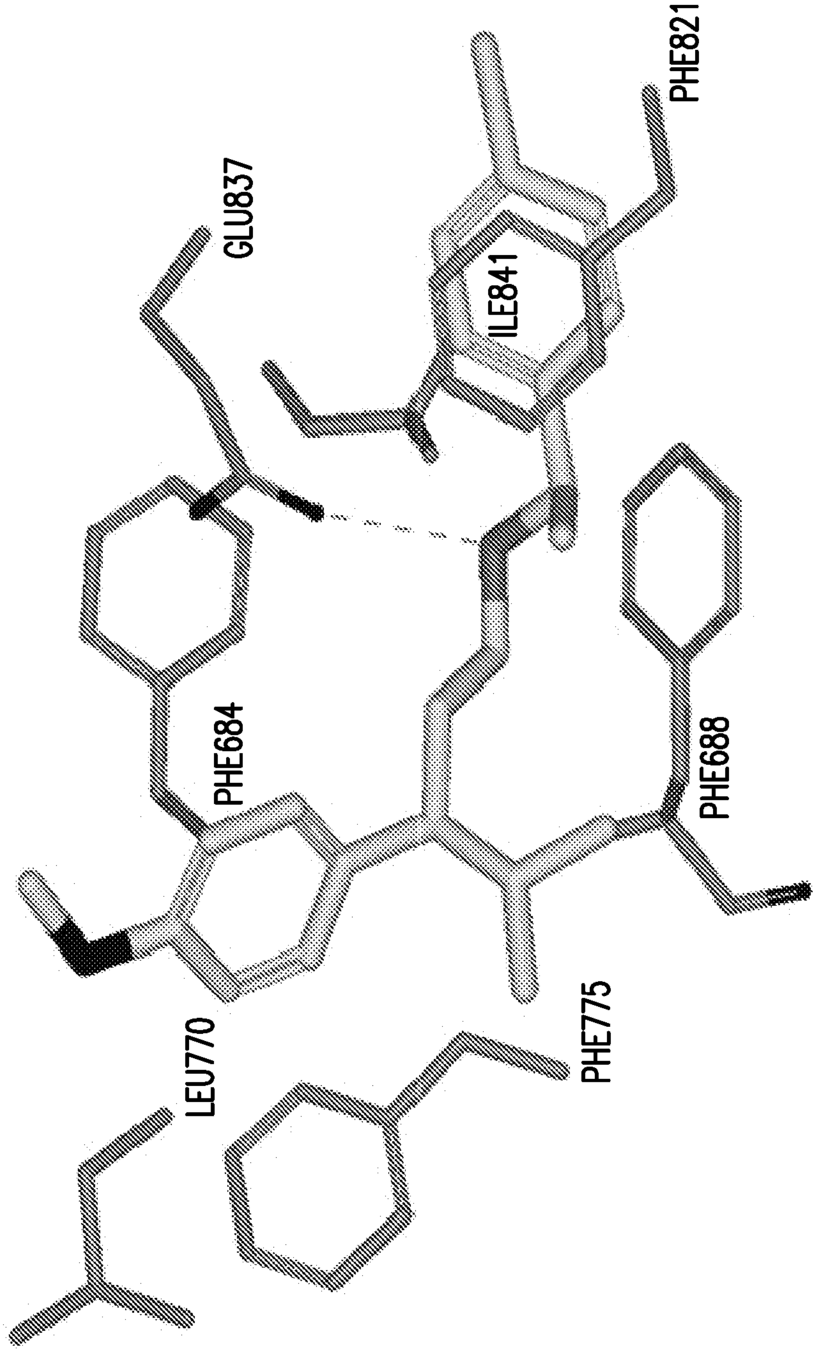


FIG. 11C

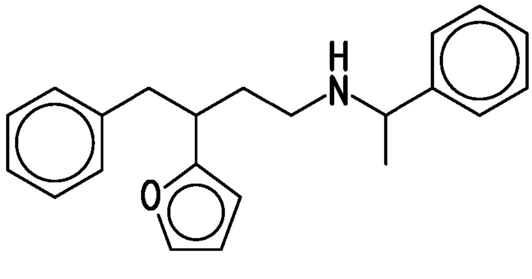

FIG. 12A

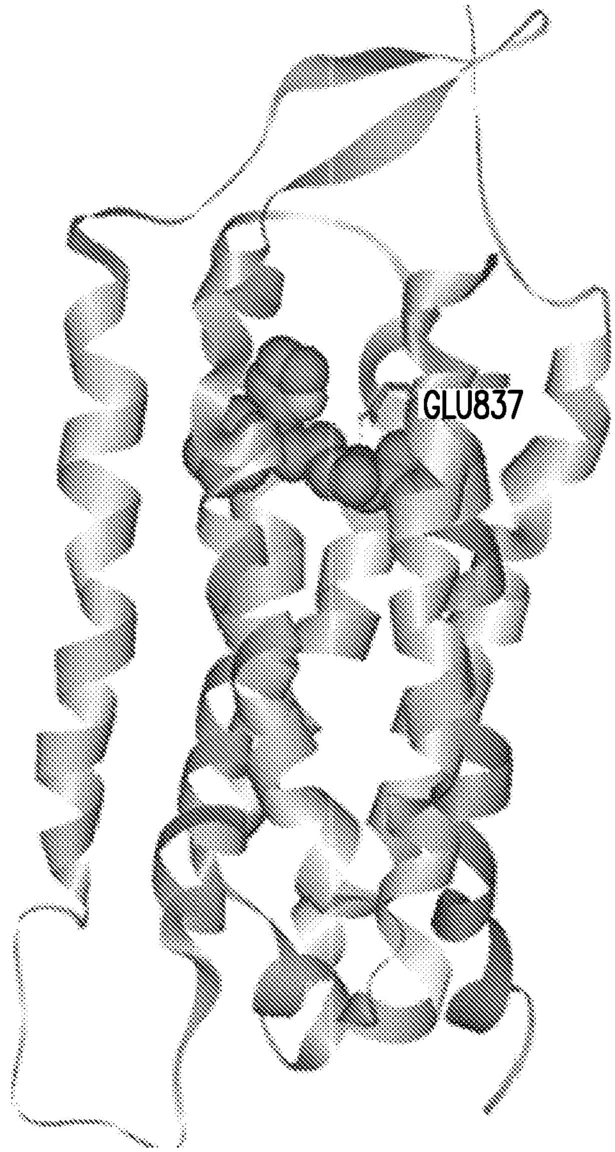


FIG. 12B

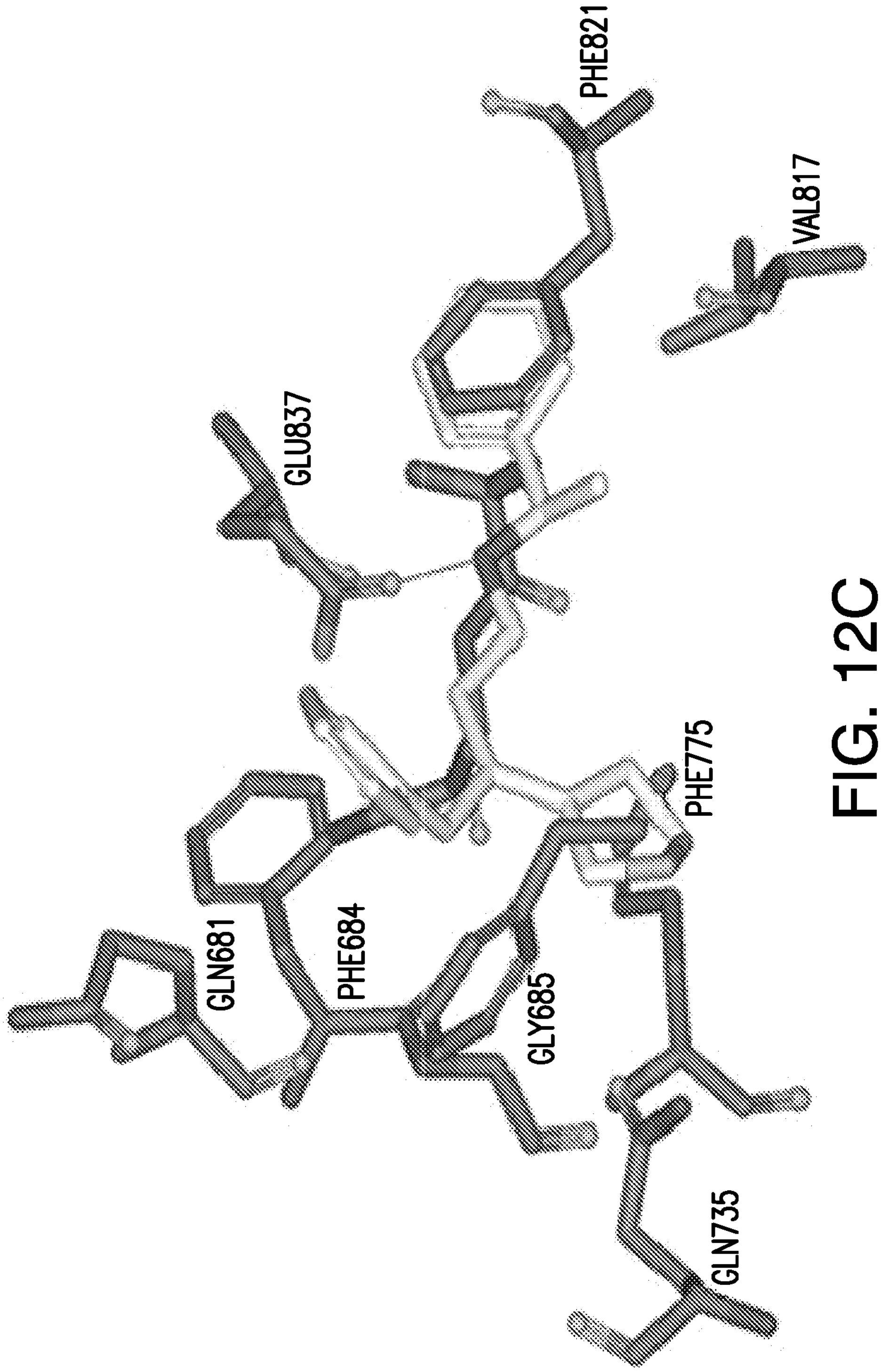


FIG. 12C

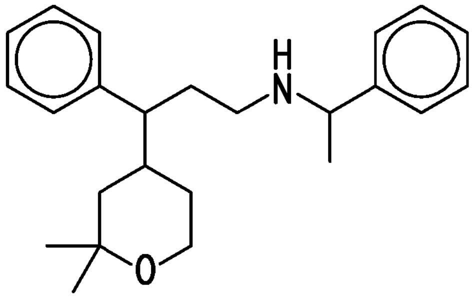

FIG. 13A

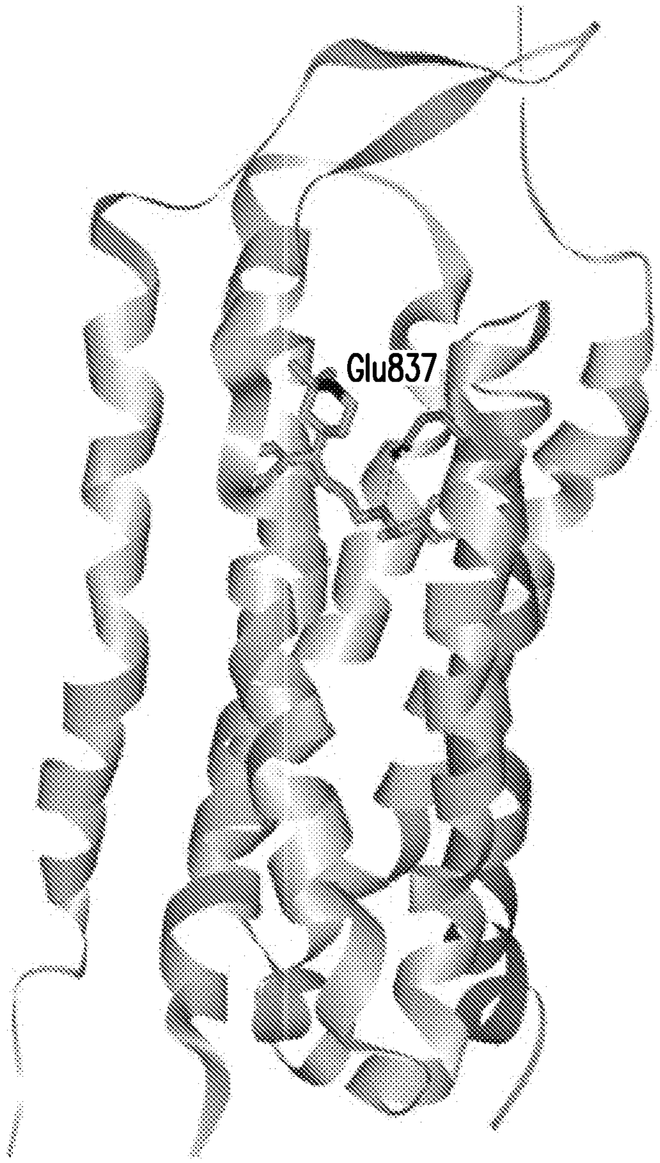


FIG. 13B

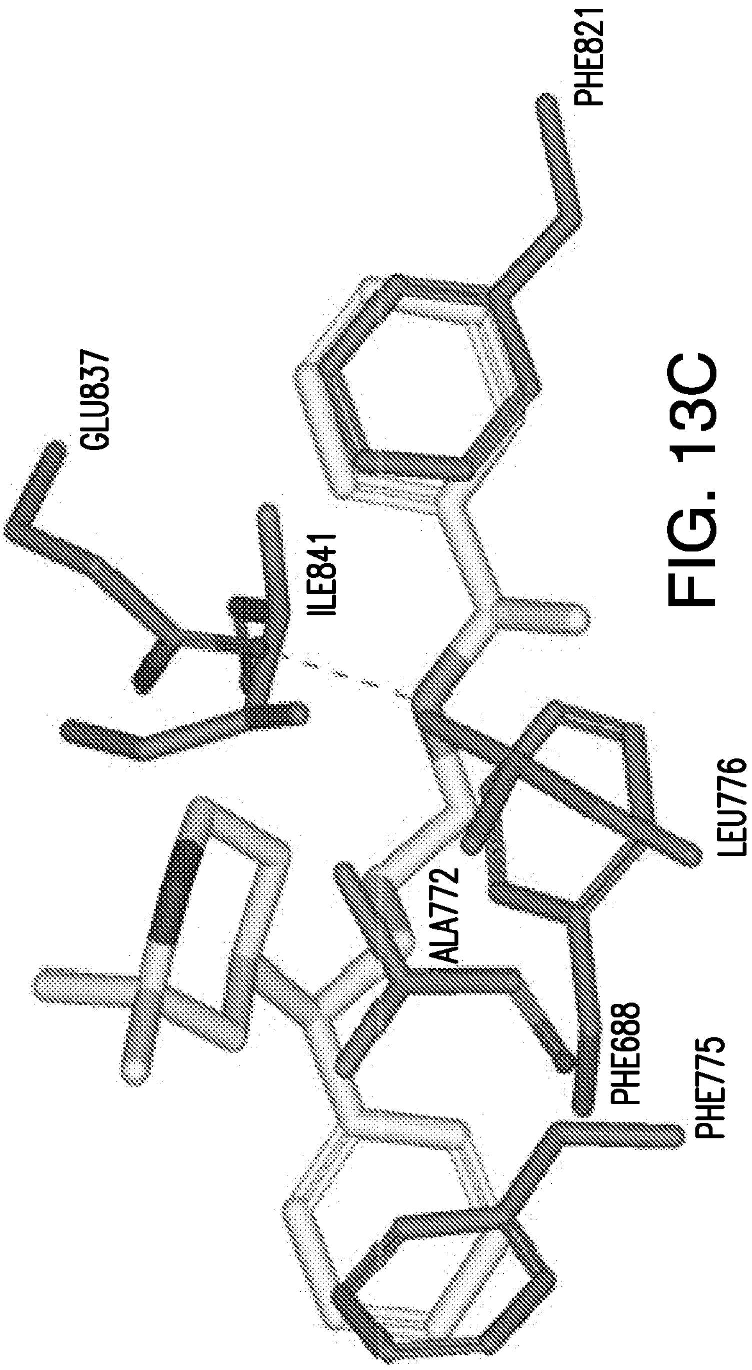


FIG. 13C

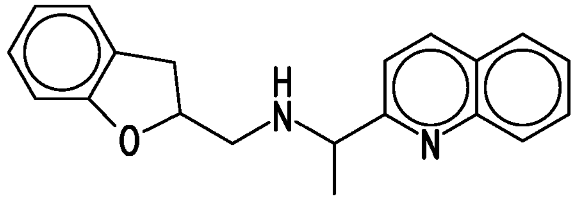

FIG. 14A

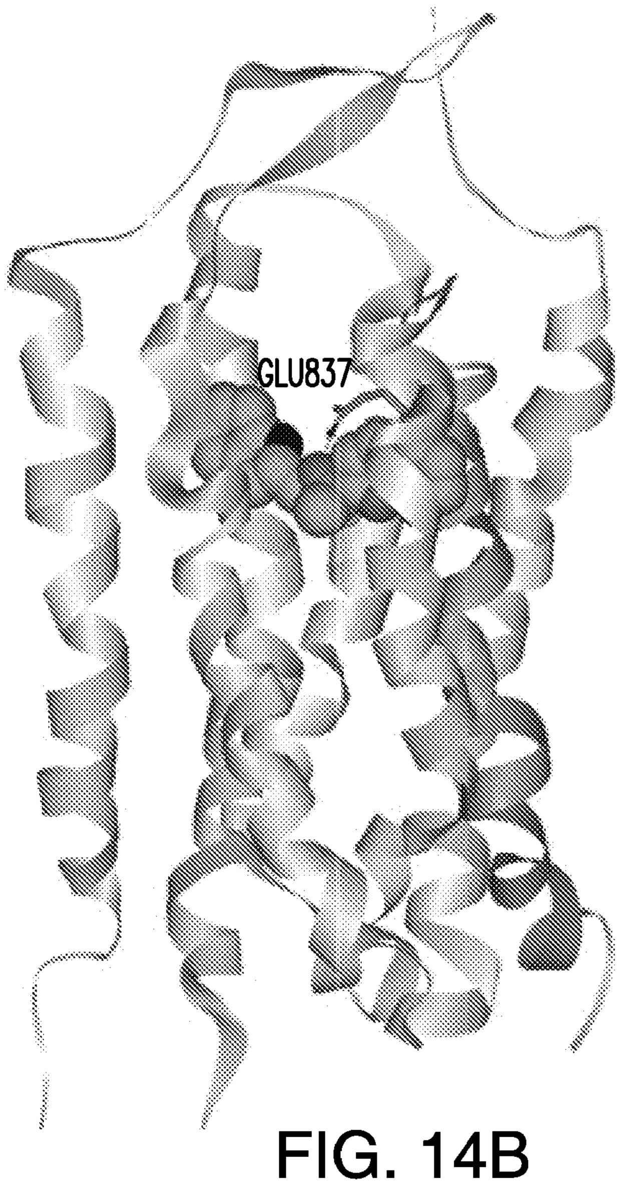


FIG. 14B

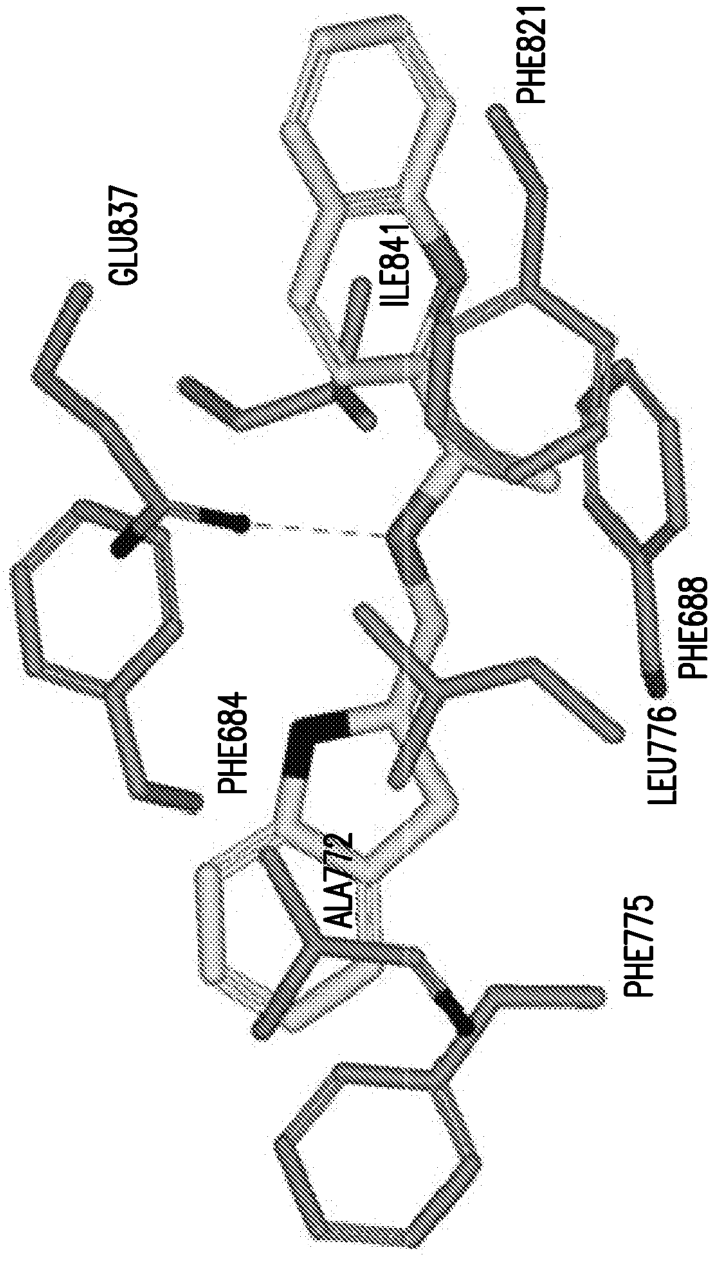


FIG. 14C

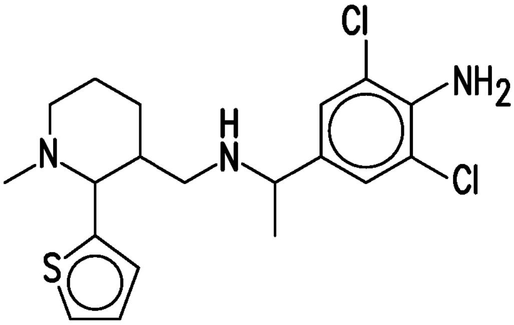

FIG. 15A

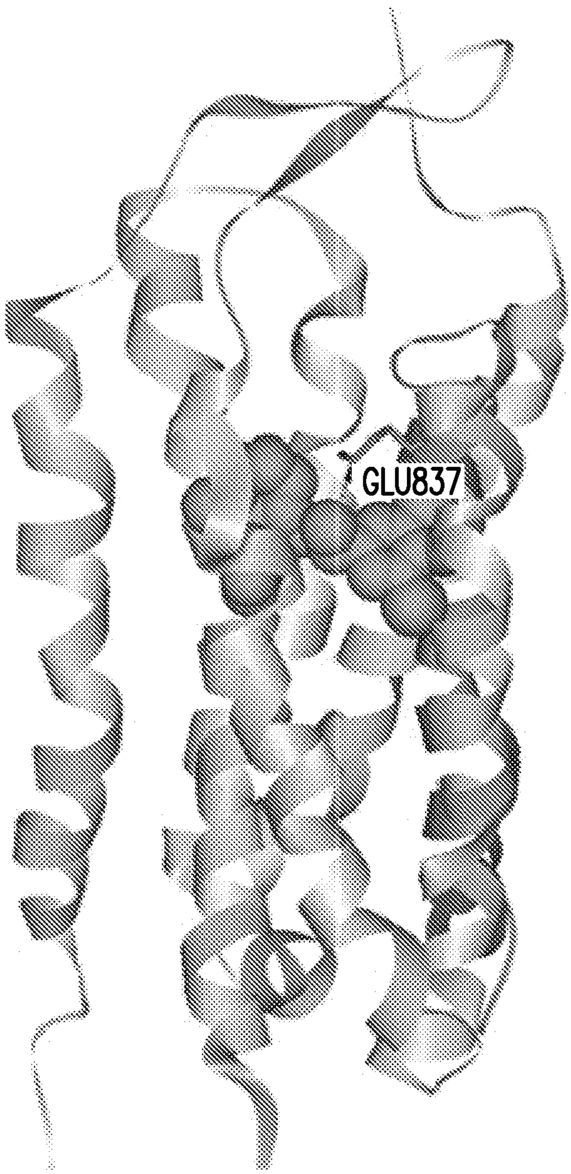


FIG. 15B

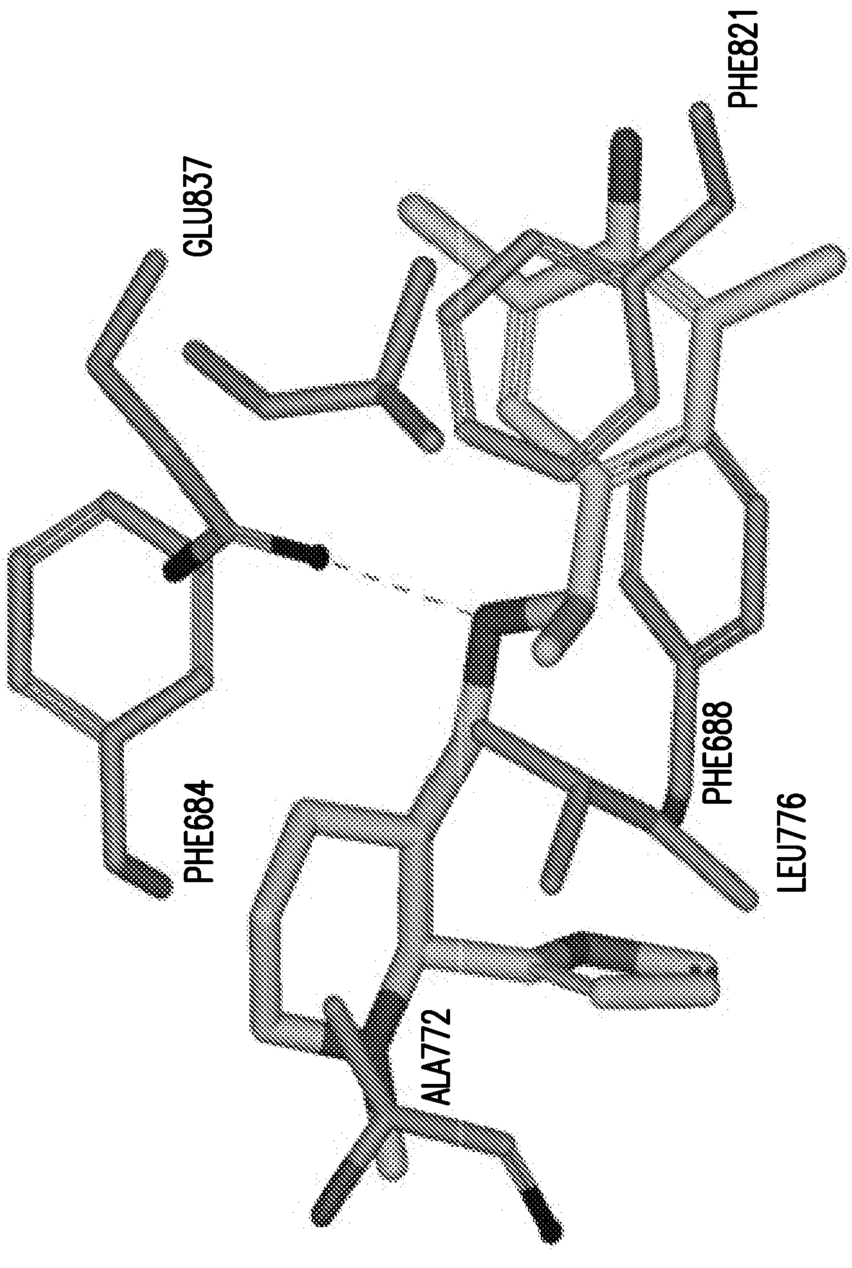


FIG. 15C

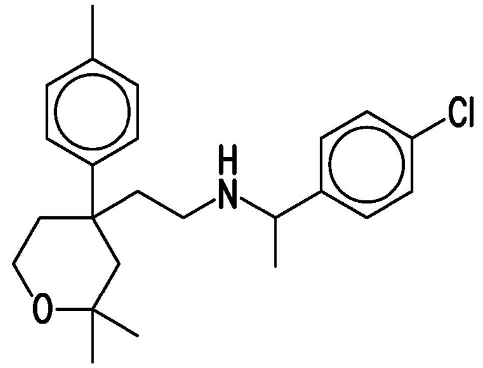

FIG. 16A

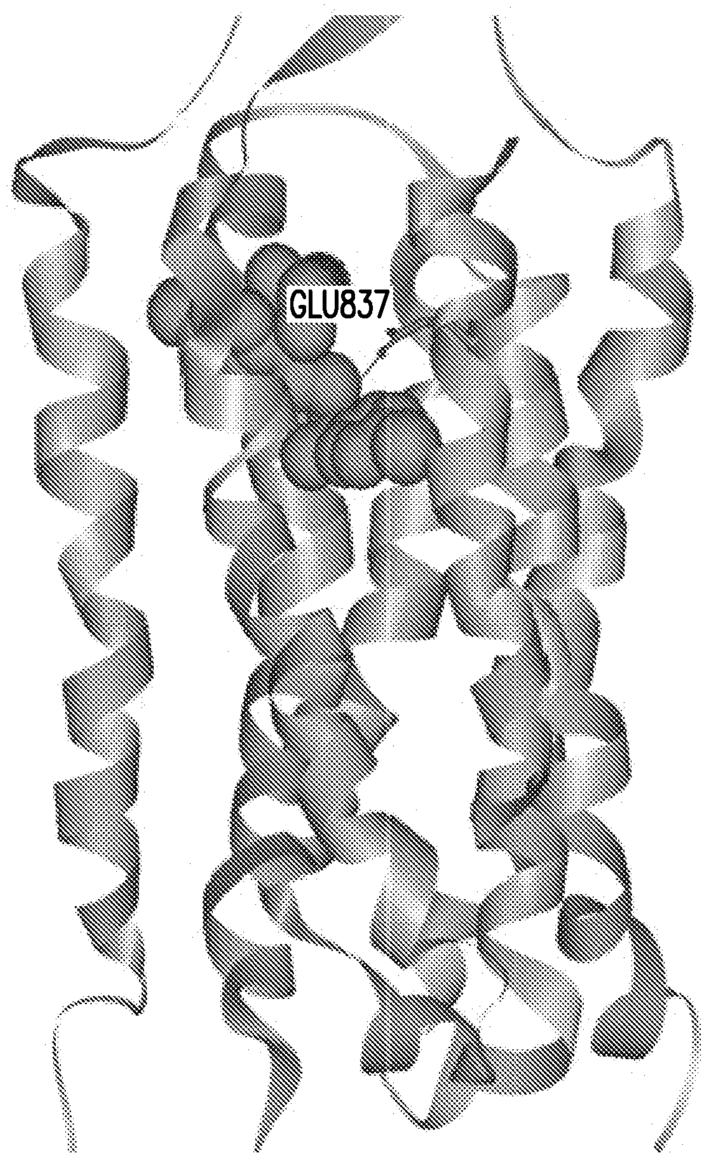


FIG. 16B

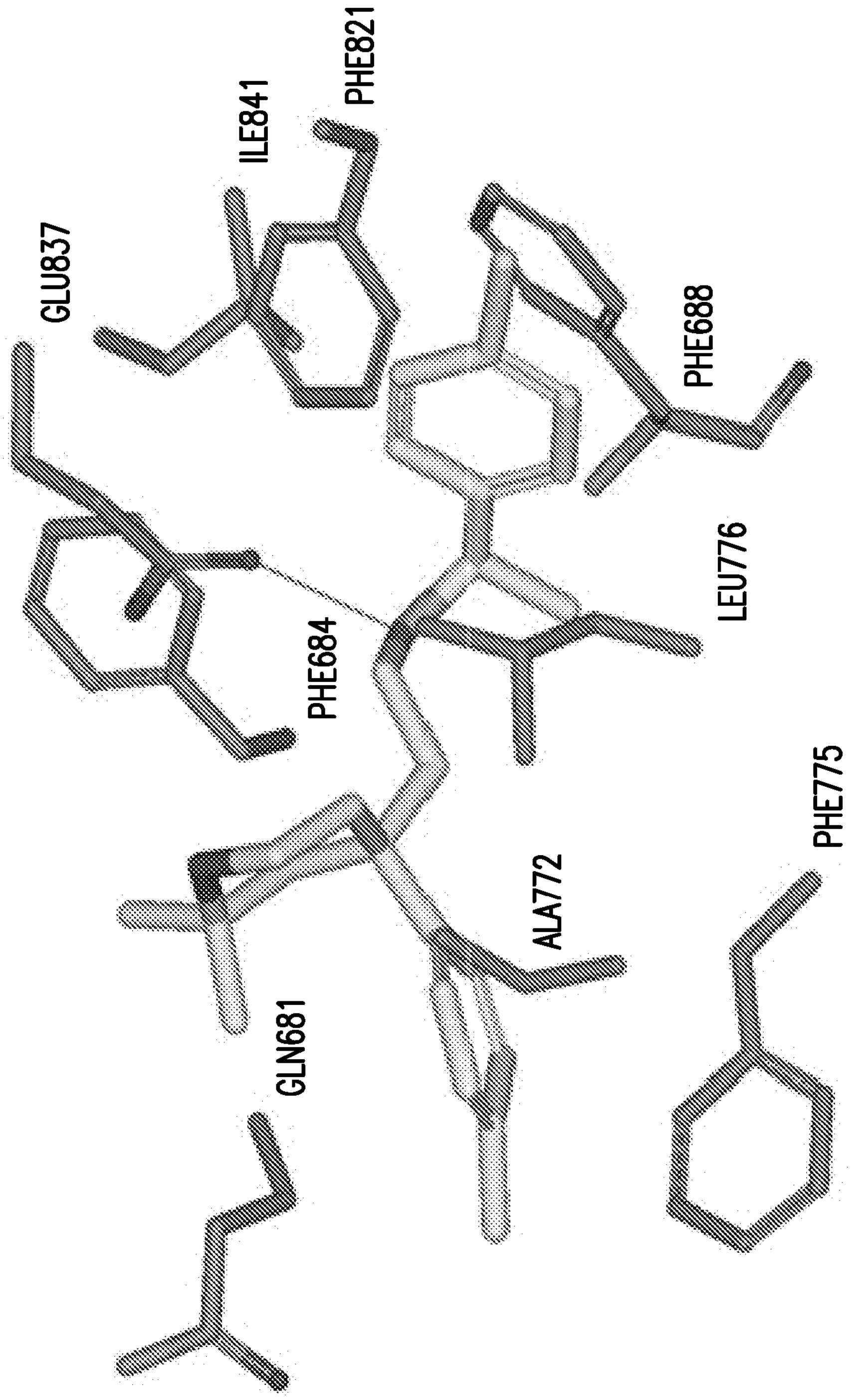
GLU837
ILE841
PHE821
PHE688
PHE684
LEU776
GLN681
ALA772
PHE775

FIG. 16C

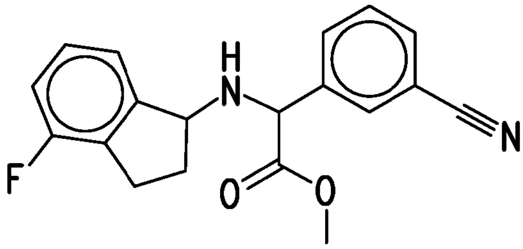

FIG. 17A

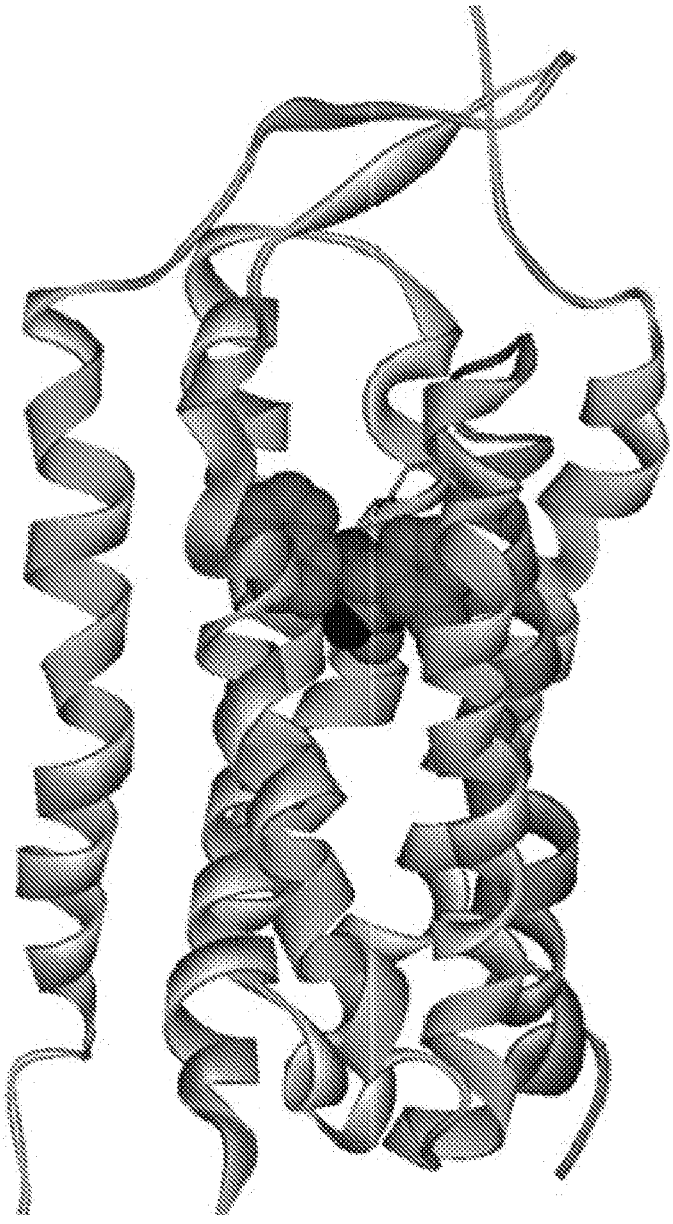

FIG. 17B

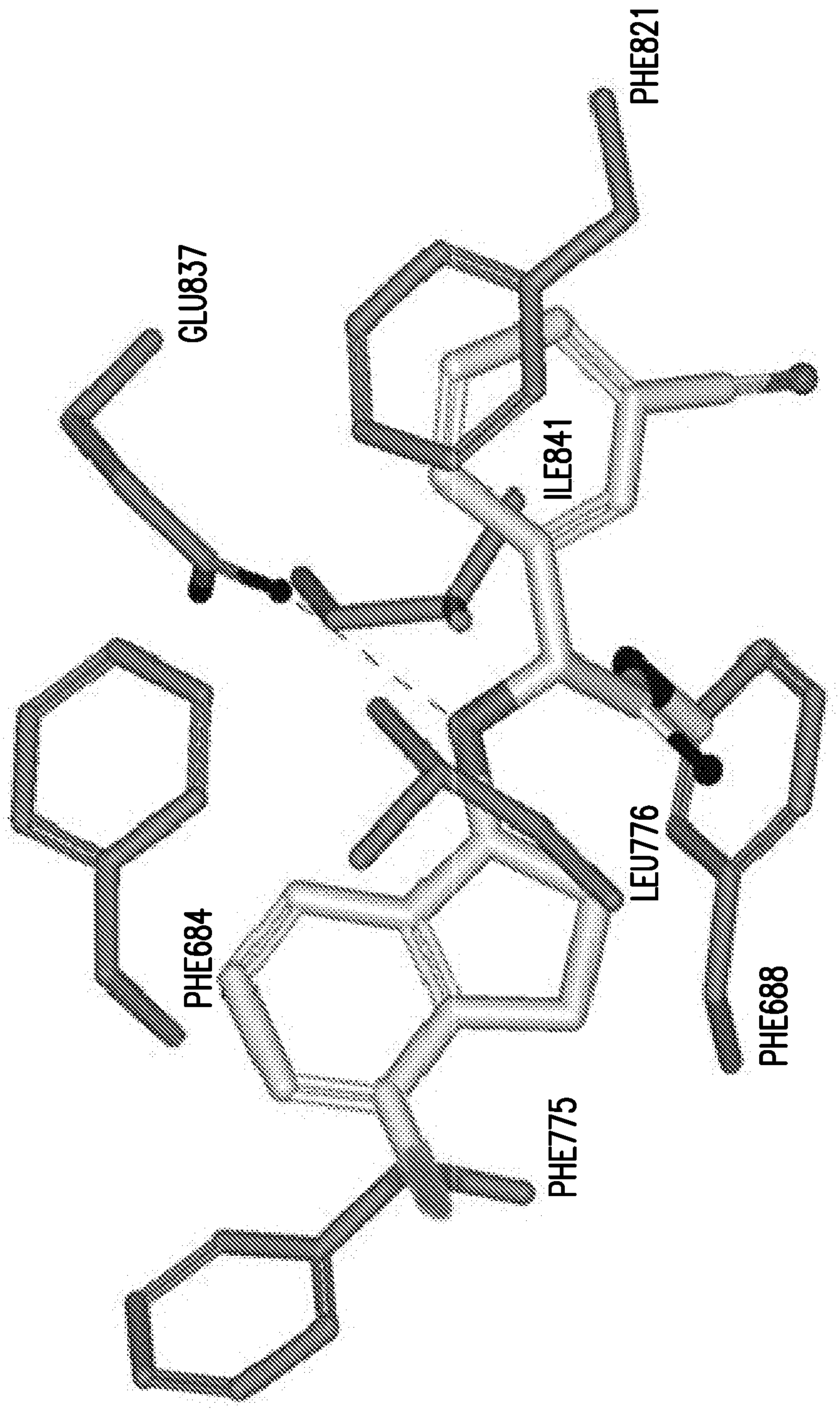


FIG. 17C

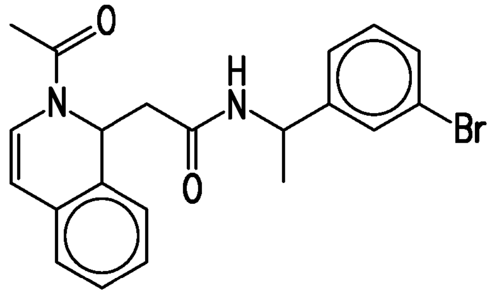

FIG. 18A

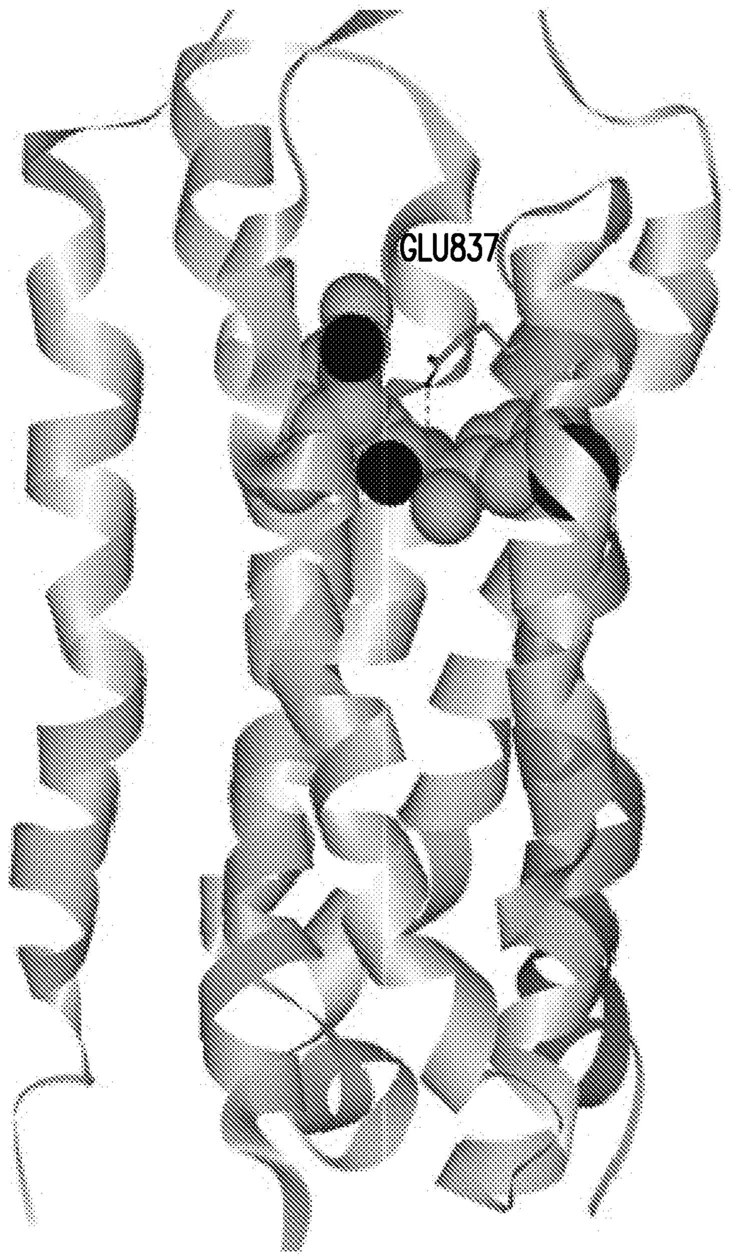


FIG. 18B

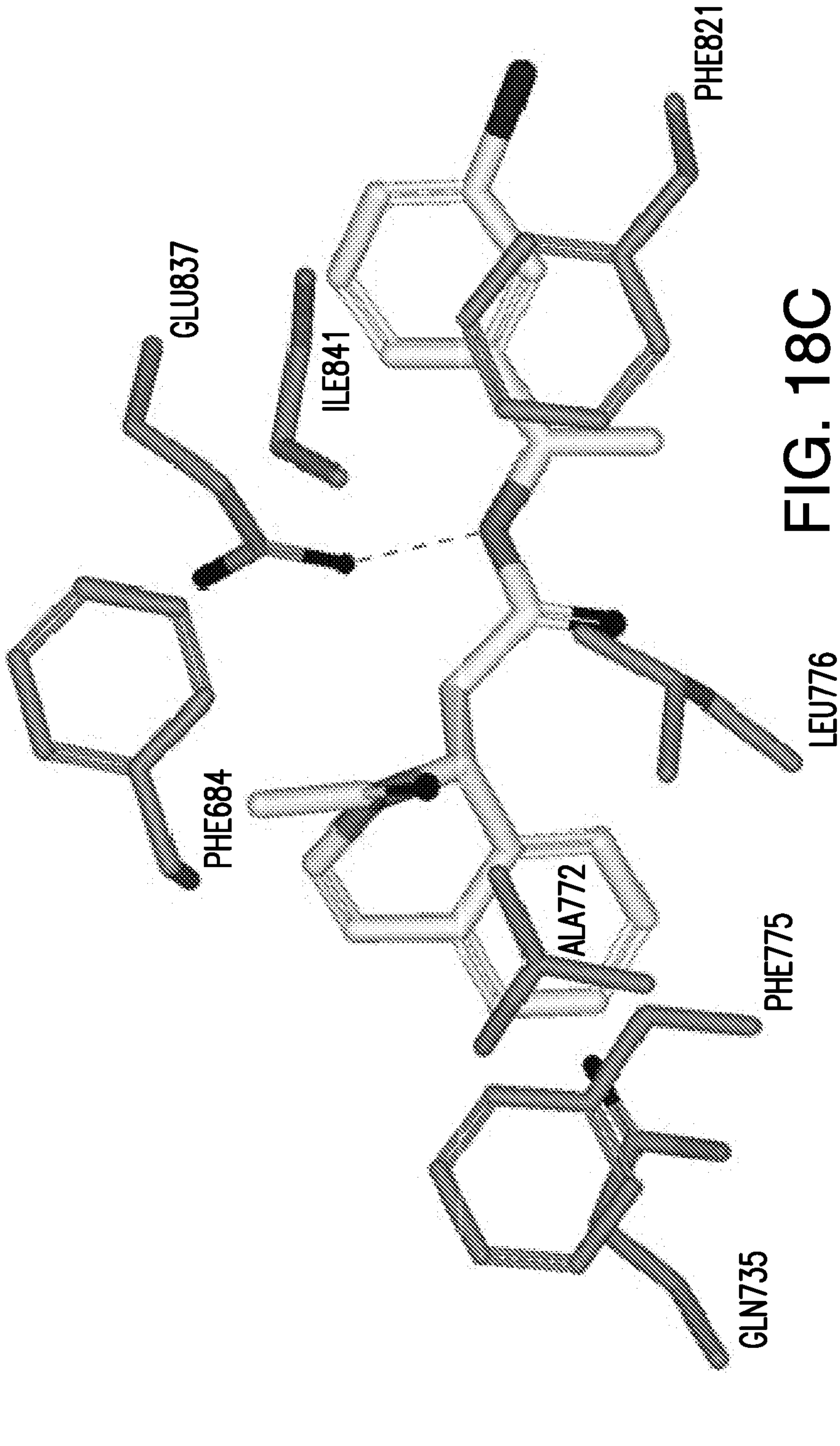


FIG. 18C

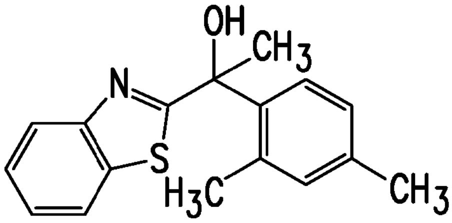

FIG. 19A

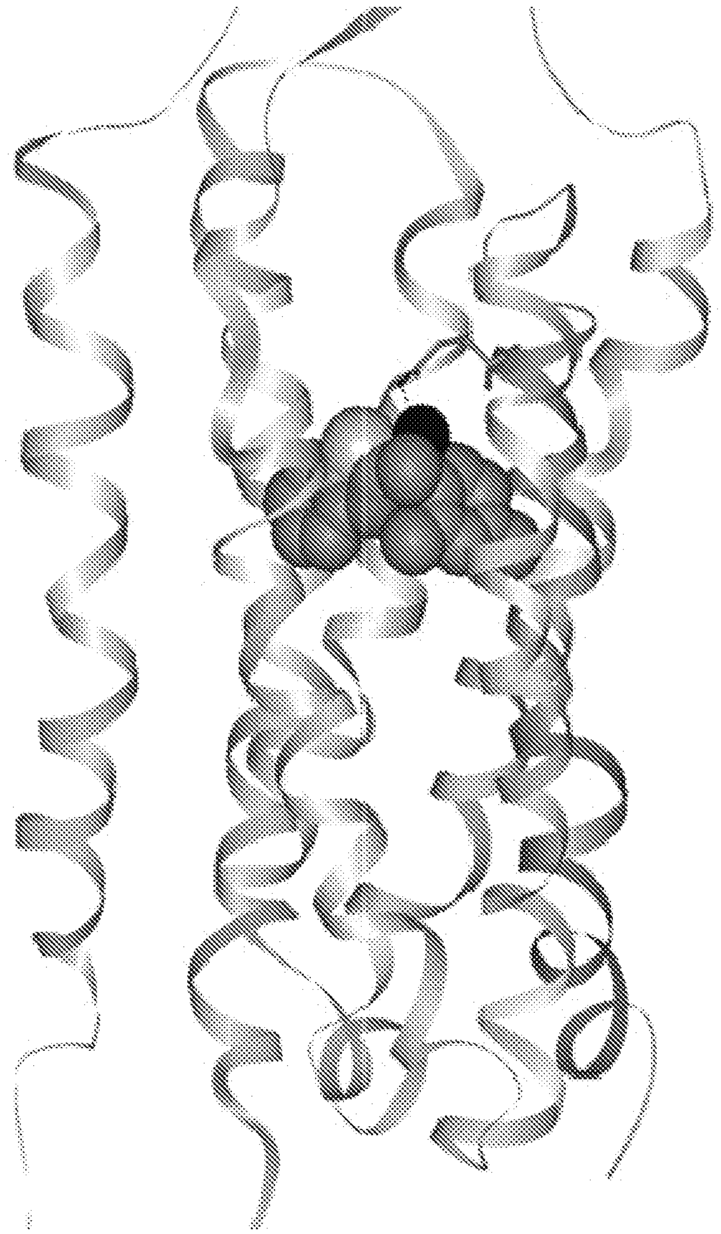

FIG. 19B

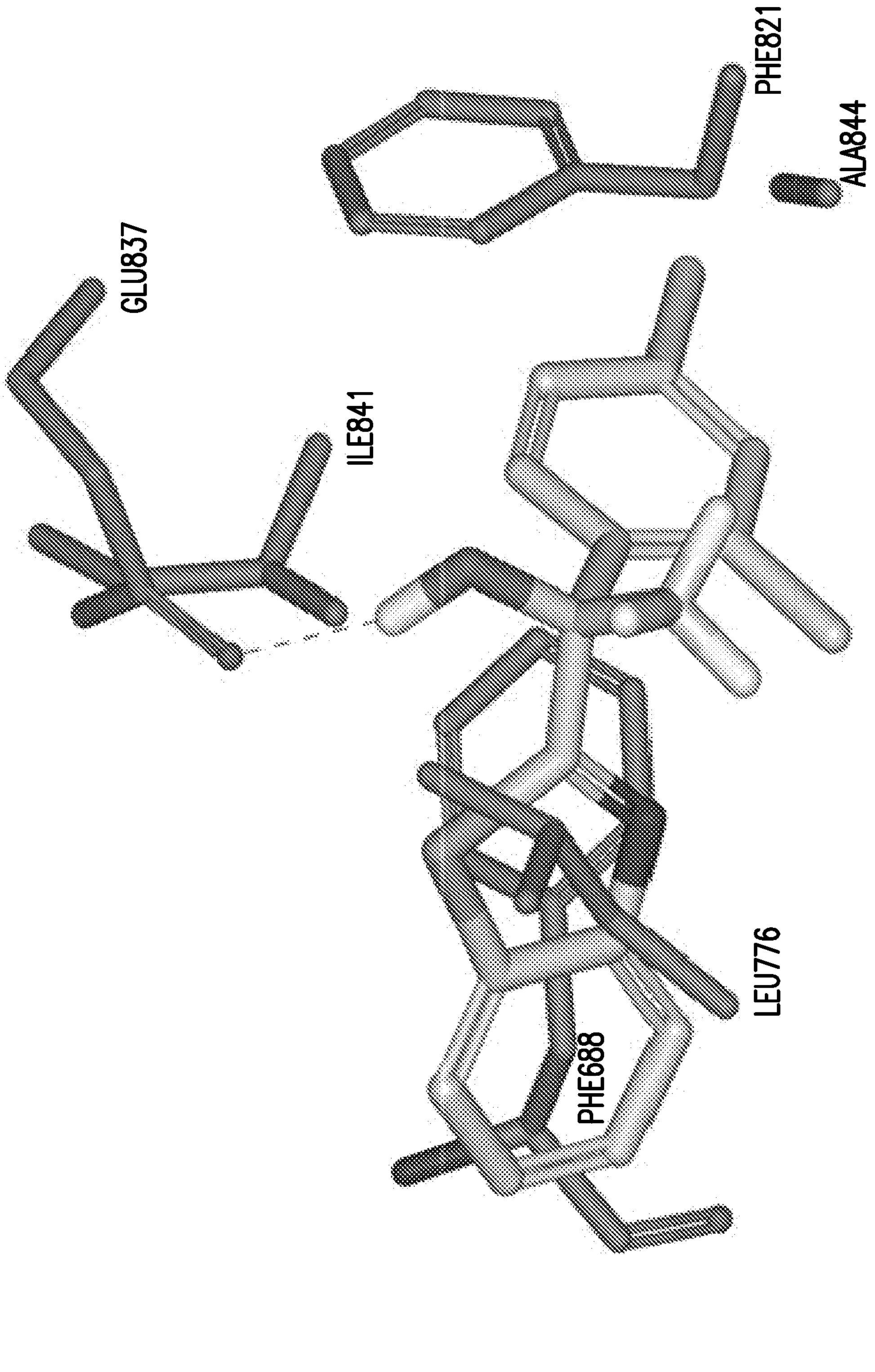


FIG. 19C

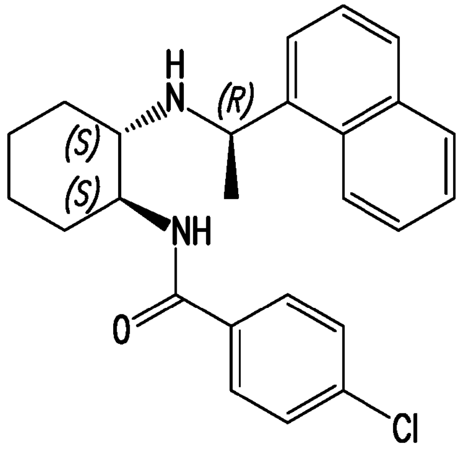

FIG. 20A

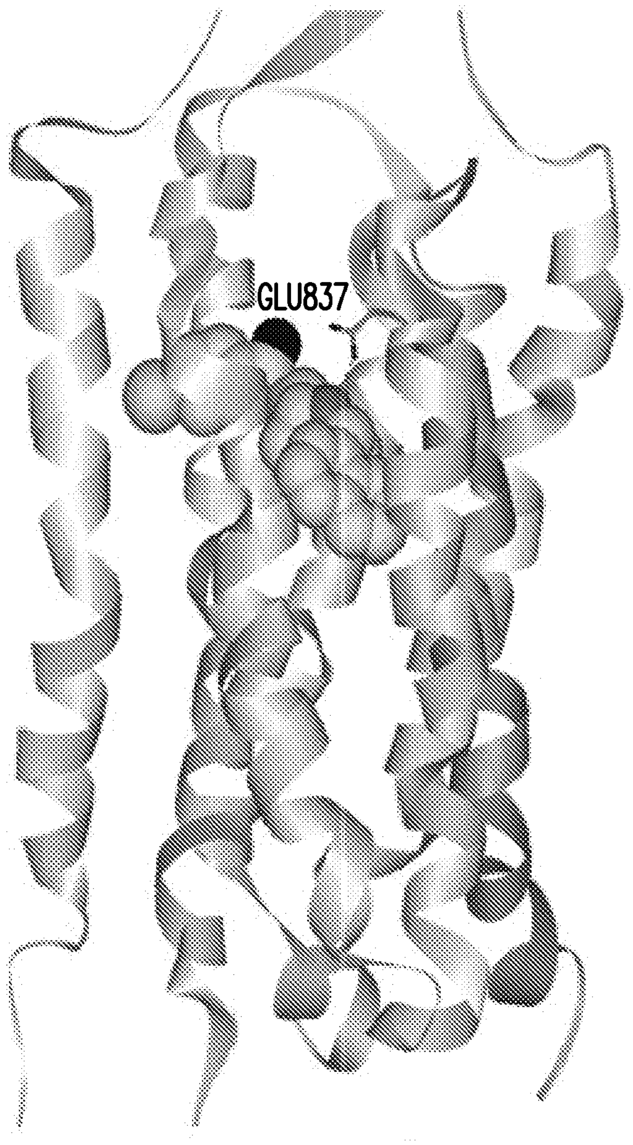


FIG. 20B

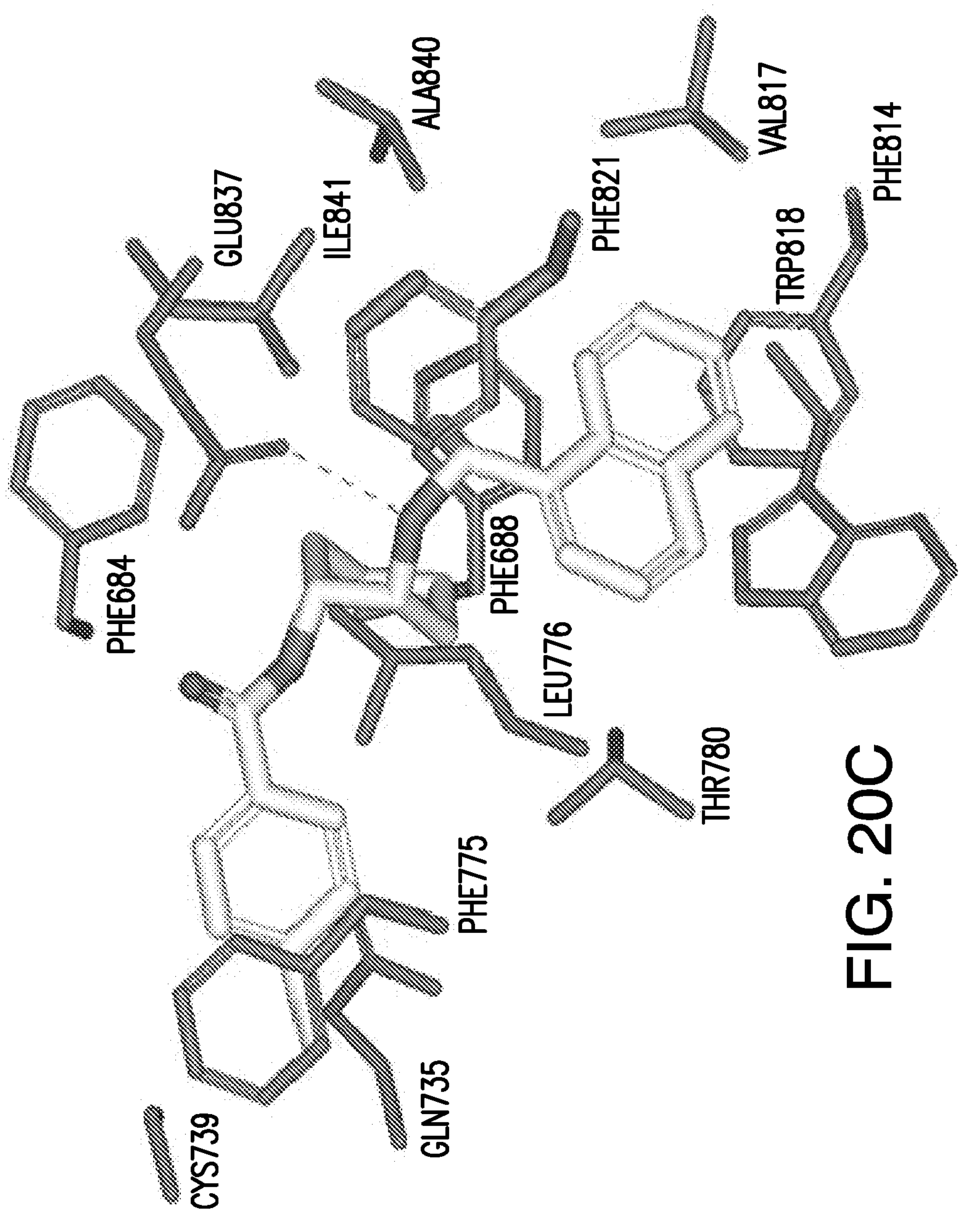
PHE684
GLU837
ILE841
ALA840
PHE821
VAL817
PHE814
TRP818
PHE688
LEU776
THR780
PHE775
GLN735
CYS739

FIG. 20C

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 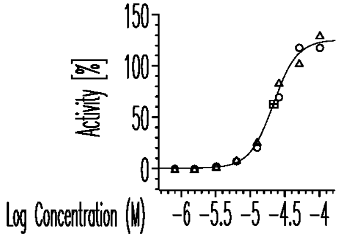 | 2.15895E-05 | | | CONTROL for MOCK |
| CaCl2 | fCaSR | 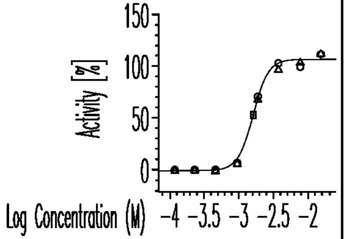 | 0.001622123 | | | CONTROL for fCaSR |
| Mg2+ | Mock | 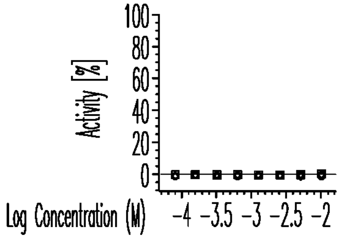 | Inactive | | | |
| Mg2+ | fCaSR | 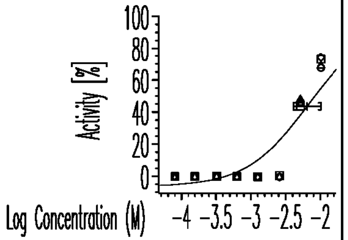 | Active | | | |

FIG. 21

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 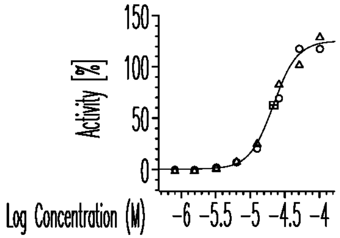  | 2.15895E-05 | | | CONTROL for MOCK |
| CaCl2 | fCaSR | 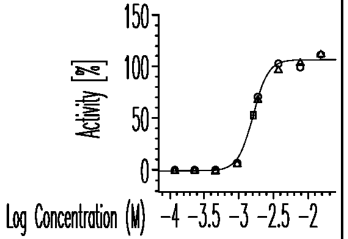  | 0.001622123 | | | CONTROL for fCaSR |
| Gadolinium ion Gd3+ | Mock | 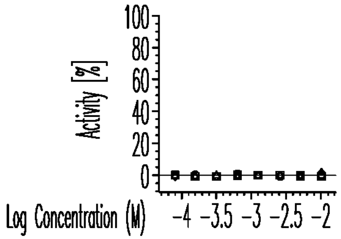  | Inactive | | | |
| Gadolinium ion Gd3+ | fCaSR | 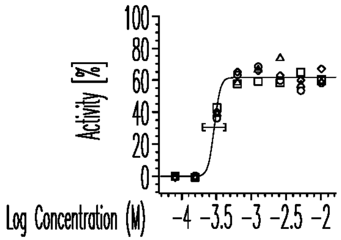  | 0.000294595 | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 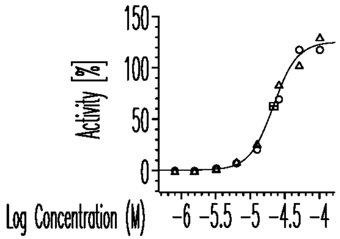  | 2.15895E-05 | | | CONTROL for MOCK |
| CaCl2 | fCaSR | 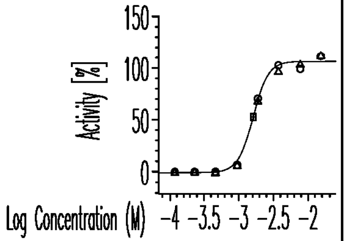  | 0.001622123 | | | CONTROL for fCaSR |
| Barium chloride dihydrate | Mock | 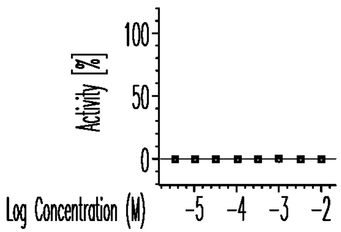  | Inactive | | | |
| Barium chloride dihydrate | fCaSR | 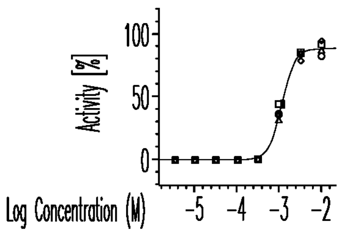  | 0.001172392 | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 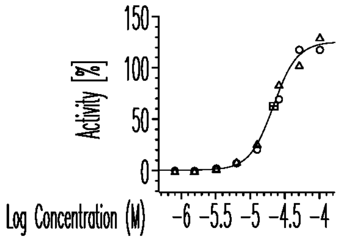 | 2.15895E-05 | | | CONTROL for MOCK |
| CaCl2 | fCaSR | 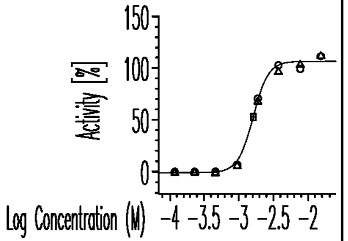 | 0.001622123 | | | CONTROL for fCaSR |
| Strontium hydroxide | Mock | 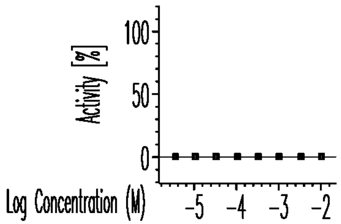 | Inactive | | | |
| Strontium hydroxide | fCaSR | 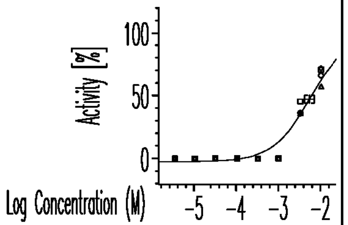 | Active | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 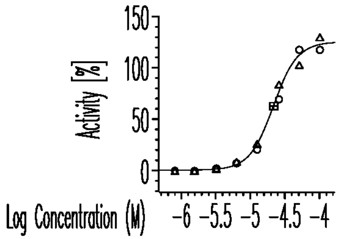 | 2.15895E-05 | | | CONTROL for MOCK |
| CaCl2 | fCaSR | 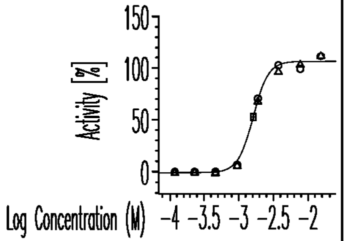 | 0.001622123 | | | CONTROL for fCaSR |
| Terbium(III) acetate hydrate | Mock | 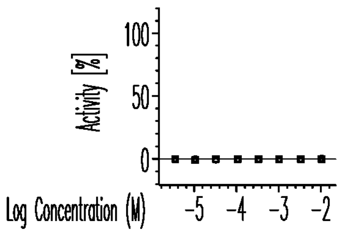 | Inactive | | | |
| Terbium(III) acetate hydrate | fCaSR | 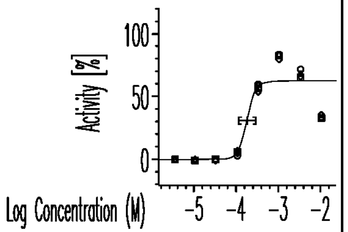 | 0.000174627 | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 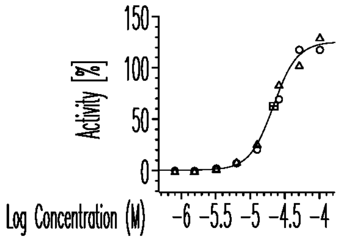 | 2.15895E-05 | | | CONTROL for MOCK |
| CaCl2 | fCaSR | 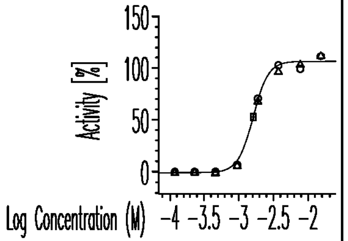 | 0.001622123 | | | CONTROL for fCaSR |
| Praseodymium(III) trifluoromethanesulfonate | Mock | 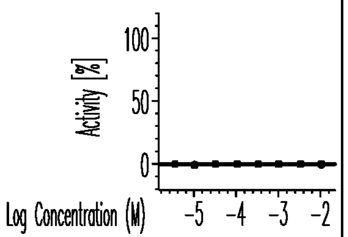 | Inactive | | | |
| Praseodymium(III) trifluoromethanesulfonate | fCaSR | 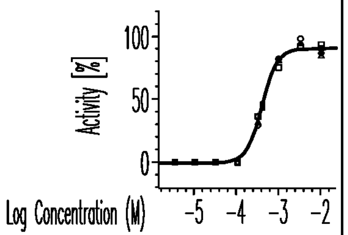 | 0.000397784 | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 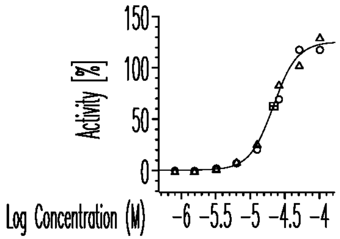 | 2.15895E-05 | | | CONTROL for MOCK |
| CaCl2 | fCaSR | 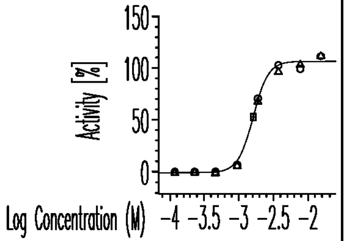 | 0.001622123 | | | CONTROL for fCaSR |
| Methylphosphonic acid | Mock | 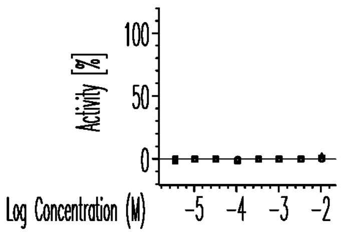 | Inactive | | | |
| Methylphosphonic acid | fCaSR | 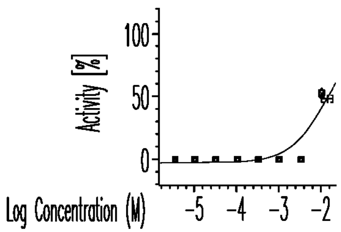 | Active | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 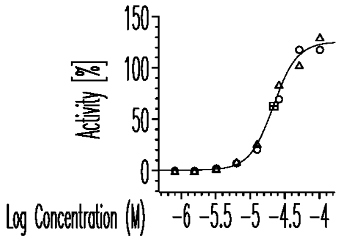 | 2.15895E-05 | | | CONTROL for MOCK |
| CaCl2 | fCaSR | 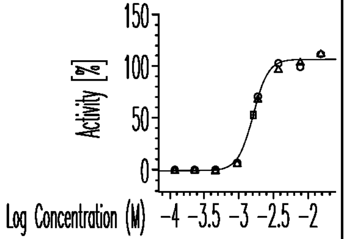 | 0.001622123 | | | CONTROL for fCaSR |
| Methylenediphosphonic acid | Mock | 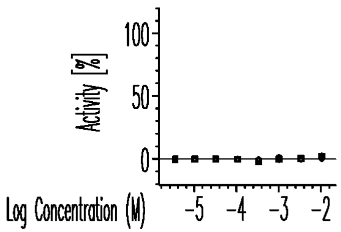 | Inactive | | | |
| Methylenediphosphonic acid | fCaSR | 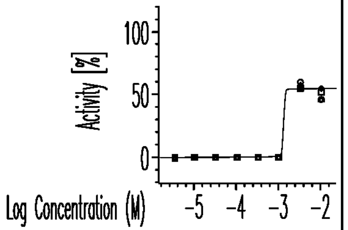 | 0.001292506 | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 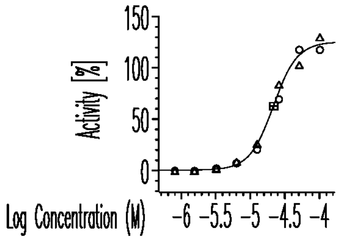 | 2.15895E-05 | | | CONTROL for MOCK |
| CaCl2 | fCaSR | 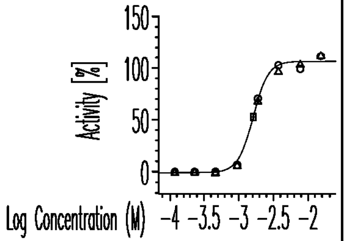 | 0.001622123 | | | CONTROL for fCaSR |
| L-Aspartic acid | Mock | 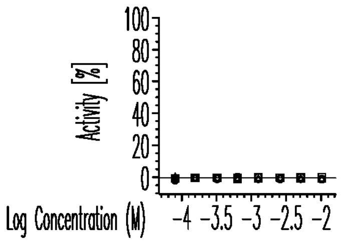 | Inactive | | | |
| L-Aspartic acid | fCaSR | 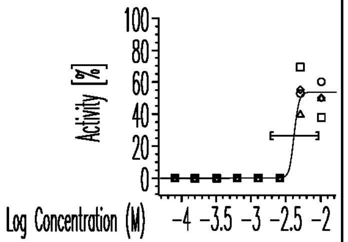 | 0.004114576 | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 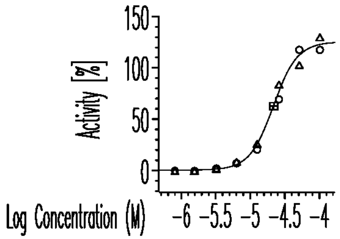 | 2.15895E−05 | | | CONTROL for MOCK |
| CaCl2 | fCaSR | 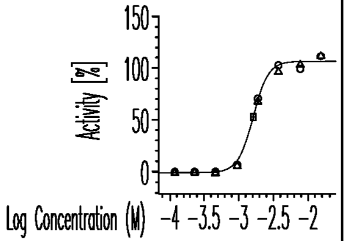 | 0.001622123 | | | CONTROL for fCaSR |
| L−Glutamic acid | Mock | 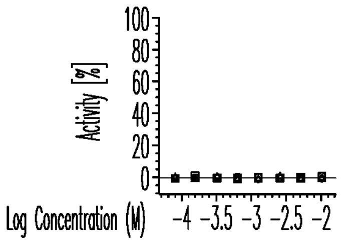 | Inactive | | | |
| L−Glutamic acid | fCaSR | 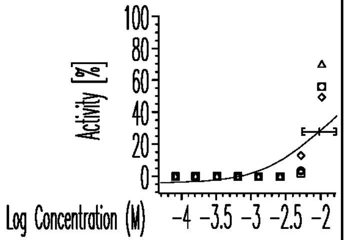 | Active | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 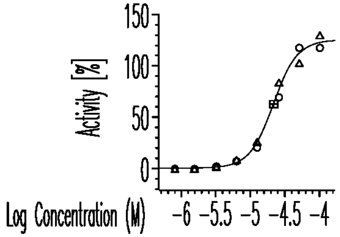 | 2.15895E-05 | | | CONTROL for MOCK |
| CaCl2 | fCaSR | 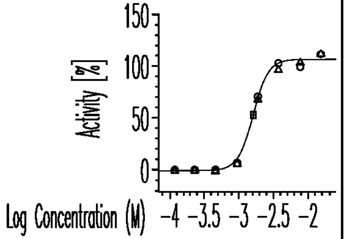 | 0.001622123 | | | CONTROL for fCaSR |
| Se-(Methyl)selenocysteine | Mock | 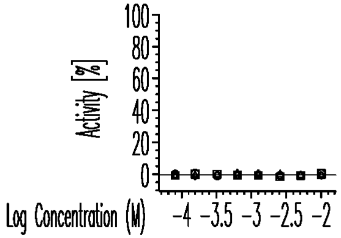 | Inactive | | | |
| Se-(Methyl)selenocysteine | fCaSR | 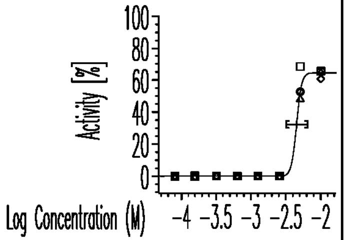 | 0.004468107 | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 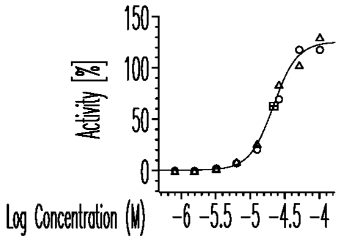  | 2.15895E-05 | | | CONTROL for MOCK |
| CaCl2 | fCaSR | 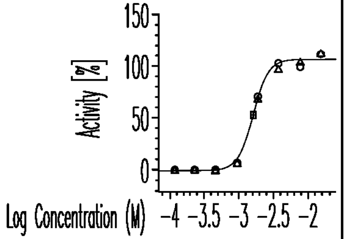  | 0.001622123 | | | CONTROL for fCaSR |
| 2S,4S-g-Hydroxy-L-glutamic acid | Mock | 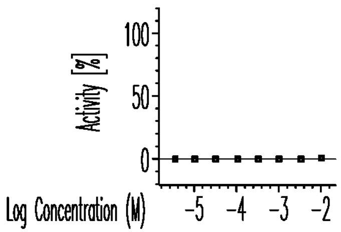  | Inactive | | | |
| 2S,4S-g-Hydroxy-L-glutamic acid | fCaSR | 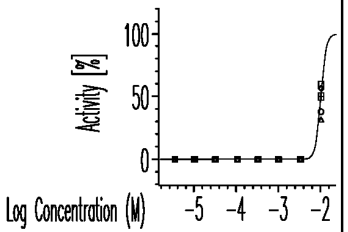  | Active | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 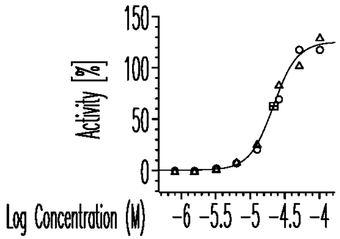 | 2.15895E-05 | | | CONTROL for MOCK |
| CaCl2 | fCaSR | 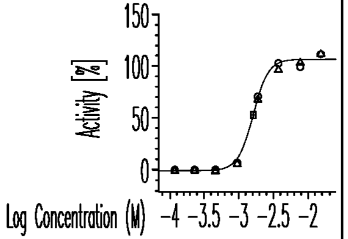 | 0.001622123 | | | CONTROL for fCaSR |
| L-Isoglutamine | Mock | 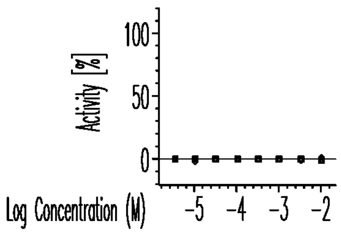 | Inactive | | | |
| L-Isoglutamine | fCaSR | 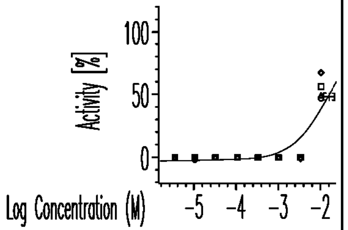 | Active | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 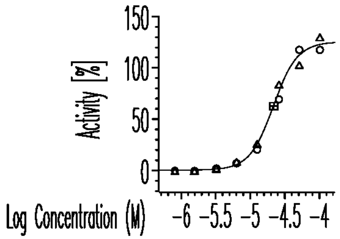 | 2.15895E-05 | | | CONTROL for MOCK |
| CaCl2 | fCaSR | 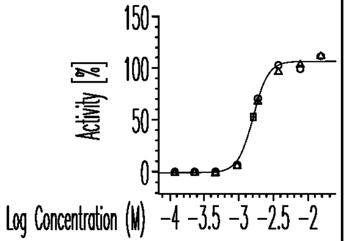 | 0.001622123 | | | CONTROL for fCaSR |
| L-Cysteic acid monohydrate | Mock | 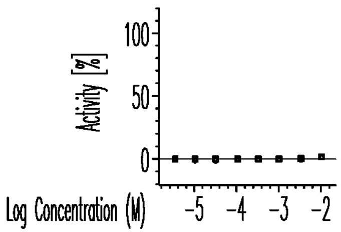 | Inactive | | | |
| L-Cysteic acid monohydrate | fCaSR | 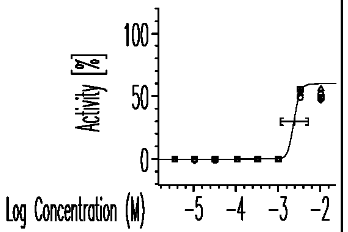 | 0.002339771 | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 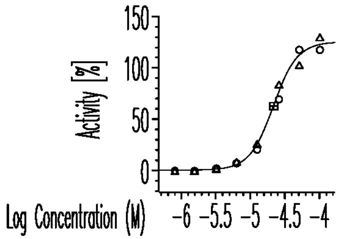  | 2.15895E-05 | | | CONTROL for MOCK |
| CaCl2 | fCaSR | 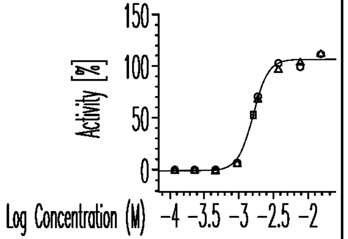  | 0.001622123 | | | CONTROL for fCaSR |
| L-Homocysteic acid | Mock | 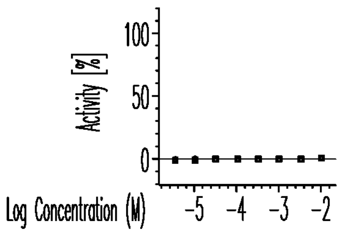  | Inactive | | | |
| L-Homocysteic acid | fCaSR | 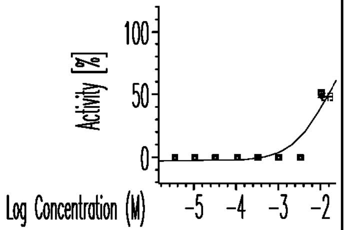  | Active | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 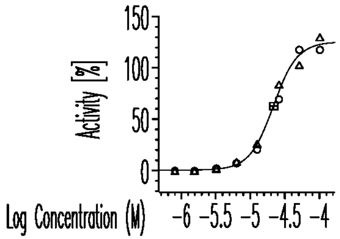  | 2.15895E-05 | | | CONTROL for MOCK |
| CaCl2 | fCaSR | 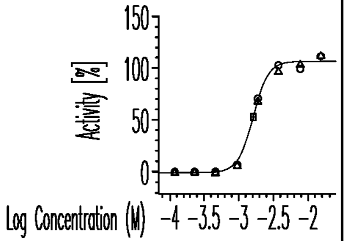  | 0.001622123 | | | CONTROL for fCaSR |
| L-(+)-2-Amino-3-phosphonopropionic acid | Mock | 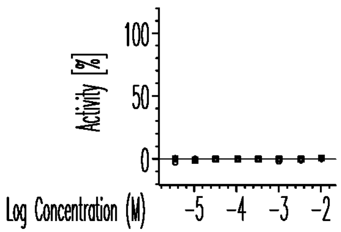  | Inactive | | | |
| L-(+)-2-Amino-3-phosphonopropionic acid | fCaSR | 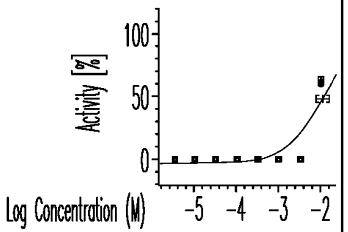  | Active | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 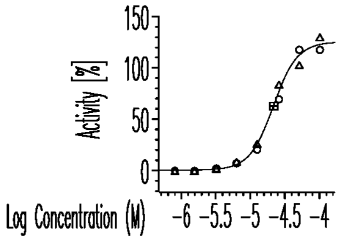 | 2.15895E-05 | | | CONTROL for MOCK |
| CaCl2 | fCaSR | 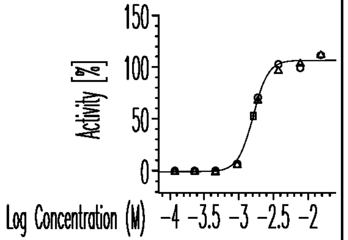 | 0.001622123 | | | CONTROL for fCaSR |
| 2-Amino-4-phosphonobutyric acid | Mock | 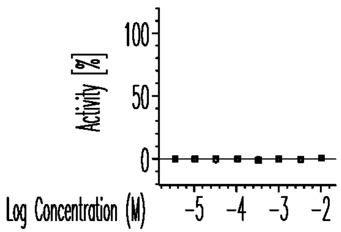 | Inactive | | | |
| 2-Amino-4-phosphonobutyric acid | fCaSR | 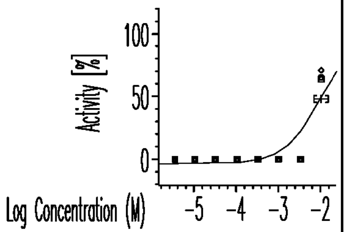 | Active | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 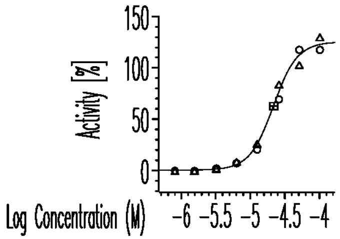 | 2.15895E-05 | | | CONTROL for MOCK |
| CaCl2 | fCaSR | 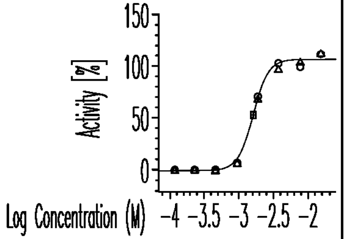 | 0.001622123 | | | CONTROL for fCaSR |
| L-2-Aminoadipic acid | Mock | 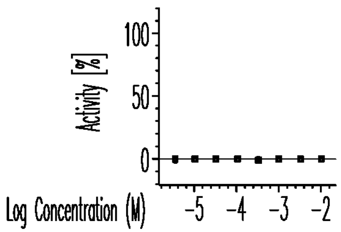 | Inactive | | | |
| L-2-Aminoadipic acid | fCaSR | 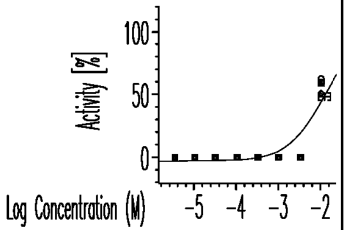 | Active | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 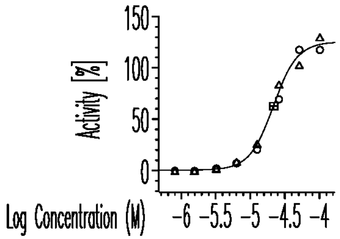 | 2.15895E-05 | | | CONTROL for MOCK |
| CaCl2 | fCaSR | 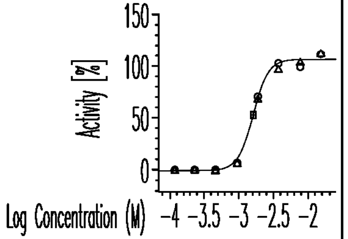 | 0.001622123 | | | CONTROL for fCaSR |
| 2-Aminopimelic acid | Mock | 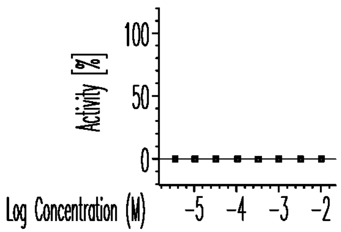 | Inactive | | | |
| 2-Aminopimelic acid | fCaSR | 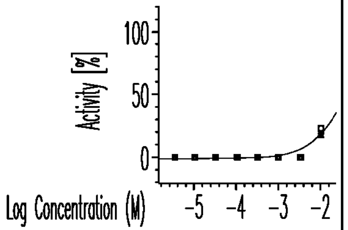 | Active | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 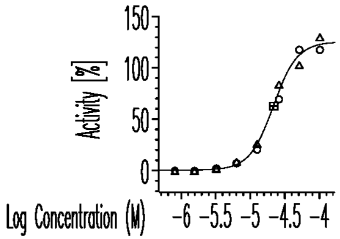  | 2.15895E-05 | | | CONTROL for MOCK |
| CaCl2 | fCaSR | 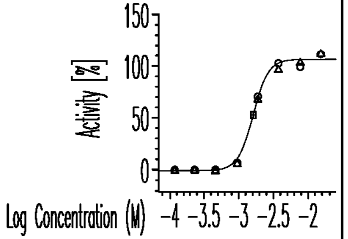  | 0.001622123 | | | CONTROL for fCaSR |
| gamma-Carboxy-DL-glutamic acid | Mock | 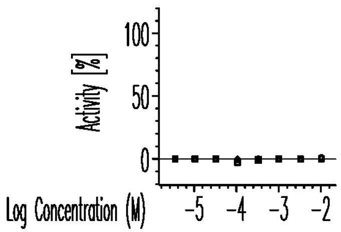  | Inactive | | | |
| gamma-Carboxy-DL-glutamic acid | fCaSR | 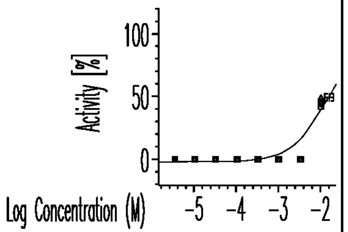  | Active | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 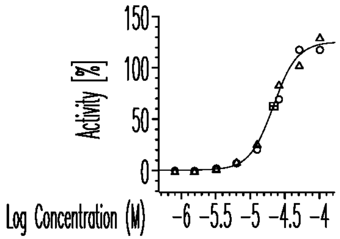 | 2.15895E-05 | | | CONTROL for MOCK |
| CaCl2 | fCaSR | 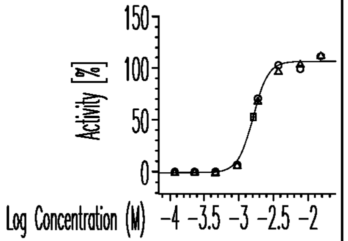 | 0.001622123 | | | CONTROL for fCaSR |
| 4-Fluoro-DL-glutamic acid | Mock | 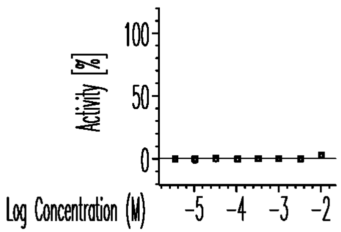 | Inactive | | | |
| 4-Fluoro-DL-glutamic acid | fCaSR | 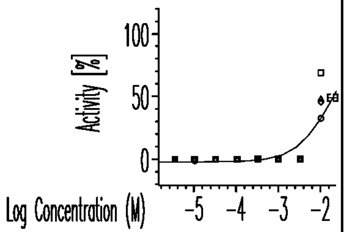 | Active | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 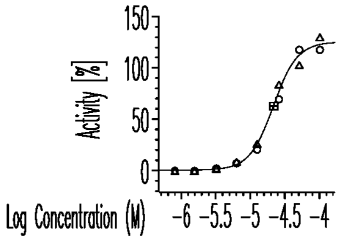 | 2.15895E-05 | | | CONTROL for MOCK |
| CaCl2 | fCaSR | 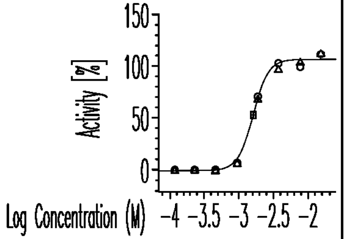 | 0.001622123 | | | CONTROL for fCaSR |
| O-Phospho-L-tyrosine | Mock | 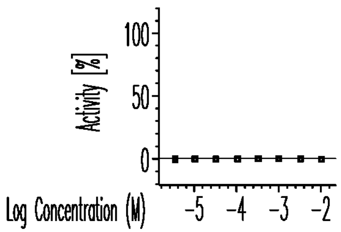 | Inactive | | | |
| O-Phospho-L-tyrosine | fCaSR | 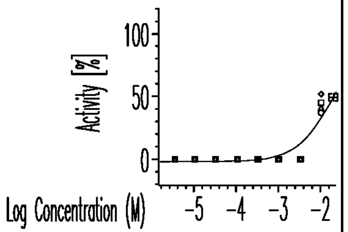 | Active | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 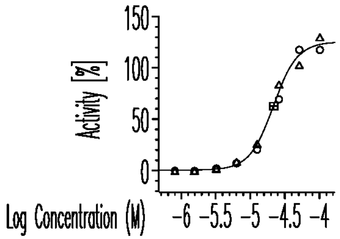 | 2.15895E-05 | | | CONTROL for MOCK |
| CaCl2 | fCaSR | 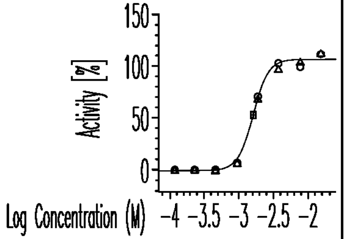 | 0.001622123 | | | CONTROL for fCaSR |
| DL-Aspartic acid alpha-methyl ester | Mock | 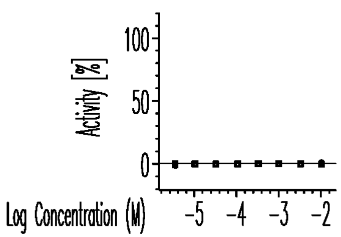 | Inactive | | | |
| DL-Aspartic acid alpha-methyl ester | fCaSR | 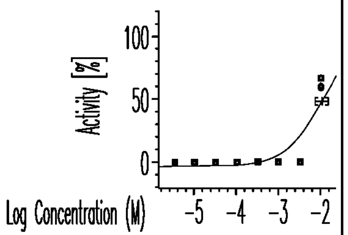 | Active | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 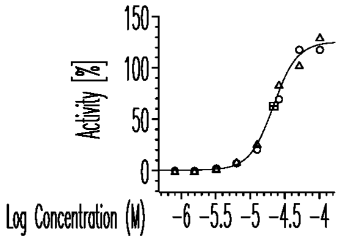 | 2.15895E-05 | | | CONTROL for MOCK |
| CaCl2 | fCaSR | 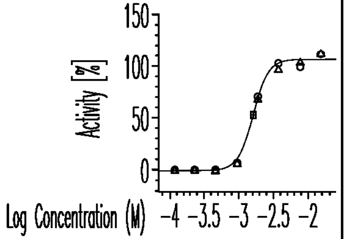 | 0.001622123 | | | CONTROL for fCaSR |
| L-Aspartic acid beta-methyl ester hydrochloride | Mock | 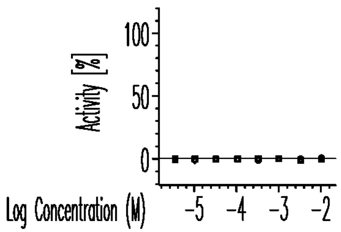 | Inactive | | | |
| L-Aspartic acid beta-methyl ester hydrochloride | fCaSR | 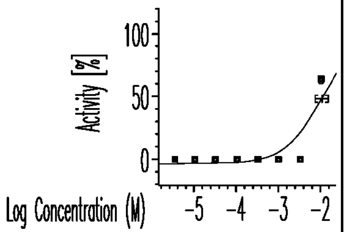 | Active | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 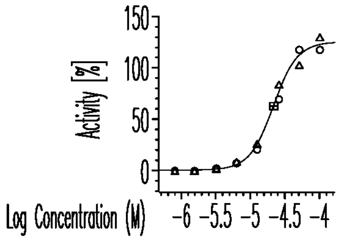 | 2.15895E-05 | | | CONTROL for MOCK |
| CaCl2 | fCaSR | 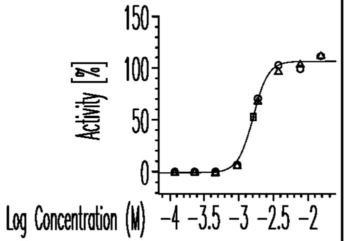 | 0.001622123 | | | CONTROL for fCaSR |
| 1s,3s-1-aminocyclobutane-1,3-dicarboxylic acid | Mock | 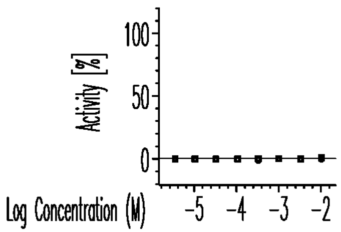 | Inactive | | | |
| 1s,3s-1-aminocyclobutane-1,3-dicarboxylic acid | fCaSR | 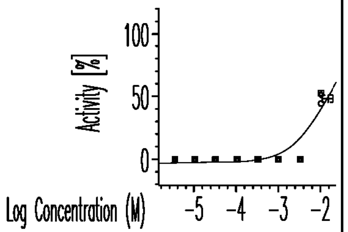 | Active | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 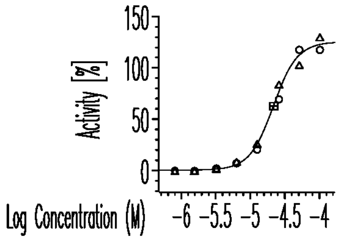 | 2.15895E-05 | | | CONTROL for MOCK |
| CaCl2 | fCaSR | 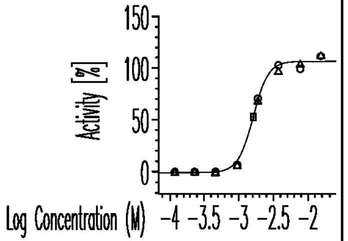 | 0.001622123 | | | CONTROL for fCaSR |
| Glutathione (gamma-Glu-Cys-Gly) | Mock | 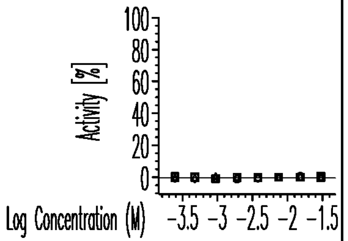 | Inactive | | | |
| Glutathione (gamma-Glu-Cys-Gly) | fCaSR | 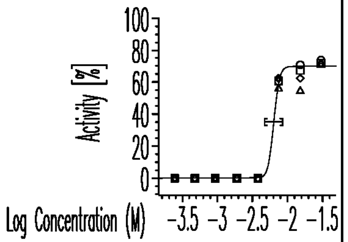 | 0.006396298 | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 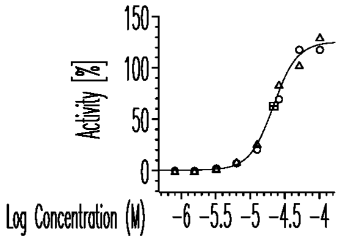  | 2.15895E-05 | | | CONTROL for MOCK |
| CaCl2 | fCaSR | 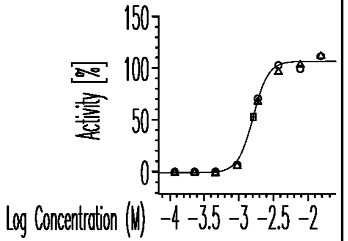  | 0.001622123 | | | CONTROL for fCaSR |
| gamma-Glu-Abu-Gly | Mock | 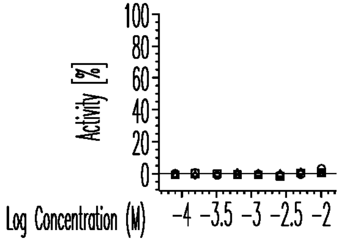  | Inactive | | | |
| gamma-Glu-Abu-Gly | fCaSR | 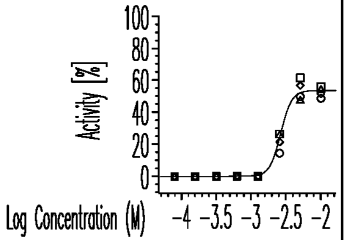  | 0.002658678 | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 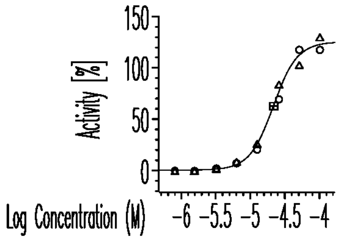 | 2.15895E-05 | | | CONTROL for MOCK |
| CaCl2 | fCaSR | 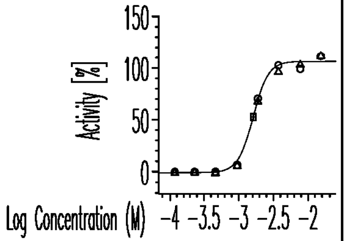 | 0.001622123 | | | CONTROL for fCaSR |
| gamma-Glu-Val-Gly | Mock | 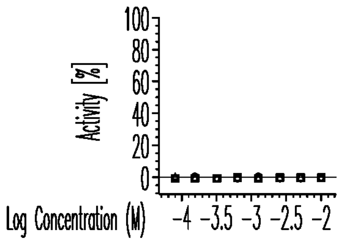 | Inactive | | | |
| gamma-Glu-Val-Gly | fCaSR | 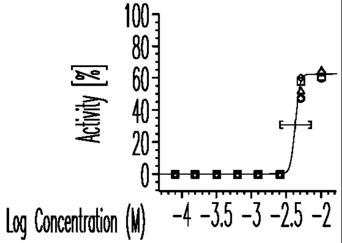 | 0.004222828 | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 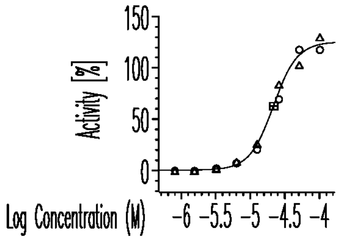 | 2.15895E-05 | | | CONTROL for MOCK |
| CaCl2 | fCaSR | 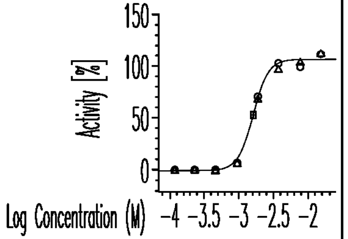 | 0.001622123 | | | CONTROL for fCaSR |
| S-Methylglutathione | Mock | 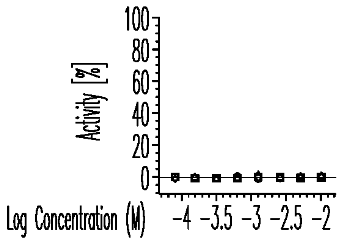 | Inactive | | | |
| S-Methylglutathione | fCaSR | 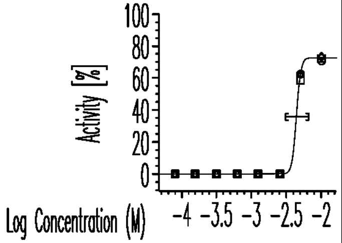 | 0.004418495 | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 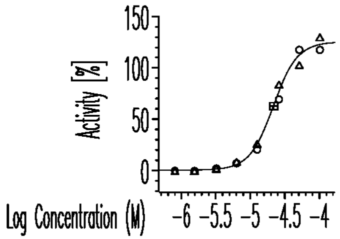 | 2.15895E-05 | | | CONTROL for MOCK |
| CaCl2 | fCaSR | 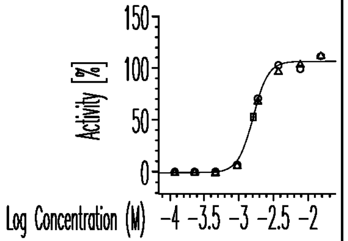 | 0.001622123 | | | CONTROL for fCaSR |
| S-(2-Hydroxyethyl)glutathione | Mock | 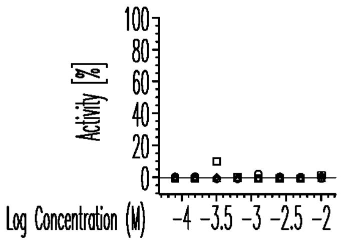 | Inactive | | | |
| S-(2-Hydroxyethyl)glutathione | fCaSR | 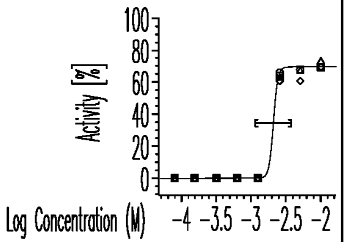 | 0.002097055 | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 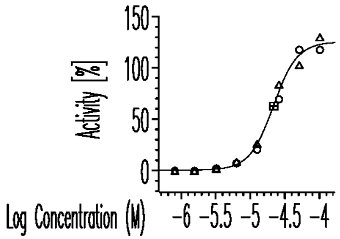  | 2.15895E-05 | | | CONTROL for MOCK |
| CaCl2 | fCaSR | 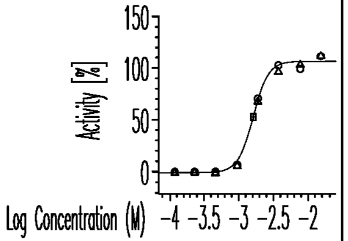  | 0.001622123 | | | CONTROL for fCaSR |
| 3-Glutathionyl-S-methylindole | Mock | 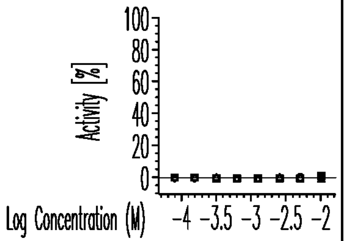  | Inactive | | | |
| 3-Glutathionyl-S-methylindole | fCaSR | 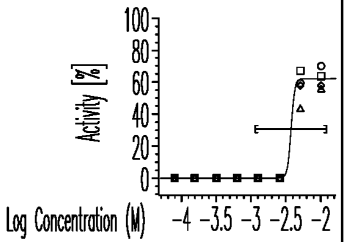  | 0.003746383 | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 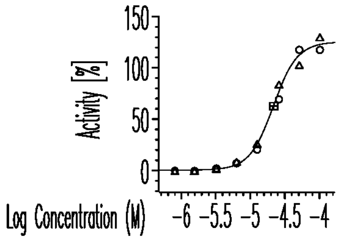 | 2.15895E-05 | | | CONTROL for MOCK |
| CaCl2 | fCaSR | 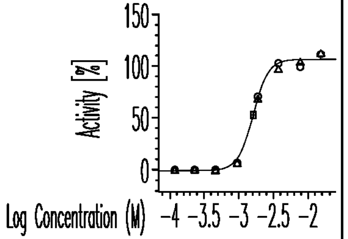 | 0.001622123 | | | CONTROL for fCaSR |
| S-Lactoylglutathione | Mock | 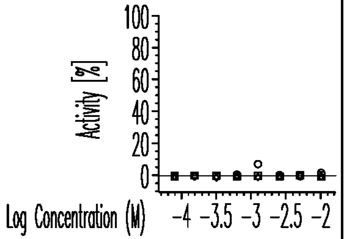 | Inactive | | | |
| S-Lactoylglutathione | fCaSR | 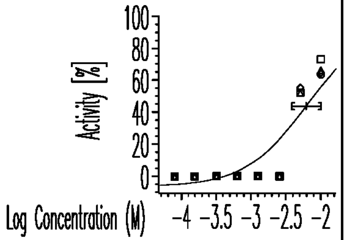 | Active | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 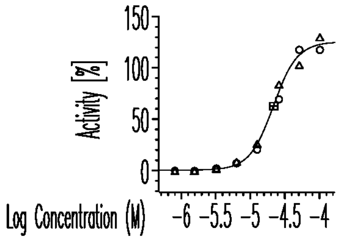 | 2.15895E-05 | | | CONTROL for MOCK |
| CaCl2 | fCaSR | 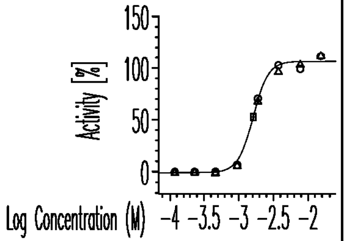 | 0.001622123 | | | CONTROL for fCaSR |
| gamma-Glu-Val | Mock | 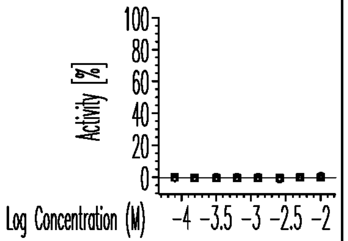 | Inactive | | | |
| gamma-Glu-Val | fCaSR | 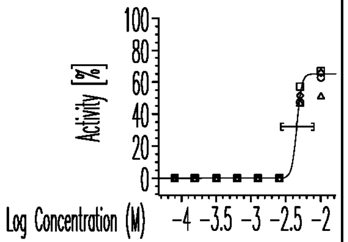 | 0.004518862 | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 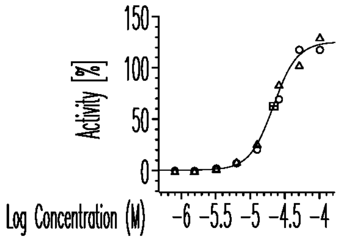 | 2.15895E-05 | | | CONTROL for MOCK |
| CaCl2 | fCaSR | 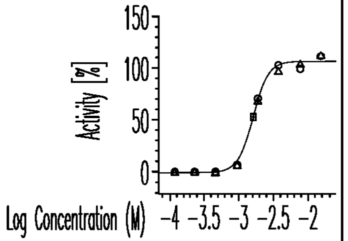 | 0.001622123 | | | CONTROL for fCaSR |
| gamma-Glu-Tyr | Mock | 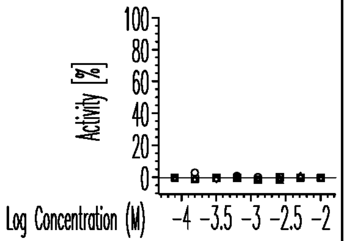 | Inactive | | | |
| gamma-Glu-Tyr | fCaSR | 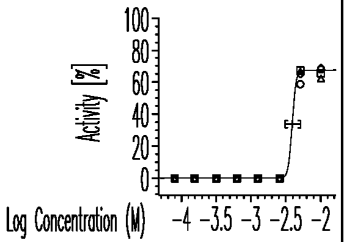 | 0.003877693 | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 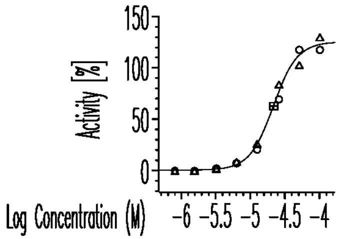  | 2.15895E-05 | | | CONTROL for MOCK |
| CaCl2 | fCaSR | 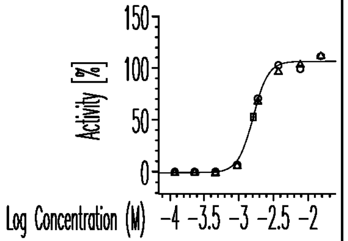  | 0.001622123 | | | CONTROL for fCaSR |
| gamma-Glu-Ala | Mock | 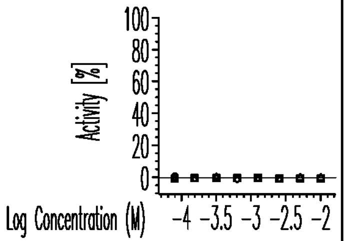  | Inactive | | | |
| gamma-Glu-Ala | fCaSR | 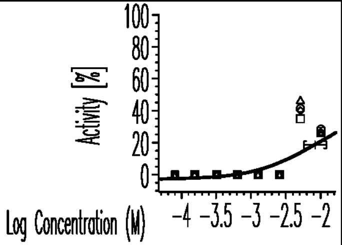  | Active | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 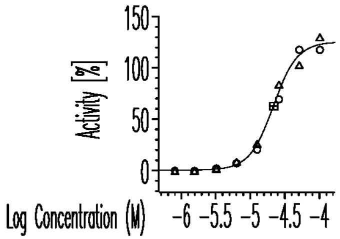 | 2.15895E-05 | | | CONTROL for MOCK |
| CaCl2 | fCaSR | 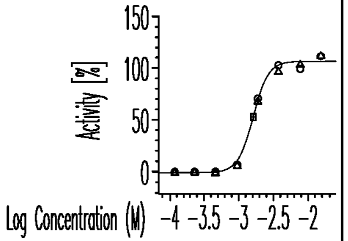 | 0.001622123 | | | CONTROL for fCaSR |
| gamma-Glu-Phe | Mock | 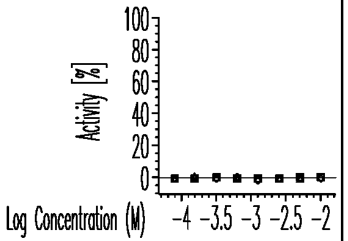 | Inactive | | | |
| gamma-Glu-Phe | fCaSR | 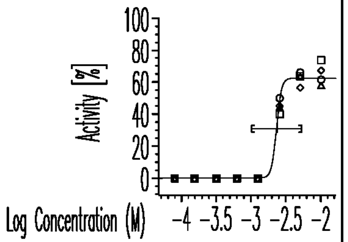 | 0.002316942 | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 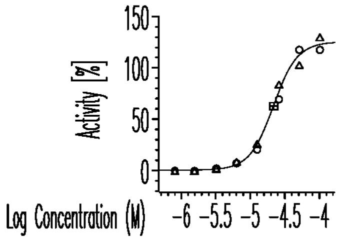 | 2.15895E-05 | | | CONTROL for MOCK |
| CaCl2 | fCaSR | 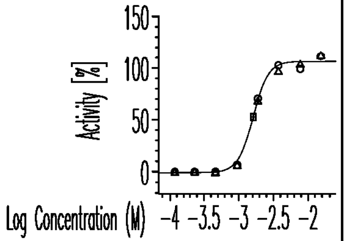 | 0.001622123 | | | CONTROL for fCaSR |
| gamma-D-Glu-Trp | Mock | 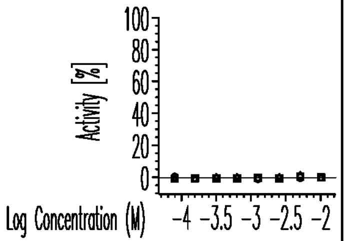 | Inactive | | | |
| gamma-D-Glu-Trp | fCaSR | 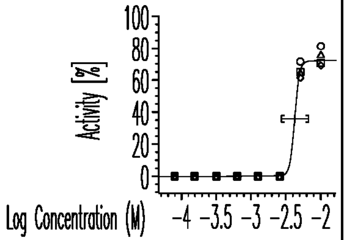 | 0.004204093 | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 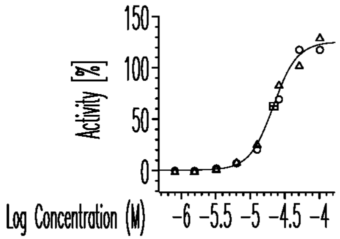 | 2.15895E-05 | | | CONTROL for MOCK |
| CaCl2 | fCaSR | 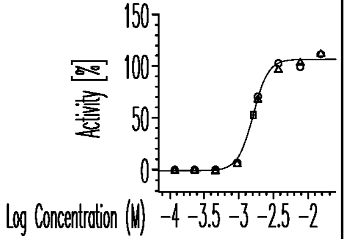 | 0.001622123 | | | CONTROL for fCaSR |
| H-Glu(Met-OH)-OH | Mock | 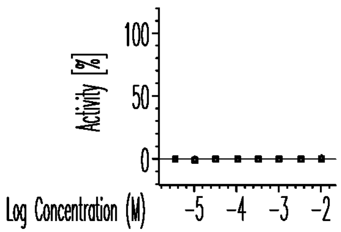 | Inactive | | | |
| H-Glu(Met-OH)-OH | fCaSR | 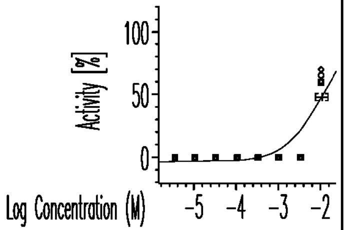 | Active | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 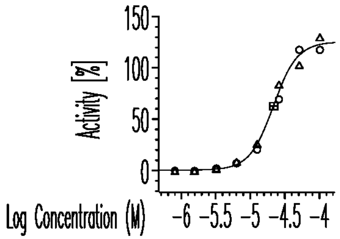 | 2.15895E−05 | | | CONTROL for MOCK |
| CaCl2 | fCaSR | 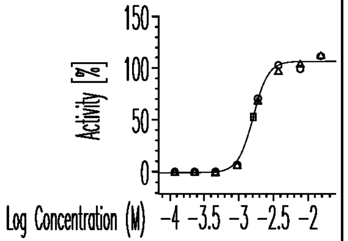 | 0.001622123 | | | CONTROL for fCaSR |
| H−Glu(Cys−OH)−OH | Mock | 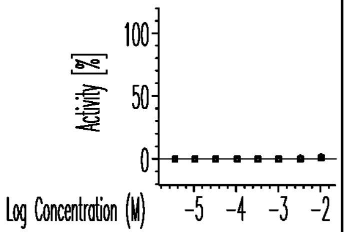 | Inactive | | | |
| H−Glu(Cys−OH)−OH | fCaSR | 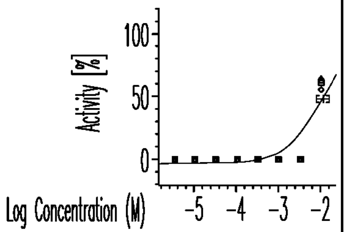 | Active | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 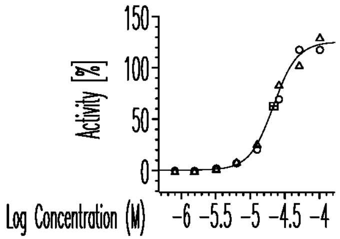 | 2.15895E-05 | | | CONTROL for MOCK |
| CaCl2 | fCaSR | 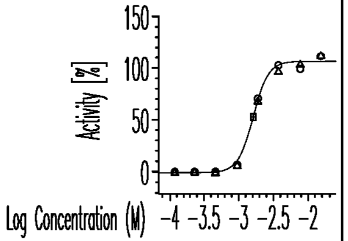 | 0.001622123 | | | CONTROL for fCaSR |
| H-Glu(Gly-OH)-OH | Mock | 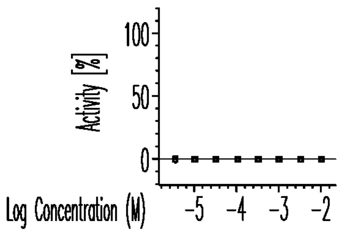 | Inactive | | | |
| H-Glu(Gly-OH)-OH | fCaSR | 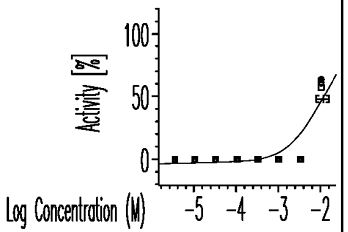 | Active | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 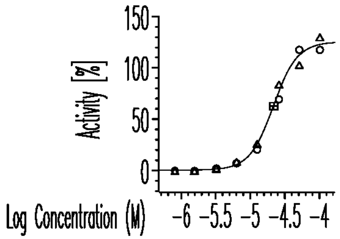 | 2.15895E-05 | | | CONTROL for MOCK |
| CaCl2 | fCaSR | 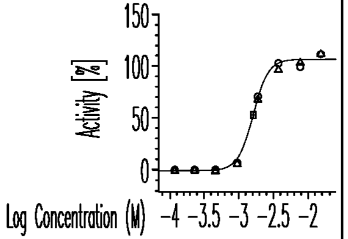 | 0.001622123 | | | CONTROL for fCaSR |
| H-Glu(Gln-OH)-OH | Mock | 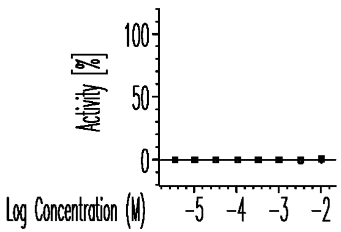 | Inactive | | | |
| H-Glu(Gln-OH)-OH | fCaSR | 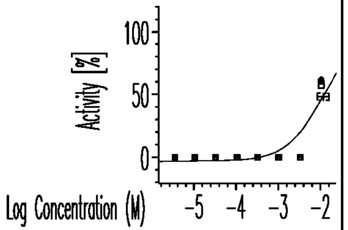 | Active | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 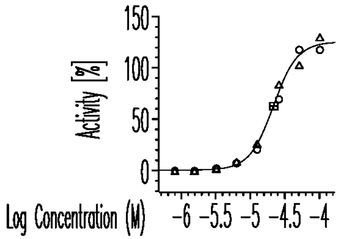 | 2.15895E-05 | | | CONTROL for MOCK |
| CaCl2 | fCaSR | 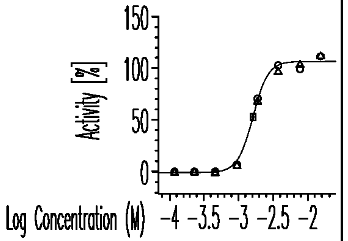 | 0.001622123 | | | CONTROL for fCaSR |
| H-Glu(Glu-OH)-OH | Mock | 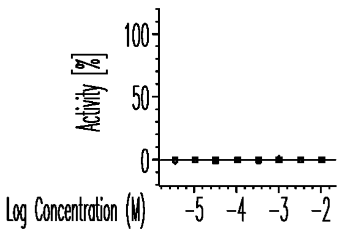 | Inactive | | | |
| H-Glu(Glu-OH)-OH | fCaSR | 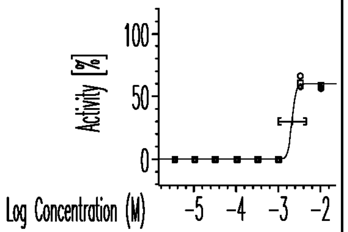 | 0.002064774 | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 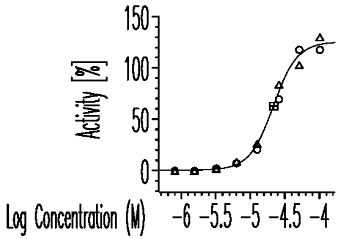 | 2.15895E-05 | | | CONTROL for MOCK |
| CaCl2 | fCaSR | 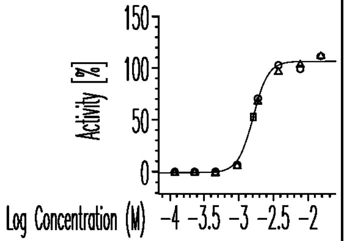 | 0.001622123 | | | CONTROL for fCaSR |
| H-Glu(Trp-OH)-OH | Mock | 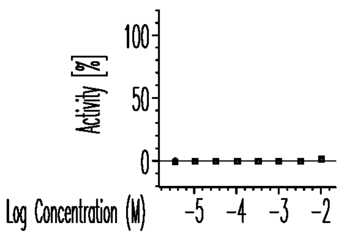 | Inactive | | | |
| H-Glu(Trp-OH)-OH | fCaSR | 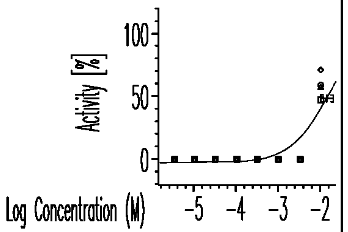 | Active | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 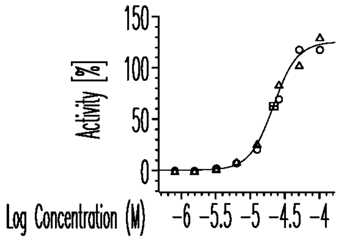  | 2.15895E-05 | | | CONTROL for MOCK |
| CaCl2 | fCaSR | 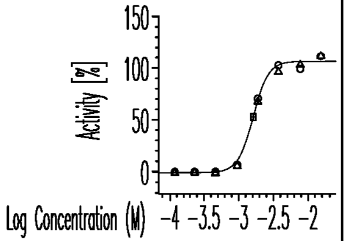  | 0.001622123 | | | CONTROL for fCaSR |
| H-Glu(Leu-OH)-OH | Mock | 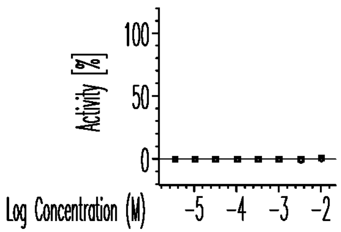  | Inactive | | | |
| H-Glu(Leu-OH)-OH | fCaSR | 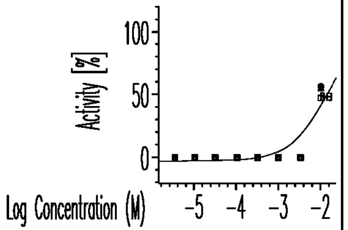  | Active | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 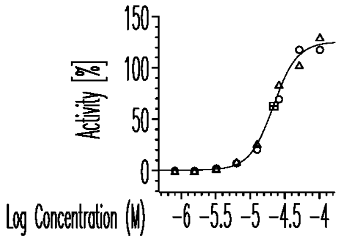 | 2.15895E-05 | | | CONTROL for MOCK |
| CaCl2 | fCaSR | 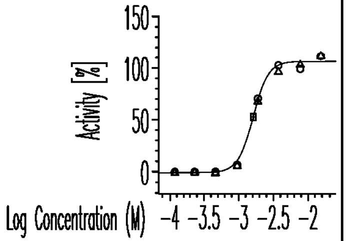 | 0.001622123 | | | CONTROL for fCaSR |
| H-Glu(Abu-OH)-OH | Mock | 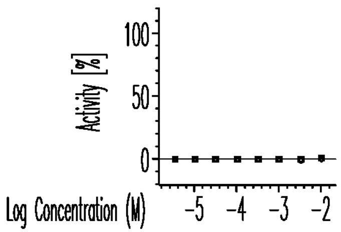 | Inactive | | | |
| H-Glu(Abu-OH)-OH | fCaSR | 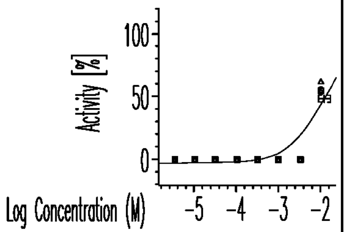 | Active | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 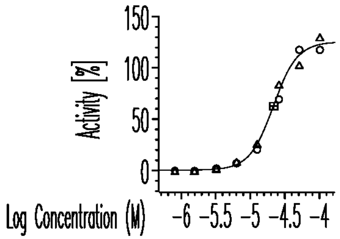 | 2.15895E-05 | | | CONTROL for MOCK |
| CaCl2 | fCaSR | 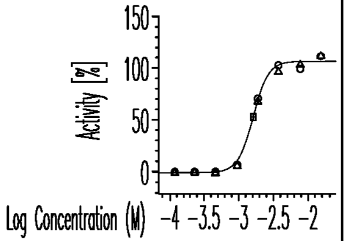 | 0.001622123 | | | CONTROL for fCaSR |
| H-Asp(Ala-OH)-OH | Mock | 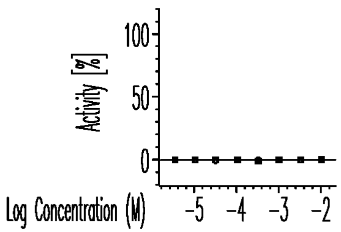 | Inactive | | | |
| H-Asp(Ala-OH)-OH | fCaSR | 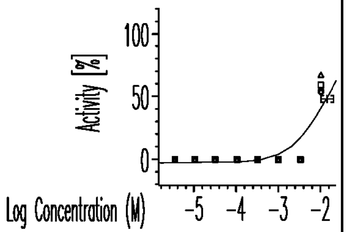 | Active | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 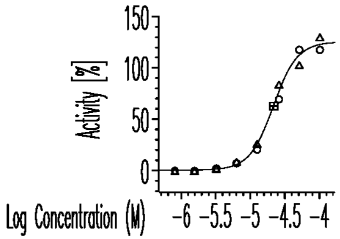  | 2.15895E-05 | | | CONTROL for MOCK |
| CaCl2 | fCaSR | 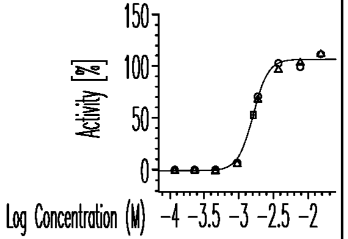  | 0.001622123 | | | CONTROL for fCaSR |
| H-Asp(Gly-OH)-OH | Mock | 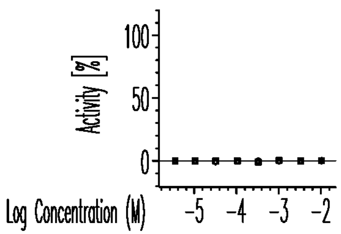  | Inactive | | | |
| H-Asp(Gly-OH)-OH | fCaSR | 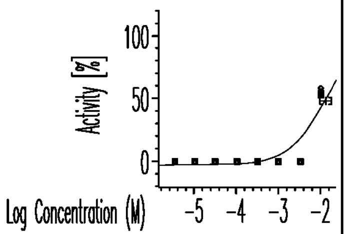  | Active | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 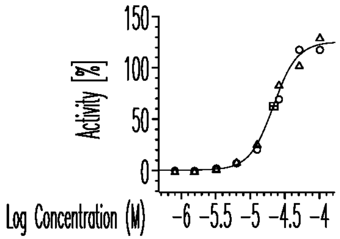  | 2.15895E-05 | | | CONTROL for MOCK |
| CaCl2 | fCaSR | 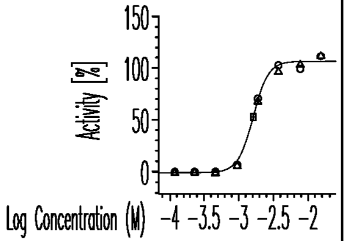  | 0.001622123 | | | CONTROL for fCaSR |
| H-Asp(Leu-OH)-OH | Mock | 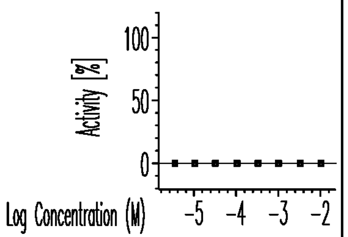  | Inactive | | | |
| H-Asp(Leu-OH)-OH | fCaSR | 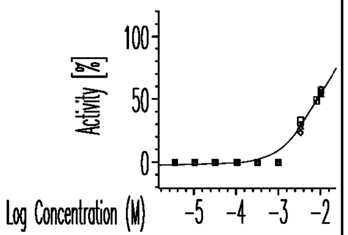  | Active | | | |

FIG. 21 Continued

| Compound ID | Target Name | Curve AGO | Activity AGO (EC50 if calculated) | Curve PAM | Activity PAM (EC50 if calculated) | Comment |
| --- | --- | --- | --- | --- | --- | --- |
| Carbachol | Mock | 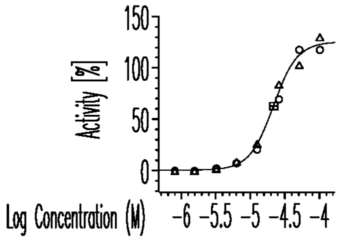 | 2.15895E-05 | | | CONTROL for MOCK |
| CaCl2 | fCaSR | 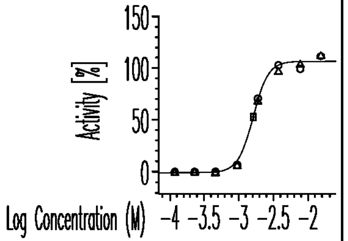 | 0.001622123 | | | CONTROL for fCaSR |
| H-Asp(Phe-OH)-OH | Mock | 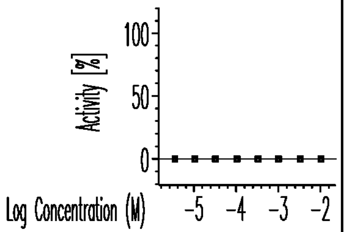 | Inactive | | | |
| H-Asp(Phe-OH)-OH | fCaSR | 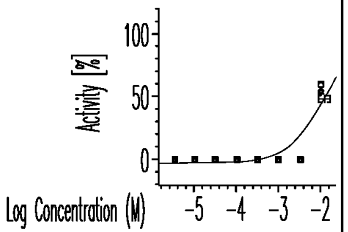 | Active | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 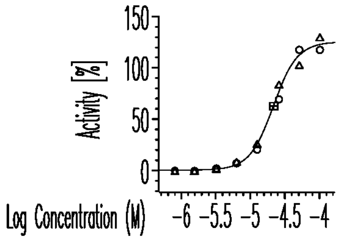 | 2.15895E-05 | | | CONTROL for MOCK |
| CaCl2 | fCaSR | 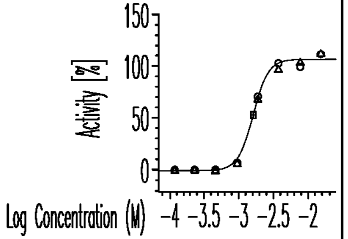 | 0.001622123 | | | CONTROL for fCaSR |
| H-Glu(Glu(Glu-OH)-OH)-OH | Mock | 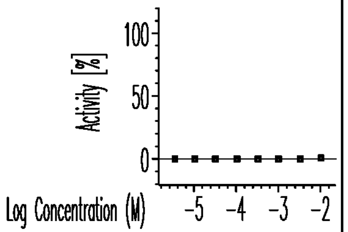 | Inactive | | | |
| H-Glu(Glu(Glu-OH)-OH)-OH | fCaSR | 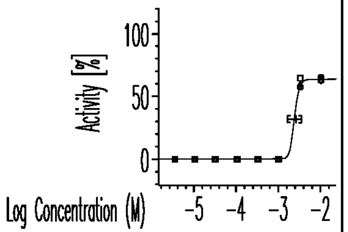 | 0.002345792 | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 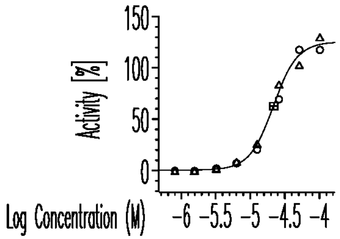  | 2.15895E-05 | | | CONTROL for MOCK |
| CaCl2 | fCaSR | 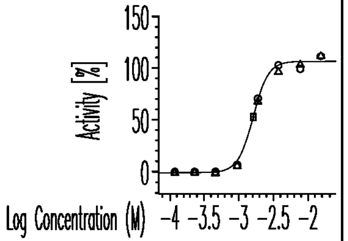  | 0.001622123 | | | CONTROL for fCaSR |
| H-Glu(Glu(Gln-OH)-OH)-OH | Mock | 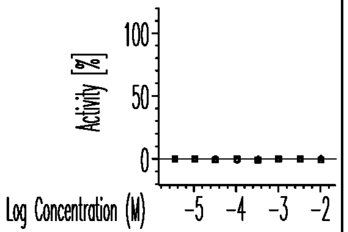  | Inactive | | | |
| H-Glu(Glu(Gln-OH)-OH)-OH | fCaSR | 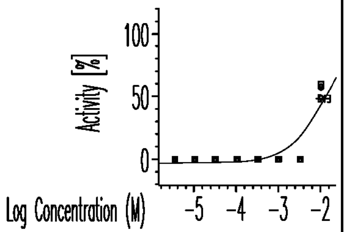  | Active | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 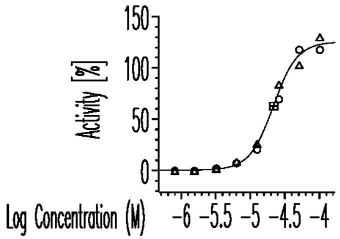 | 2.15895E-05 | | | CONTROL for MOCK |
| CaCl2 | fCaSR | 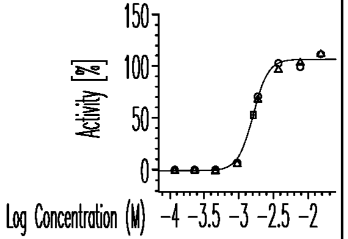 | 0.001622123 | | | CONTROL for fCaSR |
| Poly-L-arginine | Mock | 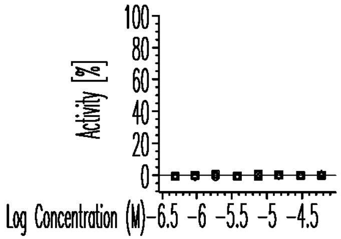 | Inactive | | | |
| Poly-L-arginine | fCaSR | 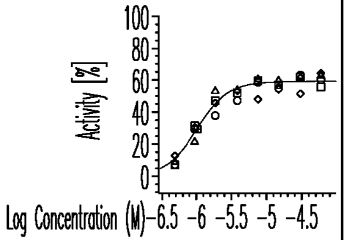 | 1.0135E-06 | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 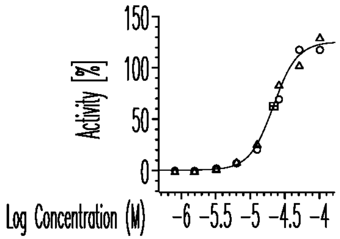 | 2.15895E-05 | | | CONTROL for MOCK |
| CaCl2 | fCaSR | 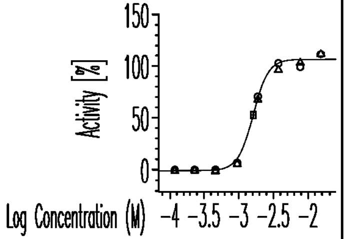 | 0.001622123 | | | CONTROL for fCaSR |
| Poly-L-lysine | Mock | 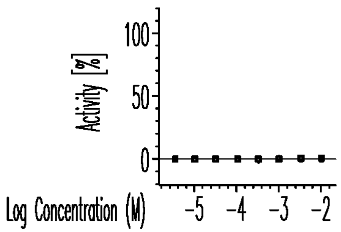 | Inactive | | | |
| Poly-L-lysine | fCaSR | 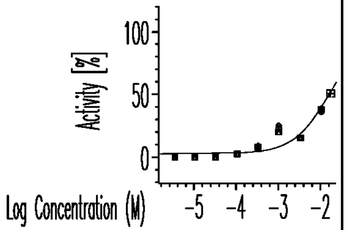 | Active | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 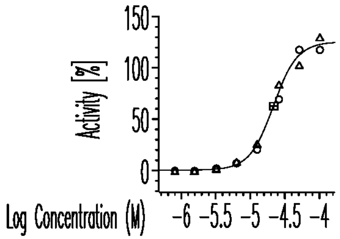 | 2.15895E-05 | | | CONTROL for MOCK |
| CaCl2 | fCaSR | 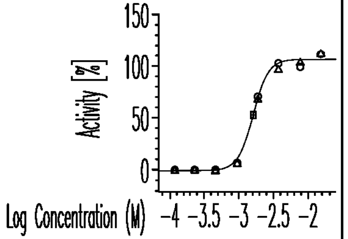 | 0.001622123 | | | CONTROL for fCaSR |
| Poly-L-ornithine | Mock | 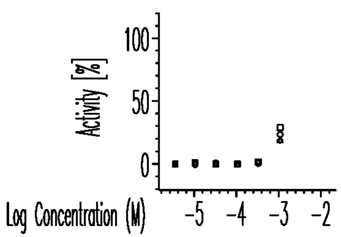 | Inactive | | | |
| Poly-L-ornithine | fCaSR | 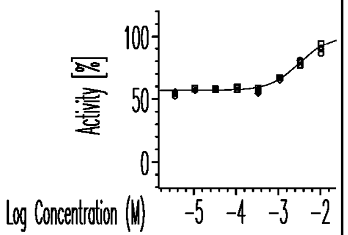 | 0.000239862 | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 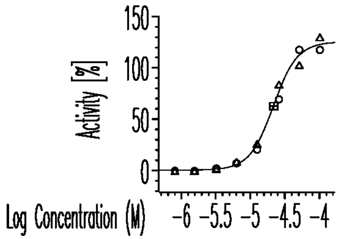 | 2.15895E-05 | | | CONTROL for MOCK |
| CaCl2 | fCaSR | 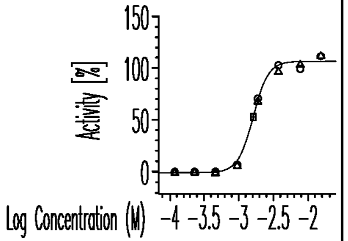 | 0.001622123 | | | CONTROL for fCaSR |
| Spermidine | Mock | 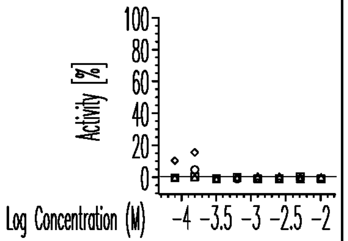 | Inactive | | | |
| Spermidine | fCaSR | 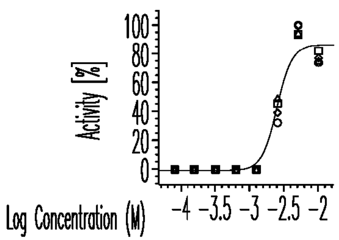 | 0.002495307 | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 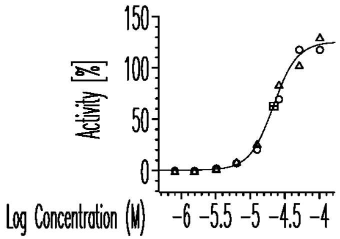 | 2.15895E-05 | | | CONTROL for MOCK |
| CaCl2 | fCaSR | 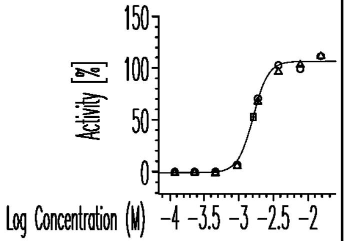 | 0.001622123 | | | CONTROL for fCaSR |
| Spermine | Mock | 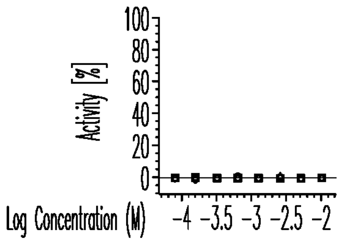 | Inactive | | | |
| Spermine | fCaSR | 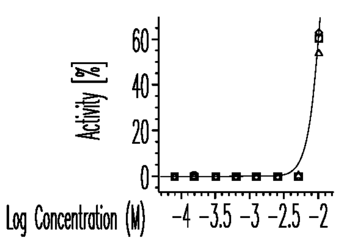 | Active | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 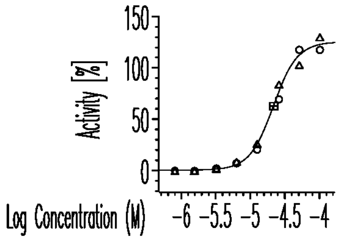 | 2.15895E-05 | | | CONTROL for MOCK |
| CaCl2 | fCaSR | 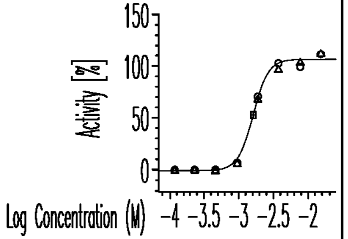 | 0.001622123 | | | CONTROL for fCaSR |
| 1,4,8,11-tetraazacyclotetradecane | Mock | 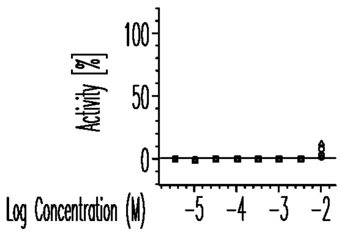 | Inactive | | | |
| 1,4,8,11-tetraazacyclotetradecane | fCaSR | 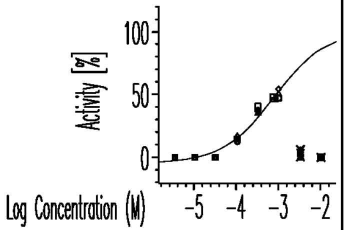 | 0.000773242 | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 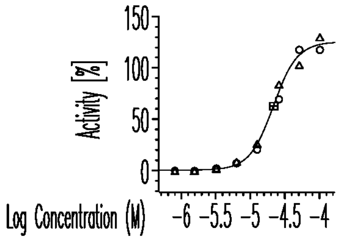 | 2.15895E-05 | | | CONTROL for MOCK |
| CaCl2 | fCaSR | 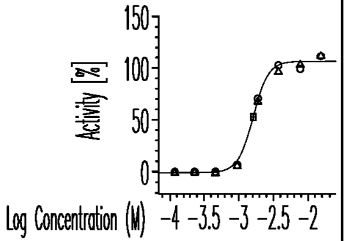 | 0.001622123 | | | CONTROL for fCaSR |
| Gentamicin | Mock | 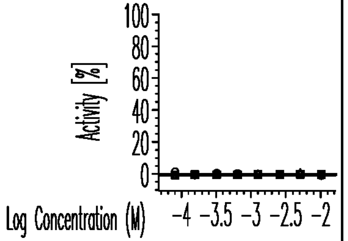 | Inactive | | | |
| Gentamicin | fCaSR | 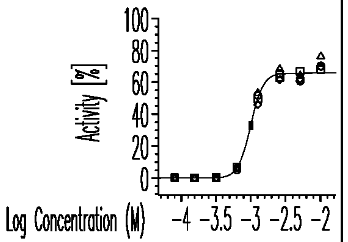 | 0.000989847 | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 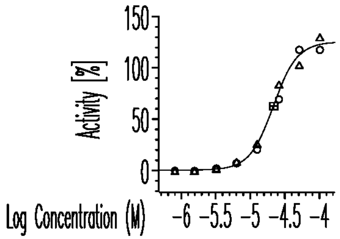 | 2.15895E-05 | | | CONTROL for MOCK |
| CaCl2 | fCaSR | 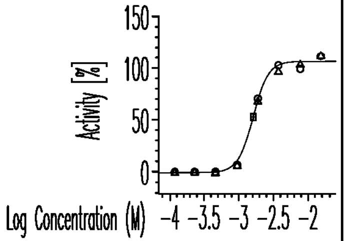 | 0.001622123 | | | CONTROL for fCaSR |
| Neomycin | Mock | 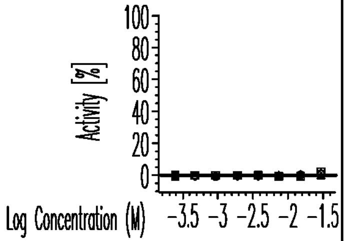 | Inactive | | | |
| Neomycin | fCaSR | 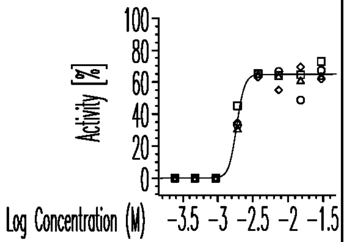 | 0.001868047 | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 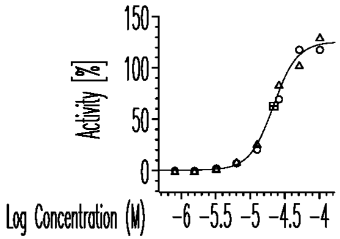 | 2.15895E-05 | | | CONTROL for MOCK |
| CaCl2 | fCaSR | 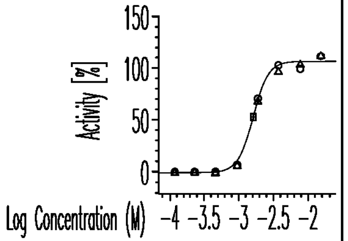 | 0.001622123 | | | CONTROL for fCaSR |
| Tobramycin | Mock | 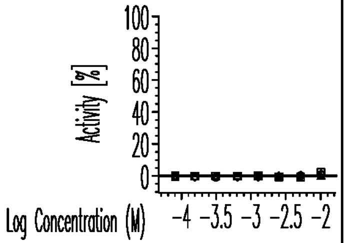 | Inactive | 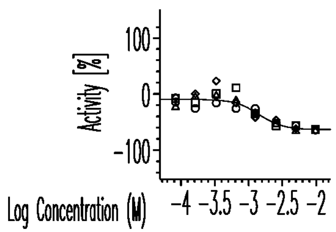 | Inactive | |
| Tobramycin | fCaSR | 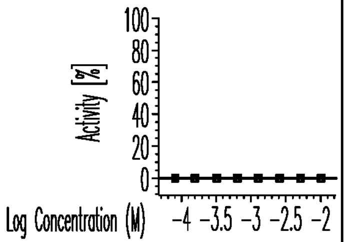 | Inactive | 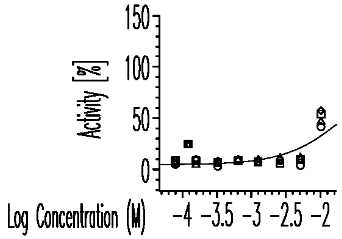 | Active | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 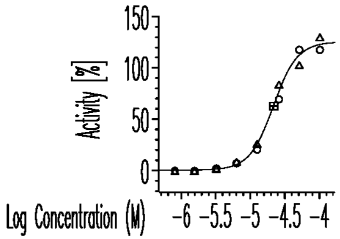  | 2.15895E−05 | | | CONTROL for MOCK |
| CaCl2 | fCaSR | 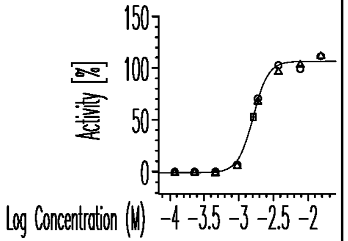  | 0.001622123 | | | CONTROL for fCaSR |
| Paromomycin | Mock | 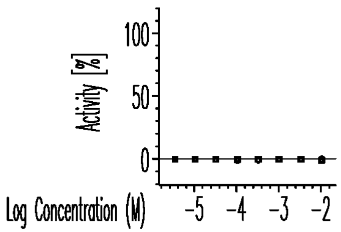  | Inactive | | | |
| Paromomycin | fCaSR | 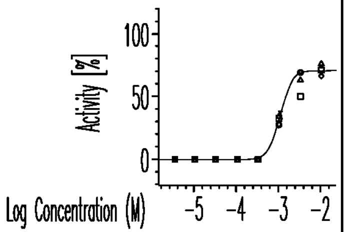  | 0.001084496 | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 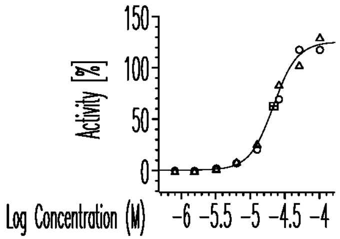  | 2.15895E-05 | | | CONTROL for MOCK |
| CaCl2 | fCaSR | 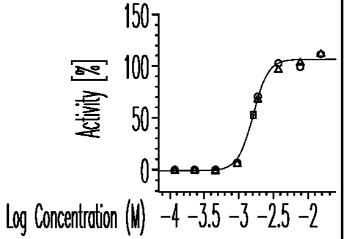  | 0.001622123 | | | CONTROL for fCaSR |
| Ribostamycin | Mock | 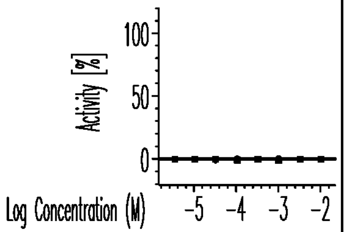  | Inactive | | | |
| Ribostamycin | fCaSR | 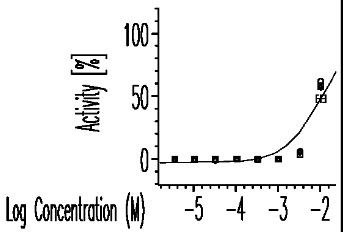  | Active | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 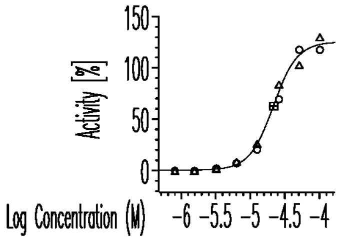 | 2.15895E-05 | | | CONTROL for MOCK |
| CaCl2 | fCaSR | 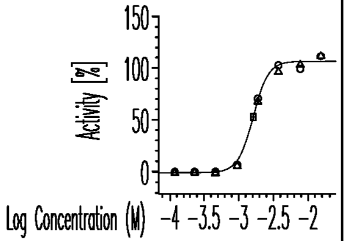 | 0.001622123 | | | CONTROL for fCaSR |
| Sisomicin sulfate salt | Mock | 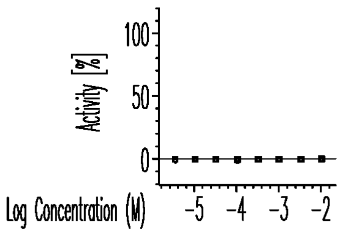 | Inactive | | | |
| Sisomicin sulfate salt | fCaSR | 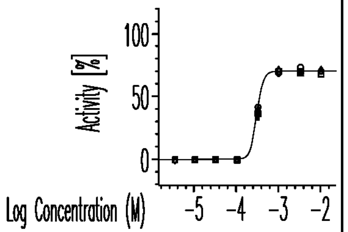 | 0.000299662 | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 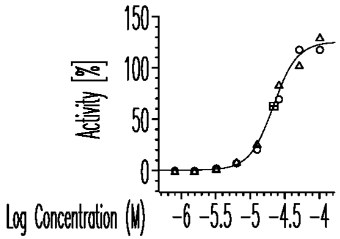 | 2.15895E-05 | | | CONTROL for MOCK |
| CaCl2 | fCaSR | 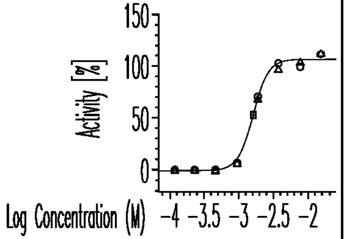 | 0.001622123 | | | CONTROL for fCaSR |
| Geneticin | Mock | 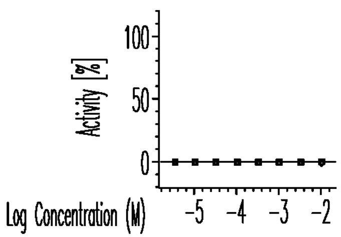 | Inactive | | | |
| Geneticin | fCaSR | 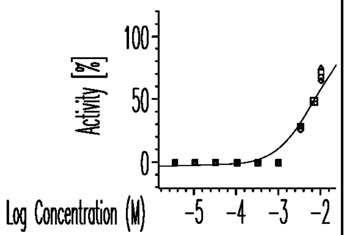 | Active | | | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 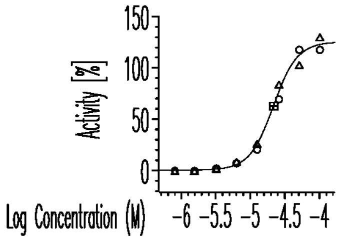  | 2.15895E-05 | | | CONTROL for MOCK |
| CaCl2 | fCaSR | 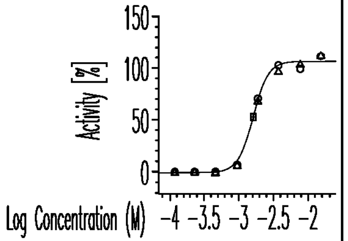  | 0.001622123 | | | CONTROL for fCaSR |
| Cinacalcet | Mock | 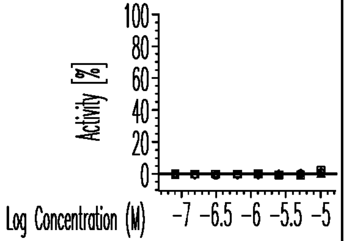  | Inactive | 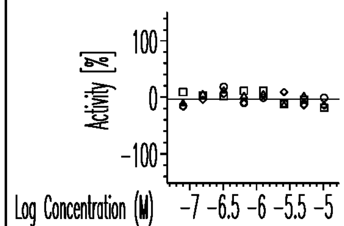  | Inactive | |
| Cinacalcet | fCaSR | 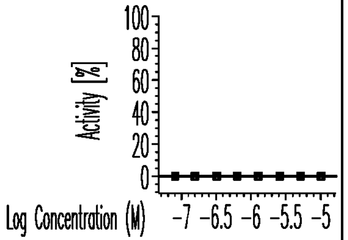  | Inactive | 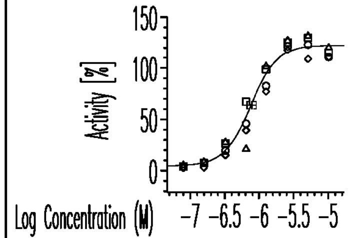  | 7.46105E-07 | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 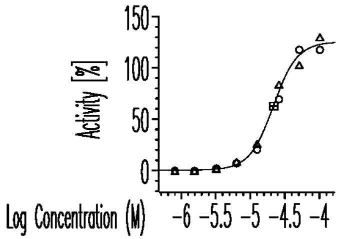 | 2.15895E-05 | | | CONTROL for MOCK |
| CaCl2 | fCaSR | 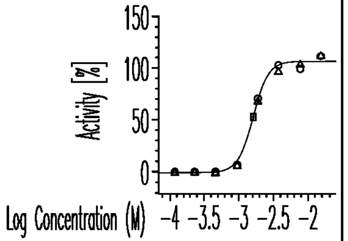 | 0.001622123 | | | CONTROL for fCaSR |
| N-(1-(4-chlorophenyl)ethyl)-3-(4-methoxyphenyl)-6-methylheptan-1-amine | Mock | 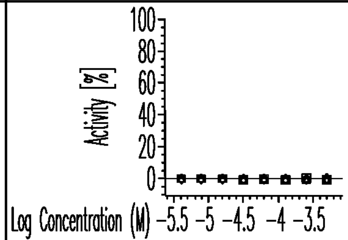 | Inactive | 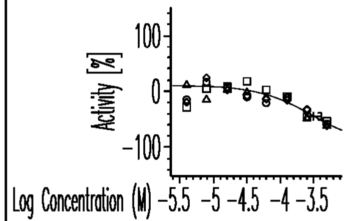 | Inactive | |
| N-(1-(4-chlorophenyl)ethyl)-3-(4-methoxyphenyl)-6-methylheptan-1-amine | fCaSR | 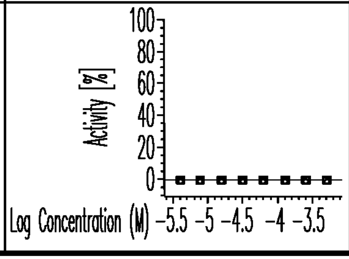 | Inactive | 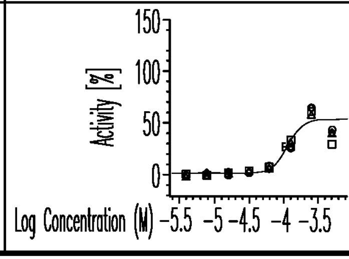 | 0.000114962 | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 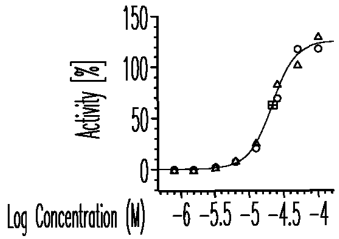  | 2.15895E-05 | | | CONTROL for MOCK |
| CaCl2 | fCaSR | 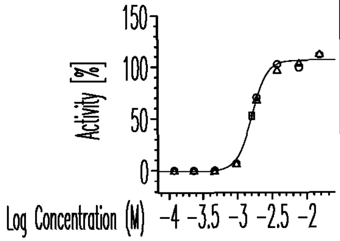  | 0.001622123 | | | CONTROL for fCaSR |
| N-(1-(4-chlorophenyl)ethyl)-3-(furan-2-yl)-3-(p-tolyl)propan-1-amine | Mock | 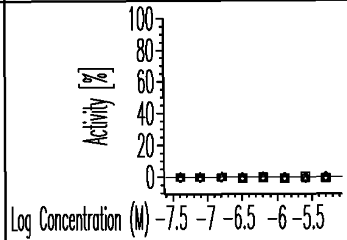  | Inactive | 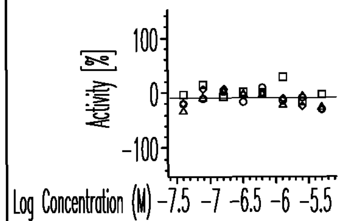  | Inactive | |
| N-(1-(4-chlorophenyl)ethyl)-3-(furan-2-yl)-3-(p-tolyl)propan-1-amine | fCaSR | 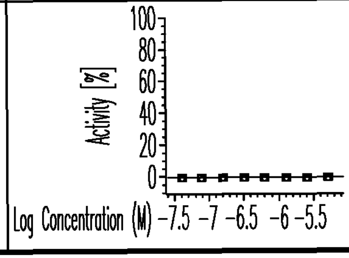  | Inactive | 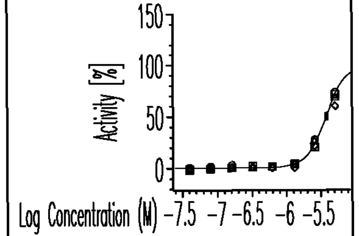  | 3.68478E-06 | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 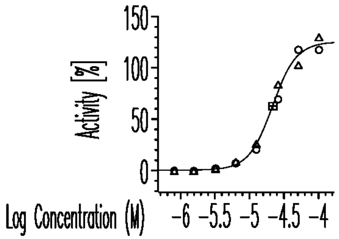 | 2.15895E-05 | | | CONTROL for MOCK |
| CaCl2 | fCaSR | 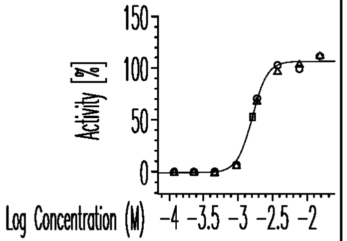 | 0.001622123 | | | CONTROL for fCaSR |
| N-(1-(4-chlorophenyl)ethyl)-3-(4-isopropoxyphenyl)-3-phenylpropan-1-amine | Mock | 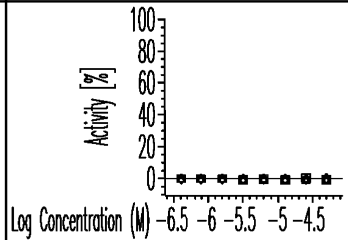 | Inactive | 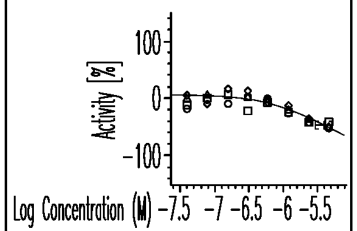 | Inactive | |
| N-(1-(4-chlorophenyl)ethyl)-3-(4-isopropoxyphenyl)-3-phenylpropan-1-amine | fCaSR | 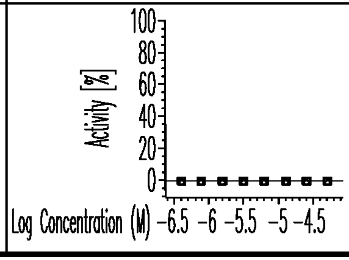 | Inactive | 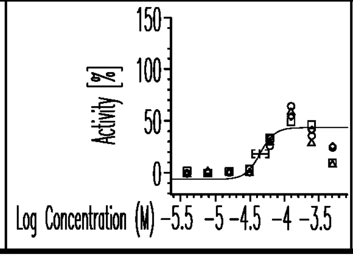 | 4.49052E-06 | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 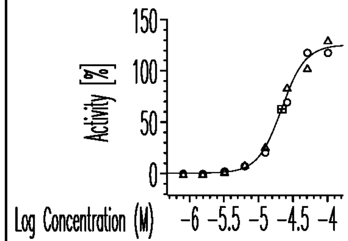 | 2.15895E-05 | | | CONTROL for MOCK |
| CaCl2 | fCaSR | 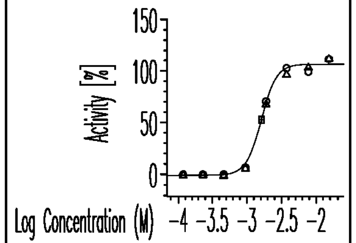 | 0.001622123 | | | CONTROL for fCaSR |
| N-(1-(4-chlorophenyl)ethyl)-3-(4-methoxyphenyl)-4-methylpentan-1-amine | Mock | 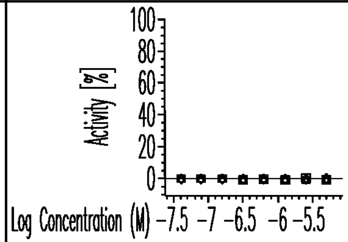 | Inactive | 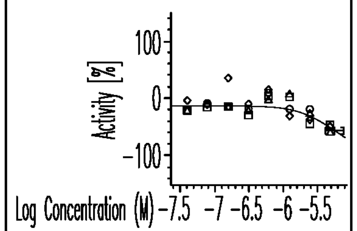 | Inactive | |
| N-(1-(4-chlorophenyl)ethyl)-3-(4-methoxyphenyl)-4-methylpentan-1-amine | fCaSR | 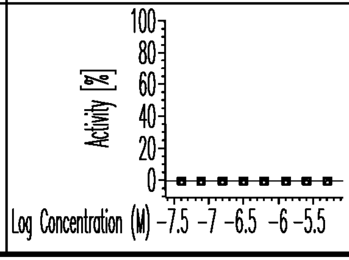 | Inactive | 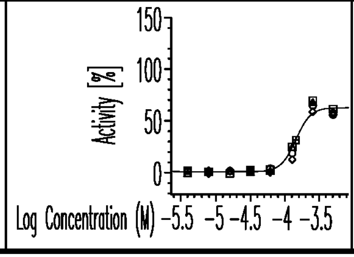 | 1.44874E-06 | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 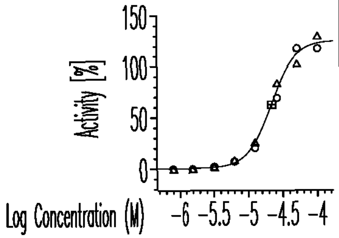 | 2.15895E-05 | | | CONTROL for MOCK |
| CaCl2 | fCaSR | 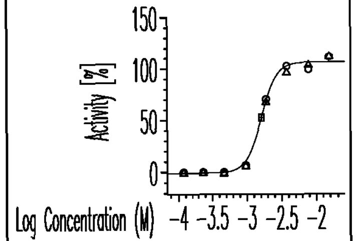 | 0.001622123 | | | CONTROL for fCaSR |
| N-(1-(4-chlorophenyl)ethyl)-3-(4-isopropoxyphenyl)-3-(2-methoxyphenyl) propan- 1-amine | Mock | 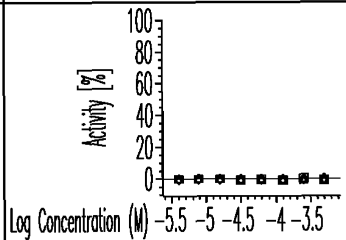 | Inactive | 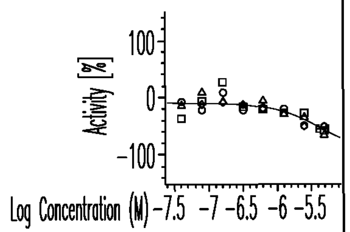 | Inactive | |
| N-(1-(4-chlorophenyl)ethyl)-3-(4-isopropoxyphenyl)-3-(2-methoxyphenyl) propan- 1-amine | fCaSR | 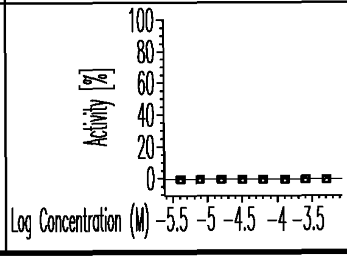 | Inactive | 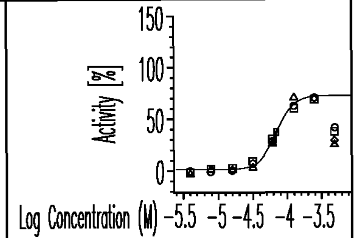 | 7.13774E-07 | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 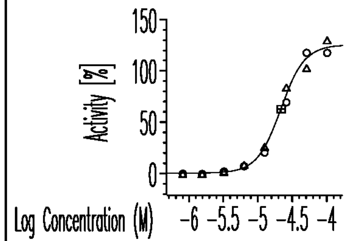 | 2.15895E-05 | | | CONTROL for MOCK |
| CaCl2 | fCaSR | 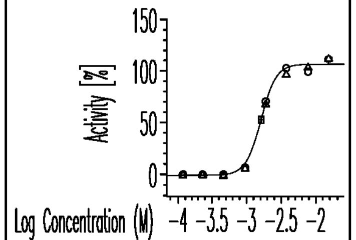 | 0.001622123 | | | CONTROL for fCaSR |
| 3-(furan-2-yl)-3-phenyl-N-(1-phenylethyl)propan-1-amine | Mock | 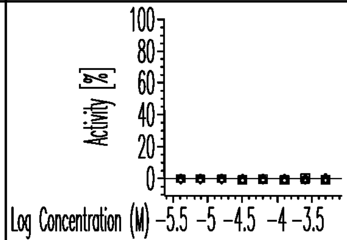 | Inactive | 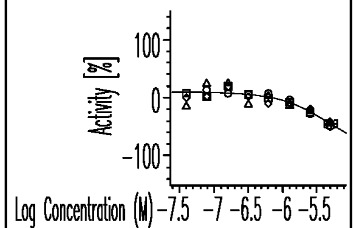 | Inactive | |
| 3-(furan-2-yl)-3-phenyl-N-(1-phenylethyl)propan-1-amine | fCaSR | 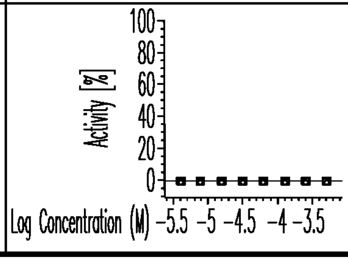 | Inactive | 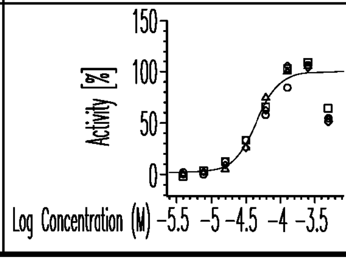 | 4.57282E-07 | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 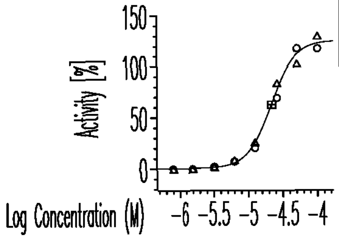 | 2.15895E-05 | | | CONTROL for MOCK |
| CaCl2 | fCaSR | 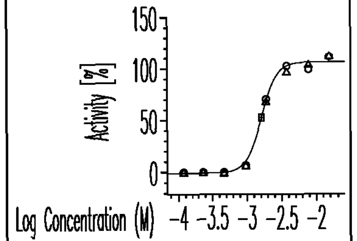 | 0.001622123 | | | CONTROL for fCaSR |
| N-(1-(4-chlorophenyl)ethyl)-3-(furan-2-yl)-3-(2-methoxyphenyl)propan-1-amine | Mock | 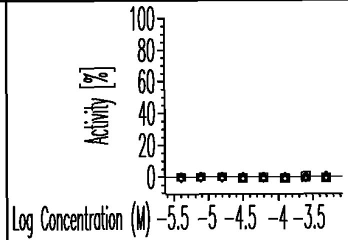 | Inactive | 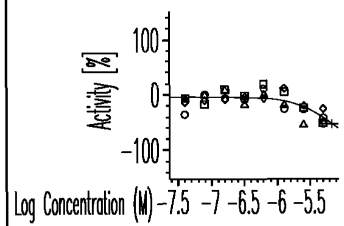 | Inactive | |
| N-(1-(4-chlorophenyl)ethyl)-3-(furan-2-yl)-3-(2-methoxyphenyl)propan-1-amine | fCaSR | 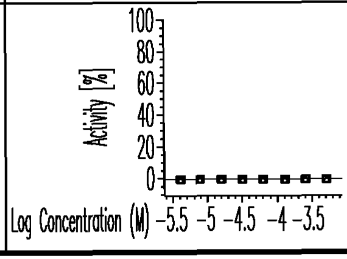 | Inactive | 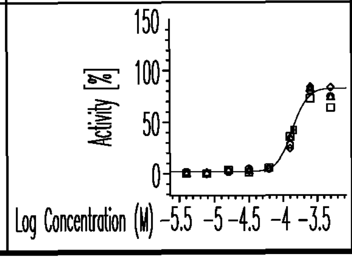 | 1.40781E-06 | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 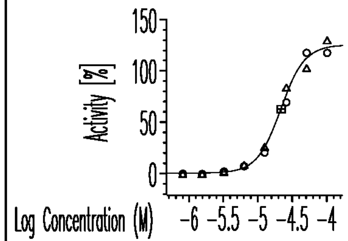 | 2.15895E-05 | | | CONTROL for MOCK |
| CaCl2 | fCaSR | 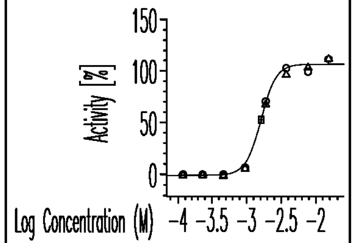 | 0.001622123 | | | CONTROL for fCaSR |
| N-(1-(4-chlorophenyl)ethyl)-3-(4-isopropoxyphenyl)-6-methylheptan-1-amine | Mock | 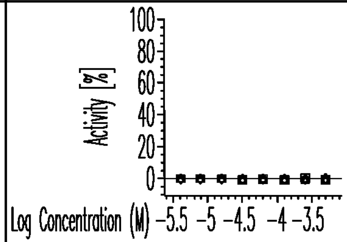 | Inactive | 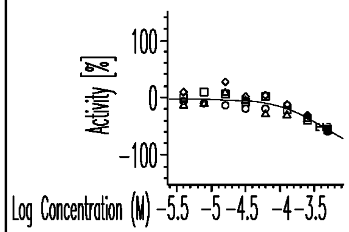 | Inactive | |
| N-(1-(4-chlorophenyl)ethyl)-3-(4-isopropoxyphenyl)-6-methylheptan-1-amine | fCaSR | 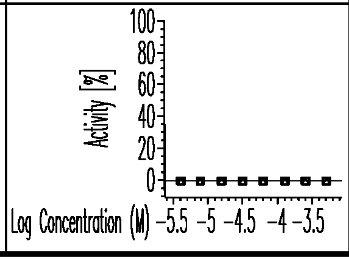 | Inactive | 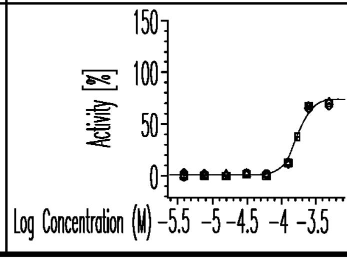 | 0.000171864 | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 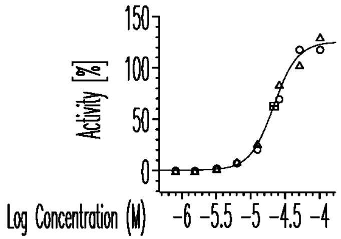 | 2.15895E-05 | | | CONTROL for MOCK |
| CaCl2 | fCaSR | 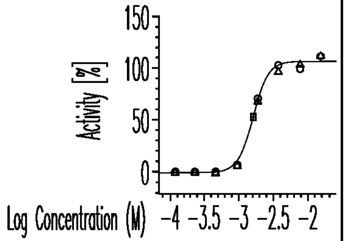 | 0.001622123 | | | CONTROL for fCaSR |
| N-(1-(4-chlorophenyl)ethyl)-3-(4-isopropoxyphenyl)-4-methylpentan-1-amine | Mock | 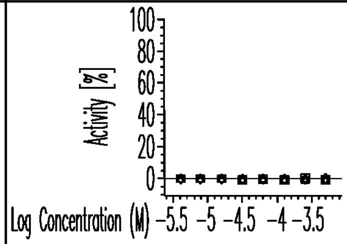 | Inactive | 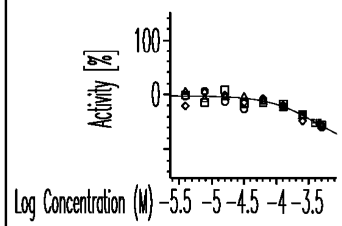 | Inactive | |
| N-(1-(4-chlorophenyl)ethyl)-3-(4-isopropoxyphenyl)-4-methylpentan-1-amine | fCaSR | 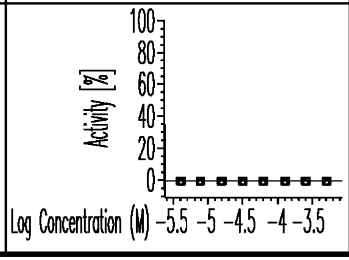 | Inactive | 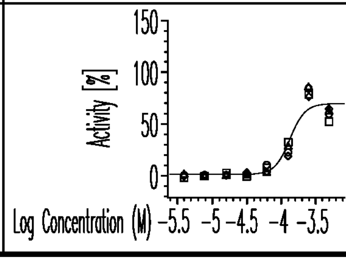 | 0.000135294 | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 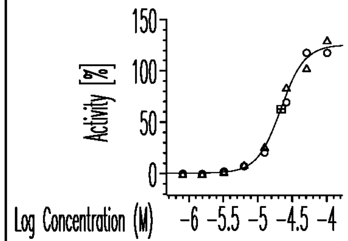 | 2.15895E-05 | | | CONTROL for MOCK |
| CaCl2 | fCaSR | 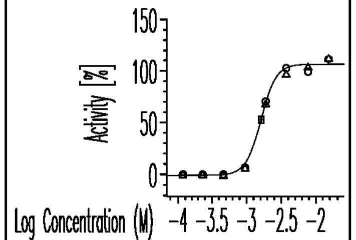 | 0.001622123 | | | CONTROL for fCaSR |
| 3-(furan-2-yl)-N-(1-phenylethyl)-3-(p-tolyl)propan-1-amine | Mock | 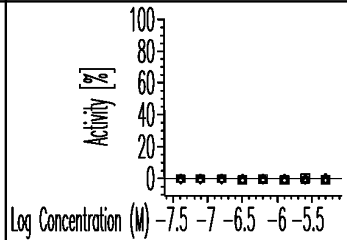 | Inactive | 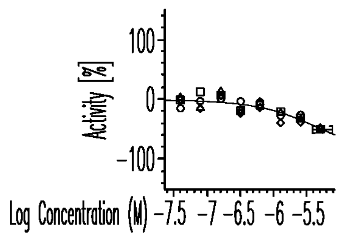 | Inactive | |
| 3-(furan-2-yl)-N-(1-phenylethyl)-3-(p-tolyl)propan-1-amine | fCaSR | 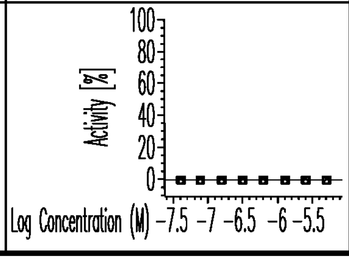 | Inactive | 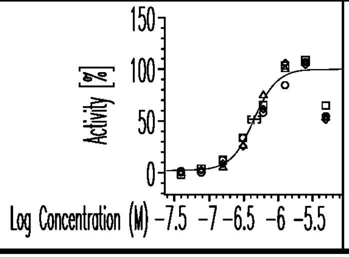 | 7.51716E-07 | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 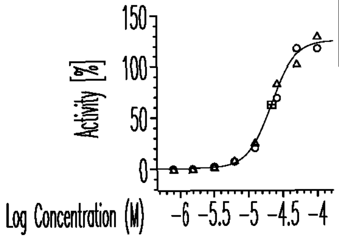 | 2.15895E-05 | | | CONTROL for MOCK |
| CaCl2 | fCaSR | 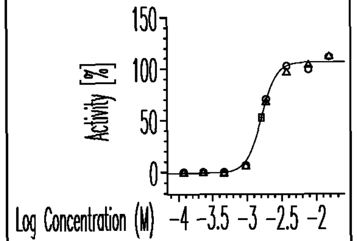 | 0.001622123 | | | CONTROL for fCaSR |
| 3-(2,2-dimethyltetrahydro -2H-pyran-4-yl)-3- phenyl-N- (1-phenylethyl) propan-1- amine | Mock | 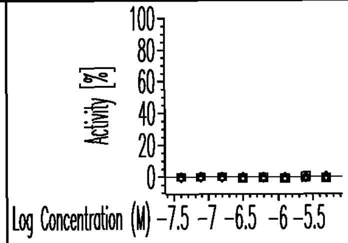 | Inactive | 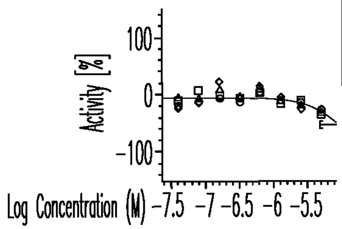 | Inactive | |
| 3-(2,2-dimethyltetrahydro -2H-pyran-4-yl)-3- phenyl-N- (1-phenylethyl) propan-1- amine | fCaSR | 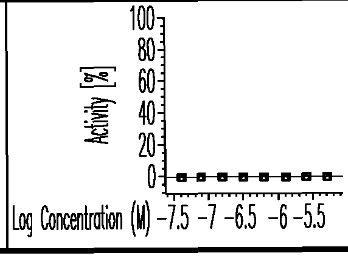 | Inactive | 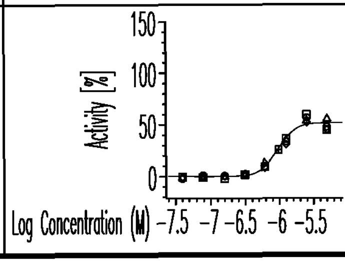 | 9.87677E-07 | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 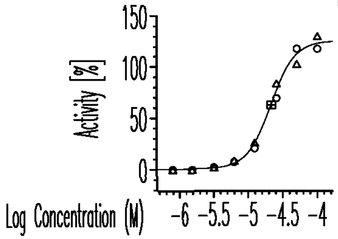  | 2.15895E-05 | | | CONTROL for MOCK |
| CaCl2 | fCaSR | 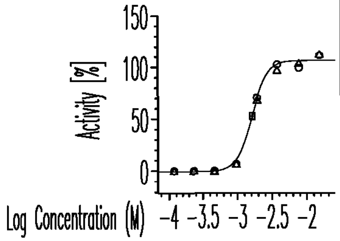  | 0.001622123 | | | CONTROL for fCaSR |
| 3-(furan-2-yl)-N-(1-(thiophen-2-yl)ethyl)-3-(p-tolyl)propan-1-amine | Mock | 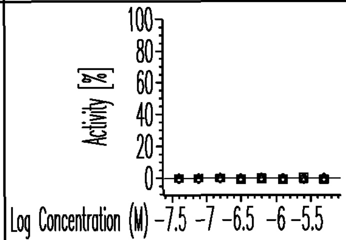  | Inactive | 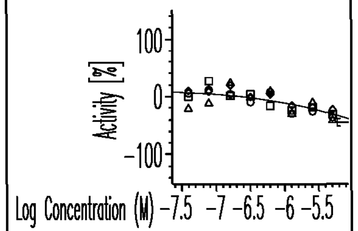  | Inactive | |
| 3-(furan-2-yl)-N-(1-(thiophen-2-yl)ethyl)-3-(p-tolyl)propan-1-amine | fCaSR | 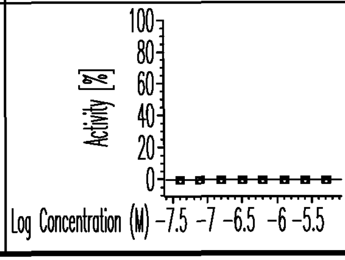  | Inactive | 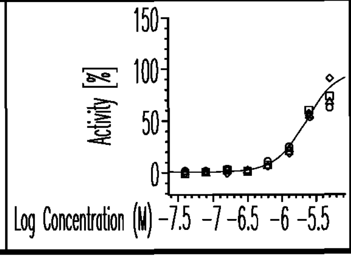  | 2.25131E-06 | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 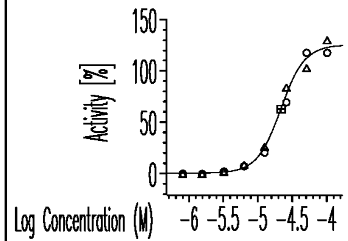 | 2.15895E−05 | | | CONTROL for MOCK |
| CaCl2 | fCaSR | 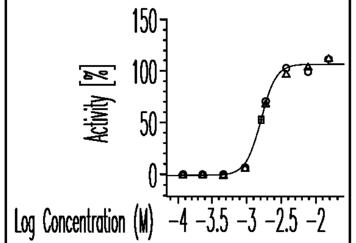 | 0.001622123 | | | CONTROL for fCaSR |
| N−(1−(4−chlorophenyl)ethyl)−3−(furan−2−yl)−4−phenylbutan−1−amine | Mock | 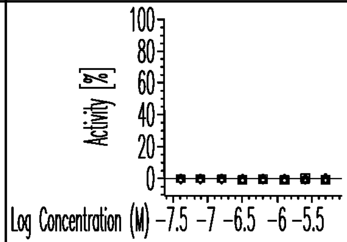 | Inactive | 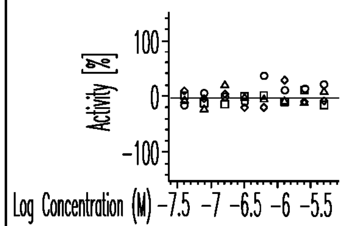 | Inactive | |
| N−(1−(4−chlorophenyl)ethyl)−3−(furan−2−yl)−4−phenylbutan−1−amine | fCaSR | 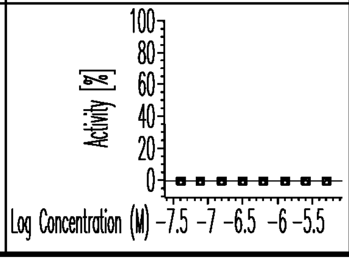 | Inactive | 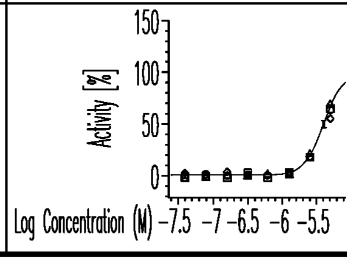 | 3.99941E−06 | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 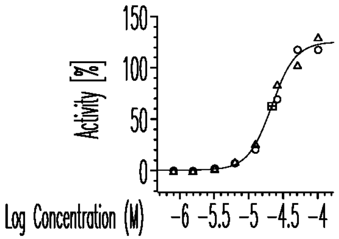  | 2.15895E-05 | | | CONTROL for MOCK |
| CaCl2 | fCaSR | 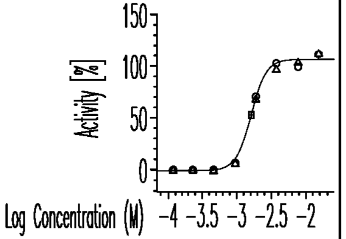  | 0.001622123 | | | CONTROL for fCaSR |
| 3-(furan-2-yl)-4-phenyl -N- (1-phenylethyl)butan -1- amine | Mock | 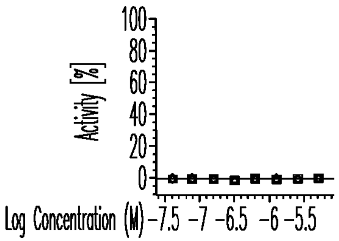  | Inactive | 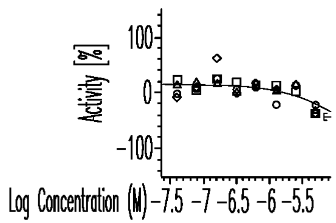  | Inactive | |
| 3-(furan-2-yl)-4-phenyl -N- (1-phenylethyl)butan -1- amine | fCaSR | 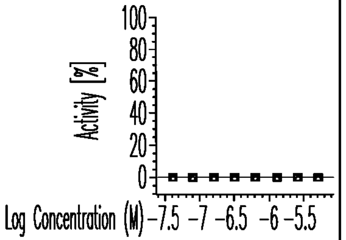  | Inactive | 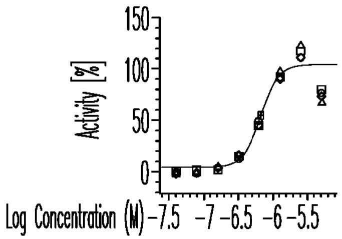  | 6.73283E-07 | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 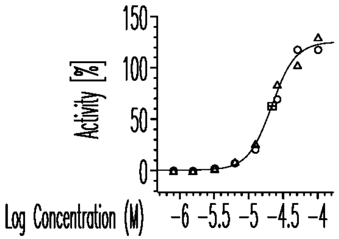  | 2.15895E-05 | | | CONTROL for MOCK |
| CaCl2 | fCaSR | 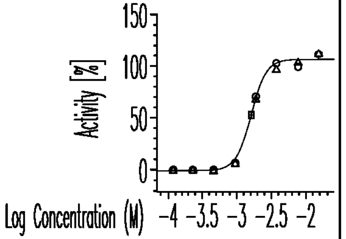  | 0.001622123 | | | CONTROL for fCaSR |
| 3-((8-chloro-2,3,4,5-tetrahydrobenzo[b]oxepin-5-yl)amino)-2-(pyridin-2-ylmethyl)propan-1-ol | Mock | 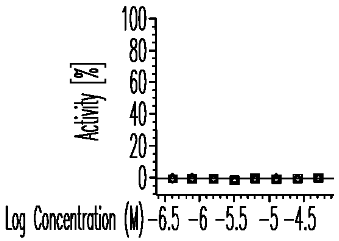  | Inactive | 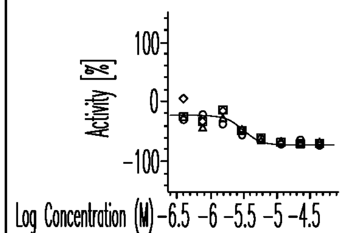  | Inactive | |
| 3-((8-chloro-2,3,4,5-tetrahydrobenzo[b]oxepin-5-yl)amino)-2-(pyridin-2-ylmethyl)propan-1-ol | fCaSR | 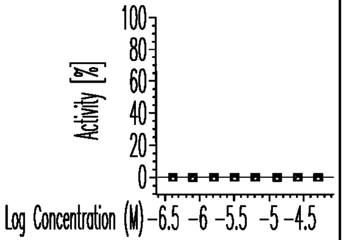  | Inactive | 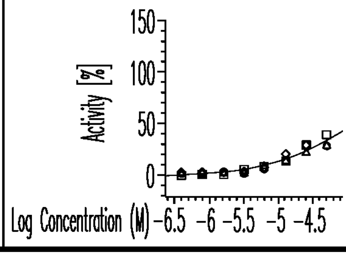  | Active | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 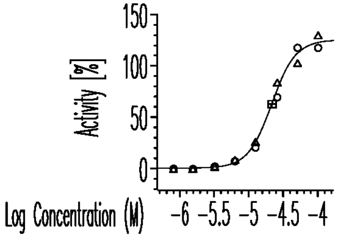 | 2.15895E-05 | | | CONTROL for MOCK |
| CaCl2 | fCaSR | 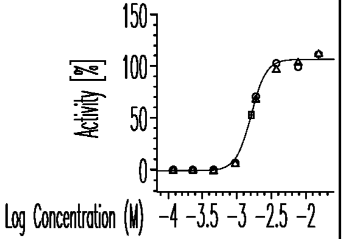 | 0.001622123 | | | CONTROL for fCaSR |
| N-((2,3-dihydrobenzofuran-2-yl)methyl)-1-(quinolin-2-yl)ethanamine | Mock | 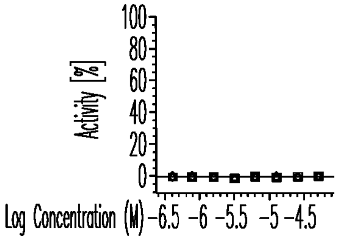 | Inactive | 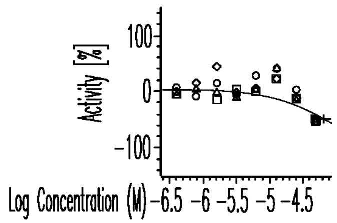 | Inactive | |
| N-((2,3-dihydrobenzofuran-2-yl)methyl)-1-(quinolin-2-yl)ethanamine | fCaSR | 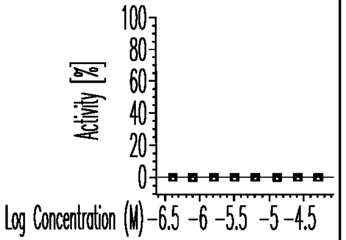 | Inactive | 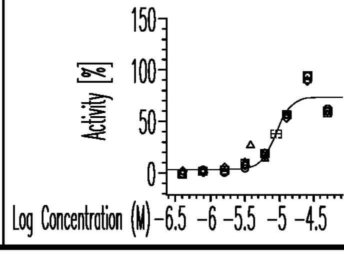 | 9.00814E-06 | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 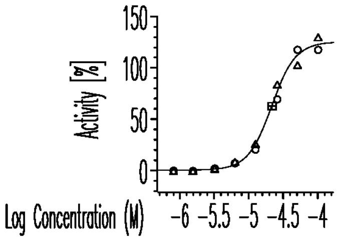 | 2.15895E−05 | | | CONTROL for MOCK |
| CaCl2 | fCaSR | 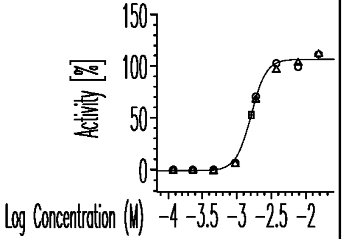 | 0.001622123 | | | CONTROL for fCaSR |
| 6−bromo−4−fluoro−N−(1−(pyridin−4−yl)ethyl)−2,3−dihydro−1H−inden−1−amine | Mock | 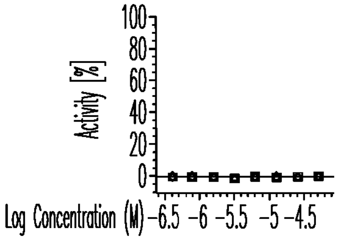 | Inactive | 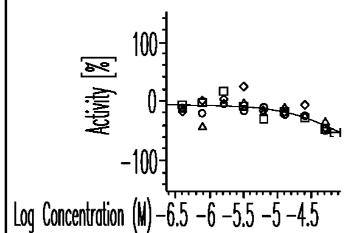 | Inactive | |
| 6−bromo−4−fluoro−N−(1−(pyridin−4−yl)ethyl)−2,3−dihydro−1H−inden−1−amine | fCaSR | 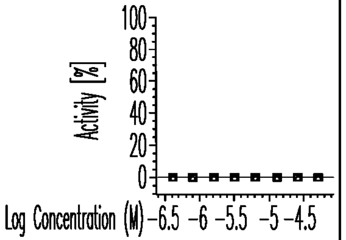 | Inactive | 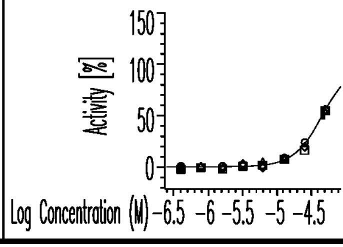 | Active | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 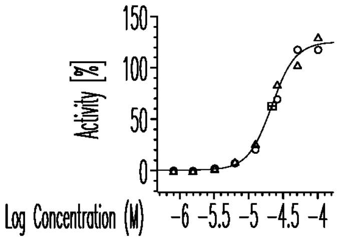 | 2.15895E-05 | | | CONTROL for MOCK |
| CaCl2 | fCaSR | 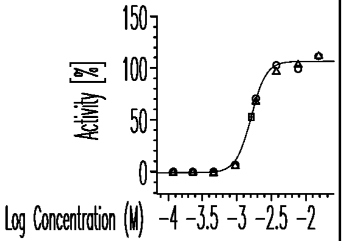 | 0.001622123 | | | CONTROL for fCaSR |
| 2,6-dichloro-4-(1-(((1-methyl-2-(thiophen-2-yl)piperidin-3-yl)methyl)amino)ethyl)aniline | Mock | 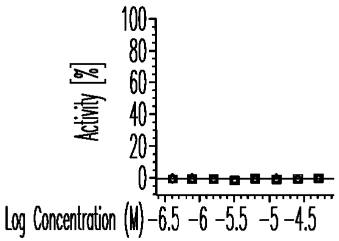 | Inactive | 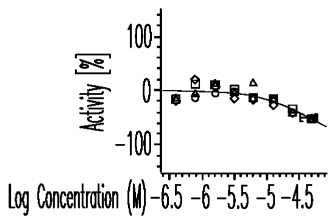 | Inactive | |
| 2,6-dichloro-4-(1-(((1-methyl-2-(thiophen-2-yl)piperidin-3-yl)methyl)amino)ethyl)aniline | fCaSR | 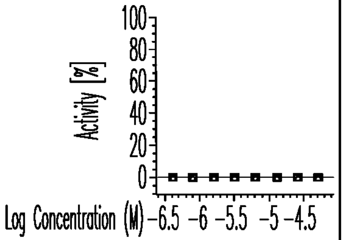 | Inactive | 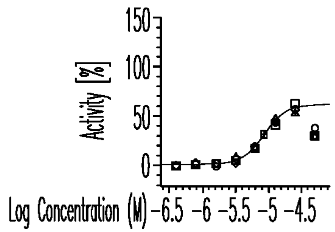 | 8.68191E-06 | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 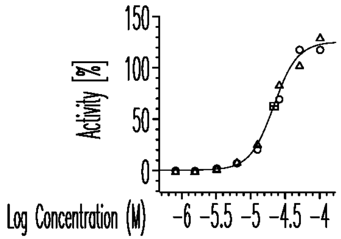 | 2.15895E-05 | | | CONTROL for MOCK |
| CaCl2 | fCaSR | 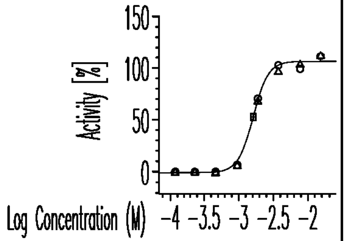 | 0.001622123 | | | CONTROL for fCaSR |
| N-(1-(1H-indol-2-yl) ethyl)-1-(3,4-dimethylphenyl)ethanamine | Mock | 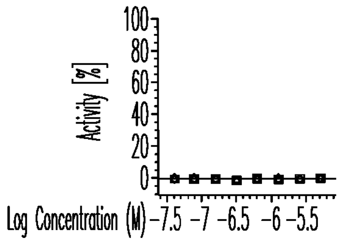 | Inactive | 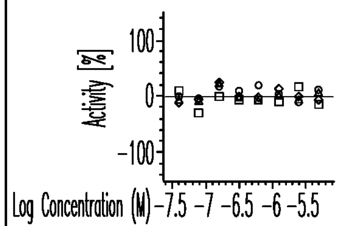 | Inactive | |
| N-(1-(1H-indol-2-yl) ethyl)- 1-(3,4-dimethylphenyl)ethanamine | fCaSR | 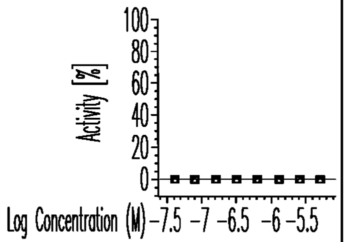 | Inactive | 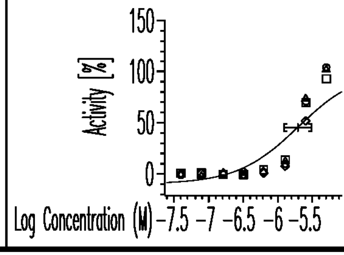 | Active | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 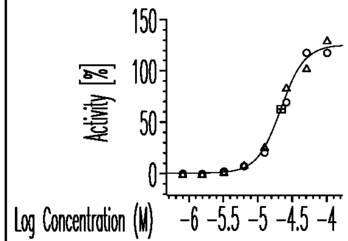 | 2.15895E-05 | | | CONTROL for MOCK |
| CaCl2 | fCaSR | 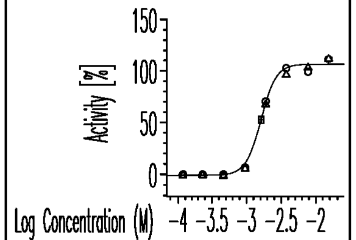 | 0.001622123 | | | CONTROL for fCaSR |
| 1-(4-chlorophenyl)-N-(2-(2,2-dimethyl-4-(p-tolyl)tetrahydro-2H-pyran-4-yl)ethyl)ethanamine | Mock | 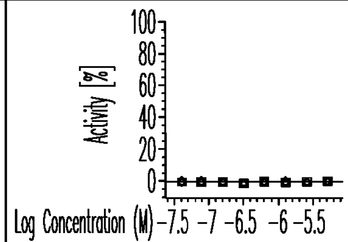 | Inactive | 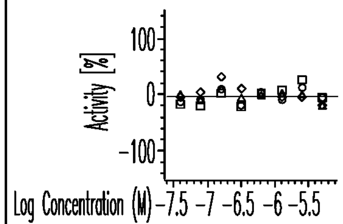 | Inactive | |
| 1-(4-chlorophenyl)-N-(2-(2,2-dimethyl-4-(p-tolyl)tetrahydro-2H-pyran-4-yl)ethyl)ethanamine | fCaSR | 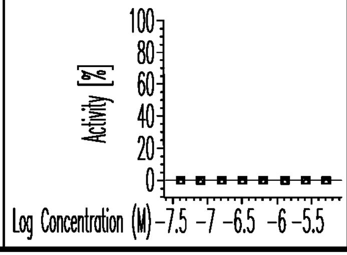 | Inactive | 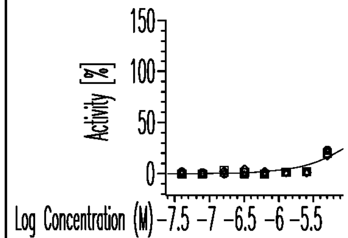 | Active | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 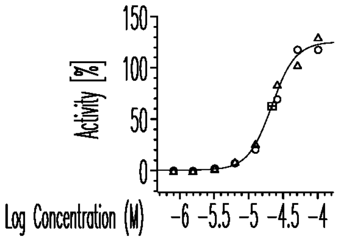 | 2.15895E-05 | | | CONTROL for MOCK |
| CaCl2 | fCaSR | 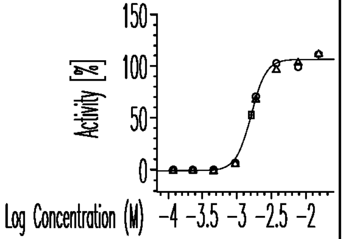 | 0.001622123 | | | CONTROL for fCaSR |
| methyl 2-(3-cyanophenyl) -2-((4-fluoro-2,3-dihydro- 1H-inden-1-yl)amino)acetate | Mock | 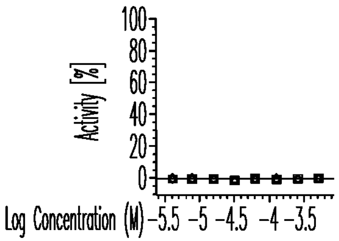 | Inactive | 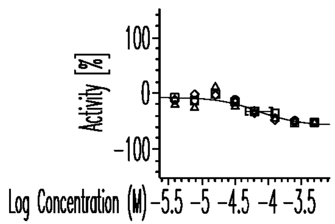 | Inactive | |
| methyl 2-(3-cyanophenyl) -2-((4-fluoro-2,3-dihydro- 1H-inden-1-yl)amino)acetate | fCaSR | 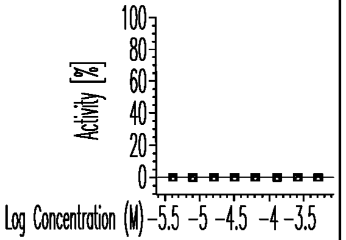 | Inactive | 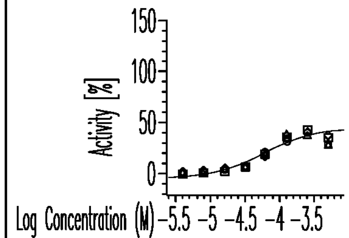 | 5.88796E-05 | |

FIG. 21 Continued

| Compound ID | Target Name | Curve AGO | Activity AGO (EC50 if calculated) | Curve PAM | Activity PAM (EC50 if calculated) | Comment |
| --- | --- | --- | --- | --- | --- | --- |
| Carbachol | Mock | 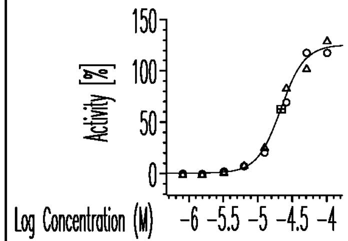 | 2.15895E−05 | | | CONTROL for MOCK |
| CaCl2 | fCaSR | 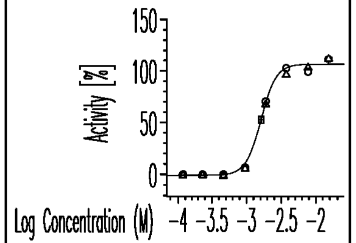 | 0.001622123 | | | CONTROL for fCaSR |
| 3−phenyl−1−(1,2,3,4−tetrahydronaphthalen−1−yl)pyrrolidine | Mock | 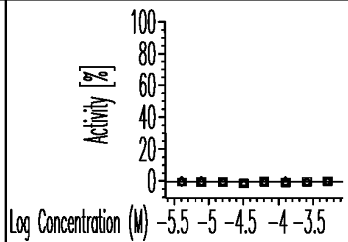 | Inactive | 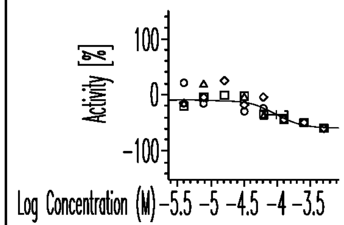 | Inactive | |
| 3−phenyl−1−(1,2,3,4−tetrahydronaphthalen−1−yl)pyrrolidine | fCaSR | 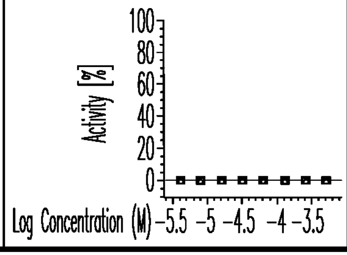 | Inactive | 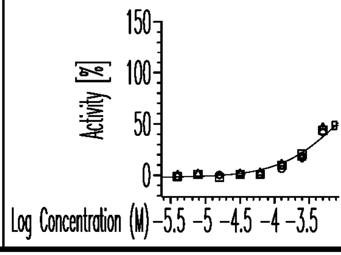 | Active | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 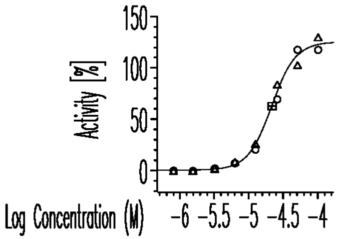 | 2.15895E-05 | | | CONTROL for MOCK |
| CaCl2 | fCaSR | 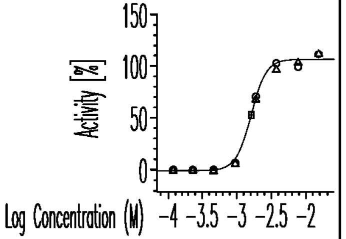 | 0.001622123 | | | CONTROL for fCaSR |
| 2-(2-acetyl-1,2-dihydroisoquinolin-1-yl)-N-(1-(3-bromophenyl)ethyl)acetamide | Mock | 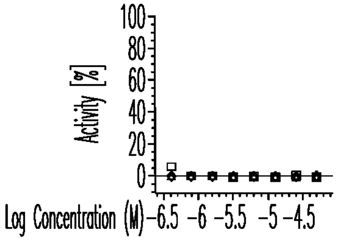 | Inactive | 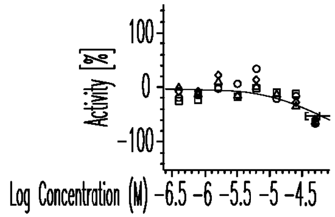 | Inactive | |
| 2-(2-acetyl-1,2-dihydroisoquinolin-1-yl)-N-(1-(3-bromophenyl)ethyl)acetamide | fCaSR | 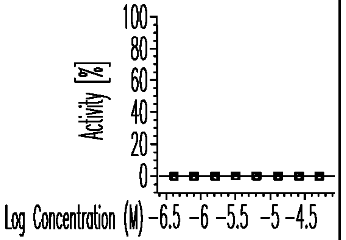 | Inactive | 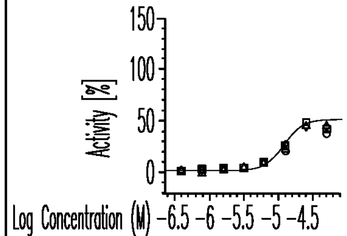 | 1.21254E-05 | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 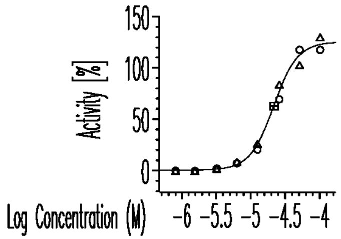 | 2.15895E-05 | | | CONTROL for MOCK |
| CaCl2 | fCaSR | 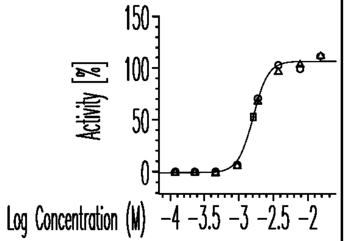 | 0.001622123 | | | CONTROL for fCaSR |
| 1-(benzo[d]thiazol-2-yl) -1-(2,4-dimethylphenyl) | Mock | 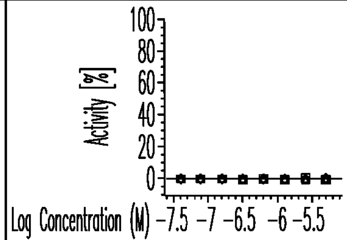 | Inactive | 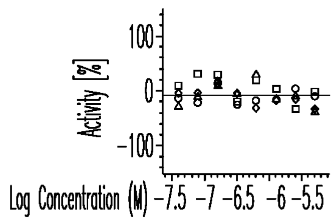 | Inactive | |
| 1-(benzo[d]thiazol-2-yl) -1-(2,4-dimethylphenyl) | fCaSR | 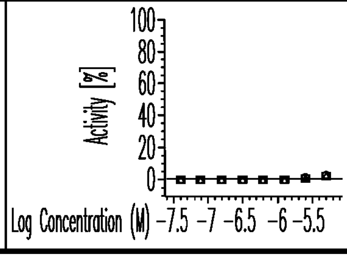 | Inactive | 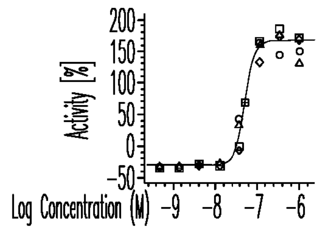 | 5.11238E-08 | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 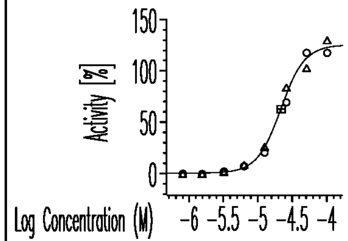 | 2.15895E-05 | | | CONTROL for MOCK |
| CaCl2 | fCaSR | 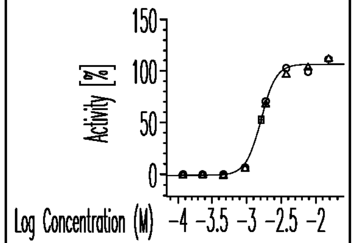 | 0.001622123 | | | CONTROL for fCaSR |
| 1-(4-amino-2,5-dimethoxyphenyl)-1-(benzo[d]thiazol-2-yl-) 2,2,2-trifluoroethanol | Mock | 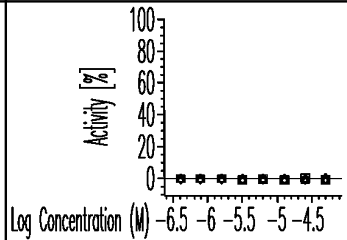 | Inactive | 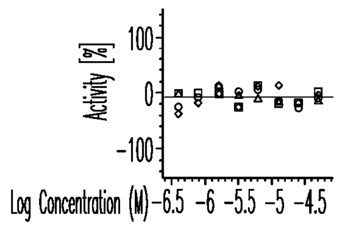 | Inactive | |
| 1-(4-amino-2,5-dimethoxyphenyl)-1-(benzo[d]thiazol-2-yl-) 2,2,2-trifluoroethanol | fCaSR | 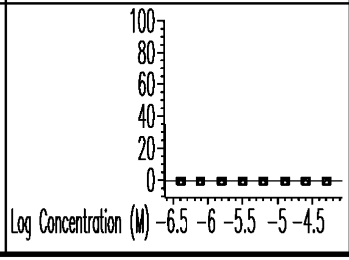 | Inactive | 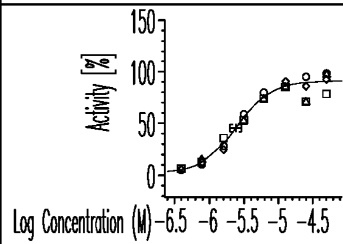 | 2.41537E-06 | |

FIG. 21 Continued

| Compound ID | Target Name | Curve AGO | Activity AGO (EC50 if calculated) | Curve PAM | Activity PAM (EC50 if calculated) | Comment |
|---|---|---|---|---|---|---|
| Carbachol | Mock | 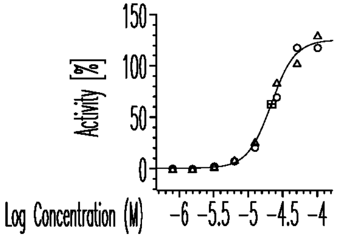 | 2.15895E-05 | | | CONTROL for MOCK |
| CaCl2 | fCaSR | 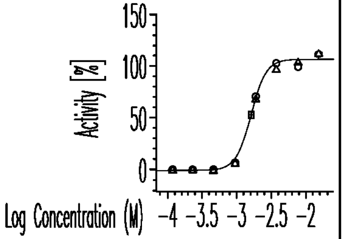 | 0.001622123 | | | CONTROL for fCaSR |
| Calindol | fCaSR | | | 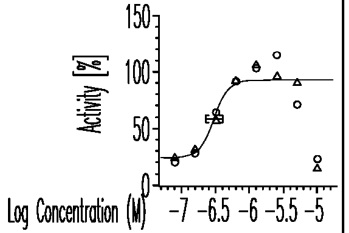 | 2.96569E-07 | CONTROL for fCaSR |

FIG. 21 Continued

| Compound | | AA 5mM (fCaSR) | AA 10mM (fCaSR) | AA 15mM (fCaSR) |
|---|---|---|---|---|
| Compound ID | Overlay_fCaSR | EC50 | EC50 | EC50 |
| L-Arginine | 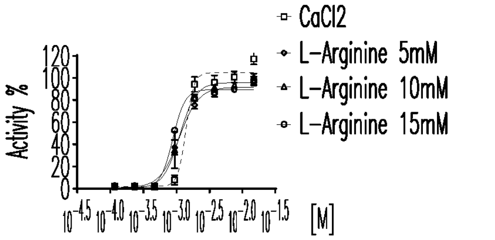 | 0.001050518 | 0.001209268 | 0.000863781 |
| L-Lysine | 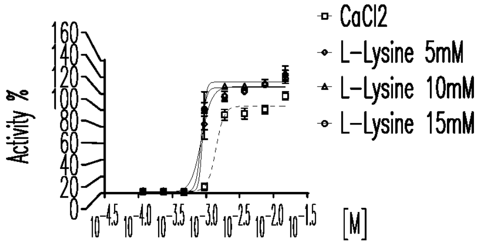 | 0.000826756 | 0.00085824 | 0.00073785 |
| L-Phenylalanine | 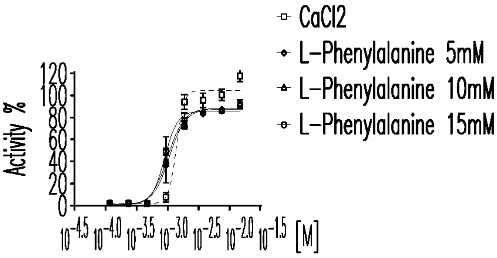 | 0.001155122 | 0.000971213 | 0.000988071 |
| L-Tryptophan | 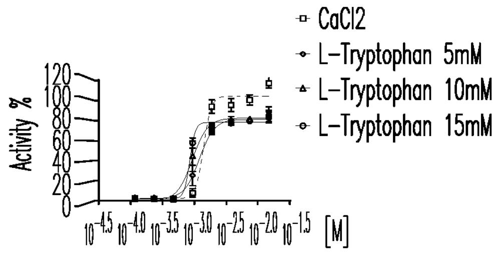 | 0.001135371 | 0.001057593 | 0.000764921 |
| CaCl2_3 | 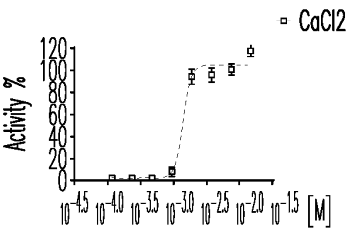 | | | 0.001337644 |

FIG. 22A

| Compound ID | Overlay_fCaSR | Ratio EC50 CaCl/AA | Ratio EC50 CaCl/AA | Ratio EC50 CaCl/AA |
|---|---|---|---|---|
| L-Arginine | 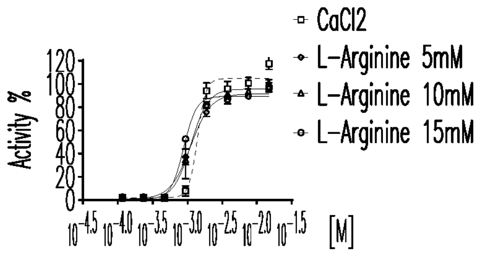 | 1.2733 | 1.1062 | 1.5486 |
| L-Lysine | 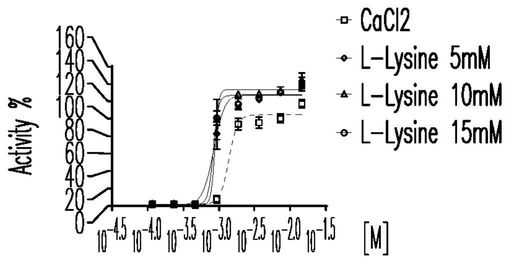 | 1.6179 | 1.5586 | 1.8129 |
| L-Phenylalanine | 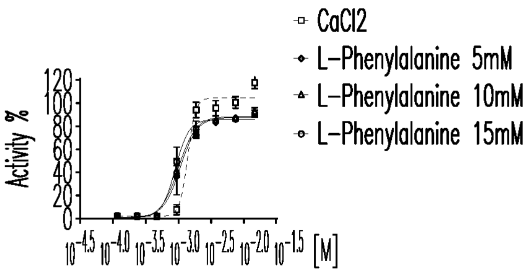 | 1.1580 | 1.3773 | 1.3538 |
| L-Tryptophan | 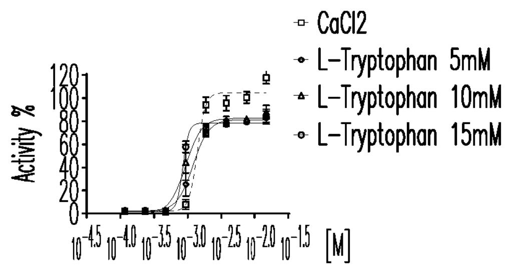 | 1.1782 | 1.2648 | 1.7487 |
| CaCl2_3 | 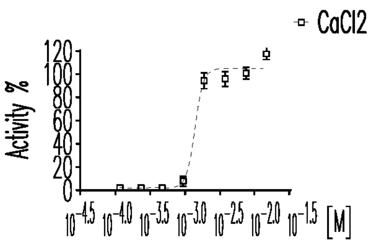 | 1.0000 | | |

FIG. 22B

Feline Calcium-Sensing Receptor Amino Acid Sequence (SEQ ID NO: 1)

MAFYSCCLILLAITWCTSAYGPDQRAQKKGDIILGGLFPIHFGVAAKDQDLKSRPESVECIR
YNFRGFRWLQAMIFAIEEINSSPVLLPNMTLGYRIFDTCNTVSKALEATLSFVAQNKIDSLN
LDEFCNCSEHIPSTIAVVGATGSGISTAVANLLGLFYIPQVSYASSSRLLSNKNQFKSFLRT
IPNDEHQATAMADIIEYFRWNWVGTIAADDDYGRPGIEKFREEAEERDICIDFSELISQYSD
EEEIQQVVEVIQNSTAKVIVVFSSGPDLEPLIKEIVRRNITGRIWLASEAWASSSLIAMPEY
FHVVGGTIGFALKAGQIPGFREFLQKVHPRKSVHNGFAKEFWEETFNCHLQEGAKGPLALDT
FLRGHEEGGGRISNSSTALRPLCTGDENISSVETPYMDYTHLRISYNVYLAVYSIAHALQDI
YTCLPGRGLFTNGSCADIKKVEAWQVLKHLRHLNFTNNMGEQVTFDECGDLVGNYSIINWHL
SPEDGSIVFKEVGYYNVYAKKGERLFINEEKILWSGFSREVPFSNCSRDCLAGTRKGIIEGE
PTCCFECVECPDGEYSDETDASACDKCPDDFWSNENHTSCIAKEIEFLSWTEPFGIALTLFA
VLGIFLTAFVLGVFLKFRNTPIVKATNRELSYLLLFSLLCCFSSSLFFIGEPQDWTCRLRQP
AFGISFVLCISCILVKTNRVLLVFEAKIPTSFHRKWWGLNLQFLLVFLCTFMQIVICVIWLY
TAPPSSYRNHELEDEIIFITCHEGSLMALGFLIGYTCLLAAICFFFAFKSRKLPENFNEAKF
ITFSMLIFFIVWISFIPAYASTYGKFVSAVEVIAILAASFGLLACIFFNKVYIILFKPSRNT
IEEVRCSTAAHAFKVAARATLRRSNVSRKRSSSLGGSTGSTPSSSISSKSNSEDPFPQPERQ
KQQQPLALTQQEQQPQPQQPSSLQQQPQPQPQPRCKQKVIFGSGTVTFSLSFDEPQKSAMAH
RNSMHQNSLEAQKSNETLTRHQALLPLQCGETDSELSAQERGLQGPVDGDFRPEMEDPEEMS
PALVVSSSQSFVISGGGSTVTENILHS

FIG. 23

Feline Calcium-Sensing Receptor Nucleotide Sequence (SEQ ID NO: 2)

ATGGCATTTTATAGCTGCTGTTTGATCCTCTTGGCAATTACCTGGTGCACTTCTGCCTATGG
GCCTGACCAACGAGCTCAGAAGAAAGGGGACATTATCCTCGGGGGGCTCTTTCCTATTCATT
TTGGAGTAGCAGCCAAAGATCAAGATCTAAAGTCAAGGCCAGAGTCTGTGGAATGTATCAGG
TATAATTTCCGTGGGTTTCGCTGGTTACAAGCAATGATATTTGCCATCGAGGAAATAAACAG
CAGCCCAGTCCTTCTTCCCAACATGACACTGGGATACAGGATATTTGACACTTGCAACACTG
TTTCTAAAGCCTTGGAGGCCACTCTGAGTTTTGTGGCACAAAATAAAATTGATTCTCTGAAC
CTCGACGAGTTCTGCAACTGCTCAGAGCATATCCCCTCTACTATCGCTGTGGTGGGAGCAAC
TGGTTCGGGCATCTCCACAGCGGTGGCAAACCTGCTGGGCCTCTTCTATATTCCCCAGGTCA
GCTATGCCTCCTCCAGCAGACTCCTCAGCAACAAAAATCAGTTCAAGTCCTTTCTCCGTACC
ATCCCCAATGATGAACACCAGGCCACTGCCATGGCAGACATTATCGAGTATTTCCGCTGGAA
CTGGGTGGGCACAATTGCTGCTGATGATGACTACGGCCGGCCAGGGATTGAGAAGTTTCGAG
AGGAAGCTGAGGAGAGGGACATCTGCATCGACTTCAGTGAACTCATCTCCCAGTATTCTGAT
GAAGAAGAGATCCAGCAAGTGGTGGAGGTGATCCAGAATTCCACAGCCAAAGTCATTGTTGT
TTTCTCTAGTGGCCCAGACCTTGAACCCCTTATCAAGGAGATTGTCCGGCGTAATATCACAG
GGAGGATCTGGCTGGCCAGCGAGGCCTGGGCCAGCTCTTCCTTGATTGCCATGCCCGAGTAC
TTCCATGTGGTTGGAGGCACCATTGGATTCGCTCTGAAGGCTGGACAGATCCCAGGTTTCCG
GGAATTCCTGCAGAAAGTCCATCCCAGAAAGTCTGTCCACAATGGTTTTGCCAAGGAGTTTT
GGGAAGAAACCTTTAACTGCCACCTCCAAGAAGGTGCTAAAGGACCTTTAGCACTGGACACT
TTCCTGAGAGGTCATGAAGAAGGTGGTGGCAGGATAAGCAATAGCTCCACTGCCTTGCGACC
TCTCTGTACAGGGGACGAGAACATCAGCAGCGTGGAGACCCCTTACATGGATTATACACATT
TACGGATATCCTACAATGTCTACTTAGCGGTCTATTCCATTGCTCATGCCCTGCAAGATATA
TATACATGCTTACCTGGAAGAGGGCTCTTCACCAATGGTTCCTGCGCAGATATCAAGAAGGT
TGAGGCTTGGCAGGTCCTGAAGCACCTACGGCACCTAAACTTTA

FIG. 23 CONTINUED

CCAACAATATGGGGGAGCAGGTGACTTTCGATGAATGTGGGGACCTGGTGGGGAACTATTCC
ATCATCAACTGGCACCTCTCTCCAGAGGATGGCTCCATAGTGTTTAAGGAAGTCGGATATTA
CAACGTCTATGCCAAGAAAGGAGAAAGGCTCTTCATCAATGAGGAGAAAATCCTGTGGAGTG
GATTCTCCAGGGAGGTACCTTTCTCCAACTGCAGTCGAGACTGCCTGGCAGGGACCCGGAAA
GGAATCATTGAGGGGGAGCCCACCTGCTGCTTTGAGTGTGTGGAATGTCCTGATGGGGAGTA
CAGTGATGAAACAGATGCAAGTGCCTGTGACAAGTGCCCCGATGACTTCTGGTCCAATGAGA
ACCACACTTCTTGCATTGCCAAGGAGATTGAGTTTCTGTCCTGGACGGAGCCCTTTGGGATT
GCACTCACTCTCTTTGCTGTGCTGGGCATTTTCCTGACAGCCTTCGTGCTGGGTGTCTTCCT
CAAGTTCCGTAACACACCCATTGTCAAGGCTACCAATCGAGAGCTCTCCTACCTCCTCCTCT
TCTCCTTGCTCTGCTGCTTCTCCAGCTCCCTGTTCTTCATTGGTGAGCCCCAGGACTGGACA
TGCCGCCTGCGCCAGCCAGCCTTTGGCATCAGCTTCGTGCTCTGCATATCATGCATCCTAGT
GAAAACCAACCGTGTCCTCCTGGTGTTTGAGGCCAAGATCCCCACGAGCTTCCACCGCAAGT
GGTGGGGGCTCAACCTGCAGTTCCTGCTGGTCTTCCTCTGCACCTTCATGCAGATTGTCATC
TGTGTGATCTGGCTCTACACTGCACCACCCTCAAGCTACCGCAACCACGAGCTGGAGGATGA
GATCATCTTTATCACATGCCACGAGGGCTCGCTCATGGCCCTGGGCTTCTTAATTGGCTACA
CCTGCCTACTGGCTGCCATCTGCTTCTTCTTTGCCTTCAAGTCCCGGAAGCTGCCAGAGAAT
TTCAATGAAGCCAAGTTCATCACCTTCAGCATGCTCATCTTCTTCATCGTCTGGATCTCCTT
CATCCCAGCCTATGCCAGCACCTATGGCAAGTTTGTCTCTGCCGTGGAAGTGATCGCCATCC
TGGCAGCCAGCTTTGGCTTGCTGGCCTGCATCTTCTTCAACAAGGTCTACATCATCCTCTTC
AAGCCATCACGTAACACCATCGAGGAGGTGCGCTGCAGCACTGCTGCCCATGCTTTCAAAGT
AGCAGCCCGGGCCACGCTGCGCCGCAGCAACGTCTCTCGCAAGCGGTCCAGCAGCCTTGGGG
GCTCCACGGGATCCACACCCTCTTCCTCCATCAGCAGTAAGAGCAACAGTGAAGACCCCTTC
CCACAGCCCGAGAGGCAAAAGCAGCAGCAGCCACTGGCCCTGACCCAACAAGAGCAGCAGCC
GCAGCCACAGCAGCCCTCGTCCCTACAGCAGCAGCCACAGCCACAGCCACAGCCCAGATGCA
AGCAGAAAGTCATTTTCGGCAGTGGCACAGTCACCTTCTCACTGAGCTTTGATGAGCCTCAG
AAGAGTGCCATGGCTCACAGGAATTCTATGCACCAGAACTCCCTGGAGGCCCAGAAAAGCAA
TGAGACCCTCACCAGACACCAGGCATTACTCCCACTACAGTGCGGGGAGACAGACTCAGAAC
TGAGTGCCCAGGAGAGAGGTCTTCAAGGGCCTGTAGATGGGGACTTCCGACCAGAGATGGAG
GACCCTGAAGAGATGTCCCCAGCGCTTGTAGTGTCCAGTTCACAAAGCTTTGTCATCAGTGG
TGGTGGCAGCACTGTCACAGAAAATATACTGCATTCA

FIG. 23 CONTINUED

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 62322641
- WO 2013000673 A
- EP 2013072788 W
- EP 2013072789 W
- EP 2013072790 W
- EP 2013072794 W
- US 1565036 W
- US 1565046 W
- US 1565106 W
- US 1555149 W
- US 4597970 A
- US 4722845 A


### Non-patent literature cited in the description


- **OHSU et al.** *J. Biol. Chem.*, 2010, vol. 285 (2), 1016-1022
- **GENG et al.** Structural mechanism of ligand activation in human calcium-sensing receptor. *Elife*, 19 July 2016, vol. 5, e13662
- **ZHANG et al.** Structural basis for regulation of human calcium-sensing receptor by magnesium ions and an unexpected tryptophan derivative co-agonist. *Sci Adv.*, May 2016, vol. 2 (5), e1600241
- **BINET et al.** *J. Biol. Chem*, 2007, vol. 282 (16), 12154-63
- **WU**. *Science*, 2014, vol. 344 (6179), 58-64
- **DORE et al.** *Nature*, 2014, vol. 511, 557-562
- **LOEFFLER** ; **BEHR**. *Meth. Enzymol.*, 1993, vol. 217, 599-618
- **COHEN et al.** *Meth. Enzymol.*, 1993, vol. 217, 618-644
- *Cline, Pharmac. Ther.*, 1985, vol. 29, 69-92
- **ESWAR et al.** *Current Protocols in Bioinformatics*, 2006, vol. 15, 5.6.1-5.6.30
- **BINET et al.** Common Structural Requirements for Heptahelical Domain Function in Class A and Class C G Protein-coupled Receptors. *J. Biol. Chem*, 2007, vol. 282 (16), 12154-63
- **WU**. Structure of a Class C GPCR Metabotropic Glutamate Receptor 1 Bound to an Allosteric Modulator. *Science*, 2014, vol. 344 (6179), 58-64
- **DORE et al.** Structure of class C GPCR metabotropic glutamate receptor 5 transmembrane domain. *Nature*, 2014, vol. 511, 557-562